(19) Europäisches Patentamt / European Patent Office / Office européen des brevets

(11) **EP 4 451 726 A1**

(12) **EUROPEAN PATENT APPLICATION**
published in accordance with Art. 153(4) EPC

(43) Date of publication:
**23.10.2024  Bulletin 2024/43**

(21) Application number: **22920027.4**

(22) Date of filing: **19.12.2022**

(51) International Patent Classification (IPC):
**H04W 24/02** (2009.01)

(52) Cooperative Patent Classification (CPC):
**H04B 15/00; H04W 24/02; H04W 24/08;**
**Y02D 30/70**

(86) International application number:
**PCT/CN2022/139983**

(87) International publication number:
**WO 2023/134396 (20.07.2023 Gazette 2023/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.01.2022  CN 202210043577**

(71) Applicant: **Huawei Technologies Co., Ltd.**
**Shenzhen, Guangdong 518129 (CN)**

(72) Inventors:
• **DUAN, Ruiyang**
  **Shenzhen, Guangdong 518129 (CN)**
• **LI, Xueru**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **DEVICE SENSING METHOD AND APPARATUS**

(57)   This application provides a device sensing method and an apparatus, to provide a plurality of Golay complementary pairs GCPs with various lengths, and improve a capacity of a GCP to meet a requirement of sensing by a plurality of devices simultaneously. The method includes: A sensing device sends a sensing signal, receives an echo signal of the sensing signal, and performs processing based on the echo signal. The sensing signal is generated based on a GCP with a length of N, where N is greater than or equal to 32. When N is equal to 32, 64, 128, 256, 512, or 1024, the GCP may be generated through generalized Boolean function mapping. When N is equal to 160, 320, 640, or 832, the GCP is a direct product of a first GCP and a second GCP, a length of the first GCP is $N_1$, a length of the second GCP is $N_2$, and $N_1 \times N_2 = N$. The first GCP is generated through generalized Boolean function mapping, and the second GCP is any one of the following: $x_1$ =1, 1, -1, 1, -1, 1, -1, -1, 1, 1; and $y_1$ =1, 1, -1, 1, 1, 1, 1, 1, -1, -1; or $x_2$ =1, 1, 1, 1, 1, -1, 1, -1, -1, 1; and $y_2$ =1, 1, -1, -1, 1, 1, 1, -1, 1, -1.

FIG. 5

**Description**

This application claims priority to Chinese Patent Application No. 202210043577.5, filed with the China National Intellectual Property Administration on January 14, 2022, and entitled "DEVICE SENSING METHOD AND APPARATUS", which is incorporated herein by reference in its entirety.

**TECHNICAL FIELD**

Embodiments of this application relate to the communication field, and in particular, to a device sensing method and an apparatus.

**BACKGROUND**

Joint communication and sensing (Joint communication and sensing, JCS) is a key technology of a sixth generation (sixth generation, 6G) mobile communication system. A JCS system includes two parts: a communication system and a sensing system. The communication system and the sensing system multiplex a same system architecture, a same hardware facility, and same spectrum resources, and interference between the communication system and the sensing system is avoided in a time division or frequency division manner.

In the JCS system, the sensing system works in the same way as a radar. The sensing system performs sensing by sending a sensing signal and receiving an echo reflected by detecting a target, and decodes information such as a distance of the target by performing a correlation operation between the sent sensing signal and the echo signal.

To ensure accuracy of a sensing result, the sensing signal needs to have a good aperiodic autocorrelation feature. To ensure this, during actual application, the sensing signal is generally generated based on a sensing sequence having a good aperiodic autocorrelation property. Therefore, it is necessary to design a sensing sequence to implement accurate sensing.

**SUMMARY**

This application provides a device sensing method and an apparatus, to provide a plurality of Golay complementary pairs GCPs with various lengths, and improve a capacity of a GCP to meet a requirement of sensing by a plurality of devices simultaneously.

According to a first aspect, a sensing method is provided. The method may be performed by a sensing device, or may be performed by a component of the sensing device, for example, a processor, a chip, or a chip system, or may be implemented by a logical module or software that can implement all or some functions of the sensing device. The method includes: The sensing device sends a sensing signal, receives an echo signal of the sensing signal, and performs processing based on the echo signal. The sensing signal is generated based on a GCP with a length of N, where N is greater than or equal to 32.

[0008]    [0008] When N is equal to 128, parameters used to generate the GCP are any one of the following groups:

$\boldsymbol{x}_\pi$ =[0, 1, 2, 3, 4, 5, 6], $\boldsymbol{c}$ =[1, 0, 0, 0, 0, 0, 0], $d_1$ =0, $d_2$ =0;
$\boldsymbol{x}_\pi$ =[0, 1, 2, 3, 4, 5, 6], $\boldsymbol{c}$ =[1, 0, 0, 0, 0, 0, 1], $d_1$ =0, $d_2$ =0;
$\boldsymbol{x}_\pi$ =[0, 1, 2, 4, 3, 6, 5], $\boldsymbol{c}$ =[0, 1, 1, 0, 1, 0, 0], $d_1$ =0, $d_2$ =0;
$\boldsymbol{x}_\pi$ =[0, 1, 2, 4, 3, 6, 5], $\boldsymbol{c}$ =[0, 1, 1, 0, 1, 1, 0], $d_1$ =0, $d_2$ =0;
$\boldsymbol{x}_\pi$ =[0, 1, 2, 4, 5, 3, 6], $\boldsymbol{c}$ =[0, 0, 1, 0, 1, 0, 0], $d_1$ =0, $d_2$ =1;
$\boldsymbol{x}_\pi$ =[0, 1, 2, 4, 5, 3, 6], $\boldsymbol{c}$ =[0, 0, 1, 0, 1, 0, 1], $d_1$ =0, $d_2$ =1;
$\boldsymbol{x}_\pi$ =[0, 1, 2, 4, 5, 3, 6], $\boldsymbol{c}$ =[1, 0, 1, 0, 1, 0, 0], $d_1$ =0, $d_2$ =1;
$\boldsymbol{x}_\pi$ =[0, 1, 2, 4, 5, 3, 6], $\boldsymbol{c}$ =[1, 0, 1, 0, 1, 0, 1], $d_1$ =0, $d_2$ =1;
$\boldsymbol{x}_\pi$ =[0, 1, 2, 3, 4, 5, 6], $\boldsymbol{c}$ =[1, 0, 0, 0, 0, 0, 0], $d_1$ =0, $d_2$ =1;
$\boldsymbol{x}_\pi$ =[0, 1, 2, 3, 4, 5, 6], $\boldsymbol{c}$ =[1, 0, 0, 0, 0, 0, 1], $d_1$ =0, $d_2$ =1;
$\boldsymbol{x}_\pi$ =[0, 1, 2, 4, 3, 6, 5], $\boldsymbol{c}$ =[0, 1, 1, 0, 1, 0, 0], $d_1$ =0, $d_2$ =1;
$\boldsymbol{x}_\pi$ =[0, 1, 2, 4, 3, 6, 5], $\boldsymbol{c}$ =[0, 1, 1, 0, 1, 1, 0], $d_1$ =0, $d_2$ =1;
$\boldsymbol{x}_\pi$ =[0, 1, 2, 4, 5, 3, 6], $\boldsymbol{c}$ =[0, 0, 1, 0, 1, 0, 0], $d_1$ =0, $d_2$ =0;
$\boldsymbol{x}_\pi$ =[0, 1, 2, 4, 5, 3, 6], $\boldsymbol{c}$ =[0, 0, 1, 0, 1, 0, 1], $d_1$ =0, $d_2$ =0;
$\boldsymbol{x}_\pi$ =[0, 1, 2, 4, 5, 3, 6], $\boldsymbol{c}$ =[1, 0, 1, 0, 1, 0, 0], $d_1$ =0, $d_2$ =0;
$\boldsymbol{x}_\pi$ =[0, 1, 2, 4, 5, 3, 6], $\boldsymbol{c}$ =[1, 0, 1, 0, 1, 0, 1], $d_1$ =0, $d_2$ =0;
$\boldsymbol{x}_\pi$ =[0, 1, 2, 3, 4, 5, 6], $\boldsymbol{c}$ =[0, 0, 0, 0, 0, 0, 0], $d_1$ =0, $d_2$ =0;
$\boldsymbol{x}_\pi$ =[0, 1, 2, 3, 4, 5, 6], $\boldsymbol{c}$ =[0, 0, 0, 0, 0, 0, 1], $d_1$ =0, $d_2$ =0;
$\boldsymbol{x}_\pi$ =[0, 1, 2, 3, 4, 5, 6], $\boldsymbol{c}$ =[0, 0, 0, 0, 0, 0, 0], $d_1$ =0, $d_2$ =1;

$x_\pi$ =[0, 1, 2, 3, 4, 5, 6], $c$ =[0, 0, 0, 0, 0, 0, 1], $d_1$ =0, $d_2$ =1;
$x_\pi$ =[0, 1, 2, 3, 4, 6, 5], $c$ =[0, 1, 0, 0, 1, 0, 0], $d_1$ =0, $d_2$ =0;
$x_\pi$ =[0, 1, 2, 3, 4, 6, 5], $c$ =[0, 1, 0, 0, 1, 1, 0], $d_1$ =0, $d_2$ =0;
$x_\pi$ =[0, 1, 2, 3, 4, 6, 5], $c$ =[0, 1, 0, 0, 1, 0, 0], $d_1$ =0, $d_2$ =1;
$x_\pi$ =[0, 1, 2, 3, 4, 6, 5], $c$ =[0, 1, 0, 0, 1, 1, 0], $d_1$ =0, $d_2$ =1;
$x_\pi$ =[0, 1, 2, 3, 4, 6, 5], $c$ =[1, 1, 1, 0, 1, 0, 1], $d_1$ =0, $d_2$ =0;
$x_\pi$ =[0, 1, 2, 3, 4, 6, 5], $c$ =[1, 1, 1, 0, 1, 1, 1], $d_1$ =0, $d_2$ =0;
$x_\pi$ =[0, 1, 2, 3, 4, 6, 5], $c$ =[1, 1, 1, 0, 1, 0, 1], $d_1$ =0, $d_2$ =1;
$x_\pi$ =[0, 1, 2, 3, 4, 6, 5], $c$ =[1, 1, 1, 0, 1, 1, 1], $d_1$ =0, $d_2$ =1;
$x_\pi$ =[0, 1, 2, 4, 3, 5, 6], $c$ =[1, 1, 0, 1, 1, 1, 0], $d_1$ =0, $d_2$ =0;
$x_\pi$ =[0, 1, 2, 4, 3, 5, 6], $c$ =[1, 1, 0, 1, 1, 1, 1], $d_1$ =0, $d_2$ =0;
$x_\pi$ =[0, 1, 2, 4, 3, 5, 6], $c$ =[1, 1, 0, 1, 1, 1, 0], $d_1$ =0, $d_2$ =1;
$x_\pi$ =[0, 1, 2, 4, 3, 5, 6], $c$ =[1, 1, 0, 1, 1, 1, 1], $d_1$ =0, $d_2$ =1;
$x_\pi$ =[0, 1, 2, 4, 6, 3, 5], $c$ =[0, 0, 1, 1, 0, 0, 0], $d_1$ =0, $d_2$ =0;
$x_\pi$ =[0, 1, 2, 4, 6, 3, 5], $c$ =[0, 0, 1, 1, 0, 1, 0], $d_1$ =0, $d_2$ =0;
$x_\pi$ =[0, 1, 2, 4, 6, 3, 5], $c$ =[0, 0, 1, 1, 0, 0, 0], $d_1$ =0, $d_2$ =1;
$x_\pi$ =[0, 1, 2, 4, 6, 3, 5], $c$ =[0, 0, 1, 1, 0, 1, 0], $d_1$ =0, $d_2$ =1;
$x_\pi$ =[0, 1, 2, 4, 6, 3, 5], $c$ =[1, 0, 1, 1, 0, 0, 0], $d_1$ =0, $d_2$ =0;
$x_\pi$ =[0, 1, 2, 4, 6, 3, 5], $c$ =[1, 0, 1, 1, 0, 1, 0], $d_1$ =0, $d_2$ =0;
$x_\pi$ =[0, 1, 2, 4, 6, 3, 5], $c$ =[1, 0, 1, 1, 0, 0, 0], $d_1$ =0, $d_2$ =0; or
$x_\pi$ =[0, 1, 2, 4, 6, 3, 5], $c$ =[1, 0, 1, 1, 0, 1, 0], $d_1$ =0, $d_2$ =0.

Based on this solution, this application may provide GCPs with a plurality of lengths. When the length is 128, 40 groups of GCP generation parameters are provided to generate 40 pairs of GCPs, that is, a large quantity of GCPs can be provided, so that a large quantity of sensing devices can perform sensing simultaneously. In addition, there is a low aperiodic cross-correlation between the 40 pairs of GCPs; and when a plurality of sensing devices perform sensing simultaneously, interference between the devices can be effectively reduced, thereby improving sensing accuracy.

In some possible designs, when N is equal to 64, the parameters used to generate the GCP are any one of the following groups:

$x_\pi$ =[0, 1, 2, 3, 4, 5], $c$ =[0, 0, 0, 0, 0, 0], $d_1$ =0, $d_2$ =1;
$x_\pi$ =[0, 1, 2, 3, 4, 5], $c$ =[0, 0, 0, 0, 0, 1], $d_1$ =0, $d_2$ =1;
$x_\pi$ =[0, 2, 4, 3, 1, 5], $c$ =[1, 0, 0, 0, 0, 0], $d_1$ =0, $d_2$ =1;
$x_\pi$ =[0, 2, 4, 3, 1, 5], $c$ =[1, 0, 0, 0, 0, 1], $d_1$ =0, $d_2$ =1;
$x_\pi$ =[0, 3, 5, 2, 1, 4], $c$ =[0, 0, 1, 1, 0, 1], $d_1$ =0, $d_2$ =0;
$x_\pi$ =[0, 3, 5, 2, 1, 4], $c$ =[0, 0, 1, 1, 1, 1], $d_1$ =0, $d_2$ =0;
$x_\pi$ =[0, 1, 3, 2, 4, 5], $c$ =[1, 0, 1, 1, 1, 0], $d_1$ =0, $d_2$ =1;
$x_\pi$ =[0, 1, 3, 2, 4, 5], $c$ =[1, 0, 1, 1, 1, 1], $d_1$ =0, $d_2$ =1;
$x_\pi$ =[0, 2, 1, 3, 5, 4], $c$ =[0, 0, 1, 0, 0, 0], $d_1$ =0, $d_2$ =1;
$x_\pi$ =[0, 2, 1, 3, 5, 4], $c$ =[0, 0, 1, 0, 1, 0], $d_1$ =0, $d_2$ =1;
$x_\pi$ =[0, 3, 2, 1, 5, 4], $c$ =[0, 0, 0, 1, 0, 0], $d_1$ =0, $d_2$ =0;
$x_\pi$ =[0, 3, 2, 1, 5, 4], $c$ =[0, 0, 0, 1, 1, 0], $d_1$ =0, $d_2$ =0;
$x_\pi$ =[0, 1, 2, 3, 4, 5], $c$ =[0, 0, 0, 0, 0, 0], $d_1$ =0, $d_2$ =0;
$x_\pi$ =[0, 1, 2, 3, 4, 5], $c$ =[0, 0, 0, 0, 0, 1], $d_1$ =0, $d_2$ =0;
$x_\pi$ =[0, 1, 2, 3, 5, 4], $c$ =[1, 0, 0, 1, 0, 0], $d_1$ =0, $d_2$ =0;
$x_\pi$ =[0, 1, 2, 3, 5, 4], $c$ =[1, 0, 0, 1, 1, 0], $d_1$ =0, $d_2$ =0;
$x_\pi$ =[0, 1, 2, 3, 5, 4], $c$ =[1, 1, 0, 1, 0, 1], $d_1$ =0, $d_2$ =1;
$x_\pi$ =[0, 1, 2, 3, 5, 4], $c$ =[1, 1, 0, 1, 1, 1], $d_1$ =0, $d_2$ =1;
$x_\pi$ =[0, 1, 2, 4, 3, 5], $c$ =[0, 1, 0, 0, 1, 0], $d_1$ =0, $d_2$ =0;
$x_\pi$ =[0, 1, 2, 4, 3, 5], $c$ =[0, 1, 0, 0, 1, 1], $d_1$ =0, $d_2$ =0;
$x_\pi$ =[0, 1, 3, 2, 5, 4], $c$ =[1, 1, 0, 1, 0, 0], $d_1$ =0, $d_2$ =0;
$x_\pi$ =[0, 1, 3, 2, 5, 4], $c$ =[1, 1, 0, 1, 1, 0], $d_1$ =0, $d_2$ =0;
$x_\pi$ =[0, 1, 3, 4, 2, 5], $c$ =[0, 1, 0, 1, 0, 0], $d_1$ =0, $d_2$ =1;
$x_\pi$ =[0, 1, 3, 4, 2, 5], $c$ =[0, 1, 0, 1, 0, 1], $d_1$ =0, $d_2$ =1;
$x_\pi$ =[0, 1, 3, 5, 2, 4], $c$ =[0, 1, 1, 0, 0, 0], $d_1$ =0, $d_2$ =1;
$x_\pi$ =[0, 1, 3, 5, 2, 4], $c$ =[0, 1, 1, 0, 1, 0], $d_1$ =0, $d_2$ =1;
$x_\pi$ =[0, 2, 1, 3, 4, 5], $c$ =[0, 0, 1, 1, 0, 0], $d_1$ =0, $d_2$ =0;
$x_\pi$ =[0, 2, 1, 3, 4, 5], $c$ =[0, 0, 1, 1, 0, 1], $d_1$ =0, $d_2$ =0;

$x_\pi$ =[0, 2, 1, 4, 3, 5], $c$ =[0, 1, 0, 0, 0, 0], $d_1$ =0, $d_2$ =0;
$x_\pi$ =[0, 2, 1, 4, 3, 5], $c$ =[0, 1, 0, 0, 0, 1], $d_1$ =0, $d_2$ =0;
$x_\pi$ =[0, 2, 3, 1, 4, 5], $c$ =[0, 1, 1, 0, 1, 0], $d_1$ =0, $d_2$ =1;
$x_\pi$ =[0, 2, 3, 1, 4, 5], $c$ =[0, 1, 1, 0, 1, 1], $d_1$ =0, $d_2$ =1;
$x_\pi$ =[0, 2, 3, 1, 4, 5], $c$ =[1, 1, 0, 0, 0, 0], $d_1$ =0, $d_2$ =1;
$x_\pi$ =[0, 2, 3, 1, 4, 5], $c$ =[1, 1, 0, 0, 0, 1], $d_1$ =0, $d_2$ =1;
$x_\pi$ =[0, 2, 3, 4, 5, 1], $c$ =[1, 0, 0, 1, 1, 0], $d_1$ =0, $d_2$ =0;
$x_\pi$ =[0, 2, 3, 4, 5, 1], $c$ =[1, 1, 0, 1, 1, 0], $d_1$ =0, $d_2$ =0;
$x_\pi$ =[0, 3, 1, 4, 5, 2], $c$ =[0, 1, 0, 1, 1, 0], $d_1$ =0, $d_2$ =0;
$x_\pi$ =[0, 3, 1, 4, 5, 2], $c$ =[0, 1, 1, 1, 1, 0], $d_1$ =0, $d_2$ =0;
$x_\pi$ =[1, 0, 2, 3, 4, 5], $c$ =[0, 1, 0, 0, 0, 0], $d_1$ =0, $d_2$ =1; or
$x_\pi$ =[1, 0, 2, 3, 4, 5], $c$ =[0, 1, 0, 0, 0, 1], $d_1$ =0, $d_2$ =1.

In some possible designs, when N is equal to 32, the parameters used to generate the GCP are any one of the following groups:

$x_\pi$ =[0, 1, 3, 2, 4], $c$ =[1, 0, 0, 0, 0], $d_1$ =0, $d_2$ =0;
$x_\pi$ =[0, 1, 3, 2, 4], $c$ =[1, 0, 0, 0, 1], $d_1$ =0, $d_2$ =0;
$x_\pi$ =[0, 2, 1, 3, 4], $c$ =[0, 1, 0, 1, 0], $d_1$ =0, $d_2$ =1;
$x_\pi$ =[0, 2, 1, 3, 4], $c$ =[0, 1, 0, 1, 1], $d_1$ =0, $d_2$ =1;
$x_\pi$ =[2, 1, 3, 0, 4], $c$ =[1, 1, 1, 1, 0], $d_1$ =0, $d_2$ =1;
$x_\pi$ =[2, 1, 3, 0, 4], $c$ =[1, 1, 1, 1, 1], $d_1$ =0, $d_2$ =1;
$x_\pi$ =[0, 1, 3, 2, 4], $c$ =[0, 0, 1, 0, 0], $d_1$ =0, $d_2$ =0;
$x_\pi$ =[0, 1, 3, 2, 4], $c$ =[0, 0, 1, 0, 1], $d_1$ =0, $d_2$ =0;
$x_\pi$ =[0, 1, 3, 2, 4], $c$ =[0, 0, 1, 1, 0], $d_1$ =0, $d_2$ =1;
$x_\pi$ =[0, 1, 3, 2, 4], $c$ =[0, 0, 1, 1, 1], $d_1$ =0, $d_2$ =1;
$x_\pi$ =[0, 1, 3, 2, 4], $c$ =[1, 0, 0, 1, 0], $d_1$ =0, $d_2$ =1;
$x_\pi$ =[0, 1, 3, 2, 4], $c$ =[1, 0, 0, 1, 1], $d_1$ =0, $d_2$ =1;
$x_\pi$ =[0, 2, 1, 3, 4], $c$ =[0, 0, 0, 0, 0], $d_1$ =0, $d_2$ =0;
$x_\pi$ =[0, 2, 1, 3, 4], $c$ =[0, 0, 0, 0, 1], $d_1$ =0, $d_2$ =0;
$x_\pi$ =[1, 2, 0, 3, 4], $c$ =[0, 0, 1, 1, 0], $d_1$ =0, $d_2$ =1;
$x_\pi$ =[1, 2, 0, 3, 4], $c$ =[0, 0, 1, 1, 1], $d_1$ =0, $d_2$ =1;
$x_\pi$ =[0, 3, 2, 1, 4], $c$ =[1, 1, 1, 1, 0], $d_1$ =0, $d_2$ =0;
$x_\pi$ =[0, 3, 2, 1, 4], $c$ =[1, 1, 1, 1, 1], $d_1$ =0, $d_2$ =0;
$x_\pi$ =[1, 0, 2, 3, 4], $c$ =[0, 0, 0, 0, 0], $d_1$ =0, $d_2$ =1;
$x_\pi$ =[1, 0, 2, 3, 4], $c$ =[0, 0, 0, 0, 1], $d_1$ =0, $d_2$ =1;
$x_\pi$ =[1, 3, 0, 2, 4], $c$ =[0, 1, 0, 1, 0], $d_1$ =0, $d_2$ =1;
$x_\pi$ =[1, 3, 0, 2, 4], $c$ =[0, 1, 0, 1, 1], $d_1$ =0, $d_2$ =1;
$x_\pi$ =[1, 3, 0, 2, 4], $c$ =[1, 1, 1, 1, 0], $d_1$ =0, $d_2$ =0;
$x_\pi$ =[1, 3, 0, 2, 4], $c$ =[1, 1, 1, 1, 1], $d_1$ =0, $d_2$ =0;
$x_\pi$ =[2, 0, 3, 1, 4], $c$ =[0, 0, 0, 0, 0], $d_1$ =0, $d_2$ =0;
$x_\pi$ =[2, 0, 3, 1, 4], $c$ =[0, 0, 0, 0, 1], $d_1$ =0, $d_2$ =0;
$x_\pi$ =[2, 1, 0, 3, 4], $c$ =[1, 1, 1, 1, 0], $d_1$ =0, $d_2$ =0;
$x_\pi$ =[2, 1, 0, 3, 4], $c$ =[1, 1, 1, 1, 1], $d_1$ =0, $d_2$ =0;
$x_\pi$ =[3, 0, 1, 2, 4], $c$ =[0, 1, 0, 0, 0], $d_1$ =0, $d_2$ =0;
$x_\pi$ =[3, 0, 1, 2, 4], $c$ =[0, 1, 0, 0, 1], $d_1$ =0, $d_2$ =0;
$x_\pi$ =[3, 2, 0, 1, 4], $c$ =[0, 0, 1, 0, 0], $d_1$ =0, $d_2$ =0; or
$x_\pi$ =[3, 2, 0, 1, 4], $c$ =[0, 0, 1, 0, 1], $d_1$ =0, $d_2$ =0.

In some possible designs, when N is equal to 256, the parameters used to generate the GCP are any one of the following groups:

$x_\pi$ =[0, 1, 2, 3, 4, 5, 6, 7], $c$ =[0, 0, 0, 0, 0, 0, 0, 0], $d_1$ =0, $d_2$ =0;
$x_\pi$ =[0, 1, 2, 3, 4, 5, 6, 7], $c$ =[0, 0, 0, 0, 0, 0, 0, 1], $d_1$ =0, $d_2$ =0;
$x_\pi$ =[0, 1, 2, 3, 5, 4, 7, 6], $c$ =[1, 1, 0, 0, 0, 0, 0, 0], $d_1$ =0, $d_2$ =0;
$x_\pi$ =[0, 1, 2, 3, 5, 4, 7, 6], $c$ =[1, 1, 0, 0, 0, 0, 1, 0], $d_1$ =0, $d_2$ =0;
$x_\pi$ =[0, 1, 2, 3, 6, 4, 5, 7], $c$ =[1, 1, 1, 0, 1, 0, 1, 0], $d_1$ =0, $d_2$ =1;
$x_\pi$ =[0, 1, 2, 3, 6, 4, 5, 7], $c$ =[1, 1, 1, 0, 1, 0, 1, 1], $d_1$ =0, $d_2$ =1;

$\boldsymbol{x}_\pi$ =[0, 1, 2, 4, 6, 5, 3, 7], $\boldsymbol{c}$ =[0, 0, 0, 0, 0, 1, 0, 0], $d_1$ =0, $d_2$ =1;
$\boldsymbol{x}_\pi$ =[0, 1, 2, 4, 6, 5, 3, 7], $\boldsymbol{c}$ =[0, 0, 0, 0, 0, 1, 0, 1], $d_1$ =0, $d_2$ =1;
$\boldsymbol{x}_\pi$ =[0, 1, 2, 3, 4, 5, 6, 7], $\boldsymbol{c}$ =[0, 1, 1, 0, 0, 1, 1, 0], $d_1$ =0, $d_2$ =0;
$\boldsymbol{x}_\pi$ =[0, 1, 2, 3, 4, 5, 6, 7], $\boldsymbol{c}$ =[0, 1, 1, 0, 0, 1, 1, 1], $d_1$ =0, $d_2$ =0;
$\boldsymbol{x}_\pi$ =[0, 1, 2, 3, 4, 6, 5, 7], $\boldsymbol{c}$ =[0, 1, 0, 1, 0, 0, 1, 0], $d_1$ =0, $d_2$ =1;
$\boldsymbol{x}_\pi$ =[0, 1, 2, 3, 4, 6, 5, 7], $\boldsymbol{c}$ =[0, 1, 0, 1, 0, 0, 1, 1], $d_1$ =0, $d_2$ =1;
$\boldsymbol{x}_\pi$ =[0, 1, 2, 3, 5, 4, 7, 6], $\boldsymbol{c}$ =[1, 1, 0, 0, 0, 0, 0, 0], $d_1$ =0, $d_2$ =1;
$\boldsymbol{x}_\pi$ =[0, 1, 2, 3, 5, 4, 7, 6], $\boldsymbol{c}$ =[1, 1, 0, 0, 0, 0, 1, 0], $d_1$ =0, $d_2$ =1;
$\boldsymbol{x}_\pi$ =[0, 1, 2, 4, 6, 5, 3, 7], $\boldsymbol{c}$ =[1, 0, 0, 1, 1, 1, 1, 0], $d_1$ =0, $d_2$ =0;
$\boldsymbol{x}_\pi$ =[0, 1, 2, 4, 6, 5, 3, 7], $\boldsymbol{c}$ =[1, 0, 0, 1, 1, 1, 1, 1], $d_1$ =0, $d_2$ =0;
$\boldsymbol{x}_\pi$ =[0, 1, 2, 3, 4, 5, 6, 7], $\boldsymbol{c}$ =[0, 1, 1, 0, 0, 1, 1, 0], $d_1$ =0, $d_2$ =1;
$\boldsymbol{x}_\pi$ =[0, 1, 2, 3, 4, 5, 6, 7], $\boldsymbol{c}$ =[0, 1, 1, 0, 0, 1, 1, 1], $d_1$ =0, $d_2$ =1;
$\boldsymbol{x}_\pi$ =[0, 1, 2, 3, 4, 6, 5, 7], $\boldsymbol{c}$ =[0, 1, 0, 1, 0, 0, 1, 0], $d_1$ =0, $d_2$ =0;
$\boldsymbol{x}_\pi$ =[0, 1, 2, 3, 4, 6, 5, 7], $\boldsymbol{c}$ =[0, 1, 0, 1, 0, 0, 1, 1], $d_1$ =0, $d_2$ =0;
$\boldsymbol{x}_\pi$ =[0, 1, 2, 3, 6, 4, 5, 7], $\boldsymbol{c}$ =[1, 1, 1, 0, 1, 0, 1, 0], $d_1$ =0, $d_2$ =0;
$\boldsymbol{x}_\pi$ =[0, 1, 2, 3, 6, 4, 5, 7], $\boldsymbol{c}$ =[1, 1, 1, 0, 1, 0, 1, 1], $d_1$ =0, $d_2$ =0;
$\boldsymbol{x}_\pi$ =[0, 1, 2, 4, 6, 5, 3, 7], $\boldsymbol{c}$ =[1, 0, 0, 1, 1, 1, 1, 0], $d_1$ =0, $d_2$ =1;
$\boldsymbol{x}_\pi$ =[0, 1, 2, 4, 6, 5, 3, 7], $\boldsymbol{c}$ =[1, 0, 0, 1, 1, 1, 1, 1], $d_1$ =0, $d_2$ =1;
$\boldsymbol{x}_\pi$ =[0, 1, 2, 3, 4, 6, 5, 7], $\boldsymbol{c}$ =[1, 0, 1, 1, 1, 0, 0, 0], $d_1$ =0, $d_2$ =0;
$\boldsymbol{x}_\pi$ =[0, 1, 2, 3, 4, 6, 5, 7], $\boldsymbol{c}$ =[1, 0, 1, 1, 1, 0, 0, 1], $d_1$ =0, $d_2$ =0;
$\boldsymbol{x}_\pi$ =[0, 1, 2, 3, 4, 6, 5, 7], $\boldsymbol{c}$ =[1, 0, 1, 1, 1, 0, 0, 0], $d_1$ =0, $d_2$ =1;
$\boldsymbol{x}_\pi$ =[0, 1, 2, 3, 4, 6, 5, 7], $\boldsymbol{c}$ =[1, 0, 1, 1, 1, 0, 0, 1], $d_1$ =0, $d_2$ =1;
$\boldsymbol{x}_\pi$ =[0, 1, 2, 3, 5, 4, 6, 7], $\boldsymbol{c}$ =[0, 0, 1, 1, 1, 1, 1, 0], $d_1$ =0, $d_2$ =1;
$\boldsymbol{x}_\pi$ =[0, 1, 2, 3, 5, 4, 6, 7], $\boldsymbol{c}$ =[0, 0, 1, 1, 1, 1, 1, 1], $d_1$ =0, $d_2$ =1;
$\boldsymbol{x}_\pi$ =[0, 1, 2, 4, 6, 5, 3, 7], $\boldsymbol{c}$ =[0, 0, 0, 0, 0, 1, 0, 0], $d_1$ =0, $d_2$ =0;
$\boldsymbol{x}_\pi$ =[0, 1, 2, 4, 6, 5, 3, 7], $\boldsymbol{c}$ =[0, 0, 0, 0, 0, 1, 0, 1], $d_1$ =0, $d_2$ =0;
$\boldsymbol{x}_\pi$ =[0, 1, 2, 3, 4, 5, 6, 7], $\boldsymbol{c}$ =[0, 0, 0, 0, 0, 0, 0, 0], $d_1$ =0, $d_2$ =1;
$\boldsymbol{x}_\pi$ =[0, 1, 2, 3, 4, 5, 6, 7], $\boldsymbol{c}$ =[0, 0, 0, 0, 0, 0, 0, 1], $d_1$ =0, $d_2$ =1;
$\boldsymbol{x}_\pi$ =[0, 1, 2, 3, 4, 5, 6, 7], $\boldsymbol{c}$ =[1, 0, 0, 0, 1, 0, 1, 0], $d_1$ =0, $d_2$ =0;
$\boldsymbol{x}_\pi$ =[0, 1, 2, 3, 4, 5, 6, 7], $\boldsymbol{c}$ =[1, 0, 0, 0, 1, 0, 1, 1], $d_1$ =0, $d_2$ =0;
$\boldsymbol{x}_\pi$ =[0, 1, 2, 3, 4, 5, 6, 7], $\boldsymbol{c}$ =[1, 0, 0, 0, 1, 0, 1, 0], $d_1$ =0, $d_2$ =1;
$\boldsymbol{x}_\pi$ =[0, 1, 2, 3, 4, 5, 6, 7], $\boldsymbol{c}$ =[1, 0, 0, 0, 1, 0, 1, 1], $d_1$ =0, $d_2$ =1;
$x_\pi$ =[0, 1, 2, 3, 5, 4, 6, 7], $\boldsymbol{c}$ =[0, 0, 1, 1, 1, 1, 1, 0], $d_1$ =0, $d_2$ =0; or
$\boldsymbol{x}_\pi$ =[0, 1, 2, 3, 5, 4, 6, 7], $\boldsymbol{c}$ =[0, 0, 1, 1, 1, 1, 1, 1], $d_1$ =0, $d_2$ =0.

In some possible designs, when N is equal to 512, the parameters used to generate the GCP are any one of the following groups:

$\boldsymbol{x}_\pi$ =[0, 1, 2, 3, 4, 5, 6, 7, 8], $\boldsymbol{c}$ =[0, 0, 0, 0, 0, 0, 0, 0, 0], $d_1$ =0, $d_2$ =0;
$\boldsymbol{x}_\pi$ =[0, 1, 2, 3, 4, 5, 6, 7, 8], $\boldsymbol{c}$ =[0, 0, 0, 0, 0, 0, 0, 0, 1], $d_1$ =0, $d_2$ =0;
$\boldsymbol{x}_\pi$ =[0, 1, 2, 3, 4, 5, 6, 7, 8], $\boldsymbol{c}$ =[1, 0, 1, 0, 1, 0, 0, 1, 0], $d_1$ =0, $d_2$ =1;
$\boldsymbol{x}_\pi$ =[0, 1, 2, 3, 4, 5, 6, 7, 8], $\boldsymbol{c}$ =[1, 0, 1, 0, 1, 0, 0, 1, 1], $d_1$ =0, $d_2$ =1;
$\boldsymbol{x}_\pi$ =[0, 1, 2, 3, 4, 5, 6, 7, 8], $\boldsymbol{c}$ =[1, 1, 0, 1, 0, 1, 0, 1, 0], $d_1$ =0, $d_2$ =0;
$\boldsymbol{x}_\pi$ =[0, 1, 2, 3, 4, 5, 6, 7, 8], $\boldsymbol{c}$ =[1, 1, 0, 1, 0, 1, 0, 1, 1], $d_1$ =0, $d_2$ =0;
$\boldsymbol{x}_\pi$ =[0, 1, 2, 3, 4, 5, 7, 6, 8], $\boldsymbol{c}$ =[0, 0, 1, 1, 1, 0, 0, 1, 0], $d_1$ =0, $d_2$ =1;
$\boldsymbol{x}_\pi$ =[0, 1, 2, 3, 4, 5, 7, 6, 8], $\boldsymbol{c}$ =[0, 0, 1, 1, 1, 0, 0, 1, 1], $d_1$ =0, $d_2$ =1;
$\boldsymbol{x}_\pi$ =[0, 1, 2, 3, 4, 5, 6, 7, 8], $\boldsymbol{c}$ =[0, 0, 1, 0, 0, 0, 1, 1, 0], $d_1$ =0, $d_2$ =0;
$\boldsymbol{x}_\pi$ =[0, 1, 2, 3, 4, 5, 6, 7, 8], $\boldsymbol{c}$ =[0, 0, 1, 0, 0, 0, 1, 1, 1], $d_1$ =0, $d_2$ =0;
$\boldsymbol{x}_\pi$ =[0, 1, 2, 3, 4, 5, 6, 7, 8], $\boldsymbol{c}$ =[0, 0, 1, 0, 0, 0, 1, 1, 0], $d_1$ =0, $d_2$ =1;
$\boldsymbol{x}_\pi$ =[0, 1, 2, 3, 4, 5, 6, 7, 8], $\boldsymbol{c}$ =[0, 0, 1, 0, 0, 0, 1, 1, 1], $d_1$ =0, $d_2$ =1;
$\boldsymbol{x}_\pi$ =[0, 1, 2, 3, 4, 5, 6, 8, 7], $\boldsymbol{c}$ =[1, 1, 1, 1, 0, 0, 0, 0, 0], $d_1$ =0, $d_2$ =0;
$\boldsymbol{x}_\pi$ =[0, 1, 2, 3, 4, 5, 6, 8, 7], $\boldsymbol{c}$ =[1, 1, 1, 1, 0, 0, 0, 1, 0], $d_1$ =0, $d_2$ =0;
$\boldsymbol{x}_\pi$ =[0, 1, 2, 3, 4, 5, 6, 8, 7], $\boldsymbol{c}$ =[1, 1, 1, 1, 0, 0, 0, 1, 0], $d_1$ =0, $d_2$ =1;
$\boldsymbol{x}_\pi$ =[0, 1, 2, 3, 4, 5, 6, 8, 7], $\boldsymbol{c}$ =[1, 1, 1, 1, 0, 0, 0, 1, 0], $d_1$ =0, $d_2$ =1;
$\boldsymbol{x}_\pi$ =[0, 1, 2, 3, 4, 5, 6, 7, 8], $\boldsymbol{c}$ =[0, 0, 0, 0, 0, 0, 0, 0, 0], $d_1$ =0, $d_2$ =1;
$\boldsymbol{x}_\pi$ =[0, 1, 2, 3, 4, 5, 6, 7, 8], $\boldsymbol{c}$ =[0, 0, 0, 0, 0, 0, 0, 0, 1], $d_1$ =0, $d_2$ =1;
$\boldsymbol{x}_\pi$ =[0, 1, 2, 3, 4, 5, 6, 7, 8], $\boldsymbol{c}$ =[1, 0, 1, 0, 1, 0, 0, 1, 0], $d_1$ =0, $d_2$ =0;
$\boldsymbol{x}_\pi$ =[0, 1, 2, 3, 4, 5, 6, 7, 8], $\boldsymbol{c}$ =[1, 0, 1, 0, 1, 0, 0, 1, 1], $d_1$ =0, $d_2$ =0;

$x_\pi$ =[0, 1, 2, 3, 4, 5, 6, 7, 8], $c$ =[1, 1, 0, 1, 0, 1, 0, 1, 0], $d_1$ =0, $d_2$ =1;
$x_\pi$ =[0, 1, 2, 3, 4, 5, 6, 7, 8], $c$ =[1, 1, 0, 1, 0, 1, 0, 1, 1], $d_1$ =0, $d_2$ =1;
$x_\pi$ =[0, 1, 2, 3, 4, 5, 7, 6, 8], $c$ =[0, 0, 1, 1, 1, 0, 0, 1, 0], $d_1$ =0, $d_2$ =0;
$x_\pi$ =[0, 1, 2, 3, 4, 5, 7, 6, 8], $c$ =[0, 0, 1, 1, 1, 0, 0, 1, 1], $d_1$ =0, $d_2$ =0;
$x_\pi$ =[0, 1, 2, 3, 4, 5, 6, 7, 8], $c$ =[0, 1, 0, 0, 0, 1, 1, 0, 0], $d_1$ =0, $d_2$ =0;
$x_\pi$ =[0, 1, 2, 3, 4, 5, 6, 7, 8], $c$ =[0, 1, 0, 0, 0, 1, 1, 0, 1], $d_1$ =0, $d_2$ =0;
$x_\pi$ =[0, 1, 2, 3, 4, 5, 6, 7, 8], $c$ =[0, 1, 0, 0, 0, 1, 1, 0, 0], $d_1$ =0, $d_2$ =1;
$x_\pi$ =[0, 1, 2, 3, 4, 5, 6, 7, 8], $c$ =[0, 1, 0, 0, 0, 1, 1, 0, 1], $d_1$ =0, $d_2$ =1;
$x_\pi$ =[0, 1, 2, 3, 4, 5, 7, 6, 8], $c$ =[1, 0, 0, 1, 1, 1, 0, 0, 0], $d_1$ =0, $d_2$ =0;
$x_\pi$ =[0, 1, 2, 3, 4, 5, 7, 6, 8], $c$ =[1, 0, 0, 1, 1, 1, 0, 0, 1], $d_1$ =0, $d_2$ =0;
$x_\pi$ =[0, 1, 2, 3, 4, 5, 7, 6, 8], $c$ =[1, 0, 0, 1, 1, 1, 0, 0, 0], $d_1$ =0, $d_2$ =1;
$x_\pi$ =[0, 1, 2, 3, 4, 5, 7, 6, 8], $c$ =[1, 0, 0, 1, 1, 1, 0, 0, 1], $d_1$ =0, $d_2$ =1;
$x_\pi$ =[0, 1, 2, 3, 4, 5, 6, 7, 8], $c$ =[1, 0, 0, 0, 1, 0, 1, 0, 0], $d_1$ =0, $d_2$ =0;
$x_\pi$ =[0, 1, 2, 3, 4, 5, 6, 7, 8], $c$ =[1, 0, 0, 0, 1, 0, 1, 0, 1], $d_1$ =0, $d_2$ =0;
$x_\pi$ =[0, 1, 2, 3, 4, 5, 6, 7, 8], $c$ =[1, 0, 0, 0, 1, 0, 1, 0, 0], $d_1$ =0, $d_2$ =1;
$x_\pi$ =[0, 1, 2, 3, 4, 5, 6, 7, 8], $c$ =[1, 0, 0, 0, 1, 0, 1, 0, 1], $d_1$ =0, $d_2$ =1;
$x_\pi$ =[0, 1, 2, 3, 4, 5, 7, 8, 6], $c$ =[0, 1, 1, 0, 0, 1, 0, 1, 0], $d_1$ =0, $d_2$ =0;
$x_\pi$ =[0, 1, 2, 3, 4, 5, 7, 8, 6], $c$ =[0, 1, 1, 0, 0, 1, 1, 1, 0], $d_1$ =0, $d_2$ =0;
$x_\pi$ =[0, 1, 2, 3, 4, 5, 7, 8, 6], $c$ =[0, 1, 1, 0, 0, 1, 0, 1, 0], $d_1$ =0, $d_2$ =1; or
$x_\pi$ =[0, 1, 2, 3, 4, 5, 7, 8, 6], $c$ =[0, 1, 1, 0, 0, 1, 1, 1, 0], $d_1$ =0, $d_2$ =1.

In some possible designs, when N is equal to 1024, the parameters used to generate the GCP are any one of the following groups:

$x_\pi$ =[0, 1, 2, 3, 4, 5, 6, 7, 8, 9], $c$ =[0, 0, 0, 0, 0, 0, 0, 0, 0, 0], $d_1$ =0, $d_2$ =0;
$x_\pi$ =[0, 1, 2, 3, 4, 5, 6, 7, 8, 9], $c$ =[0, 0, 0, 0, 0, 0, 0, 0, 0, 1], $d_1$ =0, $d_2$ =0;
$x_\pi$ =[0, 1, 2, 3, 4, 5, 6, 7, 8, 9], $c$ =[0, 1, 0, 1, 1, 0, 0, 1, 0, 0], $d_1$ =0, $d_2$ =0;
$x_\pi$ =[0, 1, 2, 3, 4, 5, 6, 7, 8, 9], $c$ =[0, 1, 0, 1, 1, 0, 0, 1, 0, 1], $d_1$ =0, $d_2$ =0;
$x_\pi$ =[0, 1, 2, 3, 4, 5, 6, 7, 8, 9], $c$ =[0, 1, 1, 1, 0, 1, 0, 0, 1, 0], $d_1$ =0, $d_2$ =1;
$x_\pi$ =[0, 1, 2, 3, 4, 5, 6, 7, 8, 9], $c$ =[0, 1, 1, 1, 0, 1, 0, 0, 1, 1], $d_1$ =0, $d_2$ =1;
$x_\pi$ =[0, 1, 2, 3, 4, 5, 6, 7, 8, 9], $c$ =[1, 0, 0, 0, 1, 0, 1, 0, 0, 0], $d_1$ =0, $d_2$ =0;
$x_\pi$ =[0, 1, 2, 3, 4, 5, 6, 7, 8, 9], $c$ =[1, 0, 0, 0, 1, 0, 1, 0, 0, 1], $d_1$ =0, $d_2$ =0;
$x_\pi$ =[0, 1, 2, 3, 4, 5, 6, 7, 8, 9], $c$ =[0, 0, 0, 0, 0, 0, 0, 0, 0, 0], $d_1$ =0, $d_2$ =1;
$x_\pi$ =[0, 1, 2, 3, 4, 5, 6, 7, 8, 9], $c$ =[0, 0, 0, 0, 0, 0, 0, 0, 0, 1], $d_1$ =0, $d_2$ =1;
$x_\pi$ =[0, 1, 2, 3, 4, 5, 6, 7, 8, 9], $c$ =[0, 1, 0, 1, 1, 0, 0, 1, 0, 0], $d_1$ =0, $d_2$ =1;
$x_\pi$ =[0, 1, 2, 3, 4, 5, 6, 7, 8, 9], $c$ =[0, 1, 0, 1, 1, 0, 0, 1, 0, 1], $d_1$ =0, $d_2$ =1;
$x_\pi$ =[0, 1, 2, 3, 4, 5, 6, 7, 8, 9], $c$ =[0, 1, 1, 1, 0, 1, 0, 0, 1, 0], $d_1$ =0, $d_2$ =0;
$x_\pi$ =[0, 1, 2, 3, 4, 5, 6, 7, 8, 9], $c$ =[0, 1, 1, 1, 0, 1, 0, 0, 1, 1], $d_1$ =0, $d_2$ =0;
$x_\pi$ =[0, 1, 2, 3, 4, 5, 6, 7, 8, 9], $c$ =[1, 0, 0, 0, 1, 0, 1, 0, 0, 0], $d_1$ =0, $d_2$ =1;
$x_\pi$ =[0, 1, 2, 3, 4, 5, 6, 7, 8, 9], $c$ =[1, 0, 0, 0, 1, 0, 1, 0, 0, 1], $d_1$ =0, $d_2$ =1;
$x_\pi$ =[0, 1, 2, 3, 4, 5, 6, 7, 8, 9], $c$ =[0, 0, 1, 0, 0, 0, 1, 0, 1, 0], $d_1$ =0, $d_2$ =0;
$x_\pi$ =[0, 1, 2, 3, 4, 5, 6, 7, 8, 9], $c$ =[0, 0, 1, 0, 0, 0, 1, 0, 1, 1], $d_1$ =0, $d_2$ =0;
$x_\pi$ =[0, 1, 2, 3, 4, 5, 6, 7, 8, 9], $c$ =[0, 0, 1, 0, 0, 0, 1, 0, 1, 0], $d_1$ =0, $d_2$ =1;
$x_\pi$ =[0, 1, 2, 3, 4, 5, 6, 7, 8, 9], $c$ =[0, 0, 1, 0, 0, 0, 1, 0, 1, 1], $d_1$ =0, $d_2$ =1;
$x_\pi$ =[0, 1, 2, 3, 4, 5, 6, 7, 8, 9], $c$ =[1, 0, 0, 1, 0, 0, 0, 0, 1, 0], $d_1$ =0, $d_2$ =0;
$x_\pi$ =[0, 1, 2, 3, 4, 5, 6, 7, 8, 9], $c$ =[1, 0, 0, 1, 0, 0, 0, 0, 1, 1], $d_1$ =0, $d_2$ =0;
$x_\pi$ =[0, 1, 2, 3, 4, 5, 6, 7, 8, 9], $c$ =[1, 0, 0, 1, 0, 0, 0, 0, 1, 0], $d_1$ =0, $d_2$ =1;
$x_\pi$ =[0, 1, 2, 3, 4, 5, 6, 7, 8, 9], $c$ =[1, 0, 0, 1, 0, 0, 0, 0, 1, 1], $d_1$ =0, $d_2$ =1;
$x_\pi$ =[0, 1, 2, 3, 4, 5, 6, 7, 8, 9], $c$ =[0, 0, 0, 1, 0, 0, 0, 1, 1, 0], $d_1$ =0, $d_2$ =0;
$x_\pi$ =[0, 1, 2, 3, 4, 5, 6, 7, 8, 9], $c$ =[0, 0, 0, 1, 0, 0, 0, 1, 1, 1], $d_1$ =0, $d_2$ =0;
$x_\pi$ =[0, 1, 2, 3, 4, 5, 6, 7, 8, 9], $c$ =[0, 0, 0, 1, 0, 0, 0, 1, 1, 0], $d_1$ =0, $d_2$ =1;
$x_\pi$ =[0, 1, 2, 3, 4, 5, 6, 7, 8, 9], $c$ =[0, 0, 0, 1, 0, 0, 0, 1, 1, 1], $d_1$ =0, $d_2$ =1;
$x_\pi$ =[0, 1, 2, 3, 4, 5, 6, 7, 8, 9], $c$ =[0, 1, 0, 0, 0, 1, 1, 0, 0, 0], $d_1$ =0, $d_2$ =0;
$x_\pi$ =[0, 1, 2, 3, 4, 5, 6, 7, 8, 9], $c$ =[0, 1, 0, 0, 0, 1, 1, 0, 0, 1], $d_1$ =0, $d_2$ =0;
$x_\pi$ =[0, 1, 2, 3, 4, 5, 6, 7, 8, 9], $c$ =[0, 1, 0, 0, 0, 1, 1, 0, 0, 0], $d_1$ =0, $d_2$ =1;
$x_\pi$ =[0, 1, 2, 3, 4, 5, 6, 7, 8, 9], $c$ =[0, 1, 0, 0, 0, 1, 1, 0, 0, 1], $d_1$ =0, $d_2$ =1;
$x_\pi$ =[0, 1, 2, 3, 4, 5, 6, 7, 8, 9], $c$ =[0, 1, 1, 0, 0, 1, 1, 1, 0, 0], $d_1$ =0, $d_2$ =0;
$x_\pi$ =[0, 1, 2, 3, 4, 5, 6, 7, 8, 9], $c$ =[0, 1, 1, 0, 0, 1, 1, 1, 0, 1], $d_1$ =0, $d_2$ =0;

$x_\pi$ =[0, 1, 2, 3, 4, 5, 6, 7, 8, 9], $c$ =[0, 1, 1, 0, 0, 1, 1, 1, 0, 0], $d_1$ =0, $d_2$ =1;
$x_\pi$ =[0, 1, 2, 3, 4, 5, 6, 7, 8, 9], $c$ =[0, 1, 1, 0, 0, 1, 1, 1, 0, 1], $d_1$ =0, $d_2$ =1;
$x_\pi$ =[0, 1, 2, 3, 4, 5, 6, 7, 8, 9], $c$ =[1, 0, 1, 0, 0, 1, 0, 0, 0, 0], $d_1$ =0, $d_2$ =0;
$x_\pi$ =[0, 1, 2, 3, 4, 5, 6, 7, 8, 9], $c$ =[1, 0, 1, 0, 0, 1, 0, 0, 0, 1], $d_1$ =0, $d_2$ =0;
$x_\pi$ =[0, 1, 2, 3, 4, 5, 6, 7, 8, 9], $c$ =[1, 0, 1, 0, 0, 1, 0, 0, 0, 0], $d_1$ =0, $d_2$ =1; or
$x_\pi$ =[0, 1, 2, 3, 4, 5, 6, 7, 8, 9], $c$ =[1, 0, 1, 0, 0, 1, 0, 0, 0, 1], $d_1$ =0, $d_2$ =1.

In some possible designs, the GCP is generated through generalized Boolean function mapping.

In some possible designs, one sequence in the GCP is (-1)$^{a(x)}$, and another sequence is (-1)$^{b(x)}$, where $a(x)$ = $f(\boldsymbol{x})$ + $d_1$ , $b(\boldsymbol{x})$ = $f(\boldsymbol{x})$ + $x_\pi$[0] + $d_2$ , and $f(\boldsymbol{x})$ = $\sum_{k=0}^{m-2} x_\pi[k] x_\pi[k+1] + \sum_{k=0}^{m-1} c[k] x[k], \ 2^m = N$ .

In some possible designs, when N is equal to 160, 320, 640, or 832, the GCP is a direct product of a first GCP and a second GCP, a length of the first GCP is $N_1$, a length of the second GCP is $N_2$, and $N_1 \times N_2$ = N, where one sequence in the first GCP is (-1)$^{a(x)}$, and another sequence is (-1)$^{b(x)}$, where a($\boldsymbol{x}$) = $f(\boldsymbol{x})$ + $d_1$ , b($\boldsymbol{x}$) = $f(\boldsymbol{x})$ + $\boldsymbol{x}_\pi$[0] + $d_2$ , $f(\boldsymbol{x})$ = $\sum_{k=0}^{l-2} x_\pi[k] x_\pi[k+1] + \sum_{k=0}^{l-1} c[k] x[k], \ 2^l = N_1$ , and the second GCP is any one of the following:

$$x_1 = 1, 1, -1, 1, -1, 1, -1, -1, 1, 1;$$

and

$$y_1 = 1, 1, -1, 1, 1, 1, 1, 1, -1, -1;$$

or

$$x_2 = 1, 1, 1, 1, 1, -1, 1, -1, -1, 1;$$

and

$$y_2 = 1, 1, -1, -1, 1, 1, 1, -1, 1, -1;$$

or

$$x_3 = 1, 1, 1, 1, -1, 1, -1, -1, -1, 1, 1, -1, -1, 1, 1, -1, 1, -1, -1, 1;$$

and

$$y_3 = 1, 1, 1, 1, -1, 1, 1, 1, 1, 1, -1, -1, -1, 1, -1, 1, -1, 1, 1, -1;$$

or

$$x_4 = 1, 1, 1, 1, -1, 1, 1, -1, -1, 1, -1, 1, -1, 1, -1, -1, 1, -1, 1, 1, 1, -1, -1, 1, 1, 1;$$

and

$$y_4 = 1, 1, 1, 1, -1, 1, 1, -1, -1, 1, -1, 1, 1, 1, 1, 1, -1, 1, -1, -1, -1, 1, 1, -1, -1, -1.$$

In some possible designs, when N is equal to 160, the parameters used to generate the GCP are any one of the following groups:

$x_\pi$ =[0, 2, 1, 3], c =[0, 0, 0, 0], $d_1$ =0, $d_2$ =1, the second GCP=($x_1$, $y_1$);
$x_\pi$ =[0, 2, 1, 3], c =[0, 0, 0, 1], $d_1$ =0, $d_2$ =1, the second GCP=($x_1$, $y_1$);
$x_\pi$ =[2, 1, 0, 3], $c$ =[0, 0, 0, 0], $d_1$ =0, $d_2$ =0, the second GCP=($x_2$, $y_2$);
$x_\pi$ =[2, 1, 0, 3], $c$ =[0, 0, 0, 1], $d_1$ =0, $d_2$ =0, the second GCP=($x_2$, $y_2$);
$x_\pi$ =[0, 1, 2], $c$ =[0, 0, 0], $d_1$ =0, $d_2$ =1, the second GCP=($x_3$, $y_3$);
$x_\pi$ =[0, 1, 2], $c$ =[0, 0, 1], $d_1$ =0, $d_2$ =1, the second GCP=($x_3$, $y_3$);
$x_\pi$ =[0, 1, 2, 3], $c$ =[0, 1, 0, 0], $d_1$ =0, $d_2$ =0, the second GCP=($x_1$, $y_1$);
$x_\pi$ =[0, 1, 2, 3], $c$ =[0, 1, 0, 1], $d_1$ =0, $d_2$ =0, the second GCP=($x_1$, $y_1$);
$x_\pi$ =[0, 1, 2, 3], $c$ =[0, 1, 1, 0], $d_1$ =0, $d_2$ =0, the second GCP=($x_2$, $y_2$);
$x_\pi$ =[0, 1, 2, 3], $c$ =[0, 1, 1, 1], $d_1$ =0, $d_2$ =0, the second GCP=($x_2$, $y_2$);
$x_\pi$ =[0, 2, 1, 3], $c$ =[0, 0, 1, 0], $d_1$ =0, $d_2$ =1, the second GCP=($x_2$, $y_2$);
$x_\pi$ =[0, 2, 1, 3], $c$ =[0, 0, 1, 1], $d_1$ =0, $d_2$ =1, the second GCP=($x_2$, $y_2$);
$x_\pi$ =[1, 0, 2, 3], $c$ =[1, 1, 0, 0], $d_1$ =0, $d_2$ =1, the second GCP=($x_1$, $y_1$);
$x_\pi$ =[1, 0, 2, 3], $c$ =[1, 1, 0, 1], $d_1$ =0, $d_2$ =1, the second GCP=($x_1$, $y_1$);
$x_\pi$ =[1, 0, 2, 3], $c$ =[1, 1, 1, 0], $d_1$ =0, $d_2$ =1, the second GCP=($x_2$, $y_2$);
$x_\pi$ =[1, 0, 2, 3], $c$ =[1, 1, 1, 1], $d_1$ =0, $d_2$ =1, the second GCP=($x_2$, $y_2$);
$x_\pi$ =[1, 2, 0, 3], $c$ =[1, 1, 0, 0], $d_1$ =0, $d_2$ =0, the second GCP=($x_2$, $y_2$);
$x_\pi$ =[1,2,0,3], $c$ =[1, 1, 0, 1], $d_1$ =0, $d_2$ =0, the second GCP=($x_2$, $y_2$);
$x_\pi$ =[1, 2, 0, 3], $c$ =[1, 1, 1, 0], $d_1$ =0, $d_2$ =0, the second GCP=($x_1$, $y_1$); or
$x_\pi$ =[1, 2, 0, 3], $c$ =[1, 1, 1, 1], $d_1$ =0, $d_2$ =0, the second GCP=($x_1$, $y_1$).

In some possible designs, when N is equal to 320, the parameters used to generate the GCP are any one of the following groups:

$x_\pi$ =[0, 1, 2, 3, 4], $c$ =[0, 0, 0, 0, 0], $d_1$ =0, $d_2$ =0, the second GCP=($x_1$, $y_1$);
$x_\pi$ =[0, 1, 2, 3, 4], $c$ =[0, 0, 0, 0, 1], $d_1$ =0, $d_2$ =0, the second GCP=($x_1$, $y_1$);
$x_\pi$ =[0, 1, 2, 3, 4], $c$ =[0, 0, 0, 1, 0], $d_1$ =0, $d_2$ =0, the second GCP=($x_2$, $y_2$);
$x_\pi$ =[0, 1, 2, 3, 4], $c$ =[0, 0, 0, 1, 1], $d_1$ =0, $d_2$ =0, the second GCP=($x_2$, $y_2$);
$x_\pi$ =[0, 1, 2, 3, 4], $c$ =[0, 0, 1, 0, 0], $d_1$ =0, $d_2$ =1, the second GCP=($x_1$, $y_1$);
$x_\pi$ =[0, 1, 2, 3, 4], $c$ =[0, 0, 1, 0, 1], $d_1$ =0, $d_2$ =1, the second GCP=($x_1$, $y_1$);
$x_\pi$ =[0, 1, 2, 3, 4], $c$ =[0, 0, 1, 1, 0], $d_1$ =0, $d_2$ =1, the second GCP=($x_2$, $y_2$);
$x_\pi$ =[0, 1, 2, 3, 4], $c$ =[0, 0, 1, 1, 1], $d_1$ =0, $d_2$ =1, the second GCP=($x_2$, $y_2$);
$x_\pi$ =[0, 1, 3, 2, 4], $c$ =[1, 0, 0, 0, 0], $d_1$ =0, $d_2$ =0, the second GCP=($x_2$, $y_2$);
$x_\pi$ =[0, 1, 3, 2, 4], $c$ =[1, 0, 0, 0, 1], $d_1$ =0, $d_2$ =0, the second GCP=($x_2$, $y_2$);
$x_\pi$ =[0, 1, 3, 2, 4], $c$ =[1, 0, 0, 1,0], $d_1$ =0, $d_2$ =0, the second GCP=($x_1$, $y_1$);
$x_\pi$ =[0, 1, 3, 2, 4], $c$ =[1, 0, 0, 1, 1], $d_1$ =0, $d_2$ =0, the second GCP=($x_1$, $y_1$);
$x_\pi$ =[0, 1, 3, 4, 2], $c$ =[1, 1, 0, 0, 0], $d_1$ =0, $d_2$ =1, the second GCP=($x_1$, $y_1$);
$x_\pi$ =[0, 1, 3, 4, 2], $c$ =[1, 1, 1, 0, 0], $d_1$ =0, $d_2$ =1, the second GCP=($x_1$, $y_1$);
$x_\pi$ =[0, 1, 3, 4, 2], $c$ =[1, 1, 0, 1, 1], $d_1$ =0, $d_2$ =1, the second GCP=($x_2$, $y_2$);
$x_\pi$ =[0, 1, 3, 4, 2], $c$ =[1, 1, 1, 1, 1], $d_1$ =0, $d_2$ =1, the second GCP=($x_2$, $y_2$);
$x_\pi$ =[0, 2, 4, 3, 1], $c$ =[0, 0, 0, 0, 1], $d_1$ =0, $d_2$ =1, the second GCP=($x_1$, $y_1$);
$x_\pi$ =[0, 2, 4, 3, 1], $c$ =[0, 1, 0, 0, 1], $d_1$ =0, $d_2$ =1, the second GCP=($x_1$, $y_1$);
$x_\pi$ =[0, 2, 4, 3, 1], $c$ =[0, 0, 0, 1, 0], $d_1$ =0, $d_2$ =1, the second GCP=($x_2$, $y_2$); or
$x_\pi$ =[0, 2, 4, 3, 1], $c$ =[0, 1, 0, 1, 0], $d_1$ =0, $d_2$ =1, the second GCP=($x_2$, $y_2$).

In some possible designs, when N is equal to 640, the parameters used to generate the GCP are any one of the following groups:

$x_\pi$ =[0, 1, 2, 3, 4, 5], $c$ =[0, 0, 0, 0, 0, 0], $d_1$ =0, $d_2$ =0, the second GCP=($x_1$, $y_1$);
$x_\pi$ =[0, 1, 2, 3, 4, 5], $c$ =[0, 0, 0, 0, 0, 1], $d_1$ =0, $d_2$ =0, the second GCP=($x_1$, $y_1$);
$x_\pi$ =[0, 1, 2, 4, 3, 5], $c$ =[1, 0, 0, 0, 0, 0], $d_1$ =0, $d_2$ =1, the second GCP=($x_2$, $y_2$);
$x_\pi$ =[0, 1, 2, 4, 3, 5], $c$ =[1, 0, 0, 0, 0, 1], $d_1$ =0, $d_2$ =1, the second GCP=($x_2$, $y_2$);
$x_\pi$ =[0, 1, 3, 4, 2, 5], $c$ =[1, 0, 1, 1, 0, 0], $d_1$ =0, $d_2$ =1, the second GCP=($x_1$, $y_1$);
$x_\pi$ =[0, 1, 3, 4, 2, 5], $c$ =[1, 0, 1, 1, 0, 1], $d_1$ =0, $d_2$ =1, the second GCP=($x_1$, $y_1$);
$x_\pi$ =[0, 2, 4, 3, 1, 5], $c$ =[0, 0, 0, 1, 1, 0], $d_1$ =0, $d_2$ =0, the second GCP=($x_2$, $y_2$);
$x_\pi$ =[0, 2, 4, 3, 1, 5], $c$ =[0, 0, 0, 1, 1, 1], $d_1$ =0, $d_2$ =0, the second GCP=($x_2$, $y_2$);
$x_\pi$ =[0, 1, 2, 3, 4, 5], $c$ =[0, 0, 0, 0, 0, 0], $d_1$ =0, $d_2$ =1, the second GCP=($x_1$, $y_1$);
$x_\pi$ =[0, 1, 2, 3, 4, 5], $c$ =[0, 0, 0, 0, 0, 1], $d_1$ =0, $d_2$ =1, the second GCP=($x_1$, $y_1$);

$x_\pi$ =[0, 1, 2, 3, 4, 5], $c$ =[0, 0, 0, 0, 1, 0], $d_1$ =0, $d_2$ =0, the second GCP=($x_2$, $y_2$);
$x_\pi$ =[0, 1, 2, 3, 4, 5], c =[0, 0, 0, 0, 1, 1], $d_1$ =0, $d_2$ =0, the second GCP=($x_2$, $y_2$);
$x_\pi$ =[0, 1, 2, 3, 4, 5], c =[0, 0, 0, 0, 1, 0], $d_1$ =0, $d_2$ =1, the second GCP=($x_2$, $y_2$);
$x_\pi$ =[0, 1, 2, 3, 4, 5], c =[0, 0, 0, 0, 1, 1], $d_1$ =0, $d_2$ =1, the second GCP=($x_2$, $y_2$);
$x_\pi$ =[0, 1, 2, 4, 3, 5], c =[1, 0, 0, 0, 0, 0], $d_1$ =0, $d_2$ =0, the second GCP=($x_2$, $y_2$);
$x_\pi$ =[0, 1, 2, 4, 3, 5], c =[1, 0, 0, 0, 0, 1], $d_1$ =0, $d_2$ =0, the second GCP=($x_2$, $y_2$);
$x_\pi$ =[0, 1, 2, 4, 3, 5], c =[1, 0, 0, 0, 1, 0], $d_1$ =0, $d_2$ =0, the second GCP=($x_1$, $y_1$);
$x_\pi$ =[0, 1, 2, 4, 3, 5], $c$ =[1, 0, 0, 0, 1, 1], $d_1$ =0, $d_2$ =0, the second GCP=($x_1$, $y_1$);
$x_\pi$ =[0, 1, 2, 3, 4], $c$ =[0, 0, 0, 0, 0], $d_1$ =0, $d_2$ =1, the second GCP=($x_3$, $y_3$); or
$x_\pi$ =[0, 1, 2, 3, 4], $c$ =[0, 0, 0, 0, 1], $d_1$ =0, $d_2$ =1, the second GCP=($x_3$, $y_3$).

In some possible designs, when N is equal to 832, the parameters used to generate the GCP are any one of the following groups:

$x_\pi$ =[0, 1, 2, 3, 4], $c$ =[0, 0, 0, 0, 0], $d_1$ =0, $d_2$ =0, the second GCP=($x_4$, $y_4$);
$x_\pi$ =[0, 1, 2, 3, 4], $c$ =[0, 0, 0, 0, 1], $d_1$ =0, $d_2$ =0, the second GCP=($x_4$, $y_4$);
$x_\pi$ =[0, 3, 1, 2, 4], $c$ =[1, 0, 1, 0, 0], $d_1$ =0, $d_2$ =1, the second GCP=($x_4$, $y_4$);
$x_\pi$ =[0, 3, 1, 2, 4], $c$ =[1, 0, 1, 0, 1], $d_1$ =0, $d_2$ =1, the second GCP=($x_4$, $y_4$);
$x_\pi$ =[0, 1, 3, 2, 4], $c$ =[1, 0, 0, 1, 0], $d_1$ =0, $d_2$ =0, the second GCP=($x_4$, $y_4$);
$x_\pi$ =[0, 1, 3, 2, 4], $c$ =[1, 0, 0, 1, 1], $d_1$ =0, $d_2$ =0, the second GCP=($x_4$, $y_4$);
$x_\pi$ =[2, 0, 1, 4, 3], $c$ =[0, 1, 0, 0, 0], $d_1$ =0, $d_2$ =0, the second GCP=($x_4$, $y_4$);
$x_\pi$ =[2, 0, 1, 4, 3], $c$ =[0, 1, 0, 1, 0], $d_1$ =0, $d_2$ =0, the second GCP=($x_4$, $y_4$);
$x_\pi$ =[1, 0, 3, 2, 4], $c$ =[0, 0, 0, 0, 0], $d_1$ =0, $d_2$ =0, the second GCP=($x_4$, $y_4$);
$x_\pi$ =[1, 0, 3, 2, 4], $c$ =[0, 0, 0, 0, 1], $d_1$ =0, $d_2$ =0, the second GCP=($x_4$, $y_4$);
$x_\pi$ =[2, 0, 1, 3, 4], $c$ =[0, 1, 0, 1, 0], $d_1$ =0, $d_2$ =1, the second GCP=($x_4$, $y_4$);
$x_\pi$ =[2, 0, 1, 3, 4], $c$ =[0, 1, 0, 1, 1], $d_1$ =0, $d_2$ =1, the second GCP=($x_4$, $y_4$);
$x_\pi$ =[0, 1, 2, 3, 4], $c$ =[0, 0, 1, 0, 0], $d_1$ =0, $d_2$ =1, the second GCP=($x_4$, $y_4$);
$x_\pi$ =[0, 1, 2, 3, 4], $c$ =[0, 0, 1, 0, 1], $d_1$ =0, $d_2$ =1, the second GCP=($x_4$, $y_4$);
$x_\pi$ =[0, 1, 3, 2, 4], $c$ =[1, 0, 0, 0, 0], $d_1$ =0, $d_2$ =1, the second GCP=($x_4$, $y_4$);
$x_\pi$ =[0, 1, 3, 2, 4], $c$ =[1, 0, 0, 0, 1], $d_1$ =0, $d_2$ =1, the second GCP=($x_4$, $y_4$);
$x_\pi$ =[1, 0, 2, 3, 4], $c$ =[0, 1, 1, 0, 0], $d_1$ =0, $d_2$ =0, the second GCP=($x_4$, $y_4$);
$x_\pi$ =[1, 0, 2, 3, 4], $c$ =[0, 1, 1, 0, 1], $d_1$ =0, $d_2$ =0, the second GCP=($x_4$, $y_4$);
$x_\pi$ =[1, 3, 2, 0, 4], $c$ =[0, 0, 1, 1, 0], $d_1$ =0, $d_2$ =1, the second GCP=($x_4$, $y_4$); or
$x_\pi$ =[1, 3, 2, 0, 4], $c$ =[0, 0, 1, 1, 1], $d_1$ =0, $d_2$ =1, the second GCP=($x_4$, $y_4$).

Based on the foregoing possible designs, this application provides the GCPs with the plurality of lengths. There are a large quantity of GCPs with each length, and the large quantity of GCPs with each length can be used by the large quantity of sensing devices to perform sensing simultaneously. In addition, there is a low aperiodic cross-correlation between a plurality of pairs of GCPs with each length, and when the plurality of sensing devices perform sensing simultaneously, the interference between the devices can be effectively reduced, thereby improving the sensing accuracy.

According to a second aspect, a sensing method is provided. The method may be performed by a sensing device, or may be performed by a component of the sensing device, for example, a processor, a chip, or a chip system, or may be implemented by a logical module or software that can implement all or some functions of the sensing device. The method includes: The sensing device sends a sensing signal, receives an echo signal of the sensing signal, and performs processing on the echo signal based on the sensing signal. The sensing signal is generated based on a Golay complementary pair GCP with a length of N, where N is greater than or equal to 32. When N is equal to 128, the GCP is any one of the following pairs:

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, 1, -1, -1, 1, -1, -1, -1, 1, 1, 1, -1, 1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

$y$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, 1, 1, 1, 1, -1, 1, 1, -1, -1, -1, 1, -1, 1, 1, 1, -1, -1, -1, 1, -1, -1, -1, -1, 1, 1, 1, -1, 1, 1, 1, 1, -1, 1, 1, -1, 1, 1, -1, -1, -1, 1, 1, 1, -1, 1, 1, 1, 1, -1, 1, 1, -1, 1, -1, -1, -1, 1, 1, 1, -1, 1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1, -1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, 1, -1, 1, 1, 1, -1, -1, -1, 1, -1, 1, 1, -1, 1, 1, 1, -1, 1, 1, -1, -1, -1, 1, 1, 1, 1, 1, -1, 1, 1, -1, 1, 1, 1;

$y$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, -1, 1, -1, -1, 1, -1, -1, -1, -1, 1, -1, 1, 1, 1, -1, -1, -1, -1, 1, -1, -1, 1, -1, -1, -1, -1, 1, -1, 1, 1, 1, -1, -1, -1, -1, 1, -1, -1, 1, -1, -1, -1;

or

$x$ =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1;

$y$ =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, 1, -1, -1, -1, 1, 1, 1, 1, -1, -1, 1, -1, -1, -1, 1, -1, -1, 1, 1, 1, -1, 1, 1, 1, -1, 1, -1, 1, 1, 1, -1, 1, -1, -1, -1, -1, -1, 1, 1, 1, 1, -1, -1, 1, -1, -1, -1, 1, -1, -1, -1, -1, -1, 1, -1, 1, -1, -1, 1, -1, 1, 1;

or

$x$ =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, -1, 1, 1, -1, 1, -1, -1, 1, -1, 1, -1, -1, -1, 1, -1, -1, -1, -1, 1, -1, 1, -1, -1, -1, 1, 1, 1, 1, -1, -1, -1, 1, 1, -1, 1, -1, -1, 1, -1, 1, -1, -1, -1, 1, -1, 1, -1, -1, -1, 1, -1, -1, -1, 1, 1, 1, -1, 1, 1, 1, -1, -1, -1, -1, 1, 1, 1;

$y$ =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, -1, -1, -1, 1, -1, 1, 1, -1, 1, -1, 1, 1, -1, 1, 1, 1, 1, 1, -1, 1, 1, 1, 1, -1, -1, 1, -1, -1, -1, 1, -1, -1, 1, 1, 1, 1, -1, 1, 1, 1, -1, -1, 1, -1, -1, -1, 1, -1, -1, 1, 1, 1, 1, -1, 1, 1, 1, -1, -1, -1, -1, 1, -1, -1, -1;

or

$x$ =1, 1, 1, 1, -1, -1, 1, 1, 1, -1, -1, 1, -1, 1, -1, 1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, -1, 1, -1, -1, 1, -1, -1, 1, 1, 1, 1, 1, -1, -1, 1, 1, 1, 1, -1, -1, 1, -1, 1, -1, 1, -1, -1, -1, 1, -1, -1, -1, -1, 1, 1, -1, 1, 1, -1, -1, 1, -1, 1, -1, -1, 1, -1, -1, -1, -1, 1, 1, -1, 1, 1, -1, 1, -1, 1, 1, -1, -1, -1, -1, -1, -1, 1, 1, -1, 1, 1, -1, -1, 1, -1, 1;

$y$ =-1, -1, -1, -1, 1, 1, -1, -1, -1, 1, 1, -1, 1, -1, 1, -1, 1, 1, 1, 1, 1, 1, 1, -1, -1, 1, -1, -1, 1, 1, -1, 1, -1, -1, -1, -1, -1, -1, 1, 1, -1, 1, 1, -1, 1, -1, -1, -1, -1, -1, -1, -1, -1, 1, 1, -1, 1, 1, -1, 1, -1, 1, 1, 1, 1, 1, 1, -1, -1, 1, 1, 1, -1, -1, 1, -1, 1, 1, 1, 1, 1, -1, -1, 1, 1, 1, -1, -1, 1, -1, 1, -1, -1, -1, -1, -1, 1, 1, -1, -1, -1, 1, 1, -1, 1, 1, -1, 1, -1, 1, -1, -1, -1, -1, -1, -1, -1, 1, 1, -1, 1, 1, 1, -1, -1, 1, -1, 1;

or

$x$ = 1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1,

-1, 1, 1, -1, -1, -1, -1, -1, -1, 1, -1, 1, -1, 1, -1, -1, 1, 1, 1, -1, -1, 1, 1, 1, 1, 1, -1, 1, -1, -1, 1, 1, -1, 1, 1, -1, -1, -1, -1, -1,
-1, -1, 1, -1, 1, -1, 1, 1, -1, -1, -1, 1, 1, -1, -1, -1, -1, -1, 1, -1, 1, 1, -1, -1, 1, -1, -1, 1, 1, 1, 1, 1, 1, -1, 1, -1, 1, -1, 1, 1, -1,
-1, -1, 1, 1, -1, -1, -1, -1;

$y$ = -1, 1, -1, 1, 1, -1, -1, 1, -1, -1, 1, 1, 1, 1, 1, 1, 1, -1, 1, -1, 1, -1, -1, 1, 1, 1, -1, -1, 1, 1, 1, 1, -1, 1, -1, 1, 1, -1, -1, 1, -1,
-1, 1, 1, 1, 1, 1, 1, -1, 1, -1, 1, -1, 1, 1, -1, -1, -1, 1, 1, -1, -1, -1, -1, 1, -1, 1, -1, -1, 1, 1, -1, 1, 1, 1, -1, -1, -1, -1, -1, -1, -1,
1, -1, 1, -1, 1, 1, -1, -1, -1, 1, 1, -1, -1, -1, -1, -1, 1, -1, 1, 1, -1, -1, 1, -1, -1, 1, 1, 1, 1, 1, 1, 1, -1, 1, -1, 1, -1, 1, 1, -1, -1, -1,
1, 1, -1, -1, -1, -1;

or

$x$ = 1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, 1, -1, -1, 1, 1,
1, -1, -1, 1, -1, 1, -1, 1, 1, 1, 1, 1, 1, 1, -1, -1, 1, -1, -1, 1, 1, 1, -1, 1, -1, -1, -1, -1, -1, 1, 1, -1, -1, -1, 1, 1, -1, 1, -1, 1, -1, 1,
1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1;

$y$ =-1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, -1, -1, -1, -1, 1, 1, -1,
-1, -1, 1, 1, -1, 1, -1, 1, -1, -1, -1, -1, -1, -1, -1, 1, 1, -1, 1, 1, -1, -1, 1, -1, 1, -1, -1, -1, -1, 1, 1, -1, -1, -1, 1, 1, 1, -1, 1, -1, 1,
-1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, 1, 1, -1, -1, 1,
-1, -1, 1, 1, -1, 1, -1;

or

$x$ = 1, -1, 1, -1, -1, 1, 1, -1, 1, 1, -1, -1, -1, -1, -1, -1, 1, -1, 1, -1, 1, 1, -1, -1, -1, 1, 1, -1, -1, -1, -1, 1, -1, 1, -1, -1, 1, 1,
-1, 1, 1, -1, -1, -1, -1, -1, -1, 1, -1, 1, -1, 1, -1, -1, 1, 1, 1, -1, -1, 1, 1, 1, 1, -1, 1, -1, 1, 1, -1, -1, 1, -1, -1, 1, 1, 1, 1, 1, 1,
1, -1, 1, -1, 1, -1, -1, 1, 1, 1, -1, -1, 1, 1, 1, 1, 1, -1, 1, -1, -1, 1, 1, -1, 1, 1, -1, -1, -1, -1, -1, -1, 1, -1, 1, -1, 1, -1, -1, 1, 1,
1, -1, -1, 1, 1, 1, 1;

$y$ =-1, 1, -1, 1, 1, -1, -1, 1, -1, -1, 1, 1, 1, 1, 1, 1, -1, 1, -1, 1, -1, -1, 1, 1, 1, -1, -1, 1, 1, 1, 1, -1, 1, -1, 1, 1, -1, -1, 1, -1,
-1, 1, 1, 1, 1, 1, 1, -1, 1, -1, 1, -1, 1, 1, -1, -1, -1, 1, 1, -1, -1, -1, -1, -1, 1, -1, 1, 1, -1, -1, 1, -1, -1, 1, 1, 1, 1, 1, 1, 1, -1, 1,
-1, 1, -1, -1, 1, 1, 1, -1, -1, 1, 1, 1, 1, 1, -1, 1, -1, -1, 1, 1, -1, 1, 1, 1, -1, -1, -1, -1, -1, -1, 1, -1, 1, -1, 1, -1, -1, 1, 1, 1, -1, -1, 1, 1, 1, 1;

or

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, 1, -1, 1, 1, 1,
1, -1, -1, -1, 1, -1, -1, -1, -1, 1, -1, -1, 1, -1, 1, 1, 1, -1, -1, -1, 1, -1, -1, -1, -1, 1, -1, -1, 1, -1, -1, -1, -1, 1, 1, 1, 1, -1, 1, 1, -1,
-1, -1, 1, -1, -1, 1, -1, 1, 1, 1, -1, -1, -1, 1, -1, 1, 1, 1, -1, 1, 1, 1, -1, 1, 1, 1, 1, 1, -1, -1, -1, 1, -1, -1, -1, -1, -1, 1, -1, -1, 1, -1, 1, 1,
1, -1, -1, -1, 1, -1;

$y$ =-1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, -1, -1, -1, 1, -1, -1,
1, -1, -1, -1, -1, 1, 1, 1, -1, 1, 1, 1, 1, -1, 1, 1, 1, -1, 1, -1, -1, -1, 1, 1, 1, -1, 1, -1, -1, -1, 1, -1, -1, 1, -1, -1, -1, -1, 1, 1, 1, 1, -1,
1, -1, -1, -1, 1, -1, -1, 1, -1, 1, 1, 1, -1, -1, -1, 1, -1, 1, 1, 1, -1, 1, 1, 1, -1, 1, 1, 1, 1, -1, -1, -1, 1, -1, -1, -1, -1, 1, -1, -1, 1, -1,
1, 1, 1, -1, -1, -1, 1, -1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1,
1, -1, 1, 1, -1, 1, 1, 1, -1, 1, -1, -1, -1, 1, 1, 1, 1, -1, 1, 1, 1, -1, 1, 1, 1, -1, 1, -1, -1, -1, 1, 1, 1, 1, -1, 1, -1, -1, -1, 1, 1, 1, 1, -1, 1, -1, -1, -1, -1,
1, -1, -1, -1, 1, 1, 1, 1, -1, 1, 1, -1, 1, 1, 1, 1, -1, 1, 1, 1, -1, -1, -1, 1, -1, 1, 1, 1, -1, 1, 1, -1, -1, -1, 1, 1, 1, 1, -1, 1, 1, -1, 1, 1, 1;

*y* =-1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, -1, 1, -1, -1, -1, 1, 1, 1, -1, 1, -1, -1, 1, -1, -1, -1, 1, -1, 1, 1, 1, -1, -1, -1, -1, 1, -1, -1, 1, -1, -1, -1, -1, 1, -1, -1, -1, 1, 1, 1, -1, 1, -1, -1, 1, -1, -1, -1, -1, 1, -1, -1, -1, 1, 1, 1, 1, -1, 1, 1, 1, -1, 1, 1, -1, 1, 1, 1, 1, -1, 1, 1, 1, -1, -1, -1, 1, -1, 1, 1, -1, 1, 1, 1, 1, -1, 1, -1, -1, -1, 1, 1, 1, 1, -1, 1, 1, -1, 1, 1, 1;

or

*x* =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, 1, -1, 1, 1, 1, 1, -1, 1, -1, 1, 1, -1, 1, -1, -1;

*y* =-1, -1, -1, 1, 1, 1, 1, -1, -1, 1, -1, -1, -1, 1, -1, -1, 1, 1, 1, -1, 1, 1, 1, -1, 1, -1, 1, 1, -1, 1, -1, -1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, 1, -1, 1, 1, 1, -1, -1, -1, -1, 1, 1, -1, 1, 1, 1, -1, -1, -1, -1, 1, 1, -1, 1, 1, 1, -1, 1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, 1, -1, 1, -1, 1, 1, -1, 1, -1, -1, -1;

or

*x* =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, 1, -1, -1, 1, -1, -1, -1, 1, -1, -1, 1, 1, 1, 1, 1, -1, -1, -1, 1, 1, 1, -1, 1, -1, -1, 1, -1, 1, -1, -1, -1, -1, 1, -1, -1, -1, -1, -1, 1, -1, -1, -1, 1, -1, -1, -1, 1, 1, 1, 1, -1, -1, -1, 1, 1, -1, 1, -1, -1, 1, -1, 1, -1, -1, 1, -1, 1, -1, -1, -1, 1, -1, -1, -1, 1, 1, 1, -1, 1, 1, 1, 1, -1, 1, 1, -1, -1, -1, -1, 1, 1, 1;

*y* =-1, -1, 1, -1, 1, 1, -1, 1, -1, 1, 1, 1, -1, 1, 1, 1, 1, 1, -1, 1, 1, 1, -1, 1, 1, -1, -1, -1, -1, 1, 1, 1, 1, 1, -1, 1, -1, -1, 1, -1, 1, -1, -1, -1, 1, -1, -1, -1, -1, 1, 1, -1, 1, 1, 1, -1, 1, 1, -1, -1, -1, -1, -1, 1, 1, 1, -1, -1, -1, 1, -1, 1, 1, -1, 1, -1, 1, 1, 1, 1, -1, 1, 1, 1, 1, 1, -1, 1, 1, 1, -1, 1, 1, 1, -1, -1, -1, -1, 1, 1, 1, -1, -1, 1, -1, 1, 1, -1, -1, 1, -1, 1, 1, -1, -1, 1, 1, 1, 1, -1, 1, 1, 1, -1, -1, -1, 1, 1, 1, -1, -1, -1, 1, 1, 1;

or

*x* = 1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, -1, -1, -1, -1, 1, 1, -1, 1, 1, -1, -1, 1, -1, 1, -1, -1, -1, -1, 1, 1, -1, -1, -1, 1, 1, -1, 1, -1, 1, -1, -1, -1, -1, -1, -1, 1, 1, -1, 1, 1, -1, -1, 1, -1, -1, 1, -1, 1, 1, -1, -1, 1, 1, -1, 1;

*y* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, 1, 1, 1, -1, -1, 1, -1, 1, -1, 1, -1, -1, -1, -1, 1, 1, -1, 1, 1, -1, -1, 1, -1, 1, -1, -1, -1, -1, 1, 1, 1, 1, 1, -1, -1, 1, -1, -1, 1, 1, -1, 1, -1, 1, -1, 1, 1, 1, 1, 1, 1, 1, -1, -1, 1, 1, -1, -1, 1, 1, -1, 1, -1;

or

*x* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, 1, -1, 1, 1, -1, -1, -1, -1, -1, -1, 1, -1, 1, -1, 1, -1, -1, -1, 1, 1, 1, -1, -1, 1, 1, 1, 1, 1, -1, 1, 1, -1, 1, -1, -1, -1, -1, -1, -1, 1, -1, 1, -1, 1, 1, -1, -1, -1, 1, 1, -1, -1, -1, -1, -1, -1, 1, -1, 1, 1, 1, -1, -1, 1, 1, -1, -1, -1, -1, 1, 1, 1, 1, 1, 1, -1, 1, 1, -1, 1, -1, 1, -1, -1, 1, 1, -1, -1, -1, -1, -1;

*y* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, 1, -1, 1, 1, -1, -1, -1, -1, -1, -1, 1, -1, 1, -1, 1, -1, -1, -1, 1, 1, 1, -1, -1, 1, 1, 1, 1, 1, -1, 1, 1, -1, 1, -1, -1, -1, -1, -1, -1, 1, 1, 1, 1, -1, 1, -1, 1, 1, -1, -1, 1, 1, -1, 1, 1, -1, -1, 1, 1, -1, 1, 1, -1, -1, -1, 1, -1, 1, 1, -1, 1, 1, -1, -1, -1, 1, -1, 1, 1, 1, 1, 1, 1,

1, -1, -1, 1, 1, 1, 1;

or

$x$ =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1, -1, -1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, 1, -1, -1, 1, -1, -1, -1, 1, 1, -1, 1, -1;

$y$ =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, -1, 1, -1, -1, -1, -1, 1, 1, -1, 1, 1, -1, -1, 1, -1, 1, -1, -1, -1, -1, -1, 1, 1, -1, -1, -1, 1, 1, -1, 1, -1, 1, -1, -1, -1, -1, -1, -1, -1, 1, 1, -1, 1, 1, -1, -1, 1, -1, 1;

or

$x$ =1, -1, 1, -1, -1, 1, 1, -1, 1, 1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, -1, 1, -1, 1, -1, -1, 1, 1, 1, 1, -1, 1, -1, -1, 1, 1, 1, -1, -1, 1, 1, 1, 1, 1, 1, -1, 1, -1, -1, -1, -1, -1, -1, 1, -1, 1, -1, 1, -1, -1, 1, 1, 1, 1, 1, -1, -1, 1, 1, 1, 1;

$y$ = 1, -1, 1, -1, -1, 1, 1, -1, 1, 1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, -1, 1, -1, 1, -1, -1, 1, 1, 1, 1, 1, 1, -1, 1, -1, -1, -1, 1, 1, -1, -1, 1, 1, 1, 1, 1, 1, -1, 1, -1, -1, -1, 1, 1, -1, -1, -1, -1, -1, 1, -1, 1, 1, 1, -1, -1, 1, -1, -1, 1, 1, 1, -1, -1, -1, -1, 1, -1, 1, -1, 1, -1, -1, 1, 1, 1, -1, -1, -1, -1;

or

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, -1, -1, -1, 1, 1, 1, -1, 1, 1, 1, 1, -1, 1, 1, -1, 1, -1, -1, -1, 1, 1, 1, -1, 1;

$y$ =1, 1, 1, -1, 1, 1, -1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, -1, 1, -1, -1, 1, -1, -1, -1, -1, 1, -1, -1, 1, -1, -1, -1, -1, 1, 1, 1, 1, -1, 1, -1, -1, 1, -1, -1, 1, 1, 1, 1, -1, -1, -1, 1, -1, -1, -1, -1, 1, -1, -1, 1, 1, 1, 1, -1, -1, -1, 1, -1, -1, -1, -1, 1, -1, -1, 1, -1, 1, 1, 1;

1, -1, -1, -1, 1, -1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, 1, 1, -1, -1, -1, 1, -1, 1, 1, -1, 1, 1, 1, 1, -1, 1, 1, -1, -1, -1, 1, -1, 1, 1, -1, 1, 1, 1, 1, -1, 1, 1, -1, -1, -1, -1, 1, -1, -1, 1, -1, -1, -1, -1, 1, -1, 1, 1, 1, -1, -1, -1, -1, 1, -1, -1, 1, -1, -1, -1, 1, -1, 1, -1, -1, -1;

$y$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, 1, 1, 1, -1, -1, -1, 1, -1, 1, -1, -1, -1, 1, 1, 1, 1, -1, 1, 1, 1, -1, 1, 1, 1, -1, 1, 1, 1, -1, 1, -1, -1, -1, 1, 1, 1, 1, -1, 1, 1, 1, -1, -1, -1, -1, 1, 1, 1, 1, -1, 1, 1, -1, -1, -1, 1, 1, 1, 1, -1, 1, 1, -1, 1, 1, 1, 1, 1, 1, 1;

or

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1,

1, -1, -1, -1, 1, -1, -1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1;

$y$ =-1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, -1, -1, -1, 1, -1, -1, 1, -1, -1, -1, -1, 1, 1, 1, -1, 1, 1, 1, 1, -1, 1, 1, 1, -1, 1, -1, -1, -1, -1, 1, 1, 1, -1, 1, 1, 1, 1, -1, 1, 1, -1, 1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, 1, 1, 1, 1, -1, 1, 1, 1, 1, -1, -1, -1, 1, -1, 1, 1, 1, -1, 1, 1, 1, 1, -1, 1, 1, 1, 1, -1, -1, -1, -1, 1, -1, -1, 1, -1, -1, -1, -1, 1, -1, -1, -1, 1, 1, 1, -1, 1, -1, -1, -1, 1, -1, -1, -1, 1, -1, 1, 1, 1, -1, -1, -1, -1, 1, -1, -1, 1, -1, -1, -1, -1, 1, -1, -1, -1;

$y$ =-1, 1, -1, -1, -1, 1, 1, 1, -1, 1, -1, -1, 1, -1, -1, -1, -1, 1, -1, -1, -1, 1, 1, 1, -1, 1, 1, -1, 1, 1, 1, -1, 1, -1, -1, -1, 1, 1, 1, -1, 1, -1, -1, 1, -1, -1, -1, 1, -1, 1, 1, 1, -1, -1, -1, -1, 1, -1, -1, 1, -1, -1, -1, -1, 1, -1, 1, 1, 1, -1, -1, -1, 1, -1, 1, 1, 1, -1, 1, 1, 1, 1, -1, -1, -1, -1, 1, -1, -1, 1, -1, -1, -1, -1, 1, -1, -1, -1, 1, 1, 1, -1, 1, -1, -1, -1, 1, -1, -1, -1, 1, -1, -1, -1, 1, 1, 1, -1, -1, -1, -1, 1, -1, -1, 1, -1, -1, -1, -1, 1, -1, -1, -1;

or

$x$ =1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, -1, 1, 1, 1, -1, -1, 1, -1, -1, 1, 1, 1, -1, 1, -1, -1, 1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, 1, 1, 1, 1, 1, -1, 1, -1, 1, 1, 1;

$y$ =1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, -1, 1, 1, 1, -1, -1, 1, 1, 1, 1, 1, 1, -1, 1, -1, -1, 1, 1, 1, 1, -1, 1, 1, -1, -1, -1, 1, 1, 1, -1, 1, 1, -1, -1, -1, 1, -1, 1, -1, -1, -1, 1, 1, 1, -1, -1, 1, -1, -1, -1, -1, -1, 1, -1, 1, -1, -1, 1, 1, 1, -1, -1, -1, 1, -1, 1, 1, -1, -1;

or

$x$ =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, 1, -1, 1, 1, 1, 1, 1, -1, 1, -1, 1, 1, 1, -1, -1, 1, -1, -1, 1, 1, 1, 1, 1, -1, 1, -1, 1, 1, 1, 1, 1, -1, 1, 1, -1, -1, -1, 1, 1, -1, 1, 1, 1, 1, -1, 1, 1, -1, -1, -1, 1, 1, -1, 1, -1, -1, 1, 1, 1, 1, -1, -1, 1, 1, 1, 1, 1, 1, -1, 1, 1, -1, -1, -1, -1, -1, 1, -1, 1, -1, -1, -1, 1, 1, 1, -1, 1, 1, -1, -1, -1;

$y$ =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, -1, 1, -1, -1, 1, 1, 1, 1, 1, -1, 1, -1, 1, 1, 1, -1, -1, 1, -1, -1, 1, 1, 1, -1, -1, 1, -1, -1, 1, 1, 1, -1, -1, -1, -1, -1, 1, -1, 1, 1, -1, -1, -1, -1, 1, 1, -1, 1, 1, -1, -1, -1, -1, -1, 1, -1, 1, -1, -1, -1, -1, 1, -1, 1, 1, 1, 1, 1, -1, 1, -1, 1, 1, 1, 1, -1, -1, 1, 1, 1, 1, 1, -1, 1, -1, -1, 1, 1, 1, -1, -1, 1, 1, 1, -1, -1, 1, 1, 1, 1, -1, 1, 1, -1, -1, 1, 1, 1, 1, 1, -1, 1, 1, -1, -1, 1, 1, 1;

or

$x$ =1, 1, 1, -1, -1, 1, -1, -1, 1, 1, 1, -1, 1, -1, 1, 1, 1, 1, -1, -1, 1, -1, -1, -1, -1, 1, -1, 1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, -1, 1, 1, -1, -1, -1, 1, 1, -1, 1, 1, 1, 1, 1, 1, -1, 1, -1, 1, 1, 1, -1, -1, -1, 1, 1, -1, 1, -1, 1, 1, -1, -1, -1, 1, 1, -1, 1, 1, 1, 1, 1, 1, -1, 1, 1, -1, -1, 1, 1, 1;

*y* =-1, -1, -1, 1, 1, -1, 1, 1, -1, -1, -1, 1, -1, 1, -1, -1, -1, -1, -1, 1, 1, -1, 1, 1, 1, 1, 1, -1, 1, -1, 1, 1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1, 1, 1, 1, -1, -1, 1, -1, -1, 1, 1, 1, 1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1;

or

*x* =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, 1, -1, -1, 1, 1, 1, 1, 1, -1, 1, -1, 1, 1, 1, -1, -1, 1, -1, -1, 1, 1, 1, 1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, 1, 1, -1, 1, 1, -1, -1, -1, -1, -1, 1, -1, 1, -1, -1, -1, 1, 1, -1, 1, 1, -1, -1, -1;

*y* =-1, -1, 1, -1, 1, -1, -1, -1, -1, -1, 1, -1, -1, 1, 1, 1, -1, -1, 1, -1, 1, -1, -1, -1, 1, 1, -1, 1, 1, -1, -1, -1, 1, 1, -1, 1, -1, 1, 1, 1, 1, 1, -1, 1, 1, -1, -1, -1, -1, -1, 1, -1, 1, -1, -1, -1, 1, 1, 1, -1, 1, 1, -1, -1, -1, 1, 1, 1, -1, 1, -1, 1, 1, 1, 1, 1, -1, 1, 1, -1, -1, -1, 1, 1, 1, -1, -1, 1, -1, -1, 1, 1, 1, 1, 1, -1, 1, -1, 1, 1, 1, 1, 1, -1, 1, 1, -1, -1, -1, -1, -1, 1, -1, 1, -1, -1, -1, -1, 1, 1;

or

*x* =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, -1, -1, 1, -1, 1, -1, -1, -1, -1, -1, 1, -1, 1, -1, -1, 1, 1, 1, 1, -1, -1, 1, -1, -1, -1, -1, 1, -1, 1, -1, -1, 1, 1, 1, 1, -1, 1, -1, 1, 1, 1, 1, 1, -1;

*y* =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1, 1, -1, 1, 1, -1, -1, -1, 1, 1, -1, 1, 1, 1, 1, 1, -1, 1, -1, 1, 1, -1, -1, -1, 1, 1, -1, 1, 1, 1, 1, 1, -1, 1, -1, 1, 1, -1, -1, -1, 1, -1, 1, -1, -1, -1, -1, -1, 1;

or

*x* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, -1, 1, 1, 1, 1, 1, -1, 1, 1, -1, -1, -1, 1, 1, -1, 1, -1, 1, 1, 1, 1, 1, -1, 1, -1, 1, 1, 1, 1, 1, -1, 1, -1, 1, 1, 1, 1, 1, -1, 1, 1, -1, -1, -1, -1, 1, -1, -1, 1, 1, 1, 1, -1, -1, 1, -1, -1, 1, 1, 1, 1, 1, -1, 1, 1, -1, -1, -1, 1, 1, -1, 1;

*y* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, 1, 1, 1, 1, 1, -1, 1, 1, -1, -1, -1, 1, 1, -1, 1, 1, -1, -1, -1, 1, 1, -1, 1, 1, -1, -1, -1, 1, 1, -1, 1, 1, -1, -1, -1, -1, -1, 1, -1, 1, -1, -1, -1, -1, -1, 1, -1, -1, 1, 1, 1, 1, 1, -1, 1, 1, -1, -1, -1, -1, -1, 1, -1, -1, 1, 1, 1, -1, -1, 1, -1;

or

*x* =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1, -1, 1, -1, -1, -1, -1, -1, 1, -1, 1, -1, -1, -1, -1, -1, 1, -1, 1, -1, -1, 1, 1, 1, 1, -1, -1, 1, -1, -1, -1, -1, -1, 1, -1, 1, -1, -1, 1, 1, 1, 1, -1, 1, -1, 1, 1, 1, 1, 1, -1;

*y* =-1, 1, -1, -1, 1, 1, 1, -1, -1, 1, -1, -1, -1, -1, -1, 1, 1, -1, 1, 1, -1, -1, -1, 1, -1, 1, -1, -1, -1, -1, -1, 1, 1, -1, 1, 1, -1, -1, -1, 1, 1, -1, 1, 1, 1, 1, -1, 1, -1, 1, 1, -1, -1, -1, 1, -1, 1, -1, -1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, 1, 1, 1, 1, 1, -1;

or

*x* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, -1, 1, 1, 1, 1, 1, -1, 1, 1, -1, -1, -1, 1, 1, -1, 1;

*y* =-1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, 1, -1, -1, -1, -1, -1, 1, -1, 1, -1, -1, -1, 1, 1, -1, 1, 1, -1, -1, -1, -1, -1, 1, -1, -1, 1, 1, 1, -1, -1, 1, -1, 1, -1, -1, -1, -1, -1, 1, -1, 1, -1, -1, -1, 1, 1, -1, 1, -1, -1, -1, -1, -1, 1, -1, -1, 1, 1, 1, -1, -1, 1, -1, -1, 1, 1, 1, 1, 1, 1, -1, 1, -1, 1, 1, 1, -1, -1, 1, -1, -1, 1, 1, 1, 1, 1, 1, -1, 1, 1, -1, -1, -1, 1, 1, -1, 1;

or

*x* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, 1, -1, -1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, 1, -1, -1, 1, -1, 1, 1, 1, -1, 1, 1, 1, 1, -1, 1, 1, 1, -1, 1, 1, -1, 1, 1, 1, -1, 1, -1, -1, -1, 1, 1, 1, 1, -1;

*y* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, 1, -1, 1, 1, -1, 1, -1, -1, -1, 1, -1, -1, -1, 1, -1, -1, -1, 1, -1, -1, -1, 1, -1, -1, -1, 1, 1, 1, 1, -1, 1, 1, 1, -1, 1, -1, -1, -1, 1, 1, 1, 1, -1, 1, 1, 1, -1, 1, -1, -1, -1, 1, -1, -1, 1, -1, -1, -1, 1, -1, 1, 1, 1, -1, -1, -1, -1, 1;

or

*x* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, -1, 1, 1, 1, 1, -1, -1, -1, 1, -1, 1, 1, 1, 1, -1, 1, 1, -1, 1, 1, -1, 1, -1, -1, -1, 1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, -1, 1, -1, -1, 1, -1, 1, 1, 1;

*y* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, -1, -1, -1, -1, 1, 1, 1, 1, -1, 1, -1, -1, -1, 1, -1, 1, 1, 1, 1, -1, -1, -1, 1, -1, -1, -1, 1, -1, -1, 1, 1, 1, 1, -1, -1, -1, -1, 1, 1, 1, 1, -1, 1, 1, 1, 1, -1, -1, -1, 1, -1, -1, -1, -1, 1, 1, 1, 1, -1, 1, 1, 1, -1, 1, -1, -1;

or

*x* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, -1, -1, -1, 1, -1, 1, 1, -1, 1, 1, 1, 1, -1, -1, -1, 1, -1, -1, -1, 1, -1, -1, 1, -1, 1, 1, 1, -1, -1, -1, 1, -1, -1, 1, -1, 1, 1, 1, -1, 1, 1, 1, 1, -1, 1, 1, 1, -1, 1, 1, 1, -1, 1, -1, -1, -1, 1, 1, 1, 1, -1;

*y* =-1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, 1, 1, 1, -1, 1, -1, -1, 1, -1, -1, -1, -1, 1, -1, -1, 1, -1, 1, 1, -1, 1, -1, -1, -1, 1, -1, -1, 1, -1, 1, 1, -1, 1, 1, 1, 1, -1, -1, -1, -1, 1, -1, -1, 1, -1, 1, 1, -1, 1, 1, 1, 1, -1, 1, 1, 1, -1, 1, 1, 1, -1, 1, 1, 1, 1, -1, 1, 1, 1, -1, 1, 1, 1, -1, 1, 1, -1, 1, 1, 1, -1, 1, 1, 1, -1, -1, 1, 1, 1, 1, -1;

or

*x* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, -1, 1, 1, 1, 1, -1, -1, -1, 1, -1, 1, 1, 1, 1, -1, 1, 1, -1, -1, -1, 1, -1, 1, 1, 1, 1, -1, 1, 1,

-1, 1, 1, 1, -1, 1, 1, 1, 1, -1, 1, 1, -1, 1, -1, -1, -1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1;

$y$ =-1, 1, 1, 1, 1, -1, -1, -1, 1, -1, 1, 1, 1, -1, 1, 1, -1, 1, 1, 1, -1, 1, 1, 1, 1, -1, 1, 1, -1, 1, -1, -1, 1, -1, -1, -1, -1, 1, 1, 1, -1, 1, -1, -1, -1, 1, -1, -1, -1, 1, 1, 1, 1, -1, 1, 1, 1, 1, -1, 1, 1, 1, -1, 1, -1, -1, -1, 1, 1, 1, 1, -1, 1, 1, 1, 1, -1, 1, 1, -1, 1, 1, -1, 1, 1, 1, 1, -1, 1, 1, 1, -1, 1, 1, -1, 1, -1, -1, -1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1;

or

$x$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, -1, -1, -1, -1, -1, 1, -1, 1, 1, -1, -1, 1, 1, -1, -1, -1, -1, -1, 1, -1, 1, 1, -1, 1, 1, -1, -1, -1, -1, -1, -1, 1, -1, 1, -1, 1, -1, -1, 1, 1, -1, 1, -1, -1, 1, 1;

$y$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, -1, 1, 1, -1, -1, 1, 1, 1, 1, 1, -1, 1, -1, -1, 1, 1, 1, 1, 1, 1, -1, 1, -1, -1, 1, 1, -1, -1, 1, 1, 1, 1, 1, 1, -1, 1, -1, -1, 1, 1, -1, -1, 1, 1, 1, 1, 1, 1, -1, 1, -1, -1, 1, 1, -1, 1, 1, -1, -1, -1;

or

$x$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, 1, 1, -1, -1, 1, -1, -1, 1, -1, 1, -1, 1, -1, -1, -1, -1, 1, 1, -1, -1, -1, 1, 1, -1, -1, -1, 1, 1, 1, 1, 1, 1, 1, 1, -1, -1, 1, -1, -1, 1, -1, 1, -1, 1, -1, -1, -1, -1, -1, -1, 1, 1, 1, -1, -1, 1, 1, -1, 1, -1, -1, 1, -1, 1, 1, 1, 1, -1, -1, 1, 1, 1, -1, -1, 1, 1, -1, 1, -1, -1, -1, -1, -1;

$y$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, -1, -1, 1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1;

or

$x$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, -1, -1, -1, -1, -1, 1, -1, 1, 1, -1, -1, 1, 1, -1, -1, -1, -1, -1, 1, -1, 1, -1, -1, 1, 1;

$y$ =-1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, -1, -1, -1, -1, -1, 1, -1, 1, 1, -1, -1, 1, 1, 1, -1, -1, 1, -1, 1, -1, 1, -1, 1, -1, -1, 1, -1, -1, -1, -1, -1, -1, 1, -1, 1, -1, 1, -1, -1, 1, -1, -1, -1, -1, -1, 1, -1, 1, 1, -1, -1, -1, -1, -1, -1, 1, -1, 1, -1, 1, -1, -1, 1, 1, -1, -1, -1, -1, -1, -1, 1, -1, 1, -1, 1, -1, -1, 1, 1;

or

$x$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, 1, -1, 1, -1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, 1, 1, -1, -1, 1, -1, -1, 1, -1, 1, 1, 1, 1, 1, 1, -1, -1, 1, 1, 1, 1, -1, -1, 1, 1, 1, -1, -1, 1, 1, 1, 1, -1, -1, 1, 1, 1, -1, -1, 1, 1, -1, 1, -1, -1, -1, -1, -1;

*y* =-1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, -1, 1, 1, -1, 1, 1, -1, 1, -1, 1, -1, 1, 1, 1, 1, -1, -1, 1, 1, 1, -1, -1, 1, 1, -1, 1, -1, -1, -1, -1, -1;

or

*x* =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, 1, -1, -1, 1, 1, -1, -1, -1, 1, 1, 1, 1, 1, -1, 1, -1, 1, -1, 1, 1, -1, 1, 1, -1, -1, -1, -1, -1, -1, -1, 1, -1, 1, 1, -1, -1, 1, 1, 1, -1, -1, 1, 1, 1, -1, 1, -1, 1, -1, 1, 1, -1, 1, 1, -1, -1, 1, 1, 1, 1, 1, -1, 1, -1, -1, 1, 1, -1, -1, -1, 1, 1, 1, 1, 1, -1, 1, -1, -1, 1, 1, -1, 1, 1, -1, -1;

*y* =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, 1, -1, -1, 1, 1, -1, -1, -1, 1, 1, 1, 1, 1, -1, 1, -1, 1, -1, 1, 1, -1, 1, 1, -1, -1, 1, 1, 1, 1, 1, -1, 1, -1, -1, 1, 1, -1, -1, -1, 1, 1, -1, -1, 1, 1, -1, -1, 1, -1, 1, 1, -1, -1, -1, -1, -1, 1, -1, 1, 1, -1, -1, -1, -1, -1, -1, 1, -1, 1, 1, -1, -1, 1, 1, 1, -1, -1, -1, -1, -1, -1, 1, -1, 1, -1, -1, 1, 1;

or

*x* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1, -1, -1, 1, 1, 1, -1, 1, 1, 1, -1, 1, 1, -1, 1, 1, 1, 1, 1, 1, 1, -1, -1, -1, -1, 1, 1, -1, -1, 1, -1, 1, 1, 1, 1, 1, 1, 1, -1, -1, -1, -1, 1, -1, 1, -1, 1, -1, -1, -1, -1, 1, 1, -1, -1, -1, 1, 1, -1, -1, 1, -1, 1, 1, 1, 1, 1;

*y* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, -1, -1, -1, 1, 1, 1, -1, 1, 1, 1, -1, 1, 1, -1, 1, -1, -1, -1, -1, -1, -1, 1, 1, 1, -1, 1, 1, 1, -1, 1, -1, 1, 1, 1, 1, -1, -1, 1, 1, 1, -1, -1, 1, 1, -1, -1, 1, 1, -1, 1, -1, -1, -1, -1, -1;

or

*x* =1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, 1, -1, -1, 1, 1, -1, -1, -1, 1, 1, 1, 1, 1, -1, 1, -1, 1, -1, 1, 1, -1, 1, 1, -1, -1, -1, -1, -1, -1, -1, 1, -1, 1, 1, -1, -1, 1, 1, 1, -1, 1, 1, 1, -1, -1, 1, 1, 1, 1, 1, -1, 1, -1, 1, -1, 1, 1, -1, 1, 1, 1, 1, -1, 1, -1, -1, 1, 1, -1, -1, -1, 1, 1, 1, 1, 1, -1, 1, -1, -1, 1, 1, -1, 1, 1, -1, -1;

*y* =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, 1, -1, -1, 1, 1, -1, -1, -1, 1, 1, 1, 1, 1, -1, 1, -1, 1, -1, 1, 1, -1, 1, 1, -1, -1, 1, 1, 1, 1, 1, -1, 1, -1, -1, 1, -1, 1, -1, 1, -1, -1, 1, -1, -1, 1, -1, -1, 1, 1, -1, -1, -1, -1, -1, 1, -1, 1, -1, 1, -1, -1, 1, 1, 1, 1, 1, 1, 1, -1, 1, 1, -1, -1, 1, 1, 1, 1, 1, 1, 1, -1, -1, -1, -1, -1, -1, 1, -1, 1, -1, -1, 1, 1;

or

*x* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1, -1, -1, 1, 1, -1, -1, 1, -1, 1, -1, 1, -1, 1, -1, -1, -1, -1, -1, -1, -1, 1, 1, -1, -1, 1, 1, -1, -1, 1, -1, 1, -1, -1, -1, -1, 1, 1, -1, -1, 1, 1, -1, -1, 1, 1, -1, -1, -1, -1, 1, 1, -1, -1, 1, 1, -1, -1, 1;

*y* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, -1, 1, 1, 1, -1, -1, -1, -1, 1, 1, -1, 1, 1, -1, 1, -1, -1, -1, -1, -1, -1, 1, 1, 1, -1, -1, 1, 1, 1, -1, 1, 1, -1, -1, 1, 1, 1, -1, -1, 1, 1, 1, -1, -1, 1, 1,

-1, 1, -1, -1, -1, -1, -1.

Based on this solution, this application may provide GCPs with a plurality of lengths. When the length is 128, 40 pairs of GCPs are provided, that is, a large quantity of GCPs can be provided, so that a large quantity of sensing devices can perform sensing simultaneously. In addition, there is a low aperiodic cross-correlation between the 40 pairs of GCPs, and when a plurality of sensing devices perform sensing simultaneously, interference between the devices can be effectively reduced, thereby improving sensing accuracy.

In some possible designs, when N is equal to 64, the GCP is any one of the following pairs:

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

$y$ =-1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, 1, -1, -1, -1, 1, -1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1;

$y$ =-1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1;

or

$x$ =1, 1, 1, 1, 1, 1, -1, -1, 1, 1, -1, -1, 1, 1, 1, 1, 1, -1, 1, -1, -1, 1, 1, -1, 1, -1, -1, 1, -1, 1, -1, 1, -1, -1, -1, -1, -1, -1, 1, 1, 1, 1, -1, -1, 1, 1, 1, 1, -1, 1, -1, 1, 1, -1, -1, 1, 1, -1, -1, 1, -1, 1, -1, 1;

$y$ =-1, -1, -1, -1, -1, -1, 1, 1, -1, -1, 1, 1, -1, -1, -1, -1, -1, 1, -1, 1, 1, -1, -1, 1, -1, 1, 1, -1, 1, -1, 1, -1, 1, 1, 1, 1, 1, 1, -1, -1, 1, 1, 1, 1, -1, -1, 1, 1, 1, 1, -1, 1, -1, 1, 1, -1, -1, 1, -1, 1, -1, 1;

or

$x$ =1, -1, 1, -1, 1, -1, -1, 1, 1, -1, -1, 1, 1, -1, 1, -1, 1, 1, 1, 1, -1, -1, 1, 1, 1, 1, -1, -1, -1, -1, -1, -1, -1, 1, -1, 1, -1, 1, 1, -1, 1, -1, -1, 1, 1, -1, 1, -1, -1, -1, -1, -1, 1, 1, -1, -1, 1, 1, -1, -1, -1, -1, -1, -1; $y$ = -1, 1, -1, 1, -1, 1, 1, -1, -1, 1, 1, -1, -1, 1, -1, 1, -1, -1, -1, -1, 1, 1, -1, 1, 1, -1, 1, 1, -1, -1, -1, -1, 1, 1, -1, -1, -1, -1, 1, 1, 1, 1, 1, -1, 1, -1, 1, -1, -1, -1, -1, -1, -1, 1, 1, -1, -1, 1, 1, -1, -1, -1, -1, -1, -1;

or

$x$ =1, -1, 1, -1, -1, -1, -1, -1, -1, -1, -1, -1, 1, -1, 1, -1, 1, -1, -1, 1, -1, -1, 1, 1, 1, 1, -1, -1, -1, 1, 1, -1, 1, -1, 1, -1, 1, 1, 1, 1, 1, -1, -1, -1, -1, -1, 1, -1, 1, 1, -1, -1, 1, 1, 1, -1, -1, 1, 1, -1, -1, 1, -1, -1, 1; $y$ =1, -1, 1, -1, -1, -1, -1, -1, -1, -1, -1, 1, -1, 1, -1, 1, -1, -1, 1, 1, 1, 1, -1, -1, -1, 1, 1, 1, -1, -1, -1, 1, 1, -1, -1, 1, 1, -1, -1, 1, -1, 1, -1, -1, -1, -1, 1, 1, 1, 1, -1, 1, -1, -1, 1, 1, 1, -1, -1, 1, 1, 1, -1;

or

$x$ =1, -1, -1, 1, -1, -1, 1, 1, -1, -1, 1, 1, 1, -1, -1, 1, 1, -1, 1, -1, -1, -1, -1, -1, 1, 1, 1, 1, -1, 1, -1, 1, 1, -1, -1, 1, 1, 1, -1, -1, -1, -1, 1, 1, -1, 1, 1, -1, 1, -1, 1, -1, 1, 1, 1, 1, 1, 1, 1, 1, 1, -1, 1, -1;

*y* =1, -1, -1, 1, -1, -1, 1, 1, -1, -1, 1, 1, 1, -1, -1, 1, 1, -1, 1, -1, -1, -1, -1, -1, 1, 1, 1, 1, -1, 1, -1, 1, -1, 1, 1, -1, -1, -1, 1, 1, 1, 1, -1, -1, 1, -1, -1, 1, -1, 1, -1, 1, -1, -1, -1, -1, -1, -1, -1, -1, 1, -1, 1;

or

*x* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, -1;

*y* =-1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, 1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, -1;

or

*x* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, -1, -1, -1, 1, -1, 1, 1, -1, 1, 1, 1, -1, -1, -1, 1, -1, -1, -1, -1, 1, -1, -1, 1, -1, 1, 1;

*y* =-1, 1, 1, 1, 1, -1, -1, -1, 1, -1, 1, 1, 1, -1, 1, 1, -1, 1, 1, 1, -1, 1, 1, 1, 1, -1, 1, 1, -1, 1, -1, -1, -1, 1, 1, 1, 1, -1, -1, -1, 1, -1, 1, 1, 1, 1, -1, 1, 1, 1, -1, -1, -1, 1, -1, -1, -1, -1, 1, -1, -1, 1, -1, 1, 1;

or

*x* =1, 1, 1, -1, 1, -1, 1, 1, -1, -1, -1, 1, -1, 1, -1, -1, 1, 1, 1, -1, -1, 1, -1, -1, 1, 1, 1, -1, -1, 1, -1, -1, 1, 1, 1, -1, 1, -1, 1, 1, 1, 1, 1, -1, -1, 1, -1, -1, -1, -1, -1, 1, 1, -1, 1, 1;

*y* =-1, -1, -1, 1, -1, 1, -1, -1, 1, 1, 1, -1, 1, -1, 1, 1, -1, -1, -1, 1, 1, -1, 1, 1, -1, -1, -1, 1, 1, -1, 1, 1, 1, 1, 1, -1, 1, -1, 1, 1, 1, 1, 1, -1, 1, -1, 1, 1, 1, 1, 1, -1, -1, 1, -1, -1, -1, -1, -1, 1, 1, -1, 1, 1;

or

*x* =1, 1, -1, 1, 1, -1, -1, -1, -1, -1, 1, -1, -1, 1, 1, 1, 1, 1, -1, 1, -1, 1, 1, 1, 1, 1, -1, 1, -1, 1, 1, 1, 1, 1, -1, 1, 1, -1, -1, -1, 1, 1, -1, 1, 1, -1, -1, -1, 1, 1, -1, 1, -1, 1, 1, 1, -1, -1, 1, -1, 1, -1, -1, -1;

*y* =-1, -1, 1, -1, -1, 1, 1, 1, 1, 1, -1, 1, 1, -1, -1, -1, -1, -1, 1, -1, 1, -1, -1, -1, -1, -1, 1, -1, 1, -1, -1, -1, 1, 1, -1, 1, 1, -1, -1, 1, 1, -1, -1, -1, 1, 1, -1, 1, -1, 1, 1, 1, -1, -1, 1, -1, 1, -1, -1, -1;

or

*x* =1, 1, 1, -1, -1, -1, -1, 1, 1, 1, 1, -1, 1, 1, 1, -1, 1, -1, 1, 1, -1, 1, -1, -1, -1, 1, -1, -1, -1, 1, -1, -1, 1, 1, 1, -1, 1, 1, 1, 1, -1, 1, 1, 1, -1, -1, -1, -1, 1, 1, -1, 1, 1, 1, -1, 1, 1, 1, -1, 1, -1, -1, 1, -1, 1, 1;

*y* =1, 1, 1, -1, -1, -1, -1, 1, 1, 1, 1, -1, 1, 1, 1, -1, 1, -1, 1, 1, -1, 1, -1, -1, -1, 1, -1, -1, -1, 1, -1, -1, -1, -1, -1, 1, -1, -1, -1, 1, 1, 1, 1, -1, -1, 1, -1, -1, -1, 1, -1, -1, 1, -1, 1, 1, -1, 1, -1, -1;

or

*x* =1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, 1, 1, -1, 1, 1, 1, -1, 1, 1, 1, -1, 1, 1, -1, 1, -1, -1, 1, -1, 1, -1, -1, -1, 1, -1, -1, -1, -1, 1, 1, 1, 1, -1, -1, -1;

*y* =1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, -1, -1, 1, -1, -1, -1, 1, -1, -1, -1, 1, -1, 1, 1, -1, 1, -1, 1, 1, 1, -1, 1, 1, 1, 1, -1, -1, -1, -1, 1, 1, 1;

or

*x* =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

*y* =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, 1, 1, 1, -1, 1, 1, 1, 1, -1, 1, 1, -1, 1, -1, -1, -1, 1, 1, 1, -1, 1;

or

*x* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, 1, -1, 1, -1, -1, -1, 1, 1, 1, 1, -1, 1, 1, 1, -1, 1, 1, 1;

*y* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, -1, 1, -1, -1, -1, 1, 1, 1, 1, -1, 1, -1, -1, 1, -1, -1, -1, 1, -1, 1, 1, 1, -1, -1, -1, -1, 1, -1, -1, 1, -1, -1, -1;

or

*x* =1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1; y =1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, -1, 1, -1, 1, 1;

or

*x* =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, 1, -1, -1, 1, 1, 1, 1, 1, -1, 1, -1, 1, 1, 1, -1, -1, 1, -1, -1, 1, 1, 1;

*y* =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, 1, 1, -1, 1, -1, 1, 1, 1, 1, -1, 1, -1, 1, 1, 1, 1, -1, 1, 1, -1, -1, -1, -1, -1, 1, -1, 1, -1, -1, -1;

or

*x* =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1;

*y* =-1, 1, -1, -1, 1, 1, 1, -1, -1, 1, -1, -1, -1, -1, -1, 1, 1, -1, 1, 1, -1, -1, -1, 1, -1, 1, -1, -1, -1, -1, -1, 1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1;

or

*x* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, 1, 1, 1, 1, -1, 1, 1, -1, -1, -1, 1, 1, 1, 1, 1, -1, 1;

***y*** =-1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, 1, 1, 1, 1, 1, -1, 1, 1, -1, -1, -1, 1, 1, -1, 1;

or

***x*** =1, 1, -1, -1, 1, -1, 1, -1, 1, 1, 1, 1, 1, -1, -1, 1, -1, -1, 1, 1, -1, 1, -1, 1, 1, 1, 1, 1, 1, 1, -1, -1, 1, 1, 1, -1, -1, 1, -1, 1, -1, 1, 1, 1, 1, -1, -1, 1, 1, 1, -1, -1, 1, -1, 1, -1, -1, -1, -1, -1, -1, 1, 1, -1;

***y*** =1, 1, -1, -1, 1, -1, 1, -1, 1, 1, 1, 1, 1, -1, -1, 1, -1, -1, 1, 1, -1, 1, -1, 1, 1, 1, 1, 1, 1, -1, -1, 1, -1, -1, 1, 1, -1, 1, -1, 1, -1, -1, -1, -1, 1, 1, -1, -1, -1, 1, 1, -1, 1, -1, 1, 1, 1, 1, 1, 1, -1, -1, 1;

or

***x*** =1, -1, -1, 1, 1, 1, 1, 1, -1, 1, -1, 1, 1, -1, -1, -1, 1, 1, -1, -1, -1, -1, -1, 1, -1, 1, -1, 1, 1, -1, -1, 1, -1, -1, 1, 1, 1, 1, 1, 1, -1, 1, -1, 1, 1, -1, -1, 1, -1, -1, 1, 1, 1, 1, -1, 1, -1, 1, -1, -1, 1, 1;

***y*** =1, -1, -1, 1, 1, 1, 1, 1, 1, -1, 1, -1, 1, 1, -1, -1, -1, 1, 1, -1, -1, -1, -1, -1, 1, -1, 1, -1, 1, 1, -1, -1, -1, 1, 1, -1, -1, -1, -1, -1, 1, -1, 1, -1, 1, 1, -1, -1, 1, 1, -1, 1, 1, 1, -1, -1, -1, -1, -1, 1, -1, 1, -1, 1, 1, -1, -1;

or

***x*** =1, 1, 1, -1, -1, -1, -1, 1, 1, -1, 1, 1, 1, -1, 1, 1, -1, -1, -1, 1, -1, -1, -1, 1, -1, 1, -1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1; y =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, -1, -1, -1, -1, 1, 1, -1, 1, 1, 1, 1, -1, 1, 1, 1, 1, -1, 1, 1, 1, 1, -1, 1, 1, 1, 1, -1, 1, 1, -1, 1, -1, -1;

or

***x*** =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, 1, -1, -1, 1, -1, -1, -1, 1, -1, -1, 1, 1, 1, 1, -1, -1, -1; ***y*** =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, 1, -1, 1, -1, -1, -1, 1, -1, 1, -1, -1, -1, 1, -1, 1, -1, -1, -1, 1, -1, -1, -1, 1, 1, -1, 1, 1, 1, 1, -1, 1, 1, -1, -1, -1, -1, 1, 1, 1;

or

***x*** =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, 1, 1, -1, -1, 1, -1, -1, 1, 1, -1, 1, -1;

***y*** =-1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1;

or

***x*** =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, 1, -1, -1, 1, 1, 1, -1, -1, 1, 1, 1, 1; ***y*** = -1, 1, -1, 1, 1, -1, -1, 1, -1, -1, 1, 1, 1, 1, 1, 1, 1, -1, 1, -1, 1, -1, -1, 1, 1, 1, -1, -1, 1, 1, 1, 1, -1, 1, -1, 1, -1, 1, 1, -1, -1, -1, 1, 1, -1, 1, -1, 1, -1, -1, 1, 1, 1, -1, -1, 1, 1, 1, 1;

or

***x*** =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1;

***y*** =-1, -1, -1, -1, -1, 1, -1, 1, 1, -1, -1, 1, 1, 1, -1, -1, 1, 1, 1, 1, -1, 1, -1, 1, -1, 1, 1, -1, 1, 1, 1, -1, -1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1;

or

***x*** =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1; ***y*** = -1, -1, 1, 1, -1, 1, 1, -1, 1, -1, 1, -1, 1, 1, 1, 1, 1, 1, 1, -1, -1, 1, 1, -1, -1, 1, -1, 1, 1, 1, 1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1;

or

***x*** =1, 1, 1, -1, -1, -1, 1, -1, -1, -1, -1, 1, 1, 1, -1, 1, 1, 1, 1, -1, 1, 1, -1, 1, 1, 1, 1, -1, 1, 1, -1, 1, 1, 1, 1, -1, -1, -1, 1, -1, 1, 1, 1, -1, -1, -1, 1, -1, 1, 1, 1, -1, 1, 1, -1, 1, -1, -1, -1, -1, 1, -1, -1, 1, -1;

***y*** =1, 1, 1, -1, -1, -1, 1, -1, -1, -1, -1, 1, 1, 1, -1, 1, 1, 1, 1, 1, -1, 1, 1, 1, -1, 1, 1, 1, 1, -1, 1, 1, 1, -1, 1, -1, -1, -1, -1, 1, 1, 1, 1, -1, 1, -1, -1, -1, -1, 1, -1, -1, 1, -1, 1, 1, 1, -1, 1, 1, -1, 1;

or

***x*** =1, -1, 1, 1, -1, 1, 1, 1, -1, 1, -1, -1, 1, -1, -1, -1, 1, -1, 1, 1, 1, -1, -1, -1, 1, -1, 1, 1, 1, -1, -1, -1, 1, -1, 1, 1, -1, 1, 1, 1, 1, -1, 1, 1, -1, 1, 1, 1, 1, -1, 1, 1, 1, -1, -1, -1, -1, 1, -1, -1, -1, 1, 1, 1;

***y*** =1, -1, 1, 1, -1, 1, 1, 1, -1, 1, -1, -1, 1, -1, -1, -1, 1, -1, 1, 1, 1, -1, -1, -1, 1, -1, 1, 1, 1, -1, -1, -1, -1, 1, -1, -1, 1, -1, -1, 1, -1, -1, -1, -1, 1, -1, -1, -1, 1, 1, 1, 1, -1, 1, 1, 1, 1, -1, -1, -1;

or

***x*** =1, 1, 1, 1, 1, -1, -1, 1, 1, 1, 1, 1, 1, -1, -1, 1, -1, -1, 1, 1, -1, 1, -1, 1, 1, 1, -1, -1, 1, -1, 1, -1, 1, 1, 1, 1, 1, -1, -1, 1, -1, -1, -1, -1, 1, 1, -1, -1, -1, 1, 1, -1, 1, -1, 1, -1, -1, 1, 1, -1, 1, -1, 1;

***y*** =1, 1, 1, 1, 1, -1, -1, 1, 1, 1, 1, 1, 1, -1, -1, 1, -1, -1, 1, 1, -1, 1, -1, 1, 1, 1, -1, -1, 1, -1, 1, -1, -1, -1, -1, -1, 1, 1, -1, 1, 1, 1, 1, 1, -1, -1, 1, 1, 1, -1, -1, 1, -1, 1, -1, 1, 1, -1, -1, 1, -1, 1, -1;

or

***x*** =1, -1, 1, -1, 1, 1, -1, -1, 1, -1, 1, -1, 1, 1, -1, -1, -1, 1, 1, -1, -1, -1, -1, -1, 1, -1, -1, 1, 1, 1, 1, 1, 1, -1, 1, -1, 1, 1, -1, -1, -1, 1, -1, 1, -1, -1, 1, 1, -1, 1, 1, -1, -1, -1, -1, -1; ***y*** =1, -1, 1, -1, 1, 1, -1, -1, 1, -1, 1, -1, 1, 1, 1, -1, -1, 1, 1, -1, -1, -1, -1, -1, 1, -1, -1, 1, 1, 1, 1, -1, 1, -1, 1, 1, -1, -1, 1, -1, -1, 1, -1, -1, 1, -1, -1, 1, -1, -1, 1, 1, 1, 1, 1, 1, -1, -1, 1, 1, 1, 1, 1;

or

***x*** =1, 1, -1, 1, 1, 1, -1, 1, -1, -1, 1, -1, 1, 1, -1, 1, -1, -1, -1, 1, 1, 1, 1, -1, 1, 1, 1, -1, 1, 1, 1, -1, 1, 1, -1, 1, 1, 1, -1, 1, 1, 1, -1, 1, 1, 1, -1, 1, 1, 1, 1, -1, 1, 1, -1, -1, -1, -1, 1, -1, -1, -1, 1;

*y* =-1, -1, 1, -1, -1, -1, 1, -1, 1, 1, -1, 1, -1, -1, 1, -1, 1, 1, 1, -1, -1, -1, -1, 1, -1, -1, -1, 1, -1, -1, -1, 1, 1, 1, -1, 1, 1, 1, -1, 1, 1, 1, -1, 1, -1, -1, 1, -1, -1, -1, -1, 1, 1, 1, 1, -1, -1, -1, -1, 1, -1, -1, -1, 1;

or

*x* =1, -1, -1, -1, 1, -1, -1, -1, -1, 1, 1, 1, 1, -1, -1, -1, -1, 1, -1, -1, 1, -1, 1, 1, 1, -1, 1, 1, 1, -1, 1, 1, 1, -1, -1, -1, 1, -1, -1, -1, 1, -1, -1, -1, -1, 1, 1, 1, -1, 1, -1, -1, 1, -1, 1, 1, -1, 1, -1, -1, -1, 1, -1, -1; *y* = -1, 1, 1, 1, -1, 1, 1, 1, 1, -1, -1, -1, -1, 1, 1, 1, 1, -1, 1, 1, -1, 1, -1, -1, -1, 1, -1, -1, -1, 1, -1, -1, -1, 1, -1, -1, -1, 1, -1, -1, -1, 1, -1, -1, -1, 1, 1, 1, -1, 1, -1, -1, -1, 1, -1, -1, 1, 1, -1, 1, -1, -1, -1, 1, -1, -1;

or

*x* =1, 1, 1, -1, 1, 1, 1, -1, 1, 1, 1, -1, -1, -1, -1, 1, -1, -1, 1, -1, 1, 1, -1, 1, -1, -1, 1, -1, -1, -1, 1, -1, -1, -1, 1, -1, -1, -1, 1, 1, 1, 1, -1, -1, -1, -1, 1, 1, 1, -1, 1, -1, -1, 1, -1, -1, -1, 1, -1, -1, -1, 1, -1; *y* = -1, -1, -1, 1, -1, -1, -1, 1, -1, -1, -1, 1, 1, 1, 1, 1, -1, 1, 1, -1, 1, -1, -1, 1, -1, 1, 1, -1, 1, 1, 1, -1, 1, -1, -1, -1, 1, -1, -1, -1, 1, 1, 1, 1, -1, -1, -1, -1, 1, 1, 1, -1, 1, -1, -1, 1, -1, -1, -1, 1, -1, -1, -1, 1, -1;

or

*x* =1, -1, 1, 1, 1, -1, 1, 1, 1, -1, 1, 1, -1, 1, -1, -1, -1, 1, 1, 1, 1, -1, -1, -1, -1, 1, 1, 1, -1, 1, 1, 1, -1, 1, -1, -1, -1, 1, -1, -1, 1, -1, 1, 1, -1, 1, -1, -1, 1, -1, -1, -1, -1, 1, 1, 1, -1, 1, 1, 1, -1, 1, 1, 1;

*y* =-1, 1, -1, -1, -1, 1, -1, -1, -1, 1, -1, -1, 1, -1, 1, 1, 1, -1, -1, -1, -1, 1, 1, 1, 1, -1, -1, -1, 1, -1, -1, -1, 1, -1, 1, 1, 1, -1, 1, 1, -1, 1, -1, -1, 1, -1, 1, 1, -1, 1, -1, -1, 1, -1, -1, -1, -1, 1, 1, 1, -1, 1, 1, 1;

or

*x* =1, 1, -1, 1, -1, -1, -1, 1, 1, 1, -1, 1, 1, 1, 1, -1, 1, -1, -1, -1, -1, 1, -1, -1, 1, -1, -1, -1, 1, -1, 1, 1, -1, -1, 1, -1, 1, 1, 1, 1, -1, 1, 1, -1, 1, 1, 1, 1, -1, -1, -1, 1, -1, 1, 1;

or

*y* =1, 1, -1, 1, -1, -1, -1, 1, 1, 1, -1, 1, 1, 1, 1, -1, 1, -1, -1, -1, 1, -1, -1, 1, -1, -1, -1, 1, -1, 1, 1, 1, 1, -1, 1, -1, -1, -1, 1, -1, -1, -1, -1, 1, 1, -1, -1, -1, -1, 1, -1, -1, -1, 1, 1, 1, -1, 1, -1, -1;

or

*x* =1, 1, -1, 1, -1, -1, -1, 1, 1, 1, -1, 1, 1, 1, 1, -1, -1, 1, 1, 1, 1, -1, 1, 1, -1, 1, 1, 1, -1, 1, -1, -1, -1, -1, 1, -1, 1, 1, 1, 1, -1, 1, 1, -1, 1, 1, 1, 1, -1, 1, -1, -1, -1, -1, 1, -1, -1, -1, 1, 1, 1, -1, 1, -1, -1;

or

*y* =1, 1, -1, 1, -1, -1, -1, 1, 1, 1, -1, 1, 1, 1, 1, -1, -1, 1, 1, 1, 1, -1, 1, 1, -1, 1, 1, 1, -1, 1, -1, -1, -1, 1, 1, -1, 1, -1, -1, -1, 1, 1, -1, 1, -1, -1, -1, 1, -1, 1, 1, 1, 1, -1, 1, 1, 1, 1, -1, -1, -1, 1, -1, 1, 1;

or

*x* =1, 1, -1, 1, -1, -1, 1, -1, 1, -1, -1, -1, 1, 1, 1, -1, -1, -1, 1, -1, -1, -1, 1, -1, 1, -1, -1, -1, 1, -1, -1, -1, -1, -1, 1, 1, 1, 1, -1, -1, 1, -1, -1, 1, -1, -1, 1, 1, 1, 1; *y* =1, 1, -1, 1, -1, -1, 1, -1, 1, -1, -1, -1, 1, 1, 1, 1, -1, -1, -1, 1, -1, 1, -1, -1, -1, 1, -1, -1, 1, 1, 1, 1, -1, 1, 1, 1, 1, 1, 1, -1, -1, -1, -1, 1, 1, -1, 1, 1, -1, 1, -1, -1;

or

*x* =1, 1, -1, 1, -1, -1, 1, -1, -1, 1, 1, 1, 1, -1, -1, -1, -1, -1, -1, 1, -1, -1, -1, 1, 1, -1, 1, 1, 1, -1, 1, 1, 1, 1, -1, 1, 1, 1, -1, 1,

-1, 1, 1, 1, -1, 1, 1, 1, -1, -1, -1, 1, 1, 1, 1, -1, 1, -1, 1, 1, -1, 1, -1, -1;

*y* =1, 1, -1, 1, -1, -1, 1, -1, -1, 1, 1, 1, 1, -1, -1, -1, -1, -1, -1, 1, -1, -1, -1, 1, 1, -1, 1, 1, 1, -1, 1, 1, -1, -1, 1, -1, -1, -1, 1, -1, 1, -1, -1, -1, 1, -1, -1, -1, 1, 1, 1, -1, -1, -1, -1, 1, -1, 1, -1, -1, 1, -1, 1, 1;

or

*x* =1, 1, 1, -1, 1, 1, -1, 1, 1, 1, 1, -1, -1, -1, 1, -1, -1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1, 1, 1, 1, -1, 1, 1, -1, 1, -1, -1, -1, 1, 1, 1, -1, 1;

*y* =-1, -1, -1, 1, -1, -1, 1, -1, -1, -1, -1, 1, 1, 1, -1, 1, -1, -1, -1, 1, -1, -1, 1, -1, -1, -1, -1, 1, 1, 1, -1, 1, -1, -1, -1, 1, -1, -1, 1, -1, -1, -1, 1, -1, -1, -1, -1, 1, 1, 1, -1, -1, -1, 1, -1, 1, 1, 1, -1, 1, 1, 1, -1, 1;

or

*x* =1, -1, 1, 1, 1, -1, -1, -1, 1, -1, 1, 1, -1, 1, 1, 1, -1, 1, -1, -1, -1, 1, 1, 1, -1, 1, -1, -1, 1, -1, -1, -1, 1, -1, 1, 1, 1, -1, -1, -1, -1, 1, -1, -1, 1, -1, -1, -1, 1, -1, 1, 1, 1, -1, -1, -1, -1, 1, -1, -1, 1, -1, -1, -1; *y* = -1, 1, -1, -1, -1, 1, 1, 1, -1, 1, -1, -1, 1, -1, -1, -1, -1, 1, -1, -1, -1, 1, 1, 1, -1, 1, 1, -1, 1, 1, 1, 1, -1, 1, 1, 1, -1, -1, -1, -1, 1, -1, -1, 1, -1, -1, -1.

In some possible designs, when N is equal to 32, the GCP is any one of the following pairs:

*x* =1, 1, 1, 1, 1, -1, -1, 1, 1, 1, -1, -1, 1, -1, 1, -1, -1, -1, -1, -1, -1, 1, 1, -1, 1, 1, -1, -1, 1, -1, 1, -1;

*y* =1, 1, 1, 1, 1, -1, -1, 1, 1, 1, -1, -1, 1, -1, 1, -1, 1, 1, 1, 1, -1, -1, 1, -1, -1, 1, 1, -1, 1, -1, 1;

or

*x* =1, -1, 1, -1, 1, 1, -1, -1, 1, -1, -1, 1, 1, 1, 1, 1, -1, 1, -1, 1, -1, -1, 1, 1, 1, -1, -1, 1, 1, 1, 1, 1; *y* =1, -1, 1, -1, 1, 1, -1, -1, 1, -1, -1, 1, 1, 1, 1, 1, 1, -1, 1, -1, 1, 1, -1, -1, -1, 1, 1, -1, -1, -1, -1, -1;

or

*x* =1, 1, -1, 1, 1, 1, -1, 1, -1, -1, -1, 1, 1, 1, 1, -1, 1, 1, -1, 1, -1, -1, 1, -1, -1, -1, -1, 1, -1, -1, -1, 1;

*y* =-1, -1, 1, -1, -1, -1, 1, -1, 1, 1, 1, -1, -1, -1, -1, 1, 1, 1, -1, 1, -1, -1, 1, -1, -1, -1, -1, 1, -1, -1, -1, 1;

or

*x* =1, -1, -1, -1, 1, -1, -1, -1, -1, 1, -1, -1, 1, -1, 1, 1, 1, -1, -1, -1, -1, 1, 1, 1, -1, 1, -1, -1, -1, 1, -1, -1;

*y* =-1, 1, 1, 1, -1, 1, 1, 1, 1, -1, 1, 1, -1, 1, -1, -1, 1, -1, -1, -1, -1, 1, 1, 1, -1, 1, -1, -1, -1, 1, -1, -1;

or

*x* =1, 1, -1, -1, -1, -1, 1, 1, -1, -1, -1, -1, -1, -1, -1, -1, -1, 1, -1, 1, 1, -1, 1, -1, 1, -1, -1, 1, 1, -1, -1, 1;

*y* =-1, -1, 1, 1, -1, -1, 1, 1, 1, 1, 1, 1, -1, -1, -1, -1, 1, -1, 1, -1, 1, -1, 1, -1, -1, 1, 1, -1, 1, -1, -1, 1;

or

*x* =1, -1, -1, 1, -1, 1, 1, -1, -1, 1, -1, 1, -1, 1, -1, 1, -1, -1, -1, -1, 1, 1, 1, 1, 1, 1, -1, -1, 1, 1, -1, -1;

*y* =-1, 1, 1, -1, -1, 1, 1, -1, 1, -1, 1, -1, -1, 1, -1, 1, 1, 1, 1, 1, 1, 1, 1, -1, -1, 1, 1, 1, 1, -1, -1;

or

*x* =1, 1, 1, 1, -1, 1, 1, -1, 1, 1, -1, -1, -1, 1, -1, 1, 1, 1, 1, 1, -1, 1, 1, -1, -1, -1, 1, 1, 1, -1, 1, -1; *y* =**1, 1, 1**, 1, -1, 1, 1, -1, 1, 1, -1, -1, -1, 1, -1, 1, -1, -1, -1, -1, 1, -1, -1, 1, 1, 1, -1, -1, -1, 1, -1, 1;

or

*x* =1, -1, 1, -1, -1, -1, 1, 1, 1, -1, -1, 1, -1, -1, -1, -1, 1, -1, 1, -1, -1, -1, 1, 1, -1, 1, 1, -1, 1, 1, 1, 1;

*y* =1, -1, 1, -1, -1, -1, 1, 1, 1, -1, -1, 1, -1, -1, -1, -1, -1, 1, -1, 1, 1, 1, -1, -1, 1, -1, -1, 1, -1, -1, -1, -1;

or

*x* =1, 1, -1, -1, -1, 1, -1, 1, 1, 1, 1, 1, -1, 1, 1, -1, 1, 1, -1, -1, -1, 1, -1, 1, -1, -1, -1, -1, 1, -1, -1, 1;

*y* =-1, -1, 1, 1, 1, -1, 1, -1, -1, -1, -1, -1, 1, -1, -1, 1, 1, 1, -1, -1, -1, 1, -1, 1, -1, -1, -1, -1, 1, -1, -1, 1;

or

*x* =1, -1, -1, 1, -1, -1, -1, -1, 1, -1, 1, -1, -1, -1, 1, 1, 1, -1, -1, 1, -1, -1, -1, -1, -1, 1, -1, 1, 1, 1, -1, -1;

*y* =-1, 1, 1, -1, 1, 1, 1, 1, -1, 1, -1, 1, 1, 1, -1, -1, 1, -1, -1, 1, -1, -1, -1, -1, -1, 1, -1, 1, 1, 1, -1, -1;

or

*x* =1, 1, -1, -1, 1, -1, 1, -1, 1, 1, 1, 1, 1, -1, -1, 1, -1, -1, 1, 1, -1, 1, -1, 1, 1, 1, 1, 1, -1, -1, 1; *y* =-1, -1, 1, 1, -1, 1, -1, 1, -1, -1, -1, -1, -1, 1, 1, -1, -1, -1, 1, 1, -1, 1, -1, 1, 1, 1, 1, 1, 1;

or

*x* =1, -1, -1, 1, 1, 1, 1, 1, 1, -1, 1, -1, 1, 1, -1, -1, -1, 1, 1, -1, -1, -1, -1, -1, 1, -1, 1, -1, 1, 1, -1, -1;

*y* =-1, 1, 1, -1, -1, -1, -1, -1, -1, 1, -1, 1, -1, -1, 1, 1, -1, 1, 1, -1, -1, -1, -1, -1, 1, -1, 1, -1, 1, 1, -1, -1;

or

*x* =1, 1, 1, -1, 1, 1, 1, -1, 1, 1, -1, 1, -1, -1, 1, -1, 1, 1, 1, -1, -1, -1, -1, 1, 1, 1, -1, 1, 1, 1, -1, 1; *y* =1, 1, 1, -1, 1, 1, 1, -1, 1, 1, -1, 1, -1, -1, 1, -1, -1, -1, -1, -1, 1, 1, 1, 1, -1, -1, -1, 1, -1, -1, -1, 1, -1;

or

**x** =1, -1, 1, 1, 1, -1, 1, 1, 1, -1, -1, -1, -1, 1, 1, 1, 1, -1, 1, 1, -1, 1, -1, -1, 1, -1, -1, -1, 1, -1, -1, -1;

**y** =1, -1, 1, 1, 1, -1, 1, 1, 1, -1, -1, -1, -1, 1, 1, 1, -1, 1, -1, -1, 1, -1, 1, 1, -1, 1, 1, 1, -1, 1, 1, 1;

or

**x** =1, 1, -1, 1, -1, -1, 1, -1, 1, 1, -1, 1, 1, 1, -1, 1, 1, 1, 1, -1, 1, 1, 1, -1, 1, 1, 1, -1, -1, -1, -1, 1; **y** = -1, -1, 1, -1, 1, 1, -1, 1, 1, 1, -1, 1, 1, 1, -1, 1, -1, -1, -1, 1, -1, -1, -1, 1, 1, 1, 1, -1, -1, -1, -1, 1;

or

**x** =1, -1, -1, -1, -1, 1, 1, 1, 1, -1, -1, -1, 1, -1, -1, -1, 1, -1, 1, 1, 1, -1, 1, 1, 1, -1, 1, 1, -1, 1, -1, -1;

**y** =-1, 1, 1, 1, 1, -1, -1, -1, 1, -1, -1, -1, 1, -1, -1, -1, -1, 1, -1, -1, -1, 1, -1, -1, 1, -1, 1, 1, -1, 1, -1, -1;

or

**x** =1, 1, -1, -1, -1, -1, -1, -1, -1, 1, 1, -1, -1, 1, -1, 1, -1, -1, -1, -1, 1, 1, -1, -1, 1, -1, 1, -1, 1, -1, -1, 1;

**y** =1, 1, -1, -1, -1, -1, -1, -1, -1, 1, 1, -1, -1, 1, -1, 1, 1, 1, 1, -1, -1, 1, 1, -1, 1, -1, 1, -1, 1, 1, 1, -1;

or

**x** =1, -1, -1, 1, -1, 1, -1, 1, -1, 1, 1, -1, -1, -1, -1, -1, 1, -1, 1, 1, -1, -1, 1, 1, 1, 1, 1, 1, 1, 1, -1, -1;

**y** =1, -1, -1, 1, -1, 1, -1, 1, -1, 1, 1, -1, -1, -1, -1, 1, -1, 1, -1, -1, 1, 1, -1, -1, -1, -1, -1, -1, -1, 1, 1;

or

**x** =1, 1, 1, -1, 1, 1, -1, 1, 1, 1, 1, -1, 1, 1, -1, 1, 1, 1, 1, -1, -1, -1, 1, -1, -1, -1, -1, 1, 1, 1, -1, 1; **y** =-1, -1, -1, 1, -1, -1, 1, -1, 1, 1, 1, -1, 1, 1, -1, 1, -1, -1, -1, 1, 1, 1, -1, 1, -1, -1, -1, 1, 1, 1, -1, 1;

or

**x** =1, -1, 1, 1, 1, -1, -1, -1, 1, -1, 1, 1, 1, -1, -1, -1, 1, -1, 1, 1, -1, 1, 1, 1, -1, 1, -1, -1, 1, -1, -1, -1;

**y** =-1, 1, -1, -1, -1, 1, 1, 1, 1, -1, 1, 1, 1, -1, -1, -1, -1, 1, -1, -1, 1, -1, -1, -1, 1, -1, -1, 1, -1, -1, -1;

or

**x** =1, 1, -1, -1, 1, -1, -1, 1, -1, -1, -1, -1, -1, 1, -1, 1, 1, 1, 1, 1, -1, 1, -1, 1, -1, -1, 1, 1, 1, -1, -1, 1;

**y** =-1, -1, 1, 1, -1, 1, 1, -1, -1, -1, -1, -1, -1, 1, -1, 1, -1, -1, -1, -1, 1, -1, 1, -1, -1, -1, 1, 1, 1, -1, -1, 1;

or

**x** =1, -1, -1, 1, 1, 1, -1, -1, -1, 1, -1, 1, -1, -1, -1, -1, 1, -1, 1, -1, -1, -1, -1, -1, -1, 1, 1, -1, 1, 1, -1, -1;

**y** =-1, 1, 1, -1, -1, -1, 1, 1, -1, 1, -1, 1, -1, -1, -1, -1, -1, 1, -1, 1, 1, 1, 1, 1, -1, 1, 1, -1, 1, 1, -1, -1;

or

**x** =1, 1, -1, -1, -1, 1, 1, -1, -1, -1, -1, -1, 1, -1, 1, -1, -1, -1, -1, -1, -1, 1, -1, 1, 1, 1, -1, -1, 1, -1, -1, 1;

**y** =1, 1, -1, -1, -1, 1, 1, -1, 1, 1, 1, 1, -1, 1, -1, 1, -1, -1, -1, -1, -1, 1, -1, 1, -1, -1, 1, 1, -1, 1, 1, -1;

or

**x** =1, -1, -1, 1, -1, -1, 1, 1, -1, 1, -1, 1, 1, 1, 1, 1, -1, 1, -1, 1, -1, -1, -1, -1, 1, -1, -1, 1, 1, 1, -1, -1;

**y** =1, -1, -1, 1, -1, -1, 1, 1, 1, -1, 1, -1, -1, -1, -1, -1, -1, 1, -1, 1, -1, -1, -1, -1, -1, 1, 1, -1, -1, -1, 1, 1;

or

**x** =1, 1, 1, 1, 1, 1, 1, 1, -1, -1, 1, 1, -1, -1, 1, 1, 1, -1, -1, -1, -1, 1, 1, 1, -1, 1, -1, -1, 1, -1, 1; **y** =1, 1, 1, 1, -1, -1, -1, -1, 1, -1, -1, 1, -1, 1, 1, -1, 1, 1, -1, -1, 1, 1, -1, -1, 1, -1, 1, -1, 1, -1, 1, -1;

or

**x** =1, -1, 1, -1, 1, -1, 1, -1, 1, 1, -1, -1, 1, 1, -1, -1, 1, -1, -1, 1, -1, 1, 1, -1, 1, 1, 1, 1, -1, -1, -1, -1;

**y** =1, -1, 1, -1, -1, 1, -1, 1, 1, 1, -1, -1, -1, -1, 1, 1, 1, -1, -1, 1, 1, -1, -1, 1, 1, 1, 1, 1, 1, 1, 1, 1;

or

**x** = 1, 1, -1, 1, -1, -1, 1, -1, -1, -1, 1, -1, -1, -1, 1, -1, -1, -1, -1, 1, 1, 1, 1, -1, -1, -1, -1, 1, -1, -1, -1, 1;

**y** =1, 1, -1, 1, 1, 1, -1, 1, -1, -1, 1, -1, 1, 1, -1, 1, -1, -1, -1, 1, -1, -1, -1, 1, -1, -1, -1, 1, 1, 1, 1, -1;

or

**x** =1, -1, -1, -1, -1, 1, 1, 1, -1, 1, 1, 1, -1, 1, 1, 1, -1, 1, -1, -1, 1, -1, 1, 1, -1, 1, -1, -1, -1, 1, -1, -1;

**y** =1, -1, -1, -1, 1, -1, -1, -1, -1, 1, 1, 1, 1, -1, -1, -1, -1, 1, -1, -1, -1, 1, -1, -1, -1, 1, -1, -1, 1, -1, 1, 1;

or

**x** =1, 1, 1, 1, 1, -1, 1, -1, -1, -1, -1, -1, 1, -1, 1, -1, 1, 1, -1, -1, 1, -1, -1, 1, 1, 1, -1, -1, -1, 1, 1, -1;

*y* =1, 1, -1, -1, 1, -1, -1, 1, -1, -1, 1, 1, 1, -1, -1, 1, 1, 1, 1, 1, 1, -1, 1, -1, 1, 1, 1, 1, -1, 1, -1, 1;

or

*x* =1, -1, 1, -1, 1, 1, 1, 1, -1, 1, -1, 1, 1, 1, 1, 1, 1, -1, -1, 1, 1, 1, -1, -1, 1, -1, -1, 1, -1, -1, 1, 1; *y* =1, -1, -1, 1, 1, 1, -1, -1, -1, 1, 1, -1, 1, 1, -1, -1, 1, -1, 1, -1, 1, 1, 1, 1, 1, -1, 1, -1, -1, -1, -1, -1;

or

*x* =1, 1, 1, 1, -1, -1, 1, 1, 1, -1, 1, -1, -1, 1, 1, -1, 1, 1, 1, 1, 1, 1, -1, -1, -1, 1, -1, 1, -1, 1, 1, -1; *y* =1, 1, -1, -1, -1, -1, -1, -1, 1, -1, -1, 1, -1, 1, -1, 1, 1, 1, -1, -1, 1, 1, 1, 1, -1, 1, 1, -1, -1, 1, -1, 1;

or

*x* =1, -1, 1, -1, -1, 1, 1, -1, 1, 1, 1, 1, -1, -1, 1, 1, 1, -1, 1, -1, 1, -1, -1, 1, -1, -1, -1, -1, -1, -1, 1, 1;

*y* =1, -1, -1, 1, -1, 1, -1, 1, 1, 1, -1, -1, -1, -1, -1, -1, 1, -1, -1, 1, 1, -1, 1, -1, -1, -1, 1, 1, -1, -1, -1, -1.

Based on the foregoing possible designs, this application provides the GCPs of the plurality of lengths. There are a large quantity of GCPs with each length, and the large quantity of GCPs with each length can be used by the large quantity of sensing devices to perform sensing simultaneously. In addition, there is a low aperiodic cross-correlation between a plurality of pairs of GCPs with each length, and when the plurality of sensing devices perform sensing simultaneously, the interference between the devices can be effectively reduced, thereby improving the sensing accuracy.

With reference to the first aspect or the second aspect, in some possible designs, the sensing signal is a single-carrier signal or a multi-carrier signal. Based on this possible design, that the sensing signal is a single-carrier signal or a multi-carrier signal can adapt to a plurality of communication scenarios, so that the solutions of this application can be widely applied.

With reference to the first aspect or the second aspect, in some possible designs, when the sensing signal is a multi-carrier signal, a difference between the length of N of the GCP and a target value is less than a threshold, and the target value is determined based on a subcarrier spacing, sensing bandwidth, and a resource element RE mapping manner.

With reference to the first aspect or the second aspect, in some possible designs, the RE mapping manner is that one element of the GCP is mapped to an interval of M REs, and the target value, the subcarrier spacing, the sensing bandwidth, and M satisfy the following formula:

$$\text{Target value} = \left\lfloor \frac{W}{SCS} \right\rfloor / M$$

*SCS* is the subcarrier spacing, *W* is the sensing bandwidth, and $\lfloor \ \rfloor$ represents rounding down.

Based on this possible design, the length of the GCP can adapt to the sensing bandwidth, and bandwidth actually occupied by the GCP is increased. In a sensing ranging scenario, because ranging resolution is directly proportional to the bandwidth occupied by the GCP, the ranging resolution can be improved.

With reference to the first aspect or the second aspect, in some possible designs, the performing processing based on the echo signal includes: sensing a distance of a target object based on the echo signal, where the target object is an object that reflects the sensing signal to form the echo signal.

With reference to the first aspect or the second aspect, in some possible designs, the sensing a distance of a target object based on the echo signal includes: performing an aperiodic autocorrelation operation on the GCP used to generate the sensing signal and a GCP corresponding to the echo signal, determining a signal propagation delay between the sensing device and the target object based on a result of the aperiodic autocorrelation operation, and then determining the distance of the target object based on the signal propagation delay.

According to a third aspect, a communication apparatus is provided. The communication apparatus is configured to implement the foregoing methods. The communication apparatus may be the sensing device in the first aspect or the second aspect, or an apparatus included in the sensing device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a transceiver module and a processing module. The transceiver module may also be referred to as a transceiver unit, and is configured to implement a sending function and/or a receiving function in any one of the foregoing aspects and any one of the possible implementations of the foregoing aspects. The transceiver module may include a transceiver circuit, a transceiver machine, a transceiver, or a communication interface. The processing module may be configured to implement a processing function in any one of the foregoing aspects and any one of the possible implementations of the foregoing aspects.

In some possible designs, the transceiver module includes a sending module and a receiving module, respectively configured to implement the sending function and the receiving function in any one of the foregoing aspects and any one of the possible implementations of the foregoing aspects.

According to a fourth aspect, a communication apparatus is provided. The apparatus includes a processor and a memory. The memory is configured to store computer instructions. When the processor executes the instructions, the communication apparatus performs the method according to any one of the foregoing aspects. The communication apparatus may be the sensing device in the first aspect or the second aspect, or an apparatus included in the sensing device, for example, a chip.

According to a fifth aspect, a communication apparatus is provided, including a processor and a communication interface. The communication interface is configured to communicate with a module outside the communication apparatus. The processor is configured to execute a computer program or instructions, so that the communication apparatus performs the method according to any one of the foregoing aspects. The communication apparatus may be the sensing device in the first aspect or the second aspect, or an apparatus included in the sensing device, for example, a chip.

According to a sixth aspect, a communication apparatus is provided, including an interface circuit and a processor. The interface circuit may be a code/data read and write interface circuit. The interface circuit is configured to receive computer-executable instructions (the computer-executable instructions are stored in a memory, may be read directly from the memory, or may pass through another device) and transmit the computer-executable instructions to the processor. The processor is configured to run the computer-executable instructions, so that the communication apparatus performs the method according to any of the foregoing aspects. The communication apparatus may be the sensing device in the first aspect or the second aspect, or an apparatus included in the sensing device, for example, a chip.

According to a seventh aspect, a communication apparatus is provided, including at least one processor. The processor is configured to execute a computer program or instructions, so that the communication apparatus performs the method according to any one of the foregoing aspects. The communication apparatus may be the sensing device in the first aspect or the second aspect, or an apparatus included in the sensing device, for example, a chip.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is a chip system, the apparatus may include a chip, or may include a chip and another discrete device.

According to an eighth aspect, a computer-readable storage medium is provided. The computer-readable storage medium stores instructions. When the instructions are run on a communication apparatus, the communication apparatus performs the method according to any one of the foregoing aspects.

According to a ninth aspect, a computer program product including instructions is provided. When the computer program product runs on a communication apparatus, the communication apparatus performs the method according to any one of the foregoing aspects.

It may be understood that when the communication apparatus provided in any one of the third aspect to the ninth aspect is a chip, the foregoing sending action/function may be understood as output information, and the foregoing receiving action/function may be understood as input information.

For the technical effects brought by any design of the third aspect to the ninth aspect, refer to the technical effects brought by different designs in the first aspect or the second aspect. Details are not described herein again.

## BRIEF DESCRIPTION OF DRAWINGS

FIG. 1 is a schematic diagram of a communication scenario according to an embodiment of this application;
FIG. 2 is a schematic diagram of another communication scenario according to an embodiment of this application;
FIG. 3a is a schematic diagram of sensing in a smart home scenario according to an embodiment of this application;

FIG. 3b is a schematic diagram of sensing in an internet of vehicles scenario according to an embodiment of this application;

FIG. 4 is a schematic diagram of a structure of a communication apparatus according to an embodiment of this application;

FIG. 5 is a schematic flowchart of a sensing method according to an embodiment of this application;

FIG. 6 is a schematic diagram of a single-carrier waveform according to an embodiment of this application;

FIG. 7 is a schematic diagram of a multi-carrier waveform generation process according to an embodiment of this application;

FIG. 8 is a schematic diagram of resource allocation according to an embodiment of this application;

FIG. 9 is a schematic flowchart of another sensing method according to an embodiment of this application; and

FIG. 10 is a schematic diagram of a structure of a sensing device according to an embodiment of this application.

## DESCRIPTION OF EMBODIMENTS

In descriptions of this application, "/" represents an "or" relationship between associated objects unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular or plural.

In the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, words such as "example" or "for example" represent giving an example, an illustration, or a description. Any embodiment or design described by "example" or "for example" in embodiments of this application should not be construed as being more preferred or advantageous than another embodiment or design. Exactly, use of the words such as "example" or "for example" is intended to present a related concept in a specific manner for ease of understanding.

It may be understood that "an embodiment" mentioned in the entire specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not be construed as any limitation on implementation processes of embodiments of this application.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with other features based on requirements. Correspondingly, an apparatus provided in embodiments of this application may also correspondingly implement these features or functions. Details are not described herein.

In this application, unless otherwise specified, for same or similar parts in embodiments, refer to each other. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application are not intended to limit the protection scope of this application.

For ease of understanding the technical solutions in embodiments of this application, the following first briefly describes an example of a related technology in this application.

(1). Correlation operation: The correlation operation means multiplying corresponding elements of two sequences and then adding the multiplication results. For example, a correlation operation between a sequence $a = [a_1, a_2, a_3]$ and a sequence $b = [b_1, b_2, b_3]$ is: $a_1 \times b_1 + a_2 \times b_2 + a_3 \times b_3$.

(2). Autocorrelation: If two sequences are identical, a correlation operation between the two sequences is referred to as the autocorrelation.

(3). Cross-correlation: If two sequences are different, a correlation operation between the two sequences is referred to as the cross-correlation.

(4). Aperiodic autocorrelation: When a sequence autocorrelation is calculated, a correlation value of overlapping elements of two sequences is calculated by using a relative displacement between the sequences. If a sequence length is L, there may be a total of 2L-1 cases of the relative displacement between the sequences: -L+1, -L+2, ..., -1, 0, 1, ..., L-2, and L-1. Therefore, there are a total of 2L-1 results of an aperiodic autocorrelation operation.

For example, for a sequence [1, 2, 3], that the relative displacement between the sequences is -2 corresponds to the following case:

1,2,3
1,2,3

The aperiodic autocorrelation result is $1 \times 3 = 3$.

That the relative displacement between the sequences is -1 corresponds to the following case:

1,2,3
1,2,3

The aperiodic autocorrelation result is $1 \times 2 + 2 \times 3 = 8$. By analogy, when the relative displacements between the sequences are respectively -2, -1, 0, 1, and 2, the aperiodic autocorrelation results of the sequences are sequentially 3, 8,14, 8, and 3.

(5). Aperiodic cross-correlation: When a sequence cross-correlation is calculated, the correlation value of the overlapping elements of the two sequences is calculated by using the relative displacement between the sequences.

(6). Perfect aperiodic autocorrelation: If aperiodic autocorrelation results of a sequence are 0 at other displacements except for a 0 displacement, the sequence has a perfect aperiodic autocorrelation property. If aperiodic autocorrelation results of a sequence are not 0 at other displacements except for a 0 displacement, but compared with a peak value at the 0 displacement, values at the other displacements are very small, the sequence has a good aperiodic autocorrelation property.

(7). Perfect aperiodic cross-correlation: If aperiodic cross-correlation results of the two sequences are 0 at all displacements, the two sequences have a perfect aperiodic cross-correlation property, or the two sequences are orthogonal to each other. If the aperiodic cross-correlation results of the two sequences maintain small values at all displacements, the two sequences have a good aperiodic cross-correlation property.

(8). Golay complementary pair (golay complementary pair, GCP):

The GCP may also be referred to as a Golay complementary sequence or a GCP sequence, which is defined as a pair of sequences $x$ and $y$ with a code length of $N$. If their sums of aperiodic autocorrelation functions (aperiodic autocorrelation functions, AACFs) are 0 at other displacements except for a 0 displacement, the two sequences are a pair of GCPs. For a sequence $x$ = [x[0], x[1],...,x[N - 1]], an AACF of the sequence is defined as:

$$C_x[k] = \sum_{n=0}^{N-1-k} x[n]x[n+k], -N+1 \leq k \leq N-1$$

For example, for sequences $x$ = [1, 1, 1, -1] and $y$ = [1, 1, -1, 1], because an AACF of the sequence $x$ is $C_x[k]$ = [-1, 0,1, 4,1, 0, -1], $k$ = -3, -2, ..., 3, an AACF of the sequence $y$ is $C_y[k]$ = [1,0, -1,4, -1,0,1], k = -3, -2, .., 3 , and $C_x[k]$ + $C_y[k]$ = [0, 0, 0, 8, 0, 0, 0], the sequences $x$ and $y$ are a pair of GCPs.

Further, for two pairs of GCP sequences $(x_1, y_1)$ and $(x_2, y_2)$, their aperiodic cross-correlation functions (aperiodic cross-correlation functions, ACCFs) are defined as:

$$C_{x_1,x_2}[k] = \sum_{n=0}^{N-1-k} x_1[k]x_2[n+k], C_{y_1,y_2}[k] = \sum_{n=0}^{N-1-k} y_1[k]y_2[n+k], -N+1 \leq k \leq N-1$$

If $C_{x1,x2}[k]$ + $C_{y1,y2}[k]$ is 0 at all displacements, $(x_1, y_1)$ and $(x_2, y_2)$ are referred to as orthogonal GCP sequences.

The GCP may be used in a sensing system as a sensing sequence. However, because a current fifth generation (fifth generation, 5G) mobile communication system does not have a sensing function, an existing new radio (new radio, NR) standard does not specify or use the GCP. The 802.11ad/ay standard of Wi-Fi specifies three pairs of binary GCPs with lengths of 32, 64, and 128 respectively, as shown in Table 1, Table 2, and Table 3 respectively.

**Table 1**

| x | 1, 1, 1, 1, 1, -1, 1, -1, -1, -1, 1, 1, 1, -1, -1, 1, 1, 1, -1, -1, 1, -1, -1, 1, -1, -1, -1, - 1, 1, -1, 1, -1 |
|---|---|
| y | -1, -1, -1, -1, -1, 1, -1, 1, 1, 1, -1, -1, -1, 1, 1, -1, 1, 1, -1, -1, 1, -1, -1, 1, -1, -1, - 1, -1, 1, -1, 1, -1 |

**Table 2**

| x | -1, -1, 1, -1, 1, -1, -1, -1, 1, 1, -1, 1, 1, -1, -1, -1, -1, -1, 1, -1, 1, -1, -1, -1, -1, - 1, 1, -1, -1, 1, 1, 1, -1, -1, 1, -1, 1, -1, -1, -1, 1, 1, -1, 1, 1, -1, -1, -1, 1, 1, -1, 1, - 1, 1, 1, 1, 1, 1, -1, 1, 1, -1, -1, -1 |
|---|---|
| y | 1, 1, -1, 1, -1, 1, 1, 1, -1, -1, 1, -1, -1, 1, 1, 1, 1, 1, -1, 1, -1, 1, 1, 1, 1, 1, -1, 1, 1, - 1, -1, -1, -1, -1, 1, -1, 1, -1, -1, -1, 1, 1, -1, 1, 1, -1, -1, -1, 1, 1, -1, 1, -1, 1, 1, 1, 1, 1, -1, 1, 1, -1, -1, -1 |

**Table 3**

| x | 1, 1, -1, -1, -1, -1, -1, -1, -1, 1, -1, 1, 1, -1, -1, 1, 1, 1, -1, -1, 1, 1, 1, 1, -1, 1, -1, 1, -1, 1, 1, -1, -1, -1, 1, 1, 1, 1, 1, 1, 1, -1, 1, -1, -1, 1, 1, -1, 1, 1, -1, -1, 1, 1, 1, 1, - 1, 1, -1, 1, -1, 1, 1, -1, 1, 1, -1, -1, -1, -1, -1, -1, -1, 1, -1, 1, 1, -1, -1, 1, 1, 1, -1, - 1, 1, 1, 1, -1, - 1, 1, 1, 1, 1, -1, 1, -1, 1, -1, 1, 1, -1, 1, 1, -1, -1, -1, -1, -1, -1, -1, 1, -1, 1, 1, -1, - 1, 1, -1, -1, 1, 1, -1, -1, -1, -1, 1, -1, 1, -1, 1, -1, -1, 1 |
|---|---|
| y | -1, -1, 1, 1, 1, 1, 1, 1, 1, -1, 1, -1, -1, 1, 1, -1, -1, -1, 1, 1, -1, -1, -1, -1, 1, -1, 1, - 1, 1, -1, -1, 1, 1, 1, -1, -1, -1, -1, -1, -1, 1, -1, 1, 1, -1, -1, 1, -1, -1, 1, 1, -1, - 1, -1, -1, 1, -1, 1, -1, 1, -1, -1, 1, 1, 1, -1, -1, -1, -1, -1, -1, 1, -1, 1, 1, -1, -1, 1, 1, 1, -1, -1, 1, 1, 1, -1, 1, -1, 1, -1, 1, 1, -1, 1, 1, -1, -1, -1, -1, -1, -1, -1, 1, - 1, 1, 1, -1, -1, 1, -1, -1, 1, 1, -1, -1, -1, -1, 1, -1, 1, -1, 1, -1, -1, 1 |

However, Wi-Fi and 5G or 6G are different communication systems, and the GCPs specified in the 802.11ad/ay standard cannot flexibly adapt to a multi-carrier waveform of 5G or 6G due to a length limitation. Therefore, the GCPs are difficult to be directly applied. Based on this, this application provides a sensing method, to provide a plurality of GCPs with various lengths, and improve a capacity of the GCP to meet a requirement of sensing by a plurality of devices synchronously.

The technical solutions in embodiments of this application may be applied to various communication systems. The communication system may be a 3rd generation partnership project (3rd generation partnership project, 3GPP) communication system, for example, a 5G or 6G mobile communication system, an internet of vehicles (vehicle to everything, V2X) system, a device-to-device (device-to-device, D2D) communication system, a machine-to-machine (machine-to-machine, M2M) communication system, an internet of things (internet of things, IoT), or another next-generation communication system. The communication system may also be a non-3GPP communication system, for example, a wireless local area network (wireless local area network, WLAN) system such as Wi-Fi. This is not limited.

The technical solutions in embodiments of this application may be applied to various communication scenarios, for example, may be applied to one or more of the following communication scenarios: smart home, D2D, V2X, and IoT.

The communication system and the communication scenarios applicable to this application are merely examples for description. The communication system and the communication scenarios applicable to this application are not limited thereto. This is uniformly described herein. Details are not described below again.

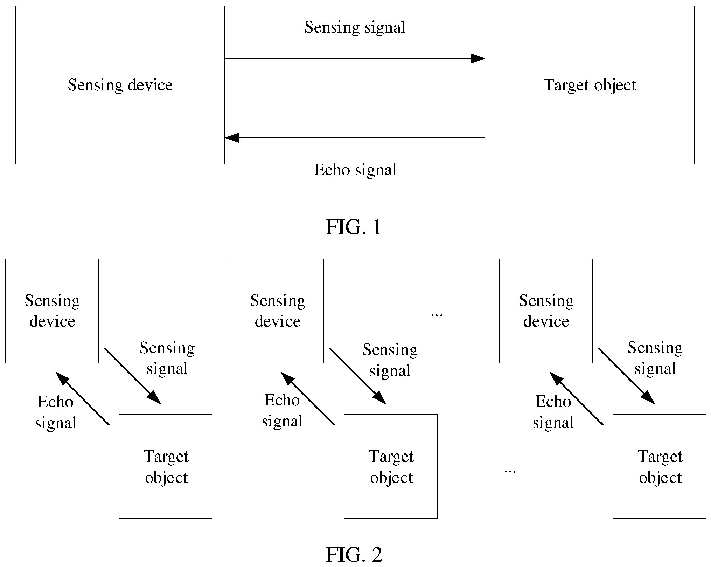

FIG. 1 shows a communication scenario according to an embodiment of this application. In this scenario, a sensing device sends a sensing signal. After the sensing signal is reflected by a target object, the sensing device may receive an echo signal of the sensing signal, so that the sensing device may perform sensing on the target object. The scenario in FIG. 1 is merely an example, and is not limited to interaction between one sensing device and one target object. Optionally, the one sensing device may interact with a plurality of target objects, or a plurality of sensing devices interact with a same target object.

FIG. 2 shows another communication scenario according to an embodiment of this application. In this scenario, a plurality of sensing devices separately send sensing signals. After the sensing signals are reflected by a same target object or different target objects, the sensing devices may receive echo signals of the sensing signals, so that the plurality of sensing devices separately perform sensing on the target objects.

Optionally, the sensing device in this application may be a terminal device or a network device. The terminal device may be a device having a wireless transceiver function. The network device may be a device that connects the terminal device to a wireless network.

The network device may be a next generation NodeB (next generation NodeB, gNodeB or gNodeB) in a 5G system or a 6G system, or may be a transmission reception point (transmission reception point, TRP), or may be a base station in a future evolved public land mobile network (public land mobile network, PLMN). This is not specifically limited in embodiments of this application.

The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. For example, the terminal device may be an IoT, V2X, D2D, M2M, a 5G network, a 6G network, or a wireless terminal in the future evolved PLMN. The terminal device may be deployed on land, including an indoor or outdoor device, a handheld device, or a vehicle-mounted device, may be deployed on water (for example, on a ship), or may be deployed in the air (for example, on an airplane, a balloon, and a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a hand-held device having a wireless communication function, a computing device or another processing device connected to a wireless modem, a vehicle-mounted device, a wearable device (which may also be referred to as a wearable intelligent device), a tablet computer or a computer having the wireless transceiver function, a virtual reality (virtual reality, VR) terminal, a terminal in industrial control (industrial control), a terminal in self-driving (self-driving), a terminal in remote medical (remote medical), a terminal in a smart grid (smart grid), a terminal in transportation safety (transportation safety), a terminal in a smart city (smart city), a terminal in a smart home (smart home), a vehicle-mounted terminal, a vehicle having a vehicle-to-vehicle (vehicle-to-vehicle, V2V) communication capability, an intelligent networked vehicle, an uncrewed aerial vehicle having an uncrewed aerial vehicle to uncrewed aerial vehicle (UAV to UAV, U2U) communication capability, and the like.

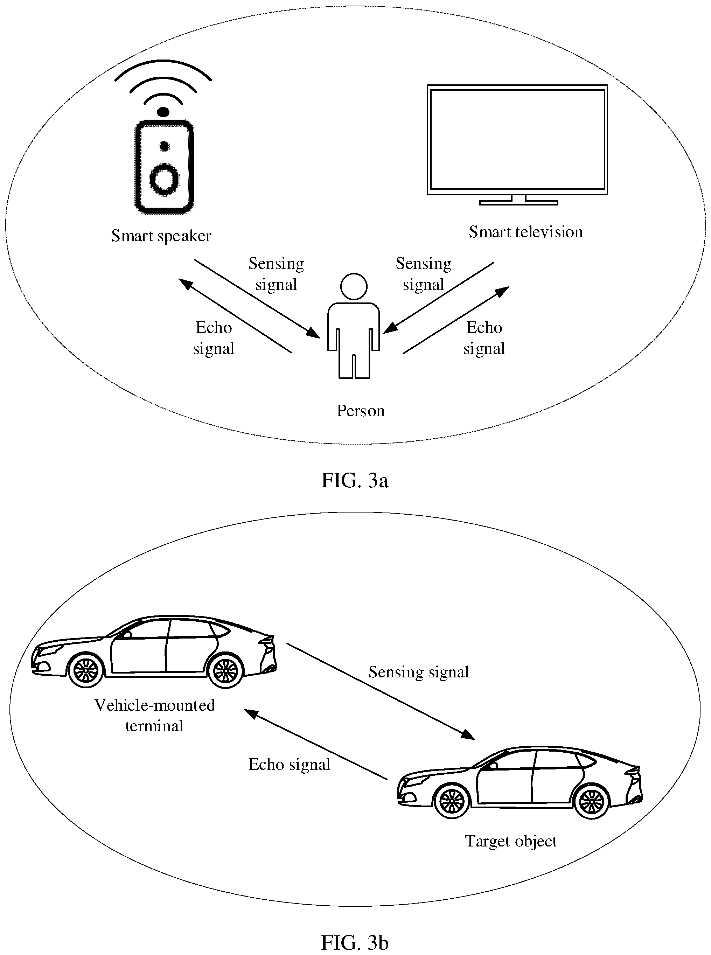

For example, in a smart home scenario, as shown in FIG. 3a, the sensing device may be various smart electrical appliances at home, for example, a smart television or a smart acoustic device. When track tracking needs to be performed on a person, each terminal at home may send a sensing signal to perform sensing on the person, to enhance track tracking accuracy. Alternatively, in a V2X scenario, as shown in FIG. 3b, the sensing device may be a vehicle-mounted terminal. The vehicle-mounted terminal may send a sensing signal, and receive an echo signal of the sensing signal reflected by a target object, to sense a surrounding road condition or the like.

Functions related to the sensing device in this application may be implemented by one device, may be jointly implemented by a plurality of devices, may be implemented by one or more functional modules in one device, or may be implemented by one or more chips, a system on chip (system on chip, SOC) or a chip system. The chip system may include a chip, or may include a chip and another discrete device. This is not specifically limited in embodiments of this application.

It can be understood that the function may be a network element in a hardware device, a software function running on dedicated hardware, a combination of hardware and software, or may be a virtualized function instantiated on a platform (for example, a cloud platform).

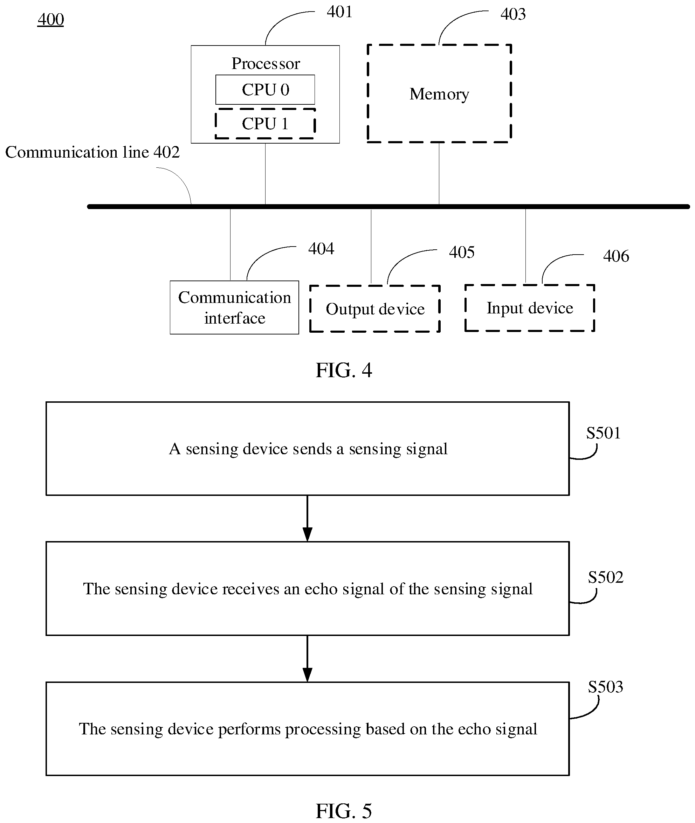

For example, the functions related to the sensing device in this application may be implemented through a communication apparatus 400 in FIG. 4. FIG. 4 is a schematic diagram of a structure of a communication apparatus 400 according to an embodiment of this application. The communication apparatus 400 includes one or more processors 401 and at least one communication interface (in FIG. 4, only an example in which a communication interface 404 and one processor 401 are included is used for description), and optionally, may further include a communication line 402 and a memory 403.

The processor 401 may be a general-purpose central processing unit (central processing unit, CPU), a microprocessor, an application-specific integrated circuit (application-specific integrated circuit, ASIC), or one or more integrated circuits configured to control execution of solution programs of this application.

During specific implementation, in an embodiment, the processor 401 may include one or more CPUs such as a CPU 0 and a CPU 1 in FIG. 4.

During specific implementation, in an embodiment, the communication apparatus 400 may include a plurality of processors. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller (microcontroller unit, MCU), or an artificial intelligence processor. Each type of computing device may include one or more cores for executing software instructions to perform an operation or processing.

The communication line 402 may be used for communication between different components included in the communication apparatus 400.

The communication interface 404 may be a transceiver module, configured to communicate with another device or a communication network, for example, the Ethernet, a radio access network (radio access network, RAN), or a wireless local area network (wireless local area network, WLAN). For example, the transceiver module may be an apparatus such as a transceiver or a transceiver machine. Optionally, the communication interface 404 may alternatively be a transceiver circuit located in the processor 401, configured to implement signal input and signal output of the processor.

The memory 403 may be an apparatus having a storage function, for example, may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code having a form of instructions or a data structure and that can be accessed by a computer. However, this is not limited thereto. The memory may exist independently, and is connected to the processor through the communication line 402. The memory may alternatively be integrated with the processor.

The memory 403 is configured to store computer-executable instructions for executing the solutions in this application, and the processor 401 controls the execution. The processor 401 is configured to execute the computer-executable instructions stored in the memory 403, to implement the method provided in embodiments of this application.

Alternatively, optionally, in this embodiment of this application, the processor 401 may perform processing-related functions in the methods provided in the following embodiments of this application, and the communication interface 404 is responsible for communicating with another device or a communication network. This is not specifically limited in embodiments of this application.

Optionally, the computer-executable instructions in embodiments of this application may also be referred to as application program code. This is not specifically limited in embodiments of this application.

During specific implementation, in an embodiment, the communication apparatus 400 may further include an output device 405 and an input device 406. The output device 405 communicates with the processor 401, and may display information in a plurality of manners. For example, the output device 405 may be a liquid crystal display (liquid crystal display, LCD), a light-emitting diode (light-emitting diode, LED) display device, a cathode ray tube (cathode ray tube, CRT) display device, or a projector (projector). The input device 406 communicates with the processor 401, and may receive an input of a user in a plurality of manners. For example, the input device 406 may be a mouse, a keyboard, a touchscreen device, or a sensor device.

It should be noted that the composition structure shown in FIG. 4 does not constitute a limitation on the communication apparatus. In addition to the components shown in FIG. 4, the communication apparatus may include more or fewer components than those shown in the figure, or combine some components, or have different component arrangements. The components shown in the figure may be implemented through hardware, software, or a combination of software and hardware.

With reference to the accompanying drawings, the following describes the method provided in embodiments of this application. It may be understood that an execution body may perform some or all of the steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

In this application, a sensing signal is generated by a GCP with a length of N. For ease of understanding, before a sensing method provided in this application is described, the GCP provided in this application is first described.

In this application, 32 pairs of binary GCPs with a length of 32, 40 pairs of binary GCPs with a length of 64, 40 pairs of binary GCPs with a length of 128, 40 pairs of binary GCPs with a length of 256, 40 pairs of binary GCPs with a length of 512, 40 pairs of binary GCPs with a length of 1024, 20 pairs of binary GCPs with a length of 160, 20 pairs of binary GCPs with a length of 320, 20 pairs of binary GCPs with a length of 640, and 20 pairs of binary GCPs with a length of 832 are defined.

Two sequences in each pair of GCPs defined in this application have a perfect aperiodic autocorrelation property. In addition, for each pair of GCPs, there is another pair of GCPs with a same length in the GCPs defined in this application that is orthogonal to the pair of GCPs.

In other words, the length of N of the GCP defined in this application may be equal to 32, 64, 128, 256, 512, 1024, 160, 320, 640, or 832. The following describes the GCPs with lengths.

In some embodiments, when N is equal to 32, 32 pairs of binary GCPs defined in this application are shown in Table 4.

**Table 4**

| Sequence number | x | y |
|---|---|---|
| 1 | 1, 1, 1, 1, 1, -1, -1, 1, 1, 1, -1, -1, 1, - 1, 1, -1, -1, -1, -1, -1, -1, 1, 1, -1, 1, 1, -1, -1, 1, -1, 1, -1 | 1, 1, 1, 1, -1, -1, 1, 1, 1, -1, -1, 1, -1, 1, -1, 1, 1, 1, 1, 1, -1, -1, 1, -1, -1, 1, 1, -1, 1, -1, 1 |
| 2 | 1, -1, 1, -1, 1, 1, -1, -1, 1, -1, -1, 1, 1, 1, 1, 1, -1, 1, -1, 1, -1, -1, 1, 1, 1, -1, -1, 1, 1, 1, 1, 1 | 1, -1, 1, -1, 1, 1, -1, -1, 1, -1, -1, 1, 1, 1, 1, 1, -1, 1, -1, 1, 1, -1, -1, -1, 1, 1, -1, -1, -1, -1, -1 |
| 3 | 1, 1, -1, 1, 1, 1, -1, 1, -1, -1, -1, 1, 1, 1, 1, -1, 1, 1, -1, 1, -1, -1, 1, -1, -1, - 1, -1, 1, -1, -1, -1, 1 | -1, -1, 1, -1, -1, -1, 1, -1, 1, 1, 1, -1, - 1, -1, -1, 1, 1, 1, -1, 1, -1, -1, 1, -1, -1, -1, -1, 1, -1, -1, -1, 1 |
| 4 | 1, -1, -1, -1, 1, -1, -1, -1, -1, 1, -1, -1, 1, -1, 1, 1, 1, -1, -1, -1, -1, 1, 1, 1, -1, 1, -1, -1, -1, 1, -1, -1 | -1, 1, 1, 1, -1, 1, 1, 1, 1, 1, -1, 1, 1, -1, 1, -1, -1, 1, -1, -1, -1, -1, 1, 1, 1, -1, 1,-1, -1, -1, 1, -1, -1 |
| 5 | 1, 1, -1, -1, -1, -1, 1, 1, -1, -1, -1, -1, -1, -1, -1, -1, -1, 1, -1, 1, 1, -1, 1, -1, 1, -1, -1, 1, 1, -1, -1, 1 | -1, -1, 1, 1, -1, -1, 1, 1, 1, 1, 1, -1, - 1, -1, -1, 1, -1, 1, -1, 1, -1, 1, -1, -1, 1, 1, -1, 1, -1, -1, 1 |
| 6 | 1, -1, -1, 1, -1, 1, 1, -1, -1, -1, 1, - 1, 1, -1, 1, -1, -1, -1, -1, 1, 1, 1, 1, 1, 1, -1, -1, 1, 1, -1, -1 | -1, 1, -1, -1, 1, 1, -1, 1, -1, 1, -1, -1, 1, -1, 1, 1, 1, 1, 1, 1, 1, 1, -1, -1, 1, 1, 1, 1, -1, -1, -1 |
| 7 | 1, 1, 1, 1, -1, 1, 1, -1, 1, 1, -1, -1, -1, 1, -1, 1, 1, 1, 1, 1, -1, 1, 1, -1, -1, -1, 1, 1, 1, -1, 1, -1 | 1, 1, 1, 1, -1, 1, 1, -1, 1, 1, -1, -1, -1, 1, -1, 1, -1, -1, -1, -1, 1, -1, 1, 1, 1, - 1, -1, -1, 1, -1, 1 |
| 8 | 1, -1, 1, -1, -1, -1, 1, 1, 1, -1, -1, 1, - 1, -1, -1, -1, 1, -1, 1, -1, -1, -1, 1, 1, -1, 1, 1, -1, 1, 1, 1, 1 | 1, -1, 1, -1, -1, -1, 1, 1, 1, -1, -1, 1, -1, -1, -1, -1, -1, 1, -1, 1, 1, 1, -1, -1, 1, - 1, -1, 1, -1, -1, -1, -1 |
| 9 | 1, 1, -1, -1, -1, 1, -1, 1, 1, 1, 1, 1, -1, 1, 1, -1, 1, 1, -1, -1, -1, 1, -1, 1, -1, - 1, -1, -1, 1, -1, -1, 1 | -1, -1, 1, 1, 1, -1, 1, -1, -1, -1, -1, -1, 1, -1, -1, 1, 1, 1, -1, -1, -1, 1, -1, 1, -1, -1, -1, -1, 1, -1, -1, 1 |
| 10 | 1, -1, -1, 1, -1, -1, -1, -1, 1, -1, 1, -1, -1, -1, 1, 1, 1, -1, -1, 1, -1, -1, -1, -1, -1, 1, -1, 1, 1, 1, 1, -1, -1 | -1, 1, 1, -1, 1, 1, 1, -1, 1, -1, 1, 1, 1, -1, -1, 1, -1, -1, 1, -1, -1, -1, -1, -1, 1, -1, 1, 1, 1, -1, -1 |
| 11 | 1, 1, -1, -1, 1, -1, 1, -1, 1, 1, 1, 1, 1, - 1, -1, 1, -1, -1, 1, 1, -1, 1, -1, 1, 1, 1, 1, 1, 1, -1, -1, 1 | -1, -1, 1, 1, -1, 1, -1, 1, -1, -1, -1, -1, -1, 1, 1, -1, -1, -1, 1, 1, -1, 1, -1, 1, 1, 1, 1, 1, 1, -1, -1, 1 |
| 12 | 1, -1, -1, 1, 1, 1, 1, 1, 1, -1, 1, -1, 1, 1, -1, -1, -1, 1, 1, -1, -1, -1, -1, -1, 1, - 1, 1, -1, 1, 1, -1, -1 | -1, 1, 1, -1, -1, -1, -1, -1, -1, 1, -1, 1, -1, -1, 1, 1, -1, 1, 1, -1, -1, -1, -1, -1, 1, -1, 1, -1, 1, 1, -1, -1 |
| 13 | 1, 1, 1, -1, 1, 1, 1, -1, 1, 1, -1, 1, 1, -1,-1, 1, -1, 1, 1, 1, -1, -1, -1, -1, 1, 1, 1, -1, 1, 1, 1, -1, 1 | 1, 1, 1, -1, 1, 1, 1, -1, 1, 1, -1, 1, -1, -1, 1, -1, -1, -1, -1, 1, 1, 1, 1, -1, -1, -1, 1, -1, -1, -1, 1, -1 |
| 14 | 1, -1, 1, 1, 1, -1, 1, 1, 1, -1, -1, -1, -1, 1, 1, 1, 1, 1, -1, 1, 1, -1, 1, -1, -1, 1, -1, -1, -1, 1, -1, -1, -1 | 1, -1, 1, 1, 1, -1, 1, 1, 1, -1, -1, -1, -1, 1, 1, 1, 1, 1, -1, 1, -1, -1, 1, -1, 1, 1, -1, 1, 1, 1, 1 |
| 15 | 1, 1, -1, 1, -1, -1, 1, -1, 1, 1, -1, 1, 1, 1, 1, -1, 1, 1, 1, 1, -1, 1, 1, 1, -1, 1, 1, 1, -1, -1, -1, -1, 1 | -1, -1, 1, -1, 1, 1, -1, 1, 1, 1, -1, 1, 1, 1, -1, 1, -1, -1, -1, 1, -1, -1, -1, 1, 1, 1, 1, -1, -1, -1, -1, 1 |
| 16 | 1, -1, -1, -1, -1, 1, 1, 1, 1, -1, -1, -1, 1, -1, -1, -1, 1, -1, 1, 1, 1, -1, 1, 1, 1, -1, 1, 1, 1, -1, 1, -1, -1 | -1, 1, 1, 1, 1, -1, -1, -1, 1, -1, -1, -1, 1, -1, -1, -1, -1, 1, -1, -1, -1, 1, -1, -1, 1, -1, 1, 1, -1, 1, -1, -1 |
| 17 | 1, 1, -1, -1, -1, -1, -1, -1, -1, 1, 1, -1, -1, 1, -1, 1, -1, -1, -1, -1, 1, 1, -1, -1, 1, -1, 1, -1, 1, -1, -1, 1 | 1, 1, -1, -1, -1, -1, -1, -1, 1, 1, -1, -1, 1, -1, 1, 1, 1, 1, 1, -1, -1, 1, 1, -1, 1, -1, 1, -1, 1, 1, -1 |
| 18 | 1, -1, -1, 1, -1, 1, -1, 1, -1, -1, 1, 1, - 1, -1, -1, -1, -1, 1, -1, 1, 1, 1, -1, -1, 1, 1, 1, 1, 1, 1, 1, -1, -1 | 1, -1, -1, 1, -1, 1, -1, 1, -1, -1, 1, 1, -1, -1, -1, -1, 1, -1, 1, -1, -1, 1, 1, -1, -1, -1, -1, -1, -1, -1, 1, 1 |
| 19 | 1, 1, 1, -1, 1, 1, -1, 1, 1, 1, 1, 1, -1, 1, 1, -1, 1, 1, 1, 1, -1, -1, -1, -1, 1, -1, -1, -1, 1, 1, 1, 1, -1, 1 | -1, -1, -1, 1, -1, -1, 1, -1, 1, 1, 1, 1, -1, 1, 1, -1, 1, -1, -1, -1, 1, 1, 1, -1, 1, -1, -1, -1, 1, 1, 1, -1, 1 |
| 20 | 1, -1, 1, 1, 1, -1, -1, -1, 1, -1, 1, 1, 1, -1, -1, -1, 1, -1, 1, 1, -1, 1, 1, 1, -1, 1, -1, -1, 1, -1, -1, -1 | -1, 1, -1, -1, -1, 1, 1, 1, 1, -1, 1, 1, 1, - 1, -1, -1, -1, 1, -1, -1, 1, -1, -1, -1, 1, -1, -1, 1, -1, -1, -1 |
| 21 | 1, 1, -1, -1, 1, -1, -1, 1, -1, -1, -1, -1, -1, 1, -1, 1, 1, 1, 1, 1, 1, -1, 1, -1, 1, -1, -1, 1, 1, 1, -1, -1, 1 | -1, -1, 1, 1, -1, 1, 1, -1, -1, -1, -1, -1, -1, 1, -1, 1, -1, -1, -1, -1, 1, -1, 1, -1, -1, -1, 1, 1, 1, -1, -1, 1 |

(continued)

| Sequence number | x | y |
|---|---|---|
| 22 | 1, -1, -1, 1, 1, 1, -1, -1, -1, 1, -1, 1,-1, -1, -1, -1, 1, -1, 1, -1, -1, -1, -1, - 1, -1, 1, 1, -1, 1, 1, -1, -1 | -1, 1, 1, -1, -1, -1, 1, 1, -1, 1, -1, 1, -1, -1, -1, -1, -1, 1, -1, 1, 1, 1, 1, -1, 1, 1, -1, 1, 1, -1, -1 |
| 23 | 1, 1, -1, -1, -1, 1, 1, -1, -1, -1, -1, -1, 1, -1, 1, -1, -1, -1, -1, -1, -1, 1, -1, 1, 1, 1, -1, -1, 1, -1, -1, 1 | 1, 1, -1, -1, -1, 1, 1, -1, 1, 1, 1, 1, -1, 1, -1, 1, -1, -1, -1, -1, -1, 1, -1, 1, -1, -1, 1, 1, -1, 1, 1, -1 |
| 24 | 1, -1, -1, 1, -1, -1, 1, 1, -1, 1, -1, 1, 1, 1, 1, -1, 1, -1, 1, -1, -1, -1, -1, 1,-1, -1, 1, 1, 1, -1, -1 | 1, -1, -1, 1, -1, -1, 1, 1, 1, -1, 1, -1, -1, -1, -1, -1, -1, 1, -1, 1, -1, -1, -1, -1, - 1, 1, 1, -1, -1, -1, 1, 1 |
| 25 | 1, 1, 1, 1, 1, 1, 1, 1, -1, -1, 1, 1, -1, -1, 1, 1, 1, -1, -1, -1, -1, 1, 1, 1, -1, 1, -1, -1, 1, -1, 1 | 1, 1, 1, 1, -1, -1, -1, 1, -1, -1, 1, -1, 1, 1, -1, 1, 1, -1, -1, 1, 1, -1, -1, 1, -1, 1, -1, 1, -1, 1, -1 |
| 26 | 1, -1, 1, -1, 1, -1, 1, -1, 1, 1, -1, -1, 1, 1, -1, -1, 1, -1, -1, 1, -1, 1, 1, 1, -1, 1, 1, 1, 1, -1, -1, -1, -1 | 1, -1, 1, -1, 1, -1, 1, 1, 1, -1, -1, -1, -1, 1, 1, 1, -1, -1, 1, 1, -1, -1, 1, 1, 1, 1, 1, 1, 1, 1 |
| 27 | 1, 1, -1, 1, -1, -1, 1, -1, -1, -1, 1, -1, -1, -1, 1, -1, -1, -1, -1, 1, 1, 1, 1, -1, -1, -1, -1, 1, -1, -1, -1, 1 | 1, 1, -1, 1, 1, 1, -1, 1, -1, -1, 1, -1, 1, 1, -1, 1, -1, -1, -1, 1, -1, -1, -1, 1, -1, -1, -1, 1, 1, 1, 1, -1 |
| 28 | 1, -1, -1, -1, -1, 1, 1, 1, -1, 1, 1, 1, -1, 1, 1, 1, -1, 1, -1, -1, 1, -1, 1, 1, -1, 1, -1, -1, -1, 1, -1, -1 | 1, -1, -1, -1, 1, -1, -1, -1, -1, 1, 1, 1, 1, -1, -1, -1, -1, 1, -1, -1, -1, 1, -1, -1, - 1, 1, -1, -1, 1, -1, 1, 1 |
| 29 | 1, 1, 1, 1, 1, -1, 1, -1, -1, -1, -1, -1, 1, -1, 1, -1, 1, 1, -1, -1, 1, -1, -1, 1, 1, 1, -1, -1, -1, 1, 1, -1 | 1, 1, -1, -1, 1, -1, -1, 1, -1, -1, 1, 1, 1, -1, -1, 1, 1, 1, 1, 1, -1, 1, -1, 1, 1, 1, 1, -1, 1, -1, 1 |
| 30 | 1, -1, 1, -1, 1, 1, 1, 1, -1, 1, -1, 1, 1, 1, 1, 1, 1, 1, -1, -1, 1, 1, 1, -1, -1, 1, -1, -1, 1, -1, -1, 1, 1 | 1, -1, -1, 1, 1, -1, -1, -1, 1, 1, -1, 1, 1, -1, -1, 1, -1, 1, -1, 1, 1, 1, 1, -1, 1, -1, -1, -1, -1, -1 |
| 31 | 1, 1, 1, 1, -1, -1, 1, 1, 1, -1, 1, -1, -1, 1, 1, -1, 1, 1, 1, 1, 1, 1, -1, -1, -1, 1, - 1, 1, -1, 1, 1, -1 | 1, 1, -1, -1, -1, -1, -1, 1, -1, -1, 1, -1, 1, -1, 1, 1, 1, -1, -1, 1, 1, 1, -1, 1, 1, -1, -1, 1, -1, 1 |
| 32 | 1, -1, 1, -1, -1, 1, 1, -1, 1, 1, 1, 1, -1, -1, 1, 1, 1, -1, 1, -1, 1, -1, -1, 1, -1, - 1, -1, -1, -1, 1, 1 | 1, -1, -1, 1, -1, 1, -1, 1, 1, 1, -1, -1, -1, -1, -1, 1, -1, -1, 1, 1, -1, 1, -1, -1, -1, 1, 1, -1, -1, -1, -1 |

It should be noted that the GCP sequence numbers in Table 4 are merely examples. During actual implementation, the GCP sequence numbers may alternatively be represented in another form, for example, numbered from 0. In addition, the sequence of the GCPs shown in Table 4 is also merely an example. The 32 pairs of GCPs may alternatively be arranged in another sequence. This is not specifically limited in this application.

Optionally, the 32 pairs of GCPs shown in Table 4 may be divided into 16 groups, and each group includes two adjacent pairs of GCPs. To be specific, the first group includes GCPs with sequence numbers 1 and 2, the second group includes GCPs with sequence numbers 3 and 4, ..., the fifteenth group includes GCPs with sequence numbers 29 and 30, and the sixteenth group includes GCPs with sequence numbers 31 and 32. Two pairs of GCPs in each group are orthogonal to each other.

Optionally, the 32 pairs of GCPs shown in Table 4 have a low aperiodic cross-correlation peak value, or have a good aperiodic cross-correlation property. Further, the six pairs of GCPs with sequence numbers 1 to 6 have a lower aperiodic cross-correlation peak value, and may be used preferentially when a quantity of devices that need to perform sensing simultaneously is less than or equal to 6. The six pairs of GCPs with sequence numbers 1 to 6 are referred to as preferred GCPs.

In some embodiments, when N is equal to 64, 40 pairs of binary GCPs defined in this application are shown in Table 5.

**Table 5**

| Sequence number | x | y |
|---|---|---|
| 1 | 1, 1, 1, -1, 1, 1, -1, 1, 1, 1, 1, -1, -1, - 1, 1, -1, 1, 1, 1, -1, 1, 1, -1, 1, -1, -1, - 1, 1, 1, 1, -1, 1, 1, 1, 1, -1, 1, 1, -1, 1, 1, 1, 1, -1, -1, -1, 1, -1, -1, -1, -1, 1, - 1, -1, 1, -1, 1, 1, 1, -1, -1, -1, 1, -1 | -1, -1, -1, 1, -1, -1, 1, -1, -1, -1, -1, 1, 1, 1, -1, 1, -1, -1, -1, 1, -1, -1, 1, - 1, 1, 1, 1, -1, -1, -1, 1, -1, 1, 1, 1, 1, -1, 1, 1, 1, 1, -1, -1, -1, 1, -1, -1, -1, -1, 1, -1, -1, 1, -1, 1, 1, 1, -1, -1,-1, 1, -1 |

(continued)

| Sequence number | x | y |
|---|---|---|
| 2 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1, - 1, -1, 1, -1, 1, 1, -1, 1, 1, 1, -1, 1, -1,- 1, 1, 1, 1, -1, 1, 1, -1, 1, 1, 1 | -1, 1, -1, -1, -1, 1, 1, 1, -1, 1, -1, -1, 1, -1, -1, -1, -1, 1, -1, -1, -1, 1, -1, 1, 1, -1, 1, 1, -1, 1, 1, 1, 1, -1, 1, 1, 1, -1, -1, -1, 1, -1, 1, 1, -1, 1, 1, 1, -1, 1, -1, -1, 1, 1, 1, 1, -1, 1, 1, -1, 1, 1, 1 |
| 3 | 1, 1, 1, 1, 1, 1, -1, -1, 1, 1, -1, -1, 1, 1, 1, 1, 1, -1, 1, -1, -1, 1, 1, -1, 1, -1, -1, 1, -1, 1, -1, 1, -1, -1, -1, -1, -1, -1, 1, 1, 1, 1, -1, 1, 1, 1, 1, -1, 1, -1, 1, 1, -1, -1, 1, 1, -1, -1, 1, -1, 1, -1, 1 | -1, -1, -1, -1, -1, -1, 1, 1, -1, -1, 1, 1, -1, -1, -1, -1, -1, 1, -1, 1, 1, -1, -1, 1, -1, 1, 1, -1, 1, -1, 1, -1, 1, 1, 1, 1, -1, -1, -1, -1, -1, 1, 1, 1, 1, -1, -1, 1, 1, 1, 1, -1, 1, -1, 1, 1, -1, -1, 1, -1, -1, 1, -1, 1, -1, 1 |
| 4 | 1, -1, 1, -1, 1, -1, -1, 1, 1, -1, -1, 1, 1, -1, 1, -1, 1, 1, 1, 1, -1, -1, 1, 1, 1, 1, - 1, -1, -1, -1, -1, -1, 1, -1, 1, -1, 1, 1, -1, 1, -1, -1, 1, 1, -1, 1, -1, -1, -1, -1, -1, 1, 1, -1, -1, 1, 1, -1, -1, -1, -1, < 1, -1 | -1, 1, -1, 1, 1, -1, -1, 1, 1, -1, - 1, 1, 1, -1, 1, -1, -1, -1, -1, 1, 1, -1, -1, - 1, -1, 1, 1, 1, 1, 1, 1, -1, 1, -1, 1, -1, 1, 1, -1, 1, -1, -1, 1, 1, -1, 1, -1, -1, -1, -1, -1, 1, 1, -1, -1, 1, 1, -1, -1, -1, -1,-1, -1 |
| 5 | 1, -1, 1, -1, -1, -1, -1, -1, -1, -1, -1, - 1, 1, -1, 1, -1, 1, -1, -1, 1, -1, -1, 1, 1, 1, 1, -1, -1, -1, 1, 1, -1, 1, -1, 1, -1, 1, 1, 1, 1, -1, -1, -1, -1, -1, 1, -1, 1, 1, - 1, -1, 1, 1, 1, -1, -1, 1, 1, -1, -1, 1, -1, -1, 1 | 1, -1, 1, -1, -1, -1, -1, -1, -1, -1, -1, - 1, 1, -1, 1, -1, 1, -1, -1, 1, -1, -1, 1, 1, 1, 1, -1, -1, -1, 1, 1, -1, 1, -1, 1, -1, 1, -1, 1, - 1, -1, -1, -1, 1, 1, 1, 1, 1, -1, 1, -1, -1, 1, 1, -1, -1, -1, 1, 1, -1, -1, 1, 1, -1 |
| 6 | 1, -1, -1, 1, -1, -1, 1, 1, -1, -1, 1, 1, -1, -1, -1, 1, 1, -1, 1, -1, -1, -1, -1, -1, -1, 1, 1, 1, 1, -1, 1, -1, 1, 1, 1, -1, -1, 1, 1, 1, - 1, -1, -1, -1, 1, 1, -1, 1, 1, -1, 1, -1, 1, -1, 1, 1, 1, 1, 1, 1, 1, 1, 1, 1, -1, 1, -1 | 1, -1, -1, 1, -1, -1, 1, 1, -1, -1, 1, 1, 1, -1, -1, 1, 1, -1, 1, -1, -1, -1, -1, -1, -1, 1, 1, 1, 1, -1, 1, -1, 1, 1, 1, -1, -1, -1, 1, 1, 1, 1, -1, -1, 1, -1, -1, 1, -1, 1, -1, 1, -1, 1, -1, 1, -1, -1, -1, -1, -1, -1, -1, -1, -1, 1, - 1, 1 |
| 7 | 1, 1, -1, 1, -1, -1, 1, -1, -1, -1, -1, 1, - 1, -1, -1, 1, 1, 1, -1, 1, 1, 1, -1, 1, -1, - 1, -1, 1, 1, 1, 1, 1, -1, -1, -1, 1, -1, 1, 1, - 1, 1, 1, 1, 1, 1, -1, 1, 1, 1, 1, -1, 1, 1, -1, 1, 1, 1, -1, 1, -1, -1, -1, 1, 1, 1, 1, -1 | -1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, -1, 1, -1, -1, 1, 1, 1, 1, 1, 1, 1, -1, 1, 1, 1, -1, 1, 1, -1, 1, 1, 1, -1, 1, -1, -1, -1, 1, 1, 1, 1, -1 |
| 8 | 1, -1, -1, -1, -1, 1, 1, 1, -1, 1, -1, -1, - 1, 1, 1, -1, -1, 1, -1, -1, -1, 1, -1, -1, -1, -1, 1, -1, -1, 1, -1, 1, 1, -1, 1, 1, 1, 1, - 1, -1, -1, 1, -1, 1, 1, 1, -1, 1, 1, 1, 1, -1, - 1, -1, 1, -1, -1, -1, -1, 1, -1, -1, 1, -1, 1, 1 | -1, 1, 1, 1, 1, -1, -1, -1, 1, -1, 1, 1, 1, - 1, 1, 1, 1, -1, 1, 1, 1, -1, 1, 1, 1, -1, 1, 1, -1, 1, -1, -1, -1, 1, 1, 1, 1, -1, -1, - 1, 1, -1, 1, 1, 1, -1, 1, 1, 1, -1, -1, -1, 1, -1, -1, -1, -1, 1, -1, -1, 1, -1, 1, 1 |
| 9 | 1, 1, 1, -1, 1, -1, 1, 1, -1, -1, -1, 1, -1, 1, -1, -1, 1, 1, 1, -1, -1, 1, -1, -1, 1, 1, 1, 1, -1, -1, 1, -1, -1, 1, 1, 1, -1, 1, -1, 1, -1, 1, 1, 1, 1, 1, -1, 1, -1, 1, 1, 1, 1, 1, -1, -1, 1, -1, -1, -1, -1, -1, 1, 1, -1, 1, 1 | -1, -1, -1, 1, -1, 1, -1, -1, 1, 1, 1, -1, 1, -1, 1, 1, -1, -1, -1, 1, 1, -1, 1, 1, -1, -1, -1, -1, 1, 1, -1, 1, 1, -1, -1, -1, 1, -1, 1, 1, 1, 1, -1, 1, -1, 1, 1, 1, 1, 1, -1,-1, 1, -1, -1, -1, -1, -1, 1, 1, -1, 1, 1 |
| 10 | 1, 1, -1, 1, 1, -1, -1, -1, -1, -1, 1, -1, - 1, 1, 1, 1, 1, 1, -1, 1, -1, 1, 1, 1, 1, 1, -1, 1, -1, 1, 1, 1, 1, -1, 1, 1, -1, -1, - 1, 1, 1, -1, 1, 1, -1, -1, -1, 1, 1, -1, 1, - 1, 1, 1, 1, -1, -1, 1, -1, 1, -1, -1, -1 | -1, -1, 1, -1, 1, 1, 1, 1, 1, -1, 1, 1, - 1, -1, -1, -1, -1, 1, -1, 1, -1, -1, -1, -1, -1, 1, -1, 1, -1, -1, -1, 1, 1, -1, 1, 1, -1, -1, -1, -1, 1, 1, -1, 1, -1, 1, -1, 1, -1, -1, -1, 1, 1, -1, 1, -1, -1, 1, -1, 1, -1, -1, -1 |
| 11 | 1, 1, 1, -1, -1, -1, -1, 1, 1, 1, 1, -1, 1, 1, 1, -1, 1, -1, 1, 1, -1, 1, -1, -1, -1, 1, -1, -1, -1, 1, -1, -1, 1, 1, 1, -1, 1, 1, 1, -1, 1, 1, 1, -1, -1, -1, 1, 1, -1, 1, 1, 1, -1, 1, 1, -1, 1, -1, -1, 1, -1, 1, 1 | 1, 1, 1, -1, -1, -1, -1, 1, 1, 1, 1, -1, 1, 1, 1, -1, 1, -1, 1, 1, -1, 1, -1, -1, -1, 1, -1, -1, -1, 1, -1, -1, -1, -1, -1, 1, -1, - 1, -1, 1, -1, -1, -1, 1, 1, 1, 1, -1, -1, 1, -1, -1, 1, -1, -1, 1, -1, 1, 1, -1, 1, - 1, -1 |
| 12 | 1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, 1, 1, 1, -1, 1, 1, 1, -1, 1, 1, 1, 1, -1, 1, -1, -1, 1, -1, 1, -1, -1, -1, 1, -1, -1, -1, -1, 1, 1, 1, 1, -1, -1, -1 | 1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, 1, 1, 1, -1, -1, 1, -1, -1, -1, 1, -1, 1, 1, -1, 1, -1, 1, 1, 1, -1, 1, 1, 1, 1, -1, -1, -1, -1, 1, 1, 1 |
| 13 | 1, 1, 1, -1, 1, 1, -1, 1, 1, 1, 1, -1, -1, - 1, 1, -1, 1, 1, 1, -1, 1, 1, -1, 1, -1, -1, - 1, 1, 1, 1, 1, -1, 1, 1, 1, 1, -1, 1, 1, 1, -1, 1, 1, -1, 1, 1, 1, -1, -1, -1, 1, -1, -1, -1, -1, 1, - 1, -1, 1, -1, 1, 1, 1, -1, -1, -1, 1, -1 | 1, 1, 1, -1, 1, 1, -1, 1, 1, 1, 1, -1, -1, - 1, 1, -1, 1, 1, 1, -1, 1, 1, -1, 1, -1, -1, - 1, 1, 1, 1, 1, -1, 1, -1, -1, -1, 1, -1, -1, -1, -1, 1, 1, 1, -1, -1, -1, 1, -1, -1, -1, -1, 1, 1, 1, -1, 1, 1, 1, -1, 1, -1, -1, -1, 1, 1, 1, -1, 1 |

(continued)

| Sequence number | x | y |
|---|---|---|
| 14 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1,-1, -1, 1, -1, 1, 1, -1, 1, 1, 1, -1, 1, -1, - 1, -1, 1, 1, 1, 1, -1, 1, 1, -1, 1, 1, 1 | 1, -1, 1, 1, 1, -1, -1, -1, 1, -1, 1, 1, -1, 1, 1, 1, 1, -1, 1, 1, 1, -1, -1, -1, -1, 1,-1, -1, 1, -1, -1, -1, -1, 1, 1, -1, -1, 1, 1, 1, -1, 1, -1, -1, 1, -1, -1, -1, 1, -1, 1, 1, 1, -1, -1, -1, -1, 1, -1, -1, 1, -1,-1, -1 |
| 15 | 1, 1, 1, -1, -1, 1, -1, -1, 1, 1, 1, -1, 1, - 1, 1, 1, 1, 1, 1, -1, -1, 1, -1, -1, -1, -1, -1, 1, -1, 1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, - 1, -1 | 1, 1, 1, -1, -1, 1, -1, -1, 1, 1, 1, -1, 1, - 1, 1, 1, 1, 1, 1, -1, -1, 1, -1, -1, -1, -1, -1, 1, -1, 1, -1, -1, 1, 1, 1, -1, -1, 1, - 1, -1, 1, 1, 1, -1, 1, -1, 1, 1, -1, -1, -1, 1, 1, -1, 1, 1, 1, 1, 1, -1, 1, -1, 1, 1 |
| 16 | 1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, 1, -1, -1, -1, - 1, -1, -1, 1, -1, -1, 1, 1, 1, 1, -1, 1, - 1, 1, 1, 1, -1, -1, 1, -1, -1, 1, 1, 1 | 1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, 1, 1, -1, 1, 1, -1, 1, -1, 1, 1, 1, 1, 1, 1, -1, 1, 1, -1, -1, -1, -1, 1, -1, 1, - 1, -1, -1, 1, 1, -1, 1, 1, -1, -1, -1 |
| 17 | 1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, - 1, -1, 1, 1, -1, -1, -1, -1, -1, 1, -1, 1, -1, -1, 1, 1, 1, -1, 1, -1, 1, 1, 1, 1, 1, -1 | -1, 1, -1, -1, 1, 1, -1, -1, 1, -1, -1, - 1, -1, -1, 1, 1, -1, 1, 1, -1, -1, -1, 1, - 1, 1, -1, -1, -1, -1, -1, 1, -1, 1, -1, -1, 1, 1, 1, -1, -1, 1, -1, -1, -1, -1, -1, 1, - 1, 1, -1, -1, 1, 1, 1, -1, 1, -1, 1, 1, 1, 1, 1, -1 |
| 18 | 1, -1, -1, -1, -1, -1, 1, -1, 1, -1, -1, - 1, 1, 1, -1, 1, -1, 1, 1, 1, 1, 1, -1, 1, 1, - 1, -1, -1, 1, 1, -1, 1, -1, 1, 1, 1, 1, 1, - 1, 1, 1, -1, 1, 1, 1, -1, -1, 1, -1, -1, 1, 1, 1, 1, 1, -1, 1, 1, -1, -1, -1, 1, 1, -1, 1 | -1, 1, 1, 1, 1, 1, -1, 1, -1, 1, 1, 1, -1, - 1, 1, -1, 1, -1, -1, -1, -1, -1, 1, -1, -1, 1, 1, 1, -1, -1, 1, -1, -1, 1, 1, 1, 1, 1, - 1, 1, 1, -1, 1, 1, -1, 1, 1, 1, -1, -1, 1, -1, -1, 1, 1, 1, 1, -1, 1, 1, -1, -1, -1, 1, 1, -1, 1 |
| 19 | 1, 1, -1, -1, 1, -1, 1, -1, 1, 1, 1, 1, 1, - 1, -1, 1, -1, -1, 1, 1, -1, 1, -1, 1, 1, 1, 1, 1, -1, -1, 1, 1, 1, -1, -1, 1, -1, 1, - 1, 1, 1, 1, 1, 1, -1, -1, 1, 1, 1, -1, -1, 1, -1, 1, -1, -1, -1, -1, -1, -1, 1, 1, -1 | 1, 1, -1, -1, 1, -1, 1, -1, 1, 1, 1, 1, 1, - 1, -1, 1, -1, -1, 1, 1, -1, 1, -1, 1, 1, 1, 1, 1, -1, -1, 1, 1, 1, -1, -1, 1, -1, -1, 1, 1, 1, -1, 1, -1, 1, -1, -1, -1, -1, -1, 1, 1, -1, -1, -1, 1, 1, -1, 1, 1, 1, 1, 1, -1, -1, 1 |
| 20 | 1, -1, -1, 1, 1, 1, 1, 1, 1, -1, 1, -1, 1, 1, -1, -1, -1, 1, 1, -1, -1, -1, -1, -1, 1, - 1, 1, -1, 1, 1, 1, -1, -1, 1, -1, -1, 1, 1, 1, 1, 1, -1, 1, -1, 1, 1, 1, -1, -1, 1, -1, -1, 1, 1, 1, 1, 1, -1, 1, -1, 1, -1, -1, 1, 1 | 1, -1, -1, 1, 1, 1, 1, 1, 1, -1, 1, -1, 1, 1, -1, -1, -1, 1, 1, -1, -1, -1, -1, -1, 1, - 1, 1, -1, 1, 1, 1, -1, -1, -1, 1, -1, 1, 1, 1, -1, -1, - 1, -1, -1, -1, 1, -1, 1, -1, -1, 1, 1, -1, 1, 1, -1, -1, -1, -1, -1, 1, -1, 1, -1, 1, 1, -1, -1 |
| 21 | 1, 1, 1, -1, -1, -1, -1, 1, 1, -1, 1, 1, 1, - 1, 1, 1, 1, -1, -1, -1, 1, -1, -1, -1, 1, -1, 1, -1, -1, 1, -1, 1, 1, 1, -1, -1, 1, 1, 1, 1, -1, -1, 1, -1, -1, -1, 1, -1, -1, -1, - 1, -1, 1, -1, -1, -1, 1, -1, 1, -1, -1, 1, - 1, 1, 1 | 1, 1, 1, -1, -1, -1, -1, 1, 1, -1, 1, 1, 1, - 1, 1, 1, 1, -1, -1, -1, 1, -1, -1, -1, 1, -1, 1, -1, -1, 1, -1, 1, 1, 1, 1, 1, 1, -1, -1, -1, 1, 1, -1, 1, 1, 1, -1, 1, 1, 1, 1, 1, -1, 1, 1, 1, -1, 1, -1, 1, 1, -1, 1, -1, -1 |
| 22 | 1, 1, -1, 1, -1, -1, 1, -1, 1, -1, -1, -1, 1, -1, -1, -1, -1, -1, 1, -1, -1, -1, 1, - 1, -1, 1, 1, 1, 1, 1, -1, -1, -1, -1, 1, - 1, 1, 1, -1, 1, -1, 1, 1, 1, -1, 1, 1, 1, 1, -1, -1, 1, -1, -1, -1, 1, -1, -1, 1, 1, 1, 1, - 1, -1, -1 | 1, 1, -1, 1, -1, -1, 1, -1, 1, -1, -1, -1, 1, -1, -1, -1, -1, -1, 1, -1, -1, -1, 1, - 1, -1, 1, 1, 1, 1, 1, -1, -1, -1, 1, 1, - 1, -1, 1, -1, 1, -1, 1, -1, -1, 1, -1, -1, -1, 1, -1, -1, -1, 1, 1, -1, 1, 1, 1, -1, 1, 1, -1, -1, -1, -1, 1, 1, 1 |
| 23 | 1, 1, 1, 1, -1, -1, 1, 1, 1, -1, -1, 1, -1, 1, -1, 1, 1, -1, -1, -1, -1, -1, 1, 1, -1, 1, 1, -1, -1, 1, -1, 1, 1, 1, 1, 1, 1, -1, -1, 1, 1, 1, -1, -1, 1, -1, 1, 1, -1, 1, 1, 1, 1, 1, 1, 1, 1, -1, -1, 1, -1, -1, 1, 1, -1, 1, -1 | -1, -1, -1, -1, 1, 1, -1, -1, -1, 1, 1, -1, 1, -1, 1, -1, 1, 1, 1, 1, 1, -1, -1, 1, - 1, -1, 1, 1, -1, 1, -1, 1, 1, 1, 1, -1, -1, 1, 1, 1, -1, -1, 1, -1, 1, 1, -1, -1, 1, -1, 1, 1, 1, 1, 1, 1, 1, -1, -1, 1, -1, -1, 1, 1, -1, 1, -1 |
| 24 | 1, -1, 1, -1, -1, 1, 1, -1, 1, 1, -1, -1, - 1, -1, -1, -1, -1, 1, -1, 1, -1, 1, 1, 1, -1, - 1, -1, 1, 1, 1, -1, -1, -1, -1, 1, -1, 1, -1, 1, -1, - 1, 1, 1, -1, 1, 1, 1, -1, -1, -1, -1, -1, 1, -1, 1, -1, 1, 1, -1, -1, 1, 1, 1, 1 | -1, 1, -1, 1, 1, -1, -1, 1, -1, -1, 1, 1, 1, 1, 1, 1, 1, -1, 1, -1, 1, -1, 1, 1, 1,-1, -1, 1, 1, 1, 1, 1, -1, 1, -1, -1, 1, 1, 1,-1, 1, 1, -1, -1, -1, -1, -1, 1, -1, 1, - 1, 1, -1, -1, 1, 1, 1, -1, -1, 1, 1, 1, 1, 1 |
| 25 | 1, 1, 1, 1, 1, -1, 1, -1, -1, 1, 1, -1, -1, - 1, 1, 1, 1, -1, -1, -1, -1, 1, -1, 1, -1, 1, - 1, -1, 1, -1, -1, 1, 1, 1, 1, 1, 1, 1, -1, 1, -1, -1, 1, 1, -1, -1, -1, 1, 1, 1, 1, 1, - 1, 1, -1, 1, -1, 1, 1, -1, 1, 1, -1, -1 | -1, -1, -1, -1, -1, 1, -1, 1, 1, -1, -1, 1, 1, 1, -1, -1, 1, 1, 1, 1, -1, 1, -1, 1, -1, 1, 1, -1, -1, 1, 1, 1, 1, -1, -1, 1, 1, 1, 1, -1, 1, -1, -1, 1, 1, -1, -1, -1, 1, 1, 1, 1, 1, - 1, 1, -1, 1, -1, 1, 1, -1, 1, 1, -1, -1 |

(continued)

| Sequence number | x | y |
|---|---|---|
| 26 | 1, 1, -1, -1, 1, -1, -1, 1, -1, 1, -1, 1, - 1, -1, -1, -1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1 | -1, -1, 1, 1, -1, 1, 1, -1, 1, -1, 1, -1, 1, 1, 1, 1, 1, 1, -1, -1, -1, 1, 1, -1, -1, 1, - 1, 1, 1, 1, 1, 1, 1, 1, -1, -1, 1, -1, -1, 1, -1, 1, -1, 1, -1, -1, -1, 1, 1, -1, -1, -1, 1, 1, -1, -1, 1, -1, 1, 1, 1, 1, 1 |
| 27 | 1, 1, 1, -1, -1, -1, 1, -1, -1, -1, -1, 1, 1, 1, -1, 1, 1, 1, 1, -1, 1, 1, -1, 1, 1, 1, 1, -1, 1, 1, 1, -1, 1, 1, 1, 1, -1, -1, -1, 1, - 1, 1, 1, 1, -1, -1, -1, 1, -1, 1, 1, 1, -1, 1, 1, -1, 1, -1, -1, -1, 1, -1, -1, 1, -1 | 1, 1, 1, -1, -1, -1, 1, -1, -1, -1, -1, 1, 1, 1, -1, 1, 1, 1, 1, -1, 1, 1, -1, 1, 1, 1, 1, -1, 1, 1, 1, -1, 1, 1, 1, 1, -1, -1, -1, 1, 1, 1, -1, 1, -1, -1, -1, 1, 1, 1, -1, 1, -1, -1, -1, 1, -1, -1, 1, -1, 1, 1, 1, -1, 1, 1, -1, 1 |
| 28 | 1, -1, 1, 1, -1, 1, 1, 1, -1, 1, -1, -1, 1, - 1, -1, -1, 1, -1, 1, 1, 1, -1, -1, -1, 1, - 1, 1, 1, 1, -1, -1, -1, 1, -1, 1, 1, -1, 1, 1, 1, 1, -1, 1, 1, -1, 1, 1, 1, 1, -1, 1, 1, 1, -1, -1, -1, -1, 1, -1, -1, -1, 1, 1, 1 | 1, -1, 1, 1, -1, 1, 1, 1, -1, 1, -1, -1, 1, - 1, -1, -1, 1, -1, 1, 1, 1, -1, -1, -1, 1, - 1, 1, 1, 1, -1, -1, -1, 1, -1, -1, 1, - 1, -1, -1, -1, 1, -1, -1, 1, -1, -1, -1, - 1, 1, -1, -1, -1, 1, 1, 1, 1, -1, 1, 1, 1, - 1, -1, -1 |
| 29 | 1, 1, 1, 1, 1, -1, -1, 1, 1, 1, 1, 1, 1, -1, - 1, 1, -1, -1, 1, 1, -1, 1, -1, 1, 1, 1, -1, - 1, 1, -1, 1, -1, 1, 1, 1, 1, 1, 1, -1, -1, 1, - 1, -1, -1, -1, 1, 1, -1, -1, -1, 1, 1, - 1, 1, -1, 1, -1, -1, 1, 1, -1, 1, -1, 1 | 1, 1, 1, 1, 1, -1, -1, 1, 1, 1, 1, 1, 1, -1, - 1, 1, -1, -1, 1, 1, -1, 1, -1, 1, 1, 1, -1, - 1, 1, -1, 1, -1, 1, -1, -1, -1, -1, -1, -1, 1, 1, - 1, 1, 1, 1, 1, 1, -1, -1, 1, 1, 1, -1, -1, 1, -1, 1, -1, 1, 1, -1, -1, 1, -1, 1, -1 |
| 30 | 1, -1, 1, -1, 1, 1, -1, -1, 1, -1, 1, -1, 1, 1, -1, -1, -1, 1, 1, -1, -1, -1, -1, 1, -1, -1, 1, 1, 1, 1, 1, 1, -1, 1, -1, 1, 1, - 1, -1, -1, 1, -1, 1, -1, -1, 1, 1, -1, 1, 1, -1, -1, -1, -1, -1, -1, 1, 1, -1, -1, -1, - 1, -1 | 1, -1, 1, -1, 1, 1, -1, -1, 1, -1, 1, -1, 1, 1, -1, -1, -1, 1, 1, -1, -1, -1, -1, 1, -1, -1, 1, 1, 1, 1, 1, 1, -1, 1, -1, 1, 1, -1, 1, 1, -1, 1, -1, 1, 1, -1, 1, -1, -1, 1, -1, -1, 1, -1, -1, 1, 1, 1, 1, 1, 1, -1, -1, 1, 1, 1, 1, 1 |
| 31 | 1, 1, -1, 1, 1, 1, -1, 1, -1, -1, 1, -1, 1, 1, -1, 1, -1, -1, -1, 1, 1, 1, 1, -1, 1, 1, 1, 1, 1, -1, 1, 1, -1, 1, 1, 1, -1, 1, 1, 1, 1, -1, 1, 1, 1, -1, 1, -1, -1, 1, -1, -1, -1, -1, 1, 1, 1, 1, -1, -1, -1, -1, 1, -1, -1, -1, 1 | -1, -1, 1, -1, -1, -1, 1, -1, 1, 1, -1, 1, - 1, -1, 1, -1, 1, 1, 1, -1, -1, -1, 1, - 1, -1, -1, 1, -1, -1, -1, 1, 1, 1, -1, 1, 1, 1, -1, 1, 1, 1, -1, 1, -1, -1, -1, 1, -1, -1, - 1, -1, 1, 1, 1, 1, -1, -1, -1, -1, 1, -1, - 1, -1, 1 |
| 32 | 1, -1, -1, -1, 1, -1, -1, -1, -1, 1, 1, 1, 1, -1, -1, -1, -1, 1, -1, -1, 1, -1, 1, 1, 1, -1, 1, 1, 1, 1, -1, 1, 1, 1, 1, -1, -1, -1, 1, - 1, -1, -1, 1, -1, -1, -1, -1, 1, 1, 1, -1, 1, -1, -1, 1, -1, 1, 1, -1, 1, -1, -1, -1, 1, -1, -1 | -1, 1, 1, 1, -1, 1, 1, 1, 1, -1, -1, -1, -1, 1, 1, 1, 1, -1, 1, 1, -1, 1, -1, -1, -1, 1, - 1, -1, -1, 1, -1, -1, 1, -1, -1, 1, -1, -1, 1, -1, -1, -1, 1, -1, -1, -1, -1, 1, 1, 1, -1, 1, - 1, -1, 1, -1, 1, 1, -1, 1, -1, -1, -1, 1, - 1, -1 |
| 33 | 1, 1, 1, -1, 1, 1, 1, -1, 1, 1, 1, -1, -1, - 1, -1, 1, -1, -1, 1, -1, 1, 1, 1, -1, 1, -1, - 1, 1, 1, -1, -1, -1, 1, -1, -1, -1, -1, 1, -1, -1, -1, 1, 1, 1, 1, -1, -1, -1, -1, 1, 1, 1, -1, 1, -1, -1, 1, -1, -1, -1, 1, -1, -1, - 1, 1, -1 | -1, -1, -1, 1, -1, -1, -1, 1, -1, -1, -1, 1, 1, 1, 1, -1, 1, 1, -1, 1, -1, -1, 1, -1, 1, 1, -1, 1, 1, 1, -1, 1, -1, -1, -1, 1, -1, -1, -1, 1, 1, 1, 1, -1, -1, -1, -1, 1, 1, 1, 1, -1, 1, -1, -1, 1, -1, -1, 1, -1, -1, - 1, 1, -1 |
| 34 | 1, -1, 1, 1, 1, -1, 1, 1, 1, -1, 1, 1, -1, 1, -1, -1, -1, 1, 1, 1, 1, -1, -1, -1, -1, 1, 1, 1, -1, 1, 1, 1, -1, 1, -1, -1, -1, 1, -1, -1, 1, -1, 1, 1, -1, 1, -1, -1, 1, -1, -1, - 1, -1, 1, 1, 1, 1, -1, 1, 1, 1, -1, 1, 1, 1 | -1, 1, -1, -1, -1, 1, -1, -1, -1, 1, -1, - 1, 1, -1, 1, 1, 1, -1, -1, -1, -1, 1, 1, 1, 1, -1, -1, -1, 1, -1, -1, -1, -1, 1, -1, -1, 1, -1, 1, 1, -1, 1, -1, - 1, 1, -1, -1, -1, 1, 1, 1, -1, 1, 1, 1, - 1, 1, 1, 1 |
| 35 | 1, 1, -1, 1, -1, -1, -1, 1, 1, 1, -1, 1, 1, 1, 1, -1, 1, -1, -1, -1, -1, 1, -1, -1, 1, - 1, -1, -1, 1, -1, 1, 1, -1, -1, 1, -1, 1, 1, 1, 1, -1, 1, 1, -1, 1, 1, 1, 1, -1, -1, 1, 1, 1, -1, 1, 1, 1, 1, -1, -1, -1, 1, -1, 1, 1 | 1, 1, -1, 1, -1, -1, -1, 1, 1, 1, -1, 1, 1, 1, 1, -1, 1, -1, -1, -1, -1, 1, -1, -1, 1, - 1, -1, -1, 1, -1, 1, 1, 1, 1, 1, -1, 1, -1, -1, -1, 1, -1, -1, 1, -1, -1, -1, -1, 1, 1, -1, -1, -1, -1, 1, -1, -1, -1, 1, 1, 1, -1, 1, - 1, -1 |
| 36 | 1, 1, -1, 1, -1, -1, -1, 1, 1, 1, -1, 1, 1, 1, 1, -1, -1, 1, 1, 1, 1, 1, -1, 1, 1, -1, 1, 1, 1, -1, 1, -1, -1, -1, -1, 1, -1, 1, 1, 1, 1,-1, 1, 1, -1, 1, 1, 1, 1, -1, 1, -1, -1, -1, - 1, 1, -1, -1, -1, 1, 1, 1, -1, 1, -1, -1 | 1, 1, -1, 1, -1, -1, -1, 1, 1, 1, -1, 1, 1, 1, 1, -1, -1, 1, 1, 1, 1, 1, -1, 1, 1, -1, 1, 1, 1, -1, 1, -1, -1, -1, -1, 1, -1, -1, -1, 1, -1, -1, 1, -1, -1, -1, -1, 1, -1, 1, 1, 1, 1, -1, 1, 1, 1, -1, -1, -1, 1, -1, 1, 1 |
| 37 | 1, 1, -1, 1, -1, -1, 1, -1, 1, -1, -1, -1, - 1, 1, 1, 1, -1, -1, -1, 1, -1, -1, -1, 1, - 1, 1, -1, -1, -1, 1, -1, -1, 1, 1, -1, 1, 1, 1, -1, 1, 1, -1, -1, -1, 1, -1, -1, -1, -1, -1, -1, 1, 1, 1, 1, -1, -1, 1, -1, -1, 1, - 1, 1, 1 | 1, 1, -1, 1, -1, -1, 1, -1, 1, -1, -1, -1, - 1, 1, 1, 1, -1, -1, -1, 1, -1, -1, -1, 1, - 1, 1, -1, -1, -1, 1, -1, -1, -1, 1, -1, -1, -1, 1, -1, -1, 1, 1, 1, -1, 1, 1, 1, 1, 1, 1, -1, -1, -1, -1, 1, 1, -1, 1, 1, -1, 1, -1, -1 |

(continued)

| Sequence number | x | y |
|---|---|---|
| 38 | 1, 1, -1, 1, -1, -1, 1, -1, -1, 1, 1, 1, 1, - 1, -1, -1, -1, -1, -1, 1, -1, -1, -1, 1, 1, -1, 1, 1, 1, -1, 1, 1, 1, 1, -1, 1, 1, 1, -1, 1, -1, 1, 1, 1, -1, 1, 1, 1, -1, -1, -1, 1, 1, 1, 1, -1, 1, -1, 1, 1, -1, 1, -1, -1 | 1, 1, -1, 1, -1, -1, 1, -1, -1, 1, 1, 1, 1, - 1, -1, -1, -1, -1, -1, 1, -1, -1, -1, 1, 1, -1, 1, 1, 1, -1, 1, 1, 1, -1, -1, -1, - 1, 1, -1, 1, -1, -1, -1, 1, -1, -1, -1, 1, 1, 1, -1, -1, -1, -1, 1, -1, 1, -1, -1, 1, - 1, 1, 1 |
| 39 | 1, 1, 1, -1, 1, 1, -1, 1, 1, 1, 1, -1, -1, -1, 1, -1, -1, -1, -1, 1, -1, -1, 1, -1, -1, -1, -1, 1, 1, 1, -1, 1, 1, 1, 1, -1, 1, 1, - 1, 1, -1, -1, -1, 1, 1, 1, -1, 1, 1, 1, 1, - 1, 1, 1, -1, 1, -1, -1, -1, 1, 1, 1, -1, 1 | -1, -1, -1, 1, -1, -1, 1, -1, -1, -1, -1, 1, 1, 1, -1, 1, -1, -1, -1, 1, -1, -1, 1, - 1, -1, -1, 1, 1, 1, -1, 1, -1, -1, -1, 1, -1, -1, 1, -1, 1, 1, 1, -1, -1, -1, 1, - 1, 1, 1, 1, -1, 1, 1, -1, 1, -1, -1, -1, 1, 1, 1, -1, 1 |
| 40 | 1, -1, 1, 1, 1, -1, -1, -1, 1, -1, 1, 1, -1, 1, 1, 1, -1, 1, -1, -1, -1, 1, 1, 1, -1, 1, 1, - 1, -1, 1, -1, -1, -1, 1, -1, 1, 1, 1, -1, - 1, -1, -1, 1, -1, -1, 1, -1, -1, -1, 1, -1, 1, 1, 1, -1, -1, -1, -1, 1, -1, -1, 1, -1, - 1, -1 | -1, 1, -1, -1, -1, 1, 1, 1, -1, 1, -1, -1, 1, -1, -1, -1, -1, 1, -1, -1, -1, 1, 1, 1, - 1, 1, 1, -1, -1, 1, -1, -1, -1, -1, 1, -1, -1, -1, 1, 1, 1, 1, -1, 1, 1, -1, 1, 1, 1, 1, -1, 1, 1, 1, -1, -1, -1, -1, 1, -1, -1, 1, -1, - 1, -1 |

It should be noted that the GCP sequence numbers and the GCP sequence in Table 5 are merely examples. For details, refer to related descriptions of Table 4. Details are not described herein again.

Optionally, the 40 pairs of GCPs shown in Table 5 may be divided into 20 groups, and each group includes two adjacent pairs of GCPs. To be specific, the first group includes GCPs with sequence numbers 1 and 2, the second group includes GCPs with sequence numbers 3 and 4, ..., the nineteenth group includes GCPs with sequence numbers 37 and 38, and the twentieth group includes GCPs with sequence numbers 39 and 40. Two pairs of GCPs in each group are orthogonal to each other.

Optionally, the 40 pairs of GCPs shown in Table 5 have a low aperiodic cross-correlation peak value, or have a good aperiodic cross-correlation property. Further, the six pairs of GCPs with sequence numbers 1 to 6 have a lower aperiodic cross-correlation peak value. In addition, the six pairs of GCPs with sequence numbers 7 to 12 also have a lower aperiodic cross-correlation peak value. When a quantity of devices that need to perform sensing simultaneously is less than or equal to 6, the six pairs of GCPs with sequence numbers 1 to 6 may be preferentially used, or the six pairs of GCPs with sequence numbers 7 to 12 may be preferentially used. The six pairs of GCPs with sequence numbers 1 to 6 or the six pairs of GCPs with sequence numbers 7 to 12 may be referred to as preferred GCPs.

In some embodiments, when N is equal to 128, 40 pairs of binary GCPs defined in this application are shown in Table 6.

**Table 6**

| Sequence number | x | y |
|---|---|---|
| 1 | 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, - 1, 1, -1, -1, 1, -1, -1, -1, -1, 1, 1, 1, -1, 1, -1, -1, -1, 1, -1, -1, 1, 1, 1, -1, -1, -1, 1, -1, 1, 1, 1, -1, 1, 1, 1, 1, -1, -1, -1, 1, -1, -1, -1, -1, 1, -1, -1, 1, -1, 1, 1, 1, 1, -1, -1, -1, 1, -1, -1, -1, 1, -1 | 1, 1, 1, -1, 1, 1, -1, 1, 1, 1, 1, -1, -1, - 1, 1, -1, 1, 1, 1, -1, 1, 1, -1, 1, -1, -1, -1, -1, 1, 1, 1, -1, 1, 1, 1, 1, -1, 1, 1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, -1, 1, 1, -1, -1, - 1, 1, -1, 1, 1, 1, -1, 1, 1, -1, 1, 1, 1, -1, -1, -1, 1, -1, -1, 1, 1, 1, -1, -1, -1, -1, 1, -1, -1, 1, -1, 1, 1, 1, -1, 1, 1, 1, 1, 1, -1, 1, 1, -1, -1, -1, 1, 1, 1, -1, 1 |
| 2 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, -1, 1, 1, 1, 1, -1, 1, -1, -1, -1, 1, 1, 1, 1, -1, 1, 1, -1, 1, 1, 1, 1, -1, 1, -1, -1, -1, 1, -1, -1, -1, 1, -1, - 1, -1, -1, 1, -1, -1, -1, 1, 1, 1, 1, -1, 1, 1, -1, 1, 1, -1, 1, 1, 1, 1, -1, 1, -1, 1, 1, 1, -1, -1, -1, 1, -1, 1, 1, -1, 1, 1, 1 | 1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, -1, -1, 1, -1, 1, 1, -1, 1, 1, 1, -1, 1, -1, -1, -1, 1, 1, 1, 1, -1, 1, 1, 1, -1, 1, 1, 1, 1, -1, 1, 1, 1, 1, -1, -1, -1, -1, 1, -1, 1, 1, 1, 1, -1, 1, 1, 1, 1, -1, -1, -1, -1, 1, 1, -1, 1, 1, -1, -1, -1, -1, 1, 1, 1, 1, -1, 1, -1, -1, -1, -1, 1, 1, 1, 1, -1, 1, -1, -1, -1, 1, -1, 1, 1, 1, -1, -1, -1, -1, 1, -1, -1, 1, -1, -1, -1 |

(continued)

| Sequence number | x | y |
|---|---|---|
| 3 | 1, 1, 1, -1, -1, -1, -1, 1, 1, -1, 1, 1, 1, - 1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, - 1, 1, -1, -1, -1, 1, -1, 1, -1, -1, 1, -1, 1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1 | 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, - 1, -1, 1, -1, -1, -1, 1, -1, 1, -1, -1, 1, -1, 1, 1, -1, -1, -1, 1, -1, 1, -1, -1, 1, -1, 1, 1, -1, -1, -1, 1, 1, 1, 1, -1, -1, 1, -1, -1, -1, 1, -1, -1, 1, 1, 1, -1, 1, 1, 1, -1, 1, -1, -1, -1, -1, -1, 1, 1, 1, 1, -1, -1, 1, -1, -1, -1, -1, 1, -1, -1, -1, 1, -1, 1, -1, -1, 1, -1, 1, 1, 1 |
| 4 | 1, 1, -1, 1, -1, -1, 1, -1, 1, -1, -1, -1, 1, -1, -1, -1, -1, -1, 1, -1, -1, -1, 1, -1, - 1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, - 1, 1, 1, -1, 1, -1, -1, 1, -1, 1, -1, -1, -1, 1, -1, -1, -1, -1, -1, 1, -1, -1, -1, -1, 1, -1, -1, 1, 1, 1, 1, -1, -1, -1, 1, 1, -1, 1, -1, -1, 1, -1, 1, -1, -1, -1, 1, -1, -1, -1, 1, 1, -1, 1, 1, 1, -1, 1, 1, -1, -1, -1, -1, 1, 1, 1 | 1, 1, -1, 1, -1, -1, 1, -1, 1, -1, -1, -1, 1, -1, -1, -1, -1, -1, 1, -1, -1, -1, 1, - 1, 1, 1, 1, 1, -1, -1, -1, -1, -1, 1, - 1, 1, 1, -1, 1, -1, 1, 1, 1, -1, 1, 1, 1, -1, -1, 1, -1, -1, -1, 1, -1, -1, -1, - 1, -1, -1, -1, -1, 1, -1, 1, 1, 1, -1, 1, -1, 1, 1, 1, 1, 1, -1, 1, 1, 1, 1, -1, 1, 1, 1, -1, 1, -1, -1, 1, 1, 1, 1, -1, -1, -1, 1, - 1, 1, 1, -1, 1, -1, 1, 1, 1, 1, -1, 1, 1, 1, -1, -1, 1, -1, -1, -1, 1, -1, -1, 1, 1, 1, 1, - 1, -1, -1 |
| 5 | 1, 1, 1, 1, -1, -1, 1, 1, 1, -1, -1, 1, -1, 1, -1, 1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, 1, 1, 1, -1, -1, 1, -1, 1, -1, 1, 1, 1, 1, -1, -1, 1, 1, 1, -1, -1, 1, -1, 1, -1, 1, -1, -1, -1, -1, -1, -1, -1, 1, 1, -1, 1, 1, -1, -1, 1, -1, 1, -1, -1, -1, -1, -1, 1, 1, 1, -1, -1, -1, 1, 1, 1, -1, 1, -1, 1, -1, -1, -1, -1, -1, -1, -1, 1, 1, -1, 1, 1, -1, -1, 1, -1, 1 | -1, -1, -1, -1, 1, 1, -1, -1, -1, 1, 1, -1, 1, -1, 1, -1, 1, 1, 1, 1, 1, 1, 1, -1, -1, 1, - 1, -1, 1, 1, 1, -1, 1, -1, -1, -1, -1, -1, 1, 1, 1, -1, -1, 1, 1, 1, -1, 1, -1, 1, -1, -1, -1, -1, -1, -1, -1, 1, 1, -1, 1, 1, -1, -1, 1, -1, 1, 1, 1, 1, 1, -1, -1, 1, 1, 1, -1, - 1, 1, 1, -1, 1, -1, 1, -1, -1, -1, -1, -1, -1, 1, 1, -1, 1, 1, -1, -1, 1, -1, 1, -1, -1, - 1, -1, 1, 1, -1, -1, -1, -1, -1, -1, -1, -1, -1, 1, 1, -1, 1, 1, -1, -1, 1, -1, 1 |
| 6 | 1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, - 1, 1, -1, 1, -1, -1, -1, 1, 1, 1, 1, -1, -1, 1, 1, 1, 1, 1, -1, 1, -1, -1, -1, 1, 1, -1, 1, 1, -1, -1, -1, -1, -1, -1, -1, 1, -1, 1, -1, 1, 1, 1, -1, -1, 1, -1, -1, 1, 1, 1, 1, 1, 1, 1, -1, 1, -1, 1, -1, 1, 1, -1, -1, 1, 1, -1, -1, - 1, -1 | -1, 1, -1, 1, 1, -1, -1, 1, -1, -1, 1, 1, 1, 1, 1, 1, 1, -1, 1, -1, 1, -1, -1, 1, 1, 1, - 1, -1, 1, 1, 1, 1, -1, 1, -1, 1, 1, -1, -1, 1, -1, -1, 1, -1, -1, -1, 1, 1, 1, 1, 1, 1, -1, 1, -1, 1, - 1, 1, 1, -1, -1, -1, 1, 1, -1, -1, -1, -1, 1, -1, 1, -1, -1, 1, 1, 1, -1, -1, - 1, -1, -1, -1, -1, 1, -1, 1, -1, 1, 1, -1, -1, 1, 1, -1, -1, -1, -1, 1, -1, 1, 1, -1, -1, 1, -1, -1, 1, 1, 1, 1, 1, 1, -1, 1, -1, 1, -1, 1, 1, -1, -1, -1, 1, 1, -1, - 1, -1, -1 |
| 7 | 1, 1, 1, 1, -1, -1, 1, 1, 1, -1, -1, 1, -1, 1, -1, 1, -1, -1, -1, -1, -1, 1, 1, -1, 1, 1, -1, -1, 1, -1, 1, 1, 1, 1, 1, -1, -1, 1, 1, 1, -1, 1, -1, 1, -1, 1, 1, 1, 1, 1, 1, 1, -1, -1, 1, 1, 1, -1, 1, -1, -1, 1, 1, -1, 1, -1, -1, -1, -1, -1, 1, 1, -1, -1, 1, -1, -1, 1, -1, 1, 1, 1, 1, 1, 1, -1, -1, 1, 1, 1, 1, -1, -1, 1, -1, -1, 1, 1, 1, 1, 1, -1, -1, 1, 1, 1, 1, -1, - 1, 1, 1, -1, 1, -1, 1, 1, 1, 1, 1, 1, -1, -1, 1, -1, -1, 1, 1, 1, -1, 1, -1 | -1, -1, -1, -1, 1, 1, -1, -1, -1, 1, 1, -1, 1, -1, 1, -1, 1, 1, 1, 1, 1, 1, 1, -1, -1, 1, - 1, -1, 1, 1, 1, -1, 1, -1, -1, -1, -1, -1, 1, 1, -1, 1, 1, -1, -1, 1, 1, -1, 1, -1, 1, -1, -1, -1, -1, -1, -1, 1, 1, -1, 1, 1, -1, -1, 1, -1, 1, -1, -1, -1, -1, -1, 1, 1, 1, 1, 1, 1, 1, -1, -1, 1, -1, -1, 1, 1, -1, 1, -1, 1, 1, 1, 1, -1, -1, 1, 1, 1, 1, -1, -1, 1, 1, 1, 1, -1, -1, 1, -1, -1, 1, 1, 1, 1, -1 |
| 8 | 1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, -1, 1, -1, -1, 1, 1, -1, 1, 1, -1, -1, -1, -1, -1, -1, 1, -1, 1, -1, -1, 1, 1, 1, 1, -1, -1, 1, 1, 1, 1, -1, 1, -1, -1, 1, -1, -1, 1, 1, 1, 1, 1, 1, 1, -1, 1, -1, 1, -1, -1, 1, -1, -1, 1, 1, 1, 1, 1, 1, -1, 1, -1, 1, -1, -1, 1, 1, 1, -1, 1, 1, 1, 1, 1, -1, 1, -1, -1, 1, 1, 1, -1, -1, -1, -1, -1, -1, 1, -1, 1, - 1, 1, -1, -1, 1, 1, 1, -1, -1, 1, 1, 1, 1 | -1, 1, -1, 1, 1, -1, -1, 1, -1, -1, 1, 1, 1, 1, 1, 1, 1, -1, 1, -1, 1, -1, -1, 1, 1, 1, - 1, -1, 1, 1, 1, 1, -1, 1, -1, 1, 1, -1, -1, 1, -1, -1, 1, -1, -1, -1, 1, 1, 1, 1, 1, 1, -1, 1, -1, 1, - 1, 1, 1, -1, -1, -1, -1, -1, 1, -1, 1, 1, -1, -1, 1, -1, -1, -1, -1, -1, 1, -1, 1, 1, -1, -1, 1, 1, 1, 1, 1, 1, 1, 1, -1, 1, -1, 1, 1, -1, -1, 1, 1, 1, - 1, -1, 1, 1, 1, 1, 1, -1, 1, -1, -1, 1, 1, - 1, 1, 1, -1, -1, -1, -1, -1, -1, 1, 1, -1, 1, 1, -1, -1, 1, 1, 1, 1 |

(continued)

| Sequence number | x | y |
|---|---|---|
| 9 | 1, 1, 1, -1, 1, 1, -1, 1, 1, 1, 1, -1, -1, -1, 1, -1, 1, 1, 1, -1, 1, 1, 1, -1, 1, -1, -1, -1, 1, 1, 1, -1, 1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, - 1, 1, -1, -1, 1, -1, -1, -1, -1, 1, 1, 1, -1, 1, -1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1 | -1, -1, -1, 1, -1, -1, 1, -1, -1, -1, -1, 1, 1, 1, -1, 1, -1, -1, -1, 1, -1, -1, 1,-1, 1, 1, 1, -1, -1, -1, 1, -1, -1, -1, -1, 1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, 1, 1, 1, -1, 1, 1, -1, 1, 1, 1, 1, -1, -1, - 1, 1, -1, -1, -1, -1, 1, -1, -1, 1, -1, 1, 1, 1, -1, -1, -1, 1, -1 |
| 10 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, 1, -1, 1, 1, 1, 1, -1, 1, -1, -1, -1, 1, 1, 1, -1, 1, -1, -1, 1, 1, -1,-1, -1, 1, -1, -1, -1, 1, 1, 1, 1, -1, 1, 1, 1, -1, 1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1 | -1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, -1, 1, -1, 1, -1, -1, 1, 1, 1, -1, 1, -1, -1, 1, -1, -1, -1, 1, - 1, 1, 1, 1, -1, -1, -1, -1, 1, -1, -1, 1,-1, -1, -1, -1, 1, -1, -1, -1, 1, 1, 1, -1, 1, -1, -1, 1, -1, -1, -1, -1, 1, -1, -1, - 1, 1, 1, 1, 1, -1, 1, 1, 1, -1, 1, 1, 1, 1, -1, 1, 1, 1, -1, -1, -1, 1, -1, 1, 1, -1, 1, 1, 1, -1, 1, -1, -1, -1, 1, 1, 1, 1, -1, 1, 1, 1 |
| 11 | 1, 1, 1, -1, -1, -1, -1, 1, 1, -1, 1, 1, 1, 1,-1, 1, 1, 1, -1, -1, -1, 1, -1, -1, -1, 1, -1, 1, -1, -1, 1, -1, 1, 1, 1, -1, -1, -1, 1, 1, 1, 1, -1, -1, 1, -1, -1, -1, 1, -1, -1, -1, -1, - 1, 1, 1, -1, -1, -1, 1, -1, 1, -1, -1, 1, -1, 1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, 1, -1, 1, -1, 1, 1, -1, 1, -1, -1 | -1, -1, -1, 1, 1, 1, -1, -1, 1, -1, -1, -1, 1, -1, -1, 1, 1, 1, -1, 1, 1, 1, -1, 1, -1, 1, 1, -1, 1, -1, -1, 1, 1, 1, 1, -1, -1, 1, 1, 1, -1, -1, -1, 1, 1, 1, -1, 1, 1, 1, -1, 1, 1, 1, 1, 1, -1, 1, 1, 1, -1, 1, -1, 1, 1, -1, 1, -1, -1, 1, 1, 1, -1, -1, -1, -1, 1, 1, 1, -1, 1, 1, 1, -1, -1, -1, 1, -1, -1, -1, 1, -1, 1, -1, -1, 1, 1, 1, 1, -1, -1, -1, -1, 1, 1, -1, 1, 1, 1, 1, -1, -1, -1, -1, 1, 1, 1, 1, -1, 1, 1, 1, -1, 1, -1, 1, 1, -1, 1, -1, -1, -1 |
| 12 | 1, 1, -1, 1, -1, -1, 1, -1, 1, -1, -1, -1, 1, -1, -1, -1, -1, -1, 1, -1, -1, -1, 1, -1, - 1, 1, 1, 1, 1, -1, -1, -1, -1, -1, 1, -1, 1, 1, -1, 1, -1, 1, 1, 1, 1, -1, 1, 1, 1, -1, -1, 1, -1, -1, -1, 1, -1, -1, 1, 1, 1, 1, -1, -1, - 1, 1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, 1, 1, -1, 1, -1, -1, 1, -1, 1, -1, -1, -1, 1, -1, -1, -1, 1, 1, -1, 1, 1, 1, -1, 1, 1, -1, -1, -1, -1, 1, 1, 1 | -1, -1, 1, -1, 1, 1, -1, 1, -1, 1, 1, -1, 1, 1, 1, 1, 1, -1, 1, 1, 1, -1, 1, 1, -1, -1, -1, -1, 1, 1, 1, 1, 1, -1, 1, -1, -1, 1, -1, 1, -1, -1, -1, 1, -1, -1, -1, 1, -1, -1, -1, 1, 1, -1, 1, 1, 1, 1, -1, 1, 1, -1, -1, -1, -1, 1, 1, 1, 1, 1, -1, 1, -1, -1, -1, 1, -1, -1, -1, -1, -1, 1, -1, -1, -1, 1, -1, -1, -1, 1, -1, -1, -1, 1, 1, 1, 1, -1, -1, -1, 1, 1, 1, -1, 1, -1, -1, -1, 1, -1, 1, -1, -1, -1, -1, 1, 1, 1, 1, -1, -1, -1, 1, 1, 1, -1, 1, 1, 1, -1, -1, -1, -1, 1, 1, 1 |
| 13 | 1, 1, 1, 1, -1, -1, 1, 1, 1, -1, -1, 1, -1, 1, -1, 1, -1, -1, -1, -1, -1, -1, 1, 1, -1, 1, 1, 1, -1, -1, 1, -1, 1, 1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, -1, -1, -1, -1, -1, 1, 1, -1, -1, -1, 1, 1, 1, -1, 1, -1, -1, 1, -1, -1, -1, -1, -1, 1, 1, -1, 1, 1, -1, -1, 1, -1, 1 | 1, 1, 1, 1, -1, -1, 1, 1, 1, -1, -1, 1, -1, 1, -1, 1, -1, -1, -1, -1, -1, -1, 1, 1, -1, 1, 1, 1, -1, -1, 1, -1, 1, 1, 1, 1, 1, 1, -1, -1, 1, 1, 1, -1, -1, 1, -1, 1, -1, 1, 1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, -1, - 1, -1, -1, -1, -1, 1, 1, -1, 1, 1, -1, -1, 1, -1, 1, 1, -1, -1, -1, -1, -1, 1, 1, -1, 1, -1, -1, 1, -1, 1, 1, 1, 1, 1, 1, -1, -1, 1, - 1, -1, 1, 1, -1, 1, -1, 1, 1, 1, 1, -1, -1, 1, 1, 1, -1, -1, 1, -1, 1, -1, -1, -1, 1, 1, -1, 1, -1 |
| 14 | 1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, 1, 1, -1, -1, -1, 1, 1, 1, 1, -1, -1, -1, -1, 1, 1, -1, 1, 1, -1, -1, -1, -1, -1, -1, 1, -1, 1, -1, 1, 1, -1, -1, -1, 1, 1, -1, -1, -1, -1, -1, -1, 1, -1, 1, 1, -1, -1, 1, -1, -1, 1, 1, 1, 1, 1, 1, -1, 1, -1, 1, -1, 1, 1, -1, -1, -1, 1, 1, -1, -1, - 1, -1 | 1, -1, 1, -1, -1, 1, 1, -1, 1, 1, -1, -1,-1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, 1, 1, -1, -1, -1, -1, -1, -1, 1, -1, 1, -1, 1, 1, 1, -1, -1, 1, 1, 1, 1, -1, 1, -1, 1, 1, 1, -1, -!,-1, 1, 1, 1, -1, -1, 1, 1, 1, 1, -1, 1, -1, 1, 1, -1, -1, -1, -1, -1, 1, -1, 1, -1, -1, -1, 1, 1, 1, -1, -1, 1, 1, 1, 1 |

(continued)

| Sequence number | *x* | *y* |
|---|---|---|
| 15 | 1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1, -1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1 | 1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, -1, -1, -1, -1, -1, -1, -1, 1, 1, -1, 1, 1, -1, 1, -1, 1, -1, 1, -1, -1, -1, -1, 1, 1, -1, -1, -1, 1, 1, 1, -1, 1, -1, 1, -1, -1, -1, -1, -1, -1, -1, 1, 1, -1, 1, 1, -1, -1, 1, -1, 1, -1, 1 |
| 16 | 1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, 1, -1, -1, 1, 1, 1, 1, -1, 1, -1, 1, 1, -1, -1, 1, -1, -1, 1, 1, 1, 1, 1, 1, 1, -1, 1, -1, 1, -1, -1, 1, 1, 1, -1, 1, 1, 1, 1, 1, -1, 1, -1, -1, 1, 1, -1, 1, 1, -1, -1, -1, -1, -1, 1, -1, 1, -1, 1, 1, -1, -1, 1, 1, 1, -1, -1, 1, 1, 1, 1 | 1, -1, 1, -1, -1, 1, 1, -1, 1, 1, -1, -1, 1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, 1, -1, -1, 1, 1, 1, 1, -1, 1, -1, 1, 1, -1, -1, 1, -1, -1, -1, -1, -1, -1, -1, 1, -1, 1, 1, -1, -1, 1, -1, -1, -1, -1, -1, 1, -1, 1, 1, -1, -1, 1, -1, 1, 1, 1, 1, 1, 1, -1, 1, -1, 1, -1, 1, 1, -1, -1, -1, 1, 1, -1, -1, -1, -1 |
| 17 | 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, 1, -1, 1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, 1, 1, 1, -1, 1, 1, 1, 1, -1, -1, -1, 1, -1, 1, 1, 1, -1, 1, 1, -1, 1, -1, -1, -1, 1, 1, 1, -1, 1, 1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1 | 1, 1, 1, -1, 1, 1, -1, 1, 1, 1, 1, -1, -1, - 1, 1, -1, 1, 1, 1, -1, 1, 1, -1, 1, -1, -1, -1, 1, 1, 1, -1, 1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, 1, 1, 1, -1, -1, -1, 1, 1, 1, -1, 1, -1, -1, -1, 1, -1, -1, 1, - 1, 1, 1, 1, -1, -1, -1, 1, -1, 1, 1, 1, -1, 1, 1, 1, -1, 1, 1, -1, 1, 1, 1, 1, -1, -1, -1, 1, -1, -1, -1, 1, -1, -1, 1, -1, 1, 1, 1, -1, -1, -1, 1, -1 |
| 18 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, 1, -1, 1, 1, 1, 1, 1, -1, 1, 1, 1, 1, -1, -1, -1, 1, -1, 1, 1, -1, 1, 1, 1, 1, 1, -1, 1, 1, 1, -1, -1, -1, -1, 1, -1, -1, 1, -1, -1, -1, -1, 1, -1, 1, -1, -1, 1, 1, 1, -1, 1, 1, -1, -1, 1, -1, -1, -1, 1, 1, -1, -1, -1, -1, 1, -1, -1, 1, -1, -1, -1 | 1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, -1, -1, 1, -1, 1, 1, -1, 1, 1, 1, -1, 1, -1, -1, -1, 1, 1, 1, 1, 1, -1, 1, 1, 1, - 1, 1, -1, -1, -1, 1, 1, 1, -1, 1, -1, -1, -1, 1, -1, -1, -1, -1, 1, -1, -1, -1, 1, 1, 1, 1, -1, 1, 1, -1, 1, 1, 1, 1, -1, 1, 1, -1, -1, -1, 1, -1, 1, 1, 1, -1, -1, -1, 1, 1, 1, 1, -1, 1, 1, -1, -1, 1, -1, 1, 1, 1, -1, 1, 1, -1, -1, -1, 1, 1, 1, 1, -1, 1, 1, -1, 1, 1, 1 |
| 19 | 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, 1, -1, 1, 1, 1, 1, 1, -1, 1, 1, -1, 1, 1, 1, 1, -1, -1, -1, 1, -1, -1, -1, 1, -1, -1, 1, -1, 1, 1, 1, -1, -1, -1, 1, -1, 1, 1, 1, -1, 1, 1, 1, 1, -1, -1, -1, 1, -1, 1, 1, 1, -1, 1, 1, 1, 1, -1, -1, -1, 1, -1, 1, 1, 1, -1, 1, 1, 1, -1, 1, -1, -1, -1, 1, 1, 1, -1, 1, -1, -1, -1, 1, 1, 1, 1, -1, 1, 1, 1, 1, -1, 1, 1, -1, 1, -1, -1, -1, -1, 1, 1, 1, -1, 1 | -1, -1, -1, 1, -1, -1, 1, -1, -1, -1, -1, 1, 1, 1, 1, -1, 1, -1, -1, -1, 1, -1, -1, 1, - 1, 1, 1, 1, -1, -1, -1, 1, -1, -1, -1, -1, -1, 1, -1, -1, 1, -1, -1, -1, -1, 1, 1, 1, -1, 1, 1, 1, 1, -1, 1, 1, -1, 1, -1, -1, -1, 1, 1, 1, 1, -1, -1, -1, 1, 1, 1, -1, 1, 1, 1, 1, -1, 1, 1, -1, 1, -1, 1, 1, 1, 1, -1, -1, -1, 1, -1, 1, 1, 1, -1, 1, 1, -1, 1, -1, -1, 1, 1, 1, -1, 1, -1, -1, -1, -1, 1, -1, -1, 1, -1, -1, -1, -1, 1, 1, 1, 1, -1, 1, 1, 1, 1, -1, 1, 1, -1, 1, -1, -1, -1, 1, 1, 1, -1, 1 |
| 20 | 1, -1, 1, 1, 1, -1, -1, -1, 1, -1, 1, 1, -1, 1, 1, 1, 1, -1, 1, 1, 1, -1, -1, -1, -1, 1, - 1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, 1, -1, 1, 1, 1, 1, 1, -1, 1, 1, 1, -1, -1, -1, 1, -1, 1, 1, -1, 1, 1, 1, 1, 1, -1, 1, 1, 1, -1, -1, -1, 1, -1, 1, 1, -1, 1, 1, 1, 1, 1, -1, 1, 1, -1, -1, -1, -1, 1, -1, -1, 1, -1, -1, -1, -1, 1, -1, 1, -1, -1, 1, 1, -1, -1, -1, -1, 1, -1, -1, 1, -1, -1, -1 | -1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, -1, 1, 1, 1, -1, 1, -1, -1, -1, -1, 1, 1, 1, 1, -1, 1, -1, -1, -1, 1, -1, -1, -1, 1, - 1, 1, 1, 1, -1, -1, -1, -1, 1, -1, -1, 1, -1, -1, -1, 1, -1, 1, 1, 1, 1, -1, -1, -1, 1, - 1, 1, 1, 1, -1, 1, 1, 1, 1, 1, -1, 1, 1, 1, 1, -1, -1, -1, -1, 1, -1, -1, -1, 1, 1, 1, -1, 1, -1, -1, 1, -1, -1, -1, -1, 1, -1, 1, 1, 1, -1, -1, -1, -1, 1, -1, -1, 1, -1, -1, -1 |

(continued)

| Sequence number | x | y |
|---|---|---|
| 21 | 1, 1, 1, -1, -1, 1, -1, -1, 1, 1, 1, -1, 1, - 1, 1, 1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1 | 1, 1, 1, -1, -1, 1, -1, -1, 1, 1, 1, -1, 1, -1, 1, 1, 1, 1, 1, -1, -1, 1, -1, -1, -1, - 1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, -1, -1, -1, 1, 1, -1, 1, 1, 1, -1, 1, -1, 1, 1, -1, -1, -1, 1, 1, -1, 1, 1, 1, -1, -1, -1, 1, -1, 1, - 1, -1, 1, 1, 1, -1, -1, 1, -1, -1, -1, -1, -1, 1, -1, 1, -1, -1 |
| 22 | 1, 1, -1, 1, -1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, - 1, -1, -1, 1, -1, -1, 1, 1, 1, 1, 1, -1, 1, - 1, 1, 1, 1, -1, -1, 1, -1, -1, 1, 1, 1, 1, 1, -1, 1, 1, 1, 1, 1, -1, 1, 1, -1, -1, - 1, 1, 1, -1, 1, -1, 1, 1, 1, -1, -1, 1, -1,-1, 1, 1, 1, 1, 1, -1, 1, -1, 1, 1, 1, 1, 1, -1, 1, 1, -1, -1, -1, -1, -1, 1, -1, 1, -1, -1, -1, 1, 1, -1, 1, 1, -1, -1, -1 | 1, 1, -1, 1, -1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, 1, -1, -1, 1, 1, 1, 1, 1, -1, 1, -1, 1, 1, 1, -1, -1, 1, -1, -1, 1, 1, 1, 1, 1, -1, 1, 1, 1, 1, 1, -1, 1, 1, -1, -1, - 1, 1, 1, 1, 1, -1, -1, 1, -1, 1, -1, -1, -1, 1, 1, -1, 1, 1, -1, -1, -1, -1, -1, 1, -1, 1, -1, -1, -1, -1, -1, 1, -1, -1, 1, 1, 1, 1, -1, 1, -1, 1, 1, 1, -1, -1, 1, -1, -1, 1, 1, 1 |
| 23 | 1, 1, 1, -1, -1, 1, -1, -1, 1, 1, 1, -1, 1, - 1, 1, 1, 1, 1, 1, -1, -1, 1, -1, -1, -1, -1, -1, 1, -1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1 | -1, -1, -1, 1, 1, -1, 1, 1, -1, -1, -1, 1, -1, 1, -1, -1, -1, -1, -1, 1, 1, -1, 1, 1, 1, 1, 1, -1, 1, -1, 1, 1, 1, 1, 1, -1, -1, 1, -1, -1, 1, 1, 1, -1, 1, -1, 1, 1, -1, -1, - 1, 1, 1, -1, 1, 1, 1, 1, 1, -1, 1, -1, 1, 1, -1, -1, -1, 1, 1, -1, 1, -1, 1, 1, 1, 1, 1, -1, -1, 1, -1, -1, 1, 1, -1, -1, 1, 1, 1, 1, 1, -1, -1, 1, -1, -1, -1, - 1, -1, 1, -1, 1, -1, -1, 1, 1, 1, -1, -1, 1, -1, -1, 1, -1, -1, 1, 1, 1, -1, 1, -1, -1, - 1, 1, 1, 1, -1, 1, 1, 1, 1, 1, -1, 1, -1, 1, 1 |
| 24 | 1, 1, -1, 1, -1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, - 1, -1, -1, 1, -1, 1, -1, -1, - 1, -1, -1, 1, -1, -1, 1, 1, 1, 1, 1, -1, 1, - 1, 1, 1, 1, -1, -1, 1, -1, -1, 1, 1, 1, 1, 1, -1, 1, -1, 1, 1, 1, 1, 1, -1, 1, 1, -1, -1, - 1, 1, 1, 1, -1, 1, 1, 1, 1, -1, -1, 1, -1, -1, 1, 1, 1, 1, 1, 1, -1, 1, -1, 1, 1, 1, 1, 1, -1, 1, 1, -1, -1, -1, -1, -1, 1, -1, 1, -1, -1, 1, -1, -1, -1, 1, 1, -1, 1, 1, -1, -1, -1 | -1, -1, 1, -1, 1, -1, -1, -1, -1, 1, - 1, -1, 1, 1, 1, -1, -1, 1, -1, 1, -1, -1, - 1, 1, 1, -1, 1, 1, -1, -1, -1, 1, 1, -1, 1, -1, 1, 1, 1, 1, 1, -1, 1, 1, -1, -1, -1, -1, -1, 1, -1, 1, -1, -1, -1, 1, 1, -1, 1, 1, 1, - 1, -1, -1, 1, 1, -1, 1, -1, 1, 1, 1, 1, - 1, 1, 1, -1, -1, -1, 1, 1, -1, 1, -1, 1, -1, 1, 1, 1, -1, -1, 1, -1, -1, 1, 1, 1, 1, 1, -1, 1, 1, -1, 1, 1, 1, 1, 1, -1, 1, 1, -1, -1, -1, -1, -1, 1, -1, 1, -1, -1, -1, -1, -1, 1, 1, -1, 1, 1, 1, -1, -1, -1, -1, -1, 1, -1, 1, -1, -1, -1, 1, 1, -1, 1, 1, - 1, -1, -1 |
| 25 | 1, -1, 1, 1, -1, -1, -1, 1, 1, -1, 1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1,-1, 1, -1, -1, -1, -1, -1, 1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, 1, 1, -1, 1, -1, 1, -1, -1, -1, -1, -1, 1, -1, 1, -1, -1, 1, 1, 1, 1, - 1, -1, 1, -1, -1, -1, -1, -1, 1, -1, 1, -1, -1, 1, 1, 1, 1, -1, 1, -1, 1, 1, 1, 1, 1, -1 | 1, -1, 1, 1, -1, -1, -1, 1, 1, -1, 1, 1, 1, 1, 1, 1, -1, -1, 1, -1, -1, 1, 1, 1, -1, 1, -1, 1, 1, 1, 1, 1, -1, -1, 1, -1, -1, 1, 1, 1,-1, -1, 1, -1, -1, -1, -1, -1, 1, -1, 1, 1, -1, -1, -1, 1, -1, 1, -1, 1, 1, 1, 1, 1, -1, 1, -1, 1, 1, -1, -1, -1, 1, -1, -1, -1, 1, 1, 1, -1, 1, 1, 1, 1, 1, -1, -1, 1, -1, -1, 1, 1, 1, -1, 1, -1, 1, 1, 1, 1, 1, -1, 1, -1, 1, 1, -1, -1, -1, 1, 1, -1,-1, -1, 1, -1, 1, -1, -1, -1, -1, -1, -1, 1 |
| 26 | 1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, 1, -1, -1, -1, 1, 1, 1, 1, 1, -1, 1, -1, 1, 1, 1, -1, -1, 1, -1, -1, 1, 1, 1, 1, 1, -!,-1, 1, -1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, 1, -1, -1, 1, 1, 1, 1, 1, -1, 1, 1, -1, -1, -1, 1, 1, -1, 1 | 1, -1, -1, -1, -1, -1, 1, -1, 1, -1, -1, - 1, 1, 1, -1, 1, -1, 1, 1, 1, 1, 1, -1, 1, 1, -1, -1, -1, 1, 1, -1, 1, -1, 1, 1, 1, 1, 1, -1, 1, 1, -1, 1, -1, 1, 1, 1, -1, -1, 1, -1, -1, 1, 1, 1, 1, 1, -1, 1, 1, -1, -1, -1, 1, 1, -1, 1, -1, 1, -1, -1, - 1, 1, 1, -1, 1, -1, 1, 1, 1, 1, 1, -1, 1, 1, -1, -1, -1, 1, 1, -1, 1, 1, -1, -1, -1, -1, -1, 1, -1, 1, -1, -1, -1, 1, 1, -1, 1, 1, - 1, -1, -1, -1, -1, 1, 1, -1, -1, 1, 1, 1, -1, -1, 1, -1 |

(continued)

| Sequence number | x | y |
|---|---|---|
| 27 | 1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1,-1, 1, -1, -1, -1, -1, -1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, 1, -1, 1, 1, -1, -1, -1, 1, -1, 1, -1, -1, -1, -1, -1, 1, -1, 1, -1, -1, 1, 1, 1, 1,-1, -1, 1, -1, -1, -1, -1, -1, 1, -1, 1, -1, -1, 1, 1, 1, 1, -1, 1, -1, 1, 1, 1, 1, 1, -1 | -1, 1, -1, -1, 1, 1, 1, -1, -1, 1, -1, -1, -1, -1, -1, 1, 1, -1, 1, 1, -1, -1, -1, 1, -1, 1, -1, -1, -1, -1, -1, 1, 1, 1, -1, 1, 1, -1, -1, -1, 1, 1, -1, 1, 1, 1, 1, 1, -1, 1, -1, 1, 1, -1, -1, -1, 1, -1, 1, -1, -1, -1, -1, -1, 1, -1, 1, -1, -1, 1, 1, 1, -1, -1, 1, -1, -1, -1, -1, -1, 1, 1, 1, -1, 1, 1, -1, -1, -1, 1, -1, 1, -1, -1, -1, -1, -1, 1,-1, 1, -1, -1, 1, 1, 1, -1, -1, 1, -1, -1,-1, -1, -1, 1, -1, 1, -1, -1, 1, 1, 1, -1, 1, -1, 1, 1, 1, 1, -1 |
| 28 | 1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, 1, 1, 1, 1, -1, 1, 1, -1, -1, -1, 1, 1, -1, 1, -1, 1, 1, 1, 1, 1, -1, 1, -1, 1, 1, 1, -!,-1, 1, -1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, 1, 1, 1, 1, -1, 1, 1, -1, -1, -1, 1, 1, -1, 1 | -1, 1, 1, 1, 1, 1, -1, 1, -1, 1, 1, 1, -1,-1, 1, -1, 1, -1, -1, -1, -1, -1, 1, -1, -1, 1, 1, 1, -1, -1, 1, -1, 1, -1, -1, -1, -1, -1, 1, -1, 1, -1, -1, -1, 1, 1, -1, 1, 1,-1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, -1, 1, 1, 1, 1, 1, -1, 1, -1, 1, 1, -1, -1, 1, -1, -1, -1, 1, 1, 1, 1, -1, 1, 1, 1, -1, -1, -1, 1, 1, -1, 1 |
| 29 | 1, 1, -1, 1, -1, -1, 1, -1, -1, -1, -1, 1,-1, -1, -1, 1, 1, 1, -1, 1, 1, 1, -1, 1, -1,-1, 1, 1, 1, 1, 1, -1, -1, -1, 1, -1, 1, 1,-1, 1, 1, 1, 1, 1, -1, 1, 1, 1, 1, -1, 1, 1, -1, 1, 1, 1, -1, 1, -1, -1, -1, 1, 1, 1, 1, -1, -1, -1, 1, -1, 1, 1, 1, -1, 1, 1, 1, 1, -1, 1, 1, 1, 1, -1, -1, -1, 1, -1, -1, -1, 1, -1, 1, 1, 1, -1,-1, -1, -1, 1, -1, -1, 1, -1, 1, 1, -1, 1, 1, 1, 1, -1, 1, 1, 1, 1, -1, 1, 1, 1, -1, 1, 1, 1, -1, 1, -1, -1, -1, 1, 1, 1, 1, -1 | 1, 1, -1, 1, -1, -1, 1, -1, -1, -1, -1, 1, -1, -1, -1, 1, 1, 1, -1, 1, 1, 1, -1, 1, -1, -1, 1, 1, 1, 1, 1, -1, -1, -1, 1, -1, 1, 1, 1, -1, 1, 1, 1, 1, -1, 1, 1, 1, -1, 1, 1, -1, 1, 1, 1, -1, 1, -1, -1, -1, 1, 1, 1, 1, -1, 1, 1, -1, 1, 1, -1, 1, -1, -1, -1, 1, -1, 1, -1, -1, -1, -1, -1, 1, 1, 1, -1, 1, 1, 1, -1, 1, -1, 1, 1, 1, -1, 1, -1, -1, -1, -1, 1, 1, 1, -1, 1, 1, 1, 1, -1, 1, -1, -1, -1, -1, 1, -1, -1, -1, 1, -1, -1, -1, 1, -1, 1, 1, 1, -1, -1, -1, -1, 1 |
| 30 | 1, -1, -1, -1, -1, 1, 1, 1, -1, 1, -1, -1,-1, 1, -1, -1, 1, -1, -1, -1, 1, -1, -1, -1, -1, 1, -1, -1, 1, -1, 1, 1, -1, 1, 1, 1, 1,-1, -1, -1, 1, -1, 1, 1, 1, -1, 1, 1, 1, -1,-1, -1, 1, -1, -1, -1, -1, 1, -1, -1, 1, -1, 1, 1, 1, -1, 1, 1, 1, 1, -1, -1, -1, 1, -1, 1, 1, 1, -1, 1, 1, 1, -1, 1, 1, 1, -1, 1, 1, 1, 1, -1, 1, 1, 1, -1, 1, 1, 1, -1, 1, -1, -1, -1, 1, -1, 1, 1, 1, -1, 1, 1, 1, -1, -1, -1, 1, -1, -1, 1, 1, 1, -1, 1, 1, 1, -1, 1, -1, -1, -1, -1, -1, 1, -1, -1, 1, -1, 1, 1 | 1, -1, -1, -1, -1, 1, 1, 1, -1, 1, -1, -1, -1, 1, -1, -1, 1, -1, -1, -1, 1, -1, -1, 1, -1, -1, -1, 1, -1, -1,-1, -1, 1, -1, -1, 1, -1, 1, 1, -1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1, 1, -1, -1, -1, -1, 1, 1, -1, 1, -1, -1, -1, 1, -1, -1, 1, -1, -1, -1, 1, 1, -1, 1, -1, -1, -1, 1, 1, 1, -1, -1, -1, -1, 1, 1, 1, -1, 1, 1, 1, 1, -1, 1, 1, -1, -1, -1, 1, -1, -1, -1, 1, 1, 1, -1, 1, 1, 1, 1, -1, 1, 1, -1, 1, -1, -1 |
| 31 | 1, 1, -1, 1, -1, -1, 1, -1, -1, -1, -1, 1,-1, -1, -1, 1, 1, 1, -1, 1, 1, 1, -1, 1, -1,-1, 1, 1, 1, 1, 1, -1, -1, -1, 1, -1, 1, 1,-1, 1, 1, 1, 1, 1, -1, 1, 1, 1, 1, -1, 1, 1, -1, 1, 1, 1, -1, 1, -1, -1, -1, 1, 1, 1, 1, -1, -1, -1, 1, -1, 1, 1, 1, -1, 1, 1, 1, 1, -1, 1, 1, 1, 1, -1, -1, -1, 1, -1, -1, -1, 1, -1, 1, 1, 1, -1,-1, -1, -1, 1, -1, -1, 1, -1, 1, 1, -1, 1, 1, 1, 1, -1, 1, 1, 1, 1, -1, 1, 1, 1, -1, 1, 1, 1, -1, 1, -1, -1, -1, 1, 1, 1, 1, -1 | -1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, 1, 1, 1, -1, 1, -1, -1, 1, -1, -1, -1, -1, -1, 1, -1, -1, -1, -1, 1, -1, -1, 1, -1, -1, -1, 1, -1, 1, 1, 1, -1, -1, -1, -1, 1, 1, 1, -1, 1, -1, -1, -1, 1, -1, -1, 1, -1, 1, 1, 1, 1, -1, 1, 1, 1, -1, -1, -1, 1, -1, -1, -1, 1, -1, 1, 1, 1, 1, -1, 1, 1, -1, -1, -1, -1, 1, -1, -1, 1, -1, 1, 1, -1, 1, 1, 1, 1, -1, 1, 1, 1, -1, 1, 1, -1, 1, -1, -1, -1, 1, 1, 1, 1, -1 |
| 32 | 1, -1, -1, -1, -1, 1, 1, 1, -1, 1, -1, -1,-1, 1, -1, -1, 1, -1, -1, -1, 1, -1, -1, -1, -1, 1, -1, -1, 1, -1, 1, 1, -1, 1, 1, 1, 1,-1, -1, -1, 1, -1, 1, 1, 1, -1, 1, 1, 1, -1,-1, -1, 1, -1, -1, -1, -1, 1, -1, -1, 1, -1, 1, 1, 1, -1, 1, 1, 1, 1, -1, -1, -1, 1, -1, 1, 1, 1, -1, 1, 1, 1, -1, 1, 1, 1, -1, 1, 1, 1, 1, -1, 1, 1, 1, -1, 1, 1, 1, -1, 1, -1, -1, -1, 1, -1, 1, 1, 1, -1, 1, 1, 1, -1, -1, -1, 1, -1, 1, 1, 1, 1, -1, 1, 1, 1, 1, -1, -1, -1, -1, -1, 1, -1, -1, 1, -1, 1, 1 | -1, 1, 1, 1, 1, -1, -1, -1, 1, -1, 1, 1, 1, -1, 1, 1, -1, 1, 1, 1, -1, 1, 1, 1, 1, -1, 1, 1, 1, -1, 1, -1, -1, 1, -1, -1, -1, 1, 1, 1, -1, 1, 1, 1, -1, 1, -1, -1, -1, -1, 1, -1, -1, -1, 1, 1, 1, 1, 1, -1, 1, 1, 1, -1, 1, -1, -1, -1, 1, 1, 1, 1, 1, -1, -1, -1, 1, -1, 1, 1, 1, -1, 1, 1, 1, -1, 1, 1, 1, 1, -1, 1, 1, -1, -1, -1, -1, 1, 1, 1, 1, -1, -1,-1, 1, -1, 1, 1, 1, -1, 1, 1, 1, -1, -1, -1, 1, -1, -1, -1, -1, 1, -1, -1, 1, -1, -1, 1, 1, 1 |

(continued)

| Sequence number | x | y |
|---|---|---|
| 33 | 1, 1, 1, 1, 1, -1, 1, -1, -1, 1, 1, -1, -1,-1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, 1, 1, -1, 1, -1, -1, 1, 1, -1, -1, -1, 1, 1, -1, -1, -1, -1, 1, -1, 1, 1,-1, -1, 1, 1, 1, 1, -1, -1, -1, -1, -1, -1, 1,-1, 1, -1, 1, -1, -1, 1, -1, -1, 1, 1 | 1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, -1, -1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, 1, 1, 1, 1, 1, -1, 1, -1, 1, -1, 1, 1, -1, 1, 1, -1, -1 |
| 34 | 1, 1, -1, -1, 1, -1, -1, 1, -1, 1, -1, 1, -1, -1, -1, -1, -1, -1, 1, 1, 1, -1, -1, 1, 1,-1, 1, -1, -1, -1, -1, -1, 1, 1, -1, -1, 1,-1, -1, 1, -1, 1, -1, 1, -1, -1, -1, -1, 1, 1, -1, -1, -1, 1, 1, -1, 1, -1, 1, 1, 1, 1, 1, 1, 1, -1, -1, 1, -1, -1, 1, -1, 1, -1, 1, -1, -1, -1, -1, -1, 1, 1, 1, 1, -1, -1, 1, 1, -1, 1, -1, -1, -1, -1, -1, -1, 1, 1, 1, -1, 1, 1, -1, 1, -1, 1, -1, 1, 1, 1, 1, -1,-1, 1, 1, 1, -1, -1, 1, 1, -1, 1, -1, -1, -1, -1, -1 | 1, 1, -1, -1, 1, -1, -1, 1, -1, 1, -1, 1,-1, -1, -1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, 1, 1, -1, -1, 1, -1, 1, 1, 1, 1, 1, 1, 1, -1, -1, 1, 1, -1, 1, 1, -1, -1, 1, -1, 1, -1, 1, 1, 1, 1, 1, 1, 1, 1, -1, -1, -1, 1, 1, -1, 1, -1, 1, 1, 1, 1, 1, 1, 1, 1, -1, -1, 1, -1, -1, 1, -1, 1, -1, 1, 1, -1, -1, -1, -1, 1, 1, -1, -1, 1, -1, 1, 1, 1, 1, 1 |
| 35 | 1, 1, 1, 1, 1, -1, 1, -1, -1, 1, 1, -1, -1,-1, 1, 1, -1, -1, -1, -1, 1, -1, 1, -1, 1, -1, -1, 1, -1, -1, 1, 1, 1, 1, 1, 1, 1, 1, -1, 1, -1, -1, 1, 1, -1, -1, -1, 1, 1, 1, 1, 1, 1, -1, 1, -1, 1, -1, 1, 1, 1, -1, 1, 1, -1, -1, 1, 1, 1, 1, 1, -1, 1, -1, -1, -1, 1, 1, -1, -1, -1, -1, 1, -1, 1, -1, 1, -1, -1, 1, -1, -1, 1, 1, -1, -1, -1, -1, -1, -1, 1, -1, 1, 1,-1, -1, 1, 1, 1, 1, -1, -1, -1, -1, -1, -1, 1,-1, 1, -1, 1, -1, -1, 1, -1, -1, 1, 1 | -1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, -1, -1, -1, -1, -1, -1, 1, -1, 1, 1, -1, -1, 1, 1, 1, -1, -1, -1,-1, -1, -1, 1, -1, 1, -1, 1, -1, -1, -1, 1, -1, -1, 1, 1, 1, 1, 1, 1, 1, 1, -1, 1, -1, -1, 1, 1, -1, -1, -1, -1, 1, -1, 1, -1, 1, -1, -1, -1, -1, -1, 1, 1, -1, -1, 1, 1, 1, 1, -1, -1, 1, -1, -1, -1, -1, -1, -1, 1, -1, 1, -1, 1, -1, -1, 1, -1, -1, 1, 1 |
| 36 | 1, 1, -1, -1, 1, -1, -1, 1, -1, 1, -1, 1, -1, -1, -1, -1, -1, -1, 1, 1, 1, -1, -1, 1, 1,-1, 1, -1, -1, -1, -1, -1, 1, 1, -1, -1, 1,-1, -1, 1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, -1, 1, 1, 1, 1, -1, -1, 1, 1, -1, 1, -1, -1, -1, -1, -1, -1, 1, 1, 1, -1, 1, 1, -1, 1, -1, 1, -1, 1, 1, 1, 1, -1,-1, 1, 1, 1, -1, -1, 1, 1, -1, 1, -1, -1, -1, -1, -1 | -1, -1, 1, 1, -1, 1, 1, -1, 1, -1, 1, 1, 1, 1, 1, 1, -1, -1, -1, 1, 1, 1, -1, -1, 1, -1, 1, 1, 1, 1, 1, 1, 1, -1, -1, 1, 1, -1, 1, 1,-1, 1, -1, 1, -1, 1, 1, 1, 1, 1, -1, -1, 1, 1, 1, -1, -1, 1, 1, -1, -1, -1, -1, -1, -1, -1, 1, 1, -1, -1, 1, -1, -1, 1, -1, -1, -1, -1, -1, -1, -1, 1, 1, 1, -1, -1, 1, 1, 1, -1, 1,-1, 1, 1, -1, 1, -1, 1, 1, -1, 1, 1, 1, 1, -1,-1, 1, 1, 1, -1, -1, 1, 1, -1, 1, 1, -1, 1, -1, -1, -1, -1, -1, -1 |
| 37 | 1, 1, 1, 1, 1, -1, 1, -1, -1, 1, 1, -1, -1,-1, 1, 1, -1, -1, -1, -1, 1, -1, 1, -1, 1, -1, -1, 1, -1, -1, 1, 1, 1, 1, 1, 1, 1, 1, -1, 1, -1, -1, 1, 1, -1, -1, -1, 1, 1, 1, 1, 1, 1, -1, 1, -1, -1, 1, 1, 1, -1, -1, -1, -1, -1,-1, 1, -1, -1, 1, -1, 1, 1, -1, -1, 1, 1, 1, 1, -1, 1, -1, -1, 1, -1, 1, 1, -1, 1, 1, -1, -1, 1, 1, 1, 1, 1, -1, 1, -1, -1, 1, 1, -1, -1, -1, 1, 1, 1, 1, 1, -1, 1, -1, 1,-1, 1, 1, -1, 1, 1, -1, -1 | 1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, -1, -1, -1, 1, 1, 1, 1, 1, 1, 1, -1, 1, -1, -1, 1, 1, -1, -1, -1, 1, 1, 1, 1, 1, -1, 1, -1, -1, 1, 1, 1, -1, -1, -1, 1, -1, 1, -1, 1, -1, -1, -1, -1, 1, -1, -1, -1, -1, -1,-1, 1, -1, 1, 1, 1, -1, -1, 1, 1, 1, -1, -1, -1, -1, -1, -1, 1, -1, 1, -1, 1, -1, -1, 1, -1, -1, 1, 1 |
| 38 | 1, 1, -1, -1, 1, -1, -1, 1, -1, 1, -1, 1, -1, -1, -1, -1, -1, -1, 1, 1, 1, -1, -1, 1, 1,-1, 1, -1, -1, -1, -1, -1, 1, 1, -1, -1, 1,-1, -1, 1, -1, 1, -1, 1, -1, -1, -1, -1, 1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, 1, 1, -1, -1, 1, -1, -1, -1, 1, -1, 1, -1, 1, 1, -1, -1, -1, -1, 1, 1, -1, -1, 1, -1, 1, 1, 1, 1, 1 | 1, 1, -1, -1, 1, -1, -1, 1, -1, 1, -1, 1,-1, -1, -1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, 1, 1, -1, -1, 1, -1, 1, 1, 1, 1, 1, 1, 1, 1, -1, -1, 1, -1, 1, -1, 1, -1, -1, -1, -1, -1, -1, 1, 1, 1, -1, -1, 1, 1, -1, 1, -1, -1, -1, -1, -1, -1,-1, 1, 1, -1, 1, 1, -1, 1, -1, 1, -1, 1, 1, 1, 1, -1, -1, 1, 1, 1, -1, -1, 1, -1, -1, -1, -1, -1 |

(continued)

| Sequence number | x | y |
|---|---|---|
| 39 | 1, 1, 1, 1, 1, -1, 1, -1, -1, 1, 1, -1, -1,-1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, -1, -1,- 1, -1, -1, 1, -1, 1, 1, -1, -1, 1, 1, 1, -1, -1, 1, 1, 1, 1, -1, 1, -1, 1, -1, 1, 1, -1, 1, 1, -1, -1, 1, 1, 1, 1, 1, -1, 1, -1, -1, 1, 1, -1, -1, -1, 1, 1, 1, 1, 1, 1, -1, 1, -1, 1,-1, 1, 1, -1, 1, 1, -1, -1 | 1, 1, 1, 1, 1, -1, 1, -1, -1, 1, 1, -1, -1, -1, 1, 1, -1, -1, -1, -1, 1, -1, 1, -1, 1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, -1, 1, 1, 1, 1, 1, -1, 1, -1, -1, 1, 1, -1, -1, -1, 1, 1, 1, 1, 1, -1, 1, -1, -1, 1, 1, -1, -1, -1, 1, 1, -1, -1, -1,-1, 1, -1, 1, 1, -1, -1, 1, 1, 1, -1, -1, -1, -1, -1, -1, 1, -1, 1, -1, 1, -1, -1, 1, -1, -1, 1, 1 |
| 40 | 1, 1, -1, -1, 1, -1, -1, 1, -1, 1, -1, 1, -1, -1, -1, -1, -1, -1, 1, 1, 1, -1, -1, 1, 1,-1, 1, -1, -1, -1, -1, -1, 1, 1, -1, -1, 1,-1, -1, 1, -1, 1, -1, 1, -1, -1, -1, -1, 1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, 1, -1, -1, 1, -1, -1, 1, -1, 1, -1, 1, -1, -1, -1, -1, 1, 1, -1, -1, -1, 1, 1, -1, -1, 1, 1, 1, 1, 1 | 1, 1, -1, -1, 1, -1, -1, 1, -1, 1, -1, 1,-1, -1, -1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, -1,-1, 1, 1, -1, 1, 1, -1, 1, -1, 1, -1, 1, 1, 1, -1, -1, 1, 1, 1, -1, -1, 1, 1, -1, -1, 1, 1, -1, 1, -1, -1, -1, -1, -1 |

It should be noted that the GCP sequence numbers and the GCP sequence in Table 6 are merely examples. For details, refer to related descriptions of Table 4. Details are not described herein again.

Optionally, the 40 pairs of GCPs shown in Table 6 may be divided into 20 groups, and each group includes two adjacent pairs of GCPs. To be specific, the first group includes GCPs with sequence numbers 1 and 2, the second group includes GCPs with sequence numbers 3 and 4, ..., the nineteenth group includes GCPs with sequence numbers 37 and 38, and the twentieth group includes GCPs with sequence numbers 39 and 40. Two pairs of GCPs in each group are orthogonal to each other.

Optionally, the 40 pairs of GCPs shown in Table 6 have a low aperiodic cross-correlation peak value, or have a good aperiodic cross-correlation property. Further, eight pairs of GCPs with sequence numbers 1 to 8 have a lower aperiodic cross-correlation peak value. In addition, eight pairs of GCPs with sequence numbers 9 to 16 also have a lower aperiodic cross-correlation peak value. When a quantity of devices that need to perform sensing simultaneously is less than or equal to 8, the eight pairs of GCPs with sequence numbers 1 to 8 may be preferentially used, or the eight pairs of GCPs with sequence numbers 9 to 16 may be preferentially used. The eight pairs of GCPs with sequence numbers 1 to 8 or the eight pairs of GCPs with sequence numbers 9 to 16 may be referred to as preferred GCPs.

The foregoing describes the GCPs, with lengths of 32, 64, and 128, that are defined in this application. The following describes a generation manner and generation parameters of a GCP with each length.

When N is equal to 32, 64, 128, 256, 512, or 1024, the GCP is generated through generalized Boolean function mapping. In other words, one sequence in the GCP is $(-1)^{a(x)}$, and another sequence is $(-1)^{b(x)}$, where $a(x) = f(x) + d_1$,

$$f(x) = \sum_{k=0}^{m-2} x_\pi[k]x_\pi[k+1] + \sum_{k=0}^{m-1} c[k]x[k]$$

$b(x) = f(x) + x_\pi[0] + d_2$, and , $2^m = N$.

$x_\pi$ represents an arrangement of subscripts [0, 1, ..., m - 1] of x. For example, if $x_\pi = [0, 1, 2]$, it indicates that an arrangement of subscripts of $x$ is 0, 1, 2. Correspondingly, an arrangement of elements in $x$ is $x[0]$, $x[1]$, $x[2]$. In this case, $x[0]$ is mapped to $x_\pi[0]$, $x[1]$ is mapped to $x_\pi[1]$, and $x[2]$ is mapped to $x_\pi[2]$. Alternatively, if $x_\pi = [1, 0, 2]$, it indicates that an arrangement of subscripts of $x$ is 1, 0, 2. Correspondingly, an arrangement of elements in $x$ is $x[1]$, $x[0]$, $x[2]$. In this case, $x[1]$ is mapped to $x_\pi[0]$, $x[0]$ is mapped to $x_\pi[1]$, and $x[2]$ is mapped to $x_\pi[2]$.

$c = [c[0],c[1],...,c[m-1]]$, $c[k] \in \{0,1\}$. When an input $x = (x[0],x[1], ... , x[m - 1])$ traverses from (0, 0, ... , 0), (0, 0, ..., 1) to (1, 1, ..., 1), a binary sequence $(-1)^{a(x)}$ and $(-1)^{b(x)}$ corresponding to an output of the functions $a(x) = f(x) + d_1$ and $b(x) = f(x) + x_\pi[0] + d_2$ is a GCP with a length of $2^m$. $d_1, d_2 \in \{0,1\}$.

For example, assuming that m = 3, $x_\pi = [0, 1, 2]$, $c = [0, 0, 0]$, and $d_1 = 0, d_2 = 0$,

$$f(x) = x_\pi[0]x_\pi[1] + x_\pi[1]x_\pi[2] + c[0]x[0] + c[1]x[1] + c[2]x[2]$$

$$= x[0]x[1] + x[1]x[2]$$

Therefore, $a(\boldsymbol{x}) = f(\boldsymbol{x})$ and $b(\boldsymbol{x}) = f(\boldsymbol{x}) + x[0]$. When an input ($x[0]$, $x[1]$, $x[2]$) traverses from (0, 0, 0), (0, 0, 1) to (1, 1, 1), outputs of $(-1)^{a(\boldsymbol{x})}$ are sequentially [1, 1, 1, -1, 1, 1, -1, 1], and outputs of $(-1)^{b(\boldsymbol{x})}$ are sequentially [1, 1, 1, -1, -1, -1, 1, -1]. In this case, the outputs of $(-1)^{a(\boldsymbol{x})}$ and $(-1)^{b(\boldsymbol{x})}$ form a pair of GCPs with a length of $2^3 = 8$. That ($x[0]$, $x[1]$, $x[2]$) traverses from (0, 0, 0), (0, 0, 1) to (1, 1, 1) means that when values of $x[0]$, $x[1]$, $x[2]$ are 0, 0 and 0 respectively, a $f(\boldsymbol{x})$ value is obtained. The $f(\boldsymbol{x})$ value is substituted into $a(\boldsymbol{x}) = f(\boldsymbol{x})$ and $b(\boldsymbol{x}) = f(\boldsymbol{x}) + x[0]$, to separately obtain one element in the sequences. Then, when values of $x[0]$, $x[1]$, $x[2]$ are 0, 0, and 1 respectively, one element in the sequences is obtained based on the foregoing formulas. By analogy, the last element in the sequences is obtained until values of $x[0]$, $x[1]$, $x[2]$ are 1, 1 and 1 respectively.

Based on the foregoing analysis, when the GCP is generated through generalized Boolean function mapping, four generation parameters: $\boldsymbol{x}_\pi$, $\boldsymbol{c}$, $d_1$ and $d_2$, need to be defined.

In some embodiments, when N is equal to 32, 32 groups of parameters that are defined in this application and that are used to generate the GCP are shown in Table 7.

**Table 7**

| Sequence number | $\boldsymbol{x}_\pi$ | $\boldsymbol{c}$ | $d_1$ | $d_2$ |
|---|---|---|---|---|
| 1 | [0, 1, 3, 2, 4] | [1, 0, 0, 0, 0] | 0 | 0 |
| 2 | [0, 1, 3, 2, 4] | [1, 0, 0, 0, 1] | 0 | 0 |
| 3 | [0, 2, 1, 3, 4] | [0, 1, 0, 1, 0] | 0 | 1 |
| 4 | [0, 2, 1, 3, 4] | [0, 1, 0, 1, 1] | 0 | 1 |
| 5 | [2, 1, 3, 0, 4] | [1, 1, 1, 1, 0] | 0 | 1 |
| 6 | [2, 1, 3, 0, 4] | [1, 1, 1, 1, 1] | 0 | 1 |
| 7 | [0, 1, 3, 2, 4] | [0, 0, 1, 0, 0] | 0 | 0 |
| 8 | [0, 1, 3, 2, 4] | [0, 0, 1, 0, 1] | 0 | 0 |
| 9 | [0, 1, 3, 2, 4] | [0, 0, 1, 1, 0] | 0 | 1 |
| 10 | [0, 1, 3, 2, 4] | [0, 0, 1, 1, 1] | 0 | 1 |
| 11 | [0, 1, 3, 2, 4] | [1, 0, 0, 1, 0] | 0 | 1 |
| 12 | [0, 1, 3, 2, 4] | [1, 0, 0, 1, 1] | 0 | 1 |
| 13 | [0, 2, 1, 3, 4] | [0, 0, 0, 0, 0] | 0 | 0 |
| 14 | [0, 2, 1, 3, 4] | [0, 0, 0, 0, 1] | 0 | 0 |
| 15 | [1, 2, 0, 3, 4] | [0, 0, 1, 1, 0] | 0 | 1 |
| 16 | [1, 2, 0, 3, 4] | [0, 0, 1, 1, 1] | 0 | 1 |
| 17 | [0, 3, 2, 1, 4] | [1, 1, 1, 1, 0] | 0 | 0 |
| 18 | [0, 3, 2, 1, 4] | [1, 1, 1, 1, 1] | 0 | 0 |
| 19 | [1, 0, 2, 3, 4] | [0, 0, 0, 0, 0] | 0 | 1 |
| 20 | [1, 0, 2, 3, 4] | [0, 0, 0, 0, 1] | 0 | 1 |
| 21 | [1, 3, 0, 2, 4] | [0, 1, 0, 1, 0] | 0 | 1 |
| 22 | [1, 3, 0, 2, 4] | [0, 1, 0, 1, 1] | 0 | 1 |
| 23 | [1, 3, 0, 2, 4] | [1, 1, 1, 1, 0] | 0 | 0 |
| 24 | [1, 3, 0, 2, 4] | [1, 1, 1, 1, 1] | 0 | 0 |
| 25 | [2, 0, 3, 1, 4] | [0, 0, 0, 0, 0] | 0 | 0 |
| 26 | [2, 0, 3, 1, 4] | [0, 0, 0, 0, 1] | 0 | 0 |
| 27 | [2, 1, 0, 3, 4] | [1, 1, 1, 1, 0] | 0 | 0 |
| 28 | [2, 1, 0, 3, 4] | [1, 1, 1, 1, 1] | 0 | 0 |
| 29 | [3, 0, 1, 2, 4] | [0, 1, 0, 0, 0] | 0 | 0 |

(continued)

| Sequence number | $x_\pi$ | $c$ | $d_1$ | $d_2$ |
|---|---|---|---|---|
| 30 | [3, 0, 1, 2, 4] | [0, 1, 0, 0, 1] | 0 | 0 |
| 31 | [3, 2, 0, 1, 4] | [0, 0, 1, 0, 0] | 0 | 0 |
| 32 | [3, 2, 0, 1, 4] | [0, 0, 1, 0, 1] | 0 | 0 |

$x_\pi$, $c$, $d_1$, and $d_2$ shown in each row in Table 7 are a group of parameters. The 32 pairs of GCPs shown in Table 4 may be generated by using the 32 groups of parameters shown in Table 7 and the foregoing generalized Boolean function mapping method. An ith group of parameters shown in Table 7 generates an ith pair of GCPs shown in Table 4, where i is a positive integer from 1 to 32. It should be noted that the 32 pairs of GCPs shown in Table 4 may alternatively be generated in another manner, for example, generated in a sequence recursion manner. The generation manner of the GCP shown in Table 4 is not specifically limited in this application.

In some embodiments, when N is equal to 64, 40 groups of parameters that are defined in this application and that are used to generate the GCP are shown in Table 8.

**Table 8**

| Sequence number | $x_\pi$ | $c$ | $d_1$ | $d_2$ |
|---|---|---|---|---|
| 1 | [0, 1, 2, 3, 4, 5] | [0, 0, 0, 0, 0, 0] | 0 | 1 |
| 2 | [0, 1, 2, 3, 4, 5] | [0, 0, 0, 0, 0, 1] | 0 | 1 |
| 3 | [0, 2, 4, 3, 1, 5] | [1, 0, 0, 0, 0, 0] | 0 | 1 |
| 4 | [0, 2, 4, 3, 1, 5] | [1, 0, 0, 0, 0, 1] | 0 | 1 |
| 5 | [0, 3, 5, 2, 1, 4] | [0, 0, 1, 1, 0, 1] | 0 | 0 |
| 6 | [0, 3, 5, 2, 1, 4] | [0, 0, 1, 1, 1, 1] | 0 | 0 |
| 7 | [0, 1, 3, 2, 4, 5] | [1, 0, 1, 1, 1, 0] | 0 | 1 |
| 8 | [0, 1, 3, 2, 4, 5] | [1, 0, 1, 1, 1, 1] | 0 | 1 |
| 9 | [0, 2, 1, 3, 5, 4] | [0, 0, 1, 0, 0, 0] | 0 | 1 |
| 10 | [0, 2, 1, 3, 5, 4] | [0, 0, 1, 0, 1, 0] | 0 | 1 |
| 11 | [0, 3, 2, 1, 5, 4] | [0, 0, 0, 1, 0, 0] | 0 | 0 |
| 12 | [0, 3, 2, 1, 5, 4] | [0, 0, 0, 1, 1, 0] | 0 | 0 |
| 13 | [0, 1, 2, 3, 4, 5] | [0, 0, 0, 0, 0, 0] | 0 | 0 |
| 14 | [0, 1, 2, 3, 4, 5] | [0, 0, 0, 0, 0, 1] | 0 | 0 |
| 15 | [0, 1, 2, 3, 5, 4] | [1, 0, 0, 1, 0, 0] | 0 | 0 |
| 16 | [0, 1, 2, 3, 5, 4] | [1, 0, 0, 1, 1, 0] | 0 | 0 |
| 17 | [0, 1, 2, 3, 5, 4] | [1, 1, 0, 1, 0, 1] | 0 | 1 |
| 18 | [0, 1, 2, 3, 5, 4] | [1, 1, 0, 1, 1, 1] | 0 | 1 |
| 19 | [0, 1, 2, 4, 3, 5] | [0, 1, 0, 0, 1, 0] | 0 | 0 |
| 20 | [0, 1, 2, 4, 3, 5] | [0, 1, 0, 0, 1, 1] | 0 | 0 |
| 21 | [0, 1, 3, 2, 5, 4] | [1, 1, 0, 1, 0, 0] | 0 | 0 |
| 22 | [0, 1, 3, 2, 5, 4] | [1, 1, 0, 1, 1, 0] | 0 | 0 |
| 23 | [0, 1, 3, 4, 2, 5] | [0, 1, 0, 1, 0, 0] | 0 | 1 |
| 24 | [0, 1, 3, 4, 2, 5] | [0, 1, 0, 1, 0, 1] | 0 | 1 |
| 25 | [0, 1, 3, 5, 2, 4] | [0, 1, 1, 0, 0, 0] | 0 | 1 |
| 26 | [0, 1, 3, 5, 2, 4] | [0, 1, 1, 0, 1, 0] | 0 | 1 |

(continued)

| Sequence number | $x_\pi$ | $c$ | $d_1$ | $d_2$ |
|---|---|---|---|---|
| 27 | [0, 2, 1, 3, 4, 5] | [0, 0, 1, 1, 0, 0] | 0 | 0 |
| 28 | [0, 2, 1, 3, 4, 5] | [0, 0, 1, 1, 0, 1] | 0 | 0 |
| 29 | [0, 2, 1, 4, 3, 5] | [0, 1, 0, 0, 0, 0] | 0 | 0 |
| 30 | [0, 2, 1, 4, 3, 5] | [0, 1, 0, 0, 0, 1] | 0 | 0 |
| 31 | [0, 2, 3, 1, 4, 5] | [0, 1, 1, 0, 1, 0] | 0 | 1 |
| 32 | [0, 2, 3, 1, 4, 5] | [0, 1, 1, 0, 1, 1] | 0 | 1 |
| 33 | [0, 2, 3, 1, 4, 5] | [1, 1, 0, 0, 0, 0] | 0 | 1 |
| 34 | [0, 2, 3, 1, 4, 5] | [1, 1, 0, 0, 0, 1] | 0 | 1 |
| 35 | [0, 2, 3, 4, 5, 1] | [1, 0, 0, 1, 1, 0] | 0 | 0 |
| 36 | [0, 2, 3, 4, 5, 1] | [1, 1, 0, 1, 1, 0] | 0 | 0 |
| 37 | [0, 3, 1, 4, 5, 2] | [0, 1, 0, 1, 1, 0] | 0 | 0 |
| 38 | [0, 3, 1, 4, 5, 2] | [0, 1, 1, 1, 1, 0] | 0 | 0 |
| 39 | [1, 0, 2, 3, 4, 5] | [0, 1, 0, 0, 0, 0] | 0 | 1 |
| 40 | [1, 0, 2, 3, 4, 5] | [0, 1, 0, 0, 0, 1] | 0 | 1 |

The 40 pairs of GCPs shown in Table 5 may be generated by using the 40 groups of parameters shown in Table 8 and the foregoing generalized Boolean function mapping method. An $i^{th}$ group of parameters shown in Table 8 generates an $i^{th}$ pair of GCPs shown in Table 5, where i is a positive integer from 1 to 40. It should be noted that the 40 pairs of GCPs shown in Table 5 may alternatively be generated in another manner, for example, generated in the sequence recursion manner. The generation manner of the GCP shown in Table 5 is not specifically limited in this application.

In some embodiments, when N is equal to 128, 40 groups of parameters that are defined in this application and that are used to generate the GCP are shown in Table 9.

**Table 9**

| Sequence number | $x_\pi$ | $c$ | $d_1$ | $d_2$ |
|---|---|---|---|---|
| 1 | [0, 1, 2, 3, 4, 5, 6] | [1, 0, 0, 0, 0, 0, 0] | 0 | 0 |
| 2 | [0, 1, 2, 3, 4, 5, 6] | [1, 0, 0, 0, 0, 0, 1] | 0 | 0 |
| 3 | [0, 1, 2, 4, 3, 6, 5] | [0, 1, 1, 0, 1, 0, 0] | 0 | 0 |
| 4 | [0, 1, 2, 4, 3, 6, 5] | [0, 1, 1, 0, 1, 1, 0] | 0 | 0 |
| 5 | [0, 1, 2, 4, 5, 3, 6] | [0, 0, 1, 0, 1, 0, 0] | 0 | 1 |
| 6 | [0, 1, 2, 4, 5, 3, 6] | [0, 0, 1, 0, 1, 0, 1] | 0 | 1 |
| 7 | [0, 1, 2, 4, 5, 3, 6] | [1, 0, 1, 0, 1, 0, 0] | 0 | 1 |
| 8 | [0, 1, 2, 4, 5, 3, 6] | [1, 0, 1, 0, 1, 0, 1] | 0 | 1 |
| 9 | [0, 1, 2, 3, 4, 5, 6] | [1, 0, 0, 0, 0, 0, 0] | 0 | 1 |
| 10 | [0, 1, 2, 3, 4, 5, 6] | [1, 0, 0, 0, 0, 0, 1] | 0 | 1 |
| 11 | [0, 1, 2, 4, 3, 6, 5] | [0, 1, 1, 0, 1, 0, 0] | 0 | 1 |
| 12 | [0, 1, 2, 4, 3, 6, 5] | [0, 1, 1, 0, 1, 1, 0] | 0 | 1 |
| 13 | [0, 1, 2, 4, 5, 3, 6] | [0, 0, 1, 0, 1, 0, 0] | 0 | 0 |
| 14 | [0, 1, 2, 4, 5, 3, 6] | [0, 0, 1, 0, 1, 0, 1] | 0 | 0 |
| 15 | [0, 1, 2, 4, 5, 3, 6] | [1, 0, 1, 0, 1, 0, 0] | 0 | 0 |

(continued)

| Sequence number | $x_\pi$ | $c$ | $d_1$ | $d_2$ |
|---|---|---|---|---|
| 16 | [0, 1, 2, 4, 5, 3, 6] | [1, 0, 1, 0, 1, 0, 1] | 0 | 0 |
| 17 | [0, 1, 2, 3, 4, 5, 6] | [0, 0, 0, 0, 0, 0, 0] | 0 | 0 |
| 18 | [0, 1, 2, 3, 4, 5, 6] | [0, 0, 0, 0, 0, 0, 1] | 0 | 0 |
| 19 | [0, 1, 2, 3, 4, 5, 6] | [0, 0, 0, 0, 0, 0, 0] | 0 | 1 |
| 20 | [0, 1, 2, 3, 4, 5, 6] | [0, 0, 0, 0, 0, 0, 1] | 0 | 1 |
| 21 | [0, 1, 2, 3, 4, 6, 5] | [0, 1, 0, 0, 1, 0, 0] | 0 | 0 |
| 22 | [0, 1, 2, 3, 4, 6, 5] | [0, 1, 0, 0, 1, 1, 0] | 0 | 0 |
| 23 | [0, 1, 2, 3, 4, 6, 5] | [0, 1, 0, 0, 1, 0, 0] | 0 | 1 |
| 24 | [0, 1, 2, 3, 4, 6, 5] | [0, 1, 0, 0, 1, 1, 0] | 0 | 1 |
| 25 | [0, 1, 2, 3, 4, 6, 5] | [1, 1, 1, 0, 1, 0, 1] | 0 | 0 |
| 26 | [0, 1, 2, 3, 4, 6, 5] | [1, 1, 1, 0, 1, 1, 1] | 0 | 0 |
| 27 | [0, 1, 2, 3, 4, 6, 5] | [1, 1, 1, 0, 1, 0, 1] | 0 | 1 |
| 28 | [0, 1, 2, 3, 4, 6, 5] | [1, 1, 1, 0, 1, 1, 1] | 0 | 1 |
| 29 | [0, 1, 2, 4, 3, 5, 6] | [1, 1, 0, 1, 1, 1, 0] | 0 | 0 |
| 30 | [0, 1, 2, 4, 3, 5, 6] | [1, 1, 0, 1, 1, 1, 1] | 0 | 0 |
| 31 | [0, 1, 2, 4, 3, 5, 6] | [1, 1, 0, 1, 1, 1, 0] | 0 | 1 |
| 32 | [0, 1, 2, 4, 3, 5, 6] | [1, 1, 0, 1, 1, 1, 1] | 0 | 1 |
| 33 | [0, 1, 2, 4, 6, 3, 5] | [0, 0, 1, 1, 0, 0, 0] | 0 | 0 |
| 34 | [0, 1, 2, 4, 6, 3, 5] | [0, 0, 1, 1, 0, 1, 0] | 0 | 0 |
| 35 | [0, 1, 2, 4, 6, 3, 5] | [0, 0, 1, 1, 0, 0, 0] | 0 | 1 |
| 36 | [0, 1, 2, 4, 6, 3, 5] | [0, 0, 1, 1, 0, 1, 0] | 0 | 1 |
| 37 | [0, 1, 2, 4, 6, 3, 5] | [1, 0, 1, 1, 0, 0, 0] | 0 | 0 |
| 38 | [0, 1, 2, 4, 6, 3, 5] | [1, 0, 1, 1, 0, 1, 0] | 0 | 0 |
| 39 | [0, 1, 2, 4, 6, 3, 5] | [1, 0, 1, 1, 0, 0, 0] | 0 | 0 |
| 40 | [0, 1, 2, 4, 6, 3, 5] | [1, 0, 1, 1, 0, 1, 0] | 0 | 0 |

The 40 pairs of GCPs shown in Table 6 may be generated by using the 40 groups of parameters shown in Table 9 and the foregoing generalized Boolean function mapping method. An ith group of parameters shown in Table 9 generates an ith pair of GCPs shown in Table 6, where i is a positive integer from 1 to 40. It should be noted that the 40 pairs of GCPs shown in Table 6 may alternatively be generated in another manner, for example, generated in the sequence recursion manner. The generation manner of the GCPs shown in Table 6 is not specifically limited in this application.

In some embodiments, when N is equal to 256, 40 groups of parameters that are defined in this application and that are used to generate the GCP are shown in Table 10.

**Table 10**

| Sequence number | $x_\pi$ | $c$ | $d_1$ | $d_2$ |
|---|---|---|---|---|
| 1 | [0, 1, 2, 3, 4, 5, 6, 7] | [0, 0, 0, 0, 0, 0, 0, 0] | 0 | 0 |
| 2 | [0, 1, 2, 3, 4, 5, 6, 7] | [0, 0, 0, 0, 0, 0, 0, 1] | 0 | 0 |
| 3 | [0, 1, 2, 3, 5, 4, 7, 6] | [1, 1, 0, 0, 0, 0, 0, 0] | 0 | 0 |
| 4 | [0, 1, 2, 3, 5, 4, 7, 6] | [1, 1, 0, 0, 0, 0, 1, 0] | 0 | 0 |

(continued)

| Sequence number | $x_\pi$ | $c$ | $d_1$ | $d_2$ |
|---|---|---|---|---|
| 5 | [0, 1, 2, 3, 6, 4, 5, 7] | [1, 1, 1, 0, 1, 0, 1, 0] | 0 | 1 |
| 6 | [0, 1, 2, 3, 6, 4, 5, 7] | [1, 1, 1, 0, 1, 0, 1, 1] | 0 | 1 |
| 7 | [0, 1, 2, 4, 6, 5, 3, 7] | [0, 0, 0, 0, 0, 1, 0, 0] | 0 | 1 |
| 8 | [0, 1, 2, 4, 6, 5, 3, 7] | [0, 0, 0, 0, 0, 1, 0, 1] | 0 | 1 |
| 9 | [0, 1, 2, 3, 4, 5, 6, 7] | [0, 1, 1, 0, 0, 1, 1, 0] | 0 | 0 |
| 10 | [0, 1, 2, 3, 4, 5, 6, 7] | [0, 1, 1, 0, 0, 1, 1, 1] | 0 | 0 |
| 11 | [0, 1, 2, 3, 4, 6, 5, 7] | [0, 1, 0, 1, 0, 0, 1, 0] | 0 | 1 |
| 12 | [0, 1, 2, 3, 4, 6, 5, 7] | [0, 1, 0, 1, 0, 0, 1, 1] | 0 | 1 |
| 13 | [0, 1, 2, 3, 5, 4, 7, 6] | [1, 1, 0, 0, 0, 0, 0, 0] | 0 | 1 |
| 14 | [0, 1, 2, 3, 5, 4, 7, 6] | [1, 1, 0, 0, 0, 0, 1, 0] | 0 | 1 |
| 15 | [0, 1, 2, 4, 6, 5, 3, 7] | [1, 0, 0, 1, 1, 1, 1, 0] | 0 | 0 |
| 16 | [0, 1, 2, 4, 6, 5, 3, 7] | [1, 0, 0, 1, 1, 1, 1, 1] | 0 | 0 |
| 17 | [0, 1, 2, 3, 4, 5, 6, 7] | [0, 1, 1, 0, 0, 1, 1, 0] | 0 | 1 |
| 18 | [0, 1, 2, 3, 4, 5, 6, 7] | [0, 1, 1, 0, 0, 1, 1, 1] | 0 | 1 |
| 19 | [0, 1, 2, 3, 4, 6, 5, 7] | [0, 1, 0, 1, 0, 0, 1, 0] | 0 | 0 |
| 20 | [0, 1, 2, 3, 4, 6, 5, 7] | [0, 1, 0, 1, 0, 0, 1, 1] | 0 | 0 |
| 21 | [0, 1, 2, 3, 6, 4, 5, 7] | [1, 1, 1, 0, 1, 0, 1, 0] | 0 | 0 |
| 22 | [0, 1, 2, 3, 6, 4, 5, 7] | [1, 1, 1, 0, 1, 0, 1, 1] | 0 | 0 |
| 23 | [0, 1, 2, 4, 6, 5, 3, 7] | [1, 0, 0, 1, 1, 1, 1, 0] | 0 | 1 |
| 24 | [0, 1, 2, 4, 6, 5, 3, 7] | [1, 0, 0, 1, 1, 1, 1, 1] | 0 | 1 |
| 25 | [0, 1, 2, 3, 4, 6, 5, 7] | [1, 0, 1, 1, 1, 0, 0, 0] | 0 | 0 |
| 26 | [0, 1, 2, 3, 4, 6, 5, 7] | [1, 0, 1, 1, 1, 0, 0, 1] | 0 | 0 |
| 27 | [0, 1, 2, 3, 4, 6, 5, 7] | [1, 0, 1, 1, 1, 0, 0, 0] | 0 | 1 |
| 28 | [0, 1, 2, 3, 4, 6, 5, 7] | [1, 0, 1, 1, 1, 0, 0, 1] | 0 | 1 |
| 29 | [0, 1, 2, 3, 5, 4, 6, 7] | [0, 0, 1, 1, 1, 1, 1, 0] | 0 | 1 |
| 30 | [0, 1, 2, 3, 5, 4, 6, 7] | [0, 0, 1, 1, 1, 1, 1, 1] | 0 | 1 |
| 31 | [0, 1, 2, 4, 6, 5, 3, 7] | [0, 0, 0, 0, 0, 1, 0, 0] | 0 | 0 |
| 32 | [0, 1, 2, 4, 6, 5, 3, 7] | [0, 0, 0, 0, 0, 1, 0, 1] | 0 | 0 |
| 33 | [0, 1, 2, 3, 4, 5, 6, 7] | [0, 0, 0, 0, 0, 0, 0, 0] | 0 | 1 |
| 34 | [0, 1, 2, 3, 4, 5, 6, 7] | [0, 0, 0, 0, 0, 0, 0, 1] | 0 | 1 |
| 35 | [0, 1, 2, 3, 4, 5, 6, 7] | [1, 0, 0, 0, 1, 0, 1, 0] | 0 | 0 |
| 36 | [0, 1, 2, 3, 4, 5, 6, 7] | [1, 0, 0, 0, 1, 0, 1, 1] | 0 | 0 |
| 37 | [0, 1, 2, 3, 4, 5, 6, 7] | [1, 0, 0, 0, 1, 0, 1, 0] | 0 | 1 |
| 38 | [0, 1, 2, 3, 4, 5, 6, 7] | [1, 0, 0, 0, 1, 0, 1, 1] | 0 | 1 |
| 39 | [0, 1, 2, 3, 5, 4, 6, 7] | [0, 0, 1, 1, 1, 1, 1, 0] | 0 | 0 |
| 40 | [0, 1, 2, 3, 5, 4, 6, 7] | [0, 0, 1, 1, 1, 1, 1, 1] | 0 | 0 |

40 pairs of GCPs may be generated by using the 40 groups of parameters shown in Table 10 and the foregoing generalized Boolean function mapping method. Each group of parameters may be used to generate a unique pair of GCPs.

Optionally, the 40 groups of parameters shown in Table 10 may be divided into 20 sets, and each set includes two adjacent groups of parameters. To be specific, the first set includes two groups of parameters with sequence numbers 1 and 2, the second set includes two groups of parameters with sequence numbers 3 and 4, ..., the nineteenth set includes two groups of parameters with sequence numbers 37 and 38, and the twentieth set includes two groups of parameters with sequence numbers 39 and 40. Two pairs of GCPs generated by using two groups of parameters in each set are orthogonal to each other.

Optionally, the 40 pairs of GCPs generated by using the 40 groups of parameters shown in Table 10 have a low aperiodic cross-correlation peak value, or have a good aperiodic cross-correlation property. Further, eight pairs of GCPs generated by using eight groups of parameters with sequence numbers 1 to 8 have a lower aperiodic cross-correlation peak value. In addition, eight pairs of GCPs generated by using eight groups of parameters with sequence numbers 9 to 16 also have a lower aperiodic cross-correlation peak value. When a quantity of devices that need to perform sensing simultaneously is less than or equal to 8, the eight pairs of GCPs generated by using the eight groups of parameters with sequence numbers 1 to 8 may be preferentially used, or the eight pairs of GCPs generated by using the eight groups of parameters with sequence numbers 9 to 16 may be preferentially used. The eight groups of parameters with sequence numbers 1 to 8 or the eight groups of parameters with sequence numbers 9 to 16 may be referred to as preferred parameters.

In some embodiments, when N is equal to 512, 40 groups of parameters that are defined in this application and that are used to generate the GCP are shown in Table 11.

**Table 11**

| Sequence number | $\boldsymbol{x}_{\pi}$ | $\boldsymbol{c}$ | $d_1$ | $d_2$ |
|---|---|---|---|---|
| 1 | [0, 1, 2, 3, 4, 5, 6, 7, 8] | [0, 0, 0, 0, 0, 0, 0, 0, 0] | 0 | 0 |
| 2 | [0, 1, 2, 3, 4, 5, 6, 7, 8] | [0, 0, 0, 0, 0, 0, 0, 0, 1] | 0 | 0 |
| 3 | [0, 1, 2, 3, 4, 5, 6, 7, 8] | [1, 0, 1, 0, 1, 0, 0, 1, 0] | 0 | 1 |
| 4 | [0, 1, 2, 3, 4, 5, 6, 7, 8] | [1, 0, 1, 0, 1, 0, 0, 1, 1] | 0 | 1 |
| 5 | [0, 1, 2, 3, 4, 5, 6, 7, 8] | [1, 1, 0, 1, 0, 1, 0, 1, 0] | 0 | 0 |
| 6 | [0, 1, 2, 3, 4, 5, 6, 7, 8] | [1, 1, 0, 1, 0, 1, 0, 1, 1] | 0 | 0 |
| 7 | [0, 1, 2, 3, 4, 5, 7, 6, 8] | [0, 0, 1, 1, 1, 0, 0, 1, 0] | 0 | 1 |
| 8 | [0, 1, 2, 3, 4, 5, 7, 6, 8] | [0, 0, 1, 1, 1, 0, 0, 1, 1] | 0 | 1 |
| 9 | [0, 1, 2, 3, 4, 5, 6, 7, 8] | [0, 0, 1, 0, 0, 0, 1, 1, 0] | 0 | 0 |
| 10 | [0, 1, 2, 3, 4, 5, 6, 7, 8] | [0, 0, 1, 0, 0, 0, 1, 1, 1] | 0 | 0 |
| 11 | [0, 1, 2, 3, 4, 5, 6, 7, 8] | [0, 0, 1, 0, 0, 0, 1, 1, 0] | 0 | 1 |
| 12 | [0, 1, 2, 3, 4, 5, 6, 7, 8] | [0, 0, 1, 0, 0, 0, 1, 1, 1] | 0 | 1 |
| 13 | [0, 1, 2, 3, 4, 5, 6, 8, 7] | [1, 1, 1, 1, 0, 0, 0, 0, 0] | 0 | 0 |
| 14 | [0, 1, 2, 3, 4, 5, 6, 8, 7] | [1, 1, 1, 1, 0, 0, 0, 1, 0] | 0 | 0 |
| 15 | [0, 1, 2, 3, 4, 5, 6, 8, 7] | [1, 1, 1, 1, 0, 0, 0, 1, 0] | 0 | 1 |
| 16 | [0, 1, 2, 3, 4, 5, 6, 8, 7] | [1, 1, 1, 1, 0, 0, 0, 1, 0] | 0 | 1 |
| 17 | [0, 1, 2, 3, 4, 5, 6, 7, 8] | [0, 0, 0, 0, 0, 0, 0, 0, 0] | 0 | 1 |
| 18 | [0, 1, 2, 3, 4, 5, 6, 7, 8] | [0, 0, 0, 0, 0, 0, 0, 0, 1] | 0 | 1 |
| 19 | [0, 1, 2, 3, 4, 5, 6, 7, 8] | [1, 0, 1, 0, 1, 0, 0, 1, 0] | 0 | 0 |
| 20 | [0, 1, 2, 3, 4, 5, 6, 7, 8] | [1, 0, 1, 0, 1, 0, 0, 1, 1] | 0 | 0 |
| 21 | [0, 1, 2, 3, 4, 5, 6, 7, 8] | [1, 1, 0, 1, 0, 1, 0, 1, 0] | 0 | 1 |
| 22 | [0, 1, 2, 3, 4, 5, 6, 7, 8] | [1, 1, 0, 1, 0, 1, 0, 1, 1] | 0 | 1 |
| 23 | [0, 1, 2, 3, 4, 5, 7, 6, 8] | [0, 0, 1, 1, 1, 0, 0, 1, 0] | 0 | 0 |
| 24 | [0, 1, 2, 3, 4, 5, 7, 6, 8] | [0, 0, 1, 1, 1, 0, 0, 1, 1] | 0 | 0 |

(continued)

| Sequence number | $x_\pi$ | $c$ | $d_1$ | $d_2$ |
|---|---|---|---|---|
| 25 | [0, 1, 2, 3, 4, 5, 6, 7, 8] | [0, 1, 0, 0, 0, 1, 1, 0, 0] | 0 | 0 |
| 26 | [0, 1, 2, 3, 4, 5, 6, 7, 8] | [0, 1, 0, 0, 0, 1, 1, 0, 1] | 0 | 0 |
| 27 | [0, 1, 2, 3, 4, 5, 6, 7, 8] | [0, 1, 0, 0, 0, 1, 1, 0, 0] | 0 | 1 |
| 28 | [0, 1, 2, 3, 4, 5, 6, 7, 8] | [0, 1, 0, 0, 0, 1, 1, 0, 1] | 0 | 1 |
| 29 | [0, 1, 2, 3, 4, 5, 7, 6, 8] | [1, 0, 0, 1, 1, 1, 0, 0, 0] | 0 | 0 |
| 30 | [0, 1, 2, 3, 4, 5, 7, 6, 8] | [1, 0, 0, 1, 1, 1, 0, 0, 1] | 0 | 0 |
| 31 | [0, 1, 2, 3, 4, 5, 7, 6, 8] | [1, 0, 0, 1, 1, 1, 0, 0, 0] | 0 | 1 |
| 32 | [0, 1, 2, 3, 4, 5, 7, 6, 8] | [1, 0, 0, 1, 1, 1, 0, 0, 1] | 0 | 1 |
| 33 | [0, 1, 2, 3, 4, 5, 6, 7, 8] | [1, 0, 0, 0, 1, 0, 1, 0, 0] | 0 | 0 |
| 34 | [0, 1, 2, 3, 4, 5, 6, 7, 8] | [1, 0, 0, 0, 1,0, 1, 0, 1] | 0 | 0 |
| 35 | [0, 1, 2, 3, 4, 5, 6, 7, 8] | [1, 0, 0, 0, 1, 0, 1, 0, 0] | 0 | 1 |
| 36 | [0, 1, 2, 3, 4, 5, 6, 7, 8] | [1, 0, 0, 0, 1, 0, 1, 0, 1] | 0 | 1 |
| 37 | [0, 1, 2, 3, 4, 5, 7, 8, 6] | [0, 1, 1, 0, 0, 1, 0, 1, 0] | 0 | 0 |
| 38 | [0, 1, 2, 3, 4, 5, 7, 8, 6] | [0, 1, 1, 0, 0, 1, 1, 1, 0] | 0 | 0 |
| 39 | [0, 1, 2, 3, 4, 5, 7, 8, 6] | [0, 1, 1, 0, 0, 1, 0, 1, 0] | 0 | 1 |
| 40 | [0, 1, 2, 3, 4, 5, 7, 8, 6] | [0, 1, 1, 0, 0, 1, 1, 1, 0] | 0 | 1 |

40 pairs of GCPs may be generated by using the 40 groups of parameters shown in Table 11 and the foregoing generalized Boolean function mapping method. Each group of parameters may be used to generate a unique pair of GCPs.

Optionally, the 40 groups of parameters shown in Table 11 may be divided into 20 sets, each set includes two adjacent groups of parameters, and two pairs of GCPs generated by using two groups of parameters in each set are orthogonal to each other. For details, refer to related descriptions in Table 10. Details are not described herein again.

Optionally, the 40 pairs of GCPs generated by using the 40 groups of parameters shown in Table 11 have a low aperiodic cross-correlation peak value, or have a good aperiodic cross-correlation property. Further, eight pairs of GCPs generated by using eight groups of parameters with sequence numbers 1 to 8 have a lower aperiodic cross-correlation peak value. In addition, eight pairs of GCPs generated by using eight groups of parameters with sequence numbers 9 to 16 also have a lower aperiodic cross-correlation peak value. For details, refer to related descriptions in Table 10. Details are not described herein again.

In some embodiments, when N is equal to 1024, 40 groups of parameters that are defined in this application and that are used to generate the GCP are shown in Table 12.

**Table 12**

| Sequence number | $x_\pi$ | $c$ | $d_1$ | $d_2$ |
|---|---|---|---|---|
| 1 | [0, 1, 2, 3, 4, 5, 6, 7, 8, 9] | [0, 0, 0, 0, 0, 0, 0, 0, 0, 0] | 0 | 0 |
| 2 | [0, 1, 2, 3, 4, 5, 6, 7, 8, 9] | [0, 0, 0, 0, 0, 0, 0, 0, 0, 1] | 0 | 0 |
| 3 | [0, 1, 2, 3, 4, 5, 6, 7, 8, 9] | [0, 1, 0, 1, 1, 0, 0, 1, 0, 0] | 0 | 0 |
| 4 | [0, 1, 2, 3, 4, 5, 6, 7, 8, 9] | [0, 1, 0, 1, 1, 0, 0, 1, 0, 1] | 0 | 0 |
| 5 | [0, 1, 2, 3, 4, 5, 6, 7, 8, 9] | [0, 1, 1, 1, 0, 1, 0, 0, 1, 0] | 0 | 1 |
| 6 | [0, 1, 2, 3, 4, 5, 6, 7, 8, 9] | [0, 1, 1, 1, 0, 1, 0, 0, 1, 1] | 0 | 1 |
| 7 | [0, 1, 2, 3, 4, 5, 6, 7, 8, 9] | [1, 0, 0, 0, 1, 0, 1, 0, 0, 0] | 0 | 0 |
| 8 | [0, 1, 2, 3, 4, 5, 6, 7, 8, 9] | [1, 0, 0, 0, 1, 0, 1, 0, 0, 1] | 0 | 0 |
| 9 | [0, 1, 2, 3, 4, 5, 6, 7, 8, 9] | [0, 0, 0, 0, 0, 0, 0, 0, 0, 0] | 0 | 1 |

(continued)

| Sequence number | $\boldsymbol{x}_\pi$ | $c$ | $d_1$ | $d_2$ |
|---|---|---|---|---|
| 10 | [0, 1, 2, 3, 4, 5, 6, 7, 8, 9] | [0, 0, 0, 0, 0, 0, 0, 0, 0, 1] | 0 | 1 |
| 11 | [0, 1, 2, 3, 4, 5, 6, 7, 8, 9] | [0, 1, 0, 1, 1, 0, 0, 1, 0, 0] | 0 | 1 |
| 12 | [0, 1, 2, 3, 4, 5, 6, 7, 8, 9] | [0, 1, 0, 1, 1, 0, 0, 1, 0, 1] | 0 | 1 |
| 13 | [0, 1, 2, 3, 4, 5, 6, 7, 8, 9] | [0, 1, 1, 1, 0, 1, 0, 0, 1, 0] | 0 | 0 |
| 14 | [0, 1, 2, 3, 4, 5, 6, 7, 8, 9] | [0, 1, 1, 1, 0, 1, 0, 0, 1, 1] | 0 | 0 |
| 15 | [0, 1, 2, 3, 4, 5, 6, 7, 8, 9] | [1, 0, 0, 0, 1, 0, 1, 0, 0, 0] | 0 | 1 |
| 16 | [0, 1, 2, 3, 4, 5, 6, 7, 8, 9] | [1, 0, 0, 0, 1, 0, 1, 0, 0, 1] | 0 | 1 |
| 17 | [0, 1, 2, 3, 4, 5, 6, 7, 8, 9] | [0, 0, 1, 0, 0, 0, 1, 0, 1, 0] | 0 | 0 |
| 18 | [0, 1, 2, 3, 4, 5, 6, 7, 8, 9] | [0, 0, 1, 0, 0, 0, 1, 0, 1, 1] | 0 | 0 |
| 19 | [0, 1, 2, 3, 4, 5, 6, 7, 8, 9] | [0, 0, 1, 0, 0, 0, 1, 0, 1, 0] | 0 | 1 |
| 20 | [0, 1, 2, 3, 4, 5, 6, 7, 8, 9] | [0, 0, 1, 0, 0, 0, 1, 0, 1, 1] | 0 | 1 |
| 21 | [0, 1, 2, 3, 4, 5, 6, 7, 8, 9] | [1, 0, 0, 1, 0, 0, 0, 0, 1, 0] | 0 | 0 |
| 22 | [0, 1, 2, 3, 4, 5, 6, 7, 8, 9] | [1, 0, 0, 1, 0, 0, 0, 0, 1, 1] | 0 | 0 |
| 23 | [0, 1, 2, 3, 4, 5, 6, 7, 8, 9] | [1, 0, 0, 1, 0, 0, 0, 0, 1, 0] | 0 | 1 |
| 24 | [0, 1, 2, 3, 4, 5, 6, 7, 8, 9] | [1, 0, 0, 1, 0, 0, 0, 0, 1, 1] | 0 | 1 |
| 25 | [0, 1, 2, 3, 4, 5, 6, 7, 8, 9] | [0, 0, 0, 1, 0, 0, 0, 1, 1, 0] | 0 | 0 |
| 26 | [0, 1, 2, 3, 4, 5, 6, 7, 8, 9] | [0, 0, 0, 1, 0, 0, 0, 1, 1, 1] | 0 | 0 |
| 27 | [0, 1, 2, 3, 4, 5, 6, 7, 8, 9] | [0, 0, 0, 1, 0, 0, 0, 1, 1, 0] | 0 | 1 |
| 28 | [0, 1, 2, 3, 4, 5, 6, 7, 8, 9] | [0, 0, 0, 1, 0, 0, 0, 1, 1, 1] | 0 | 1 |
| 29 | [0, 1, 2, 3, 4, 5, 6, 7, 8, 9] | [0, 1, 0, 0, 0, 1, 1, 0, 0, 0] | 0 | 0 |
| 30 | [0, 1, 2, 3, 4, 5, 6, 7, 8, 9] | [0, 1, 0, 0, 0, 1, 1, 0, 0, 1] | 0 | 0 |
| 31 | [0, 1, 2, 3, 4, 5, 6, 7, 8, 9] | [0, 1, 0, 0, 0, 1, 1, 0, 0, 0] | 0 | 1 |
| 32 | [0, 1, 2, 3, 4, 5, 6, 7, 8, 9] | [0, 1, 0, 0, 0, 1, 1, 0, 0, 1] | 0 | 1 |
| 33 | [0, 1, 2, 3, 4, 5, 6, 7, 8, 9] | [0, 1, 1, 0, 0, 1, 1, 1, 0, 0] | 0 | 0 |
| 34 | [0, 1, 2, 3, 4, 5, 6, 7, 8, 9] | [0, 1, 1, 0, 0, 1, 1, 1, 0, 1] | 0 | 0 |
| 35 | [0, 1, 2, 3, 4, 5, 6, 7, 8, 9] | [0, 1, 1, 0, 0, 1, 1, 1, 0, 0] | 0 | 1 |
| 36 | [0, 1, 2, 3, 4, 5, 6, 7, 8, 9] | [0, 1, 1, 0, 0, 1, 1, 1, 0, 1] | 0 | 1 |
| 37 | [0, 1, 2, 3, 4, 5, 6, 7, 8, 9] | [1, 0, 1, 0, 0, 1, 0, 0, 0, 0] | 0 | 0 |
| 38 | [0, 1, 2, 3, 4, 5, 6, 7, 8, 9] | [1, 0, 1, 0, 0, 1, 0, 0, 0, 1] | 0 | 0 |
| 39 | [0, 1, 2, 3, 4, 5, 6, 7, 8, 9] | [1, 0, 1, 0, 0, 1, 0, 0, 0, 0] | 0 | 1 |
| 40 | [0, 1, 2, 3, 4, 5, 6, 7, 8, 9] | [1, 0, 1, 0, 0, 1, 0, 0, 0, 1] | 0 | 1 |

40 pairs of GCPs may be generated by using the 40 groups of parameters shown in Table 12 and the foregoing generalized Boolean function mapping method. Each group of parameters may be used to generate a unique pair of GCPs.

Optionally, the 40 groups of parameters shown in Table 12 may be divided into 20 sets, each set includes two adjacent groups of parameters, and two pairs of GCPs generated by using two groups of parameters in each set are orthogonal to each other. For details, refer to related descriptions in Table 10. Details are not described herein again.

Optionally, the 40 pairs of GCPs generated by using the 40 groups of parameters shown in Table 12 have a low aperiodic cross-correlation peak value, or have a good aperiodic cross-correlation property. Further, eight pairs of GCPs generated by using eight groups of parameters with sequence numbers 1 to 8 have a lower aperiodic cross-correlation peak value. In addition, eight pairs of GCPs generated by using eight groups of parameters with sequence numbers 9 to 16 also have a lower aperiodic cross-correlation peak value. For details, refer to related descriptions in Table 10. Details are not described herein again.

The foregoing describes the generation manner and the generation parameters of the GCP when N is equal to 32, 64, 128, 256, 512, or 1024. The following describes the generation manner and the generation parameters of the GCP when N is equal to 160, 320, 640, or 832.

When N is equal to 160, 320, 640, or 832, the GCP is a direct product of a first GCP and a second GCP, a length of the first GCP is $N_1$, the length of the second GCP is $N_2$, and $N_1 \times N_2 = N$.

For example, assuming that the first GCP is represented as ($a, b$), and the second GCP is represented as ($c, d$), a sequence ($e, f$) generated by the direct product of the first GCP and the second GCP is a GCP with a length of $N_1 N_2$, and may be represented as:

$$e = c \otimes \frac{(a+b)}{2} - \overleftarrow{d} \otimes \frac{(b-a)}{2}$$

$$f = d \otimes \frac{(a+b)}{2} + \overleftarrow{c} \otimes \frac{(b-a)}{2}$$

$\overline{c}$ represents an inverse sequence of the sequence $c$, $\overline{d}$ represents a reverse sequence of the sequence $d$, and $\otimes$ represents a Kronecker product.

Optionally, one sequence in the first GCP is $(-1)^{a(x)}$, and another sequence is $(-1)^{b(x)}$, where $a(x) = f(x) + d_1$, $b(x) = f(x) + x_\pi[0] + d_2$, and $f(x) = \sum_{k=0}^{l-2} x_\pi[k] x_\pi[k+1] + \sum_{k=0}^{l-1} c[k] x[k]$, $2^l = N_1$. For details, refer to the foregoing related descriptions. Details are not described herein again.

Optionally, the second GCP is any one of the following:

$$x_1 = 1, 1, -1, 1, -1, 1, -1, -1, 1, 1;$$

$$y_1 = 1, 1, -1, 1, 1, 1, 1, 1, -1, -1;$$

and or

$$x_2 = 1, 1, 1, 1, 1, -1, 1, -1, -1, 1;$$

and

$$y_2 = 1, 1, -1, -1, 1, 1, 1, -1, 1, -1;$$

or

$$x_3 = 1, 1, 1, 1, -1, 1, -1, -1, -1, 1, 1, -1, -1, 1, 1, -1, 1, -1, -1, 1;$$

and

$$y_3 = 1, 1, 1, 1, -1, 1, 1, 1, 1, 1, -1, -1, -1, 1, -1, 1, -1, 1, 1, -1;$$

or

$$x_4 = 1, 1, 1, 1, -1, 1, 1, -1, -1, 1, -1, 1, -1, 1, -1, -1, 1, -1, 1, 1, 1, -1, -1, 1, 1, 1;$$

and

$$y_4 = 1, 1, 1, 1, -1, 1, 1, -1, -1, 1, -1, 1, 1, 1, 1, 1, -1, 1, -1, -1, -1, 1, 1, -1, -1, -1.$$

In this application, the second GCP may also be referred to as a base sequence, that is, the description "second GCP" in this application may be replaced with the base sequence. This is not specifically limited in this application.

In some embodiments, when N is equal to 160, 20 groups of parameters that are defined in this application and that are used to generate the GCP are shown in Table 13.

**Table 13**

| Sequence number | $x_\pi$ | $c$ | $d_1$ | $d_2$ | Second GCP |
|---|---|---|---|---|---|
| 1 | [0, 2, 1, 3] | [0, 0, 0, 0] | 0 | 1 | $(x_1, y_1)$ |
| 2 | [0, 2, 1, 3] | [0, 0, 0, 1] | 0 | 1 | $(x_1, y_1)$ |
| 3 | [2, 1, 0, 3] | [0, 0, 0, 0] | 0 | 0 | $(x_2, y_2)$ |
| 4 | [2, 1, 0, 3] | [0, 0, 0, 1] | 0 | 0 | $(x_2, y_2)$ |
| 5 | [0, 1, 2] | [0, 0, 0] | 0 | 1 | $(x_3, y_3)$ |
| 6 | [0, 1, 2] | [0, 0, 1] | 0 | 1 | $(x_3, y_3)$ |
| 7 | [0, 1, 2, 3] | [0, 1, 0, 0] | 0 | 0 | $(x_1, y_1)$ |
| 8 | [0, 1, 2, 3] | [0, 1, 0, 1] | 0 | 0 | $(x_1, y_1)$ |
| 9 | [0, 1, 2, 3] | [0, 1, 1, 0] | 0 | 0 | $(x_2, y_2)$ |
| 10 | [0, 1, 2, 3] | [0, 1, 1, 1] | 0 | 0 | $(x_2, y_2)$ |
| 11 | [0, 2, 1, 3] | [0, 0, 1, 0] | 0 | 1 | $(x_2, y_2)$ |
| 12 | [0, 2, 1, 3] | [0, 0, 1, 1] | 0 | 1 | $(x_2, y_2)$ |
| 13 | [1, 0, 2, 3] | [1, 1, 0, 0] | 0 | 1 | $(x_1, y_1)$ |
| 14 | [1, 0, 2, 3] | [1, 1, 0, 1] | 0 | 1 | $(x_1, y_1)$ |
| 15 | [1, 0, 2, 3] | [1, 1, 1, 0] | 0 | 1 | $(x_2, y_2)$ |
| 16 | [1, 0, 2, 3] | [1, 1, 1, 1] | 0 | 1 | $(x_2, y_2)$ |
| 17 | [1, 2, 0, 3] | [1, 1, 0, 0] | 0 | 0 | $(x_2, y_2)$ |
| 18 | [1, 2, 0, 3] | [1, 1, 0, 1] | 0 | 0 | $(x_2, y_2)$ |
| 19 | [1, 2, 0, 3] | [1, 1, 1, 0] | 0 | 0 | $(x_1, y_1)$ |
| 20 | [1, 2, 0, 3] | [1, 1, 1, 1] | 0 | 0 | $(x_1, y_1)$ |

$x_\pi$, $c$, $d_1$, $d_2$, and the second GCP shown in each row in Table 13 are a group of parameters. $x_\pi$, $c$, $d_1$, and $d_2$ are used to generate the first GCP. In a manner of the foregoing sequence direct product, the GCP may be generated based on the first GCP and the second GCP. Each group of parameters may be used to generate a unique pair of GCPs.

It can be learned from Table 13 that a GCP with a length of 160 may be generated by a first GCP with a length of 16 and a second GCP with a length of 10. That is, $N_1$ = 16, $N_2$ = 10, and the second GCP is $(x_1, y_1)$ or $(x_2, y_2)$. Alternatively, a GCP with a length of 160 may be generated by a first GCP with a length of 8 and a second GCP with a length of 20. That is, $N_1$ = 8, $N_2$ = 20, and the second GCP is $(x_3, y_3)$.

Optionally, the 20 groups of parameters shown in Table 13 may be divided into 10 sets, and each set includes two adjacent groups of parameters. To be specific, the first set includes two groups of parameters with sequence numbers 1 and 2, the second set includes two groups of parameters with sequence numbers 3 and 4, ..., the ninth set includes two groups of parameters with sequence numbers 17 and 18, and the tenth set includes two groups of parameters with sequence numbers 19 and 20. Two pairs of GCPs generated by using two groups of parameters in each set are orthogonal to each other.

Optionally, 20 pairs of GCPs generated by using the 20 groups of parameters shown in

Table 13 have a low aperiodic cross-correlation peak value, or have a good aperiodic cross-correlation property. Further, six pairs of GCPs generated by using six groups of parameters with sequence numbers 1 to 6 have a lower aperiodic cross-correlation peak value. When a quantity of devices that need to perform sensing simultaneously is less than or equal to 6, the six pairs of GCPs generated by using the six groups of parameters with sequence numbers 1 to 6 may be preferentially used. The six groups of parameters with sequence numbers 1 to 6 may be referred to as preferred parameters.

In some embodiments, when N is equal to 320, 20 groups of parameters that are defined in this application and that are used to generate the GCP are shown in Table 14.

**Table 14**

| Sequence number | $x_\pi$ | $c$ | $d_1$ | $d_2$ | Second GCP |
|---|---|---|---|---|---|
| 1 | [0, 1, 2, 3, 4] | [0, 0, 0, 0, 0] | 0 | 0 | $(x_1, y_1)$ |
| 2 | [0, 1, 2, 3, 4] | [0, 0, 0, 0, 1] | 0 | 0 | $(x_1, y_1)$ |
| 3 | [0, 1, 2, 3, 4] | [0, 0, 0, 1, 0] | 0 | 0 | $(x_2, y_2)$ |
| 4 | [0, 1, 2, 3, 4] | [0, 0, 0, 1, 1] | 0 | 0 | $(x_2, y_2)$ |
| 5 | [0, 1, 2, 3, 4] | [0, 0, 1, 0, 0] | 0 | 1 | $(x_1, y_1)$ |
| 6 | [0, 1, 2, 3, 4] | [0, 0, 1, 0, 1] | 0 | 1 | $(x_1, y_1)$ |
| 7 | [0, 1, 2, 3, 4] | [0, 0, 1, 1, 0] | 0 | 1 | $(x_2, y_2)$ |
| 8 | [0, 1, 2, 3, 4] | [0, 0, 1, 1, 1] | 0 | 1 | $(x_2, y_2)$ |
| 9 | [0, 1, 3, 2, 4] | [1, 0, 0, 0, 0] | 0 | 0 | $(x_2, y_2)$ |
| 10 | [0, 1, 3, 2, 4] | [1, 0, 0, 0, 1] | 0 | 0 | $(x_2, y_2)$ |
| 11 | [0, 1, 3, 2, 4] | [1, 0, 0, 1, 0] | 0 | 0 | $(x_1, y_1)$ |
| 12 | [0, 1, 3, 2, 4] | [1, 0, 0, 1, 1] | 0 | 0 | $(x_1, y_1)$ |
| 13 | [0, 1, 3, 4, 2] | [1, 1, 0, 0, 0] | 0 | 1 | $(x_1, y_1)$ |
| 14 | [0, 1, 3, 4, 2] | [1, 1, 1, 0, 0] | 0 | 1 | $(x_1, y_1)$ |
| 15 | [0, 1, 3, 4, 2] | [1, 1, 0, 1, 1] | 0 | 1 | $(x_2, y_2)$ |
| 16 | [0, 1, 3, 4, 2] | [1, 1, 1, 1, 1] | 0 | 1 | $(x_2, y_2)$ |
| 17 | [0, 2, 4, 3, 1] | [0, 0, 0, 0, 1] | 0 | 1 | $(x_1, y_1)$ |
| 18 | [0, 2, 4, 3, 1] | [0, 1, 0, 0, 1] | 0 | 1 | $(x_1, y_1)$ |
| 19 | [0, 2, 4, 3, 1] | [0, 0, 0, 1, 0] | 0 | 1 | $(x_2, y_2)$ |
| 20 | [0, 2, 4, 3, 1] | [0, 1, 0, 1, 0] | 0 | 1 | $(x_2, y_2)$ |

Each group of parameters in Table 14 may be used to generate a unique pair of GCPs. For details, refer to related descriptions in Table 13. Details are not described herein again.

It can be learned from Table 14 that a GCP with a length of 320 may be generated by a first GCP with a length of 32 and a second GCP with a length of 10. That is, $N_1 = 32$, $N_2 = 10$, and the second GCP is $(x_1, y_1)$ or $(x_2, y_2)$.

Optionally, the 20 groups of parameters shown in Table 13 may be divided into 10 sets, and two pairs of GCPs generated by using two groups of parameters in each set are orthogonal to each other. For details, refer to related descriptions in Table 13. Details are not described herein again.

Optionally, 20 pairs of GCPs generated by using the 20 groups of parameters shown in Table 14 have a low aperiodic cross-correlation peak value, or have a good aperiodic cross-correlation property. Further, four pairs of GCPs generated by using four groups of parameters with sequence numbers 1 to 4 have a lower aperiodic cross-correlation peak value. In addition, four pairs of GCPs generated by using four groups of parameters with sequence numbers 5 to 8 have a lower aperiodic cross-correlation peak value. When a quantity of devices that need to perform sensing simultaneously is less than or equal to 4, the four pairs of GCPs generated by using the four groups of parameters with sequence numbers 1 to 4 may be preferentially used, or the four pairs of GCPs generated by using the four groups of parameters with sequence numbers 5 to 8 may be preferentially used.

In some embodiments, when N is equal to 640, 20 groups of parameters that are defined in this application and that are used to generate the GCP are shown in Table 15.

**Table 15**

| Sequence number | $x_\pi$ | $c$ | $d_1$ | $d_2$ | Second GCP |
|---|---|---|---|---|---|
| 1 | [0, 1, 2, 3, 4, 5] | [0, 0, 0, 0, 0, 0] | 0 | 0 | $(x_1, y_1)$ |
| 2 | [0, 1, 2, 3, 4, 5] | [0, 0, 0, 0, 0, 1] | 0 | 0 | $(x_1, y_1)$ |
| 3 | [0, 1, 2, 4, 3, 5] | [1, 0, 0, 0, 0, 0] | 0 | 1 | $(x_2, y_2)$ |
| 4 | [0, 1, 2, 4, 3, 5] | [1, 0, 0, 0, 0, 1] | 0 | 1 | $(x_2, y_2)$ |
| 5 | [0, 1, 3, 4, 2, 5] | [1, 0, 1, 1, 0, 0] | 0 | 1 | $(x_1, y_1)$ |
| 6 | [0, 1, 3, 4, 2, 5] | [1, 0, 1, 1, 0, 1] | 0 | 1 | $(x_1, y_1)$ |
| 7 | [0, 2, 4, 3, 1, 5] | [0, 0, 0, 1, 1, 0] | 0 | 0 | $(x_2, y_2)$ |
| 8 | [0, 2, 4, 3, 1, 5] | [0, 0, 0, 1, 1, 1] | 0 | 0 | $(x_2, y_2)$ |
| 9 | [0, 1, 2, 3, 4, 5] | [0, 0, 0, 0, 0, 0] | 0 | 1 | $(x_1, y_1)$ |
| 10 | [0, 1, 2, 3, 4, 5] | [0, 0, 0, 0, 0, 1] | 0 | 1 | $(x_1, y_1)$ |
| 11 | [0, 1, 2, 3, 4, 5] | [0, 0, 0, 0, 1, 0] | 0 | 0 | $(x_2, y_2)$ |
| 12 | [0, 1, 2, 3, 4, 5] | [0, 0, 0, 0, 1, 1] | 0 | 0 | $(x_2, y_2)$ |
| 13 | [0, 1, 2, 3, 4, 5] | [0, 0, 0, 0, 1, 0] | 0 | 1 | $(x_2, y_2)$ |
| 14 | [0, 1, 2, 3, 4, 5] | [0, 0, 0, 0, 1, 1] | 0 | 1 | $(x_2, y_2)$ |
| 15 | [0, 1, 2, 4, 3, 5] | [1, 0, 0, 0, 0, 0] | 0 | 0 | $(x_2, y_2)$ |
| 16 | [0, 1, 2, 4, 3, 5] | [1, 0, 0, 0, 0, 1] | 0 | 0 | $(x_2, y_2)$ |
| 17 | [0, 1, 2, 4, 3, 5] | [1, 0, 0, 0, 1, 0] | 0 | 0 | $(x_1, y_1)$ |
| 18 | [0, 1, 2, 4, 3, 5] | [1, 0, 0, 0, 1, 1] | 0 | 0 | $(x_1, y_1)$ |
| 19 | [0, 1, 2, 3, 4] | [0, 0, 0, 0, 0] | 0 | 1 | $(x_3, y_3)$ |
| 20 | [0, 1, 2, 3, 4] | [0, 0, 0, 0, 1] | 0 | 1 | $(x_3, y_3)$ |

Each group of parameters in Table 15 may be used to generate a unique pair of GCPs. For details, refer to related descriptions in Table 13. Details are not described herein again.

It can be learned from Table 15 that a GCP with a length of 640 may be generated by a first GCP with a length of 64 and a second GCP with a length of 10. That is, $N_1$ = 64, $N_2$ = 10, and the second GCP is $(x_1, y_1)$ or $(x_2, y_2)$. Alternatively, a GCP with a length of 640 may be generated by a first GCP with a length of 32 and a second GCP with a length of 20. That is, $N_1$ = 32, $N_2$ = 20, and the second GCP is $(x_3, y_3)$.

Optionally, the 20 groups of parameters shown in Table 15 may be divided into 10 sets, and two pairs of GCPs generated by using two groups of parameters in each set are orthogonal to each other. For details, refer to related descriptions in Table 13. Details are not described herein again.

Optionally, 20 pairs of GCPs generated by using the 20 groups of parameters shown in Table 15 have a low aperiodic cross-correlation peak value, or have a good aperiodic cross-correlation property. Further, eight pairs of GCPs generated by using eight groups of parameters with sequence numbers 1 to 8 have a lower aperiodic cross-correlation peak value. For details, refer to related descriptions in Table 13. Details are not described herein again.

In some embodiments, when N is equal to 832, 20 groups of parameters that are defined in this application and that are used to generate the GCP are shown in Table 16.

Table 16

| Sequence number | $x_\pi$ | $c$ | $d_1$ | $d_2$ | Second GCP |
|---|---|---|---|---|---|
| 1 | [0, 1, 2, 3, 4] | [0, 0, 0, 0, 0] | 0 | 0 | $(x_4, y_4)$ |
| 2 | [0, 1, 2, 3, 4] | [0, 0, 0, 0, 1] | 0 | 0 | $(x_4, y_4)$ |
| 3 | [0, 3, 1, 2, 4] | [1, 0, 1, 0, 0] | 0 | 1 | $(x_4, y_4)$ |
| 4 | [0, 3, 1, 2, 4] | [1, 0, 1, 0, 1] | 0 | 1 | $(x_4, y_4)$ |
| 5 | [0, 1, 3, 2, 4] | [1, 0, 0, 1, 0] | 0 | 0 | $(x_4, y_4)$ |
| 6 | [0, 1, 3, 2, 4] | [1, 0, 0, 1, 1] | 0 | 0 | $(x_4, y_4)$ |
| 7 | [2, 0, 1, 4, 3] | [0, 1, 0, 0, 0] | 0 | 0 | $(x_4, y_4)$ |
| 8 | [2, 0, 1, 4, 3] | [0, 1, 0, 1, 0] | 0 | 0 | $(x_4, y_4)$ |
| 9 | [1, 0, 3, 2, 4] | [0, 0, 0, 0, 0] | 0 | 0 | $(x_4, y_4)$ |
| 10 | [1, 0, 3, 2, 4] | [0, 0, 0, 0, 1] | 0 | 0 | $(x_4, y_4)$ |
| 11 | [2, 0, 1, 3, 4] | [0, 1, 0, 1, 0] | 0 | 1 | $(x_4, y_4)$ |
| 12 | [2, 0, 1, 3, 4] | [0, 1, 0, 1, 1] | 0 | 1 | $(x_4, y_4)$ |
| 13 | [0, 1, 2, 3, 4] | [0, 0, 1, 0, 0] | 0 | 1 | $(x_4, y_4)$ |
| 14 | [0, 1, 2, 3, 4] | [0, 0, 1, 0, 1] | 0 | 1 | $(x_4, y_4)$ |
| 15 | [0, 1, 3, 2, 4] | [1, 0, 0, 0, 0] | 0 | 1 | $(x_4, y_4)$ |
| 16 | [0, 1, 3, 2, 4] | [1, 0, 0, 0, 1] | 0 | 1 | $(x_4, y_4)$ |
| 17 | [1, 0, 2, 3, 4] | [0, 1, 1, 0, 0] | 0 | 0 | $(x_4, y_4)$ |
| 18 | [1, 0, 2, 3, 4] | [0, 1, 1, 0, 1] | 0 | 0 | $(x_4, y_4)$ |
| 19 | [1, 3, 2, 0, 4] | [0, 0, 1, 1, 0] | 0 | 1 | $(x_4, y_4)$ |
| 20 | [1, 3, 2, 0, 4] | [0, 0, 1, 1, 1] | 0 | 1 | $(x_4, y_4)$ |

Each group of parameters in Table 16 may be used to generate a unique pair of GCPs. Refer to related descriptions in Table 13. Details are not described herein again.

It can be learned from Table 16 that a GCP with a length of 832 may be generated by the first GCP with a length of 32 and a second GCP with a length of 26. That is, $N_1 = 32$, and $N_2 = 26$. The second GCP is $(x_4, y_4)$.

Optionally, the 20 groups of parameters shown in Table 16 may be divided into 10 sets, and two pairs of GCPs generated by using two groups of parameters in each set are orthogonal to each other. Refer to related descriptions in Table 13. Details are not described herein again.

Optionally, 20 pairs of GCPs generated by using the 20 groups of parameters shown in Table 16 have a low aperiodic cross-correlation peak value, or have a good aperiodic cross-correlation property. Further, four pairs of GCPs generated by using four groups of parameters with sequence numbers 1 to 4 or four groups of parameters with sequence numbers 5 to 8 have a lower aperiodic cross-correlation peak value. Refer to related descriptions in Table 14. Details are not described herein again.

Based on this, this application provides GCPs with a plurality of lengths. There are a large quantity of GCPs with each length, and the large quantity of GCPs with each length can be used by a large quantity of sensing devices to perform sensing simultaneously. In addition, there is a low aperiodic cross-correlation between a plurality of pairs of GCPs with each length, and when a plurality of sensing devices perform sensing simultaneously, interference between the devices can be effectively reduced, thereby improving sensing accuracy.

The foregoing describes related descriptions of GCPs with various lengths provided in this application. Although GCPs with a plurality of lengths are separately defined in embodiments of this application, it is not limited that a specific technical solution needs to support all GCPs defined in this application, provided that a GCP of at least one defined length is supported, for example, a GCP with a length of 32, 64, 128, 256, 512, 1024, 160, 320, 640, and/or 832.

The following describes a sensing method provided in this application. FIG. 5 is a schematic flowchart of a sensing method according to this application. The method includes the following steps.

S501: A sensing device sends a sensing signal.

The sensing signal is generated based on a GCP with a length of N. In other words, the sensing signal is generated based on a GCP with a length of N, or the sensing signal is used to carry a GCP with a length of N. N is equal to one of 32, 64, 128, 256, 512, 1024, 160, 320, 640 and 832.

Optionally, parameters used to generate the GCP are a group of parameters included in Table 7 to Table 16. In other words, when N is equal to 32, 64, or 128, the GCP is a pair of GCPs defined in Table 4 to Table 6.

Optionally, the sensing device supports GCP generated by using at least one group of parameters in at least one of Table 7 to Table 16. In a possible implementation, the sensing device may store the at least one group of parameters in the at least one of Table 7 to Table 16. Before step S501, the sensing device may select a group of parameters to generate the GCP, and then generate the sensing signal based on the generated GCP.

In another possible implementation, the sensing device may store the GCP generated by using the at least one group of parameters in the at least one of Table 7 to Table 16, that is, the sensing device stores the GCP. Before step S501, the sensing device may select a pair of GCPs, and generate the sensing signal based on the GCPs.

Optionally, the parameters that are used to generate the GCP and that are stored in the sensing device or the GCP that is stored in the sensing device may be configured before delivery, or may be preconfigured by a management node or a user. This is not specifically limited in this application.

Optionally, the sensing signal may be a single-carrier signal or a multi-carrier signal. Alternatively, the sensing signal may be a single-carrier waveform or a multi-carrier waveform. For example, the single-carrier waveform may be a single-carrier pulse waveform. The multi-carrier waveform may be a cyclic prefix orthogonal frequency division multiplexing (cyclic prefixed orthogonal frequency division multiplexing, CP-OFDM) waveform or a Fourier transform spread orthogonal frequency division multiplexing (discrete fourier transform spread orthogonal frequency division multiplexing, DFT-s-OFDM) waveform. Certainly, the single-carrier waveform or the multi-carrier may alternatively be in another form. This is not specifically limited in this application.

Optionally, the sensing device may send the sensing signal in an omnidirectional sending or directional sending manner. In a possible implementation, when the sensing device has no prior knowledge of an orientation of a sensing target, the sensing signal may be evenly transmitted to the entire space in the omnidirectional sending manner. For example, in a smart home scenario, when track tracking needs to be performed on a person, a sensing device at home has no prior knowledge of an orientation of the person, and may send a sensing signal omnidirectionally to detect information such as a distance and the orientation of the person.

In another possible implementation, when the sensing device has prior knowledge of the orientation of the sensing target, the sensing device may send the sensing signal to a direction in the directional sending manner. For example, in an in-vehicle sensing scenario, when a doze alarm is generated for a driver, the sensing device may master orientation information (for example, a driving position) of the driver in advance, and send the sensing signal to the orientation.

S502: The sensing device receives an echo signal of the sensing signal.

Optionally, after the sensing device starts to send the sensing signal, a receive antenna starts to receive the echo signal in an omnidirectional or directional manner.

Optionally, a receiving manner of the receive antenna matches the sending manner of the sensing signal. For example, when the sensing device sends the sensing signal in the omnidirectional sending manner, the echo signal is received in the omnidirectional manner in step S502; or when the sensing device sends the sensing signal in the directional sending manner, the echo signal is received in the directional manner in step S502.

Optionally, sending and receiving of the sensing device may multiplex a same antenna, that is, the sensing device may work in a full-duplex manner.

S503: The sensing device performs processing based on the echo signal.

Optionally, that the sensing device performs processing based on the echo signal may include: The sensing device performs sensing based on the echo signal, for example, sense a distance of a target object based on the echo signal, that is, determine a distance between the sensing device and the target object.

Optionally, after receiving the echo signal, the sensing device may perform decoding to obtain a GCP corresponding to the echo signal. For example, when the sensing signal is a single-carrier signal, the sensing device may perform decoding based on phase information of the echo signal, to obtain the GCP corresponding to the echo signal. A GCP corresponding to the sensing signal may be understood as a GCP carried by the sensing signal.

After obtaining the GCP corresponding to the echo signal, the sensing device may perform an aperiodic autocorrelation operation on the GCP (denoted as GCP #1) used to generate the sensing signal in step S501 and the GCP (denoted as GCP #2) corresponding to the echo signal, and determine a signal propagation delay between the sensing device and the target object based on a result of the aperiodic autocorrelation operation. For example, the signal propagation delay may be determined based on a displacement corresponding to a maximum correlation peak. Then, the distance between the target object and the sensing device is determined based on the signal propagation delay. It is assumed that the displacement corresponding to the maximum correlation peak is $l$, the delay is $lT_c$, and the distance between the target object and the sensing device is $clT_c/2$, where c is the speed of light. When the sensing signal is a single-carrier waveform, $T_c$ represents a narrow pulse duration; or when the sensing signal is a multi-carrier waveform, $T_c$ represents a duration corresponding to a sampling point of the multi-carrier signal after time-domain sampling.

Optionally, the maximum correlation peak is a maximum value of an aperiodic autocorrelation function. Because the GCP #1 has a good aperiodic autocorrelation, a maximum correlation peak of the aperiodic autocorrelation operation is usually at a 0 displacement, that is, is obtained when the GCP #1 and the GCP #2 are completely aligned. Because the echo signal has a delay compared with the sensing signal, when the aperiodic autocorrelation operation is performed, the GCP #1 needs a delay time corresponding to a displacement, to ensure alignment between the echo signal and the sensing signal. Therefore, the delay may be determined by determining the displacement of the GCP #1, and the distance between the target object and the sensing device may be determined.

In some embodiments, when the sensing device supports a plurality of pairs of GCPs generated by using a plurality of groups of parameters in the at least one of Table 7 to Table 16, before step S501, a pair of GCPs may be selected from the plurality of pairs of GCPs, to generate the sensing signal. The GCP can be selected at a higher layer, and the higher layer is an upper layer of a physical layer.

In a possible implementation, when there is a central management node in a sensing scenario, and there are a plurality of sensing devices with same sensing bandwidth in the sensing scenario, the central management node may allocate GCPs corresponding to different groups of parameters in a same table in Table 7 to Table 16 to the sensing devices, so that aperiodic cross-correlation peak values of the GCPs used by the sensing devices are low, thereby reducing interference between different sensing devices.

For example, in the smart home scenario, when track tracking needs to be performed on the person, a plurality of sensing devices (for example, various smart home appliances or mobile phones) are usually needed to perform synchronous sensing, to improve track tracking accuracy. In this case, a wireless access point or an edge cloud server in a home may be used as the central management node to allocate different GCPs with a same length to the plurality of sensing devices, to reduce the interference.

Optionally, the sensing bandwidth may be understood as maximum bandwidth that can be occupied by the sensing signal. The sensing bandwidth may be specifically defined by a protocol. Different sensing devices with same sensing bandwidth usually use different GCPs with a same length.

In another possible implementation, when there is no central management node in the sensing scenario, but when different sensing devices having the same sensing bandwidth can communicate with each other, the sensing devices may coordinate with each other through communication before sensing, to ensure that the sensing devices select different GCPs with the same length.

For example, in a V2X scenario, before performing sensing, a vehicle-mounted terminal may indicate, to a surrounding device by using a communication network, a GCP selected by the vehicle-mounted terminal. After receiving the indication, if the surrounding device needs to performing sensing, the surrounding device may select the other GCPs to reduce the interference. For example, the vehicle-mounted terminal may indicate, to the surrounding device in a broadcast or multicast manner, the GCP selected by the vehicle-mounted terminal.

In still another possible implementation, when there is no central management node in the sensing scenario, and different sensing devices cannot communicate with each other, the sensing device may monitor, before sensing, whether a sensing process performed by another device exists in an operating frequency band range of the sensing device. If the sensing process performed by the another device exists, the GCP used in the sensing process may be learned of based on a correlation operation. Subsequently, when performing a sensing process, the sensing device may select another GCP with a same length, to reduce the interference.

Optionally, when the sensing signal is a multi-carrier signal, the length of N of the GCP selected by the sensing device may adapt to the sensing bandwidth. For example, a difference between the length of N of the GCP and a target value is less than a threshold. In other words, the length of N of the GCP should be as close as possible to the target value. The target value is determined by a subcarrier spacing, the sensing bandwidth, and a resource element (resource element, RE) mapping manner.

For example, when the RE mapping manner is that one element of the GCP is mapped to an interval of M REs, the target value, the subcarrier spacing, and M satisfy the following formulas:

$$\text{Target value} = \left\lfloor \frac{W}{SCS} \right\rfloor /,$$

where

*SCS* is the subcarrier spacing, W is the sensing bandwidth, and $\lfloor \, \rfloor$ represents rounding down.

For example, when the multi-carrier waveform is a CP-OFDM waveform or a DFT-s-OFDM waveform, the sensing bandwidth and the subcarrier spacing determine a subcarrier quantity of the waveform. For example, the sensing bandwidth is 400 megahertz (MHz). When the subcarrier spacing is 240 kilohertz (KHz), the sensing bandwidth includes

$$\lfloor 400000/240 \rfloor = 1666 \text{ subcarriers in total.}$$

If 1RE mapping is selected, that is, the RE mapping manner is that one element is mapped to each RE, M is equal to 1, and 1666 subcarriers may carry a GCP with a length of 1666. In this case, if a GCP with a length of N that is equal to 32 is selected to be transmitted on subcarriers 0 to 31, or a GCP with a length of N that is equal to 64 is selected to be transmitted on subcarriers 0 to 63, and other subcarriers are padded with 0, more than 90% of the subcarriers are not used, thereby causing a waste of bandwidth resources. In addition, if the sensing process is used to measure the distance between the sensing device and the target object, because a ranging resolution is directly proportional to bandwidth occupied by the GCP, and bandwidth occupied by the GCP with a length of 32 or 64 is very small, the ranging resolution is greatly reduced. Therefore, if the 1RE mapping is selected, the length of GCP can be 1024, to adapt to the sensing bandwidth to the maximum extent.

If 2RE mapping is selected, that is, the RE mapping manner is that one element is mapped to an interval of two REs, M is equal to 2, and the target value is equal to $\lfloor 400000/240 \rfloor / 2 = 833$. In this case, a GCP with a length of 832 may be selected. When one element is mapped to the interval of two REs, the mapping may be performed at an interval of one subcarrier, and an intermediate subcarrier is padded with 0. For example, the first element is mapped on a subcarrier 0, and 0 is padded on a subcarrier 1; the second element is mapped on a subcarrier 2, and 0 is padded on a subcarrier 3; and the rest may be deduced by analogy.

Optionally, after selecting a pair of GCPs, the sensing device may generate the sensing signal based on the GCPs. In a possible implementation, when the sensing signal is a single-carrier waveform, the sensing device may generate the single-carrier waveform in a phase modulation manner based on the GCP.

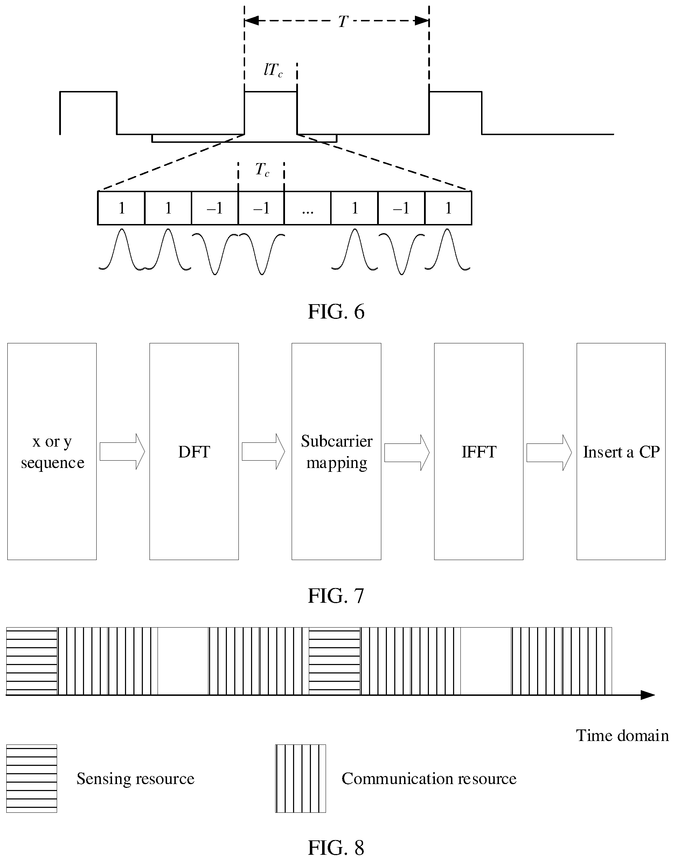

For example, a single-carrier pulse waveform is used as an example. As shown in FIG. 6, the sensing device sends narrow pulses of different phases in the phase modulation manner based on a selected GCP. Each narrow pulse corresponds to an element included in a sequence (*x* sequence or y sequence) in the GCP. For example, when an element in the sequence is 1, the sensing device sends a forward narrow pulse; when an element in the sequence is -1, the sensing device sends a reverse narrow pulse. It is assumed that the sensing bandwidth of the sensing device is W. In this case, a duration of the narrow pulse is $T_c = 1/W$. Therefore, for the GCP with a length of N, one sequence (*x* sequence or *y* sequence) is represented by a wide pulse formed by N narrow pulses, and a duration of the wide pulse is $NT_c$. When the sensing signal is generated, an element in the sequence may also be referred to as a code element.

It may be understood that the *x* sequence and the y sequence included in the GCP correspond to a wide pulse respectively. For example, in FIG. 6, the second wide pulse represents the *x* sequence, and the third wide pulse represents they sequence.

Further, the sensing device may repeatedly use the *x* sequence and the y sequence included in the GCP to generate the wide pulse. Therefore, a sensing signal of the single-carrier pulse waveform. A pulse repetition interval (pulse repetition interval, PRI) of each wide pulse is represented as *T* in FIG. 6.

In another possible implementation, when the sensing signal is a multi-carrier waveform, using the DFT-s-OFDM waveform as an example, a procedure in which the sensing device generates the multi-carrier waveform based on the GCP may be shown in FIG. 7.

With reference to FIG. 7, the sensing device performs discrete Fourier transform (discrete fourier transform, DFT) on a to-be-transmitted *x* sequence or *y* sequence, then performs subcarrier mapping according to an RE mapping rule, performs inverse fast Fourier transform (inverse fast fourier transform, IFFT) on a mapped RE, and finally inserts a cyclic prefix (cyclic prefix, CP) with a fixed length to obtain the sensing signal.

Optionally, in a joint communication and sensing (Joint communication and sensing, JCS) system, a communication system may also use the DFT-s-OFDM waveform. Therefore, to reduce interference between a sensing system and the communication system, resource multiplexing is usually performed in a time division or frequency division manner. In this application, resource multiplexing may be performed in the time division manner. To be specific, only the sensing signal in the sensing system or a communication signal in the communication system is sent at a same time domain position, and the signal sent at the time domain position occupies all bandwidth configured on a frequency domain. Based on this manner, the sensing signal may occupy all the configured bandwidth. In other words, compared with frequency division multiplexing, the bandwidth occupied by the sensing signal may be increased, thereby improving the ranging resolution of the sensing system.

For example, as shown in FIG. 8, each rectangle may represent one DFT-s-OFDM symbol (namely, a time domain resource). A rectangle filled with horizontal lines represents a DFT-s-OFDM symbol (which may also be referred to as a sensing resource) used for the sensing system, and a rectangle filled with vertical lines represents a DFT-s-OFDM symbol (which may also be referred to as a communication resource) used for the communication system. One sequence in the GCP may be sent on each DFT-s-OFDM symbol used for the sensing system. Therefore, based on resource allocation shown in FIG. 8, the sensing device may send one sequence in the GCP on the first DFT-s-OFDM symbol used for the sensing system, and send another sequence in the GCP on the second DFT-s-OFDM symbol used for the sensing system.

Optionally, when resource multiplexing is performed in the time division manner, a specific multiplexing manner or a resource allocation manner may be implemented by a transport layer protocol or a network layer protocol. For example, a plurality of consecutive DFT-s-OFDM symbols may be used for the sensing system, and other symbols may be used for the communication system; or a plurality of DFT-s-OFDM symbols allocated to the sensing system may be inconsecutive, as shown in FIG. 8. A multiplexing manner is not specifically limited in this application.

It should be noted that the multi-carrier waveform is not limited to a DFT-s-OFDM waveform in this application. When the multi-carrier waveform is in another form, refer to implementation of the DFT-s-OFDM waveform provided in this application.

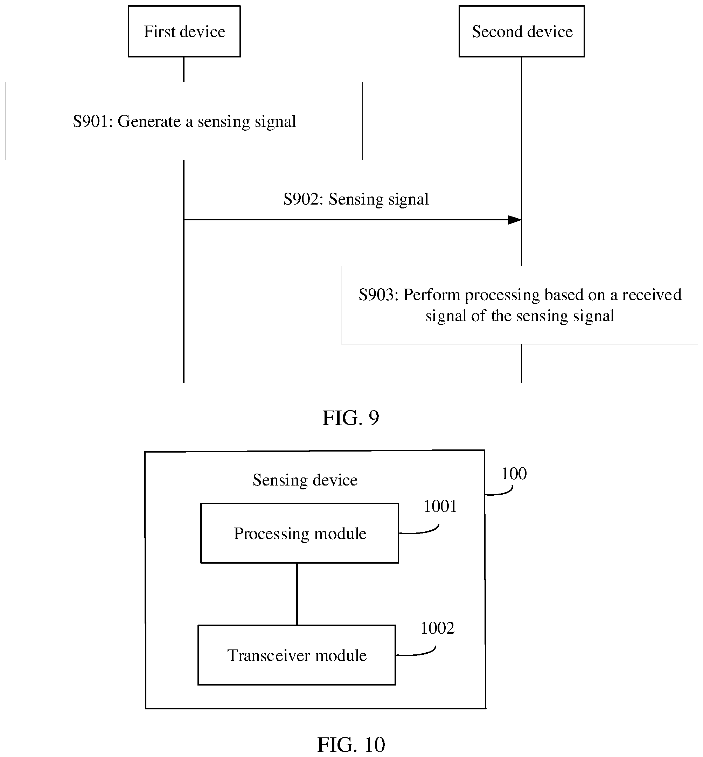

In the embodiment shown in FIG. 5, the sensing device performs sensing through self-sending and self-receiving. In some embodiments, the embodiment shown in FIG. 5 may be properly changed to form a new method to implement sensing between different devices. For example, as shown in FIG. 9, the method may include the following steps.

S901: A first device generates a sensing signal.

For a generation manner of the sensing signal and GCP selection, refer to related descriptions in the embodiment shown in FIG. 5. Details are not described herein again.

S902: The first device sends the sensing signal to a second device. Correspondingly, the second device receives a signal.

It may be understood that, after the sensing signal is transmitted through a channel, the signal received by the second device is not the sensing signal sent by the first device. In this application, the signal received by the second device is denoted as a received signal, and the received signal is a signal obtained after the sensing signal is transmitted through the channel.

S903: The second device performs processing based on the received signal.

Optionally, the second device may sense a distance between the second device and the first device based on the received signal. For example, the second device may perform an aperiodic autocorrelation operation on a GCP used to generate the sensing signal and a GCP corresponding to the received signal, to determine the distance between the second device and the first device based on a result of the autocorrelation operation. For specific implementation, refer to related descriptions in step S503. Details are not described herein again.

Optionally, before step S903, the first device may indicate, to the second device, the GCP used to generate the sensing signal, so that the second device performs the aperiodic autocorrelation operation.

Optionally, in the embodiment shown in FIG. 9, the first device may generate and send the sensing signal based on a request of the second device. For example, when the second device needs to obtain the distance between the second device and the first device, the second device may send request information to the first device, to request the first device to send the sensing signal, so that the second device performs sensing.

Alternatively, the first device may actively send the sensing signal to the second device. In this scenario, the second device may send a processing result (for example, the distance between the first device and the second device) to the first device after step S903.

The foregoing mainly describes an example in which the GCP provided in this application is used for sensing. It may be understood that the GCP provided in this application may be further applied to another procedure. This is not limited.

It may be understood that, in the foregoing embodiments, the methods and/or steps implemented by the sensing device may also be implemented by a component (for example, a processor, a chip, a chip system, a circuit, a logic module, or software such as a chip or a circuit) that can be used in the sensing device.

The foregoing mainly describes the solutions provided in this application from a perspective of a device. Correspondingly, this application further provides a communication apparatus, and the communication apparatus is configured to implement the foregoing methods. The communication apparatus may be the sensing device in the foregoing method embodiments, or an apparatus including the foregoing sensing device, or a component that can be used for the sensing device.

It may be understood that to implement the foregoing functions, the communication apparatus includes a hardware structure and/or a software module for performing a corresponding function. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, division into modules is an example, and is merely a logical function division. During actual implementation, another division manner may be used.

In an implementation scenario, an example in which the communication apparatus is the sensing device in the foregoing method embodiment is used. FIG. 10 shows a schematic diagram of a structure of a sensing device 100. The sensing device 100 includes a processing module 1001 and a transceiver module 1002.

In some embodiments, the sensing device 100 may further include a storage module (not shown in FIG. 10), configured to store program instructions and data.

In some embodiments, the transceiver module 1002 may also be referred to as a transceiver unit, and is configured to implement a sending function and/or a receiving function. The transceiver module 1002 may include a transceiver circuit, a transceiver, or a communication interface.

In some embodiments, the transceiver module 1002 may include a receiving module and a sending module, respectively configured to perform receiving-type steps and sending-type steps performed by the sensing device in the foregoing method embodiments, and/or configured to support another process of the technology described in this specification; and the processing module 1001 may be configured to perform processing-type (for example, determining, obtaining and generating) steps performed by the sensing device in the foregoing method embodiments, and/or configured to support another process of the technology described in this specification.

The transceiver module 1002 is configured to send a sensing signal. The transceiver module 1002 is further configured to receive an echo signal of the sensing signal. The processing module 1001 is configured to perform processing based on the echo signal. The sensing signal is generated based on a GCP with a length of N, where N is greater than or equal to 32.

When N is equal to 32, 64, 128, 256, 512, or 1024, one sequence in the GCP used to generate the sensing signal is $(-1)^{a(x)}$, and another sequence is $(-1)^{b(x)}$, where $a(x) = f(x) + d_1$, $b(x) = f(x) + x_\pi[0] + d_2$ and

$$f(x) = \sum_{k=0}^{m-2} x_\pi[k]x_\pi[k+1] + \sum_{k=0}^{m-1} c[k]x[k], \ 2^m = N.$$

When N is equal to 160, 320, 640, or 832, the GCP used to generate the sensing signal is a direct product of a first GCP and a second GCP, a length of the first GCP is $N_1$, a length of the second GCP is $N_2$, and $N_1 \times N_2 = N$, where one sequence in the first GCP is $(-1)^{a(x)}$, another sequence is $(-1)^{b(x)}$, $a(x) = f(x) + d_1$, $b(x) = f(x) + x_\pi[0] + d_2$, $f(x)$

$$= \sum_{k=0}^{l-2} x_\pi[k]x_\pi[k+1] + \sum_{k=0}^{l-1} c[k]x[k], \ 2^l = N_1$$ and the second GCP is any one of the following:

$$x_1 = 1, 1, -1, 1, -1, 1, -1, -1, 1, 1;$$

and

$$y_1 = 1, 1, -1, 1, 1, 1, 1, 1, -1, -1;$$

or

$$x_2 = 1, 1, 1, 1, 1, -1, 1, -1, -1, 1;$$

and

$$y_2 = 1, 1, -1, -1, 1, 1, 1, -1, 1, -1;$$

or

$$x_3 = 1, 1, 1, 1, -1, 1, -1, -1, -1, 1, 1, -1, -1, 1, 1, -1, 1, -1, -1, 1;$$

and

$$y_3 = 1, 1, 1, 1, -1, 1, 1, 1, 1, 1, -1, -1, -1, 1, -1, 1, -1, 1, 1, -1;$$

or

$$x_4 = 1, 1, 1, 1, -1, 1, 1, -1, -1, 1, -1, 1, -1, 1, -1, -1, 1, -1, 1, 1, 1, -1, -1, 1, 1, 1;$$

and

$$y_4 = 1, 1, 1, 1, -1, 1, 1, -1, -1, 1, -1, 1, 1, 1, 1, 1, -1, 1, -1, -1, -1, 1, 1, -1, -1, -1.$$

Optionally, the sensing signal may be a single-carrier signal or a multi-carrier signal. When the sensing signal is a multi-carrier signal, a difference between the length of N of the GCP and a target value is less than a threshold, and the target value is determined based on a subcarrier spacing, sensing bandwidth, and a resource element RE mapping manner.

Optionally, the RE mapping manner is that one element of the GCP is mapped to an interval of M REs, and the target value, the subcarrier spacing, the sensing bandwidth, and M satisfy the following formula:

$$\text{Target value} = \left\lfloor \frac{W}{SCS} \right\rfloor /,$$

where

$SCS$ is the subcarrier spacing, $W$ is the sensing bandwidth, and $\lfloor \ \rfloor$ represents rounding down.

Optionally, that the processing module 1001 is configured to perform processing based on the echo signal includes: The processing module 1001 is configured to sense a distance of a target object based on the echo signal. The target object is an object that reflects the sensing signal, to form the echo signal.

Optionally, that the processing module 1001 is configured to sense a distance of a target object based on the echo signal includes: The processing module 1001 is configured to perform an aperiodic autocorrelation operation on the GCP that generates the sensing signal and a GCP corresponding to the echo signal. The processing module 1001 is further configured to determine a signal propagation delay between the sensing device and the target object based on a result of the aperiodic autocorrelation operation. The processing module 1001 is further configured to determine a distance of the target object based on the signal propagation delay.

All related content of each step involved in the foregoing method embodiments may be referenced to function descriptions of a corresponding functional module. Details are not described herein again.

In this application, the sensing device 100 is presented with the functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In a possible product form, a person skilled in the art may figure out that the sensing device 100 may be in a form of communication apparatus 400 shown in FIG. 4.

In an example, the function/an implementation process of the processing module 1001 in FIG. 10 may be implemented by the processor 401 in the communication apparatus 400 shown in FIG. 4 by invoking the computer-executable instructions stored in the memory 403; and the function/an implementation process of the transceiver module 1002 in FIG. 10 may be implemented by using the communication interface 404 in the communication apparatus 400 shown in FIG. 4.

In another possible product form, the sensing device described in embodiments of this application may be further implemented through the following: one or more field programmable gate arrays (field programmable gate arrays, FPGAs), a programmable logic device (programmable logic device, PLD), a controller, a state machine, gate logic, a discrete hardware component, any other suitable circuitry, or any combination of circuits capable of performing various functions described throughout this application.

In some embodiments, when the sensing device 100 in FIG. 10 is a chip or a chip system, the function/ the implementation process of the transceiver module 1002 may be implemented by an input/output interface (or a communication interface) of the chip or the chip system, and the function/the implementation process of the processing module 1001 may be implemented by a processor (or a processing circuit) of the chip or the chip system.

The sensing device 100 provided in this embodiment may perform the methods. Therefore, for technical effects that can be achieved by the sensing device 100, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to indicate the communication apparatus to perform the method in any one of the foregoing method embodiments. Certainly, the memory may not be in the communication apparatus.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another device) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores computer programs or instructions. When the computer programs or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. Indirect couplings or communication connections between the apparatuses or units may be implemented in electrical, mechanical, or other forms.

The units described as separate parts may be physically separated or not, this is, may be located together in the same place or distributed on a plurality of network units. Parts displayed as units may be or may be not physical units. Some or all of the units may be selected based on an actual requirement, to achieve the objectives of the solutions of this embodiment.

In addition, functional units in embodiments of this application may be integrated into one processing unit, or each of the units may exist alone physically, or two or more units may be integrated into one unit.

All or some of the foregoing embodiments may be implemented by software, hardware, firmware, or any combination thereof. When a software program is used to implement the foregoing embodiments, the foregoing embodiments may be implemented completely or partially in a form of computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any available medium accessible by a computer, or include one or more data storage devices such as a server and a data center that can be integrated with a medium. The available medium may be a magnetic medium

(for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and the appended claims. In the claims, the word "comprising" (comprising) does not exclude another component or another step, and "a" or "one" does not exclude a case of a plurality of objects. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A device sensing method, wherein the method comprises:

   sending a sensing signal, wherein the sensing signal is generated based on a Golay complementary pair GCP with a length of N, and N is greater than or equal to 32;
   receiving an echo signal of the sensing signal; and
   performing processing based on the echo signal, wherein
   when N is equal to 128, parameters used to generate the GCP are any one of the following groups:

   $x_\pi$ =[0, 1, 2, 3, 4, 5, 6], $c$ =[1, 0, 0, 0, 0, 0, 0], $d_1$ =0, $d_2$ =0;
   $x_\pi$ =[0, 1, 2, 3, 4, 5, 6], $c$ =[1, 0, 0, 0, 0, 0, 1], $d_1$ =0, $d_2$ =0;
   $x_\pi$ =[0, 1, 2, 4, 3, 6, 5], $c$ =[0, 1, 1, 0, 1, 0, 0], $d_1$ =0, $d_2$ =0;
   $x_\pi$ =[0, 1, 2, 4, 3, 6, 5], $c$ =[0, 1, 1, 0, 1, 1, 0], $d_1$ =0, $d_2$ =0;
   $x_\pi$ =[0, 1, 2, 4, 5, 3, 6], $c$ =[0, 0, 1, 0, 1, 0, 0], $d_1$ =0, $d_2$ =1;
   $x_\pi$ =[0, 1, 2, 4, 5, 3, 6], $c$ =[0, 0, 1, 0, 1, 0, 1], $d_1$ =0, $d_2$ =1;
   $x_\pi$ =[0, 1, 2, 4, 5, 3, 6], $c$ =[1, 0, 1, 0, 1, 0, 0], $d_1$ =0, $d_2$ =1;
   $x_\pi$ =[0, 1, 2, 4, 5, 3, 6], $c$ =[1, 0, 1, 0, 1, 0, 1], $d_1$ =0, $d_2$ =1;
   $x_\pi$ =[0, 1, 2, 3, 4, 5, 6], $c$ =[1, 0, 0, 0, 0, 0, 0], $d_1$ =0, $d_2$ =1;
   $x_\pi$ =[0, 1, 2, 3, 4, 5, 6], $c$ =[1, 0, 0, 0, 0, 0, 1], $d_1$ =0, $d_2$ =1;
   $x_\pi$ =[0, 1, 2, 4, 3, 6, 5], $c$ =[0, 1, 1, 0, 1, 0, 0], $d_1$ =0, $d_2$ =1;
   $x_\pi$ =[0, 1, 2, 4, 3, 6, 5], $c$ =[0, 1, 1, 0, 1, 1, 0], $d_1$ =0, $d_2$ =1;
   $x_\pi$ =[0, 1, 2, 4, 5, 3, 6], $c$ =[0, 0, 1, 0, 1, 0, 0], $d_1$ =0, $d_2$ =0;
   $x_\pi$ =[0, 1, 2, 4, 5, 3, 6], $c$ =[0, 0, 1, 0, 1, 0, 1], $d_1$ =0, $d_2$ =0;
   $x_\pi$ =[0, 1, 2, 4, 5, 3, 6], $c$ =[1, 0, 1, 0, 1, 0, 0], $d_1$ =0, $d_2$ =0;
   $x_\pi$ =[0, 1, 2, 4, 5, 3, 6], $c$ =[1, 0, 1, 0, 1, 0, 1], $d_1$ =0, $d_2$ =0;
   $x_\pi$ =[0, 1, 2, 3, 4, 5, 6], $c$ =[0, 0, 0, 0, 0, 0, 0], $d_1$ =0, $d_2$ =0;
   $x_\pi$ =[0, 1, 2, 3, 4, 5, 6], $c$ =[0, 0, 0, 0, 0, 0, 1], $d_1$ =0, $d_2$ =0;
   $x_\pi$ =[0, 1, 2, 3, 4, 5, 6], $c$ =[0, 0, 0, 0, 0, 0, 0], $d_1$ =0, $d_2$ =1;
   $x_\pi$ =[0, 1, 2, 3, 4, 5, 6], $c$ =[0, 0, 0, 0, 0, 0, 1], $d_1$ =0, $d_2$ =1;
   $x_\pi$ =[0, 1, 2, 3, 4, 6, 5], $c$ =[0, 1, 0, 0, 1, 0, 0], $d_1$ =0, $d_2$ =0;
   $x_\pi$ =[0, 1, 2, 3, 4, 6, 5], $c$ =[0, 1, 0, 0, 1, 1, 0], $d_1$ =0, $d_2$ =0;
   $x_\pi$ =[0, 1, 2, 3, 4, 6, 5], $c$ =[0, 1, 0, 0, 1, 0, 0], $d_1$ =0, $d_2$ =1;
   $x_\pi$ =[0, 1, 2, 3, 4, 6, 5], $c$ =[0, 1, 0, 0, 1, 1, 0], $d_1$ =0, $d_2$ =1;
   $x_\pi$ =[0, 1, 2, 3, 4, 6, 5], $c$ =[1, 1, 1, 0, 1, 0, 1], $d_1$ =0, $d_2$ =0;
   $x_\pi$ =[0, 1, 2, 3, 4, 6, 5], $c$ =[1, 1, 1, 0, 1, 1, 1], $d_1$ =0, $d_2$ =0;
   $x_\pi$ =[0, 1, 2, 3, 4, 6, 5], $c$ =[1, 1, 1, 0, 1, 0, 1], $d_1$ =0, $d_2$ =1;
   $x_\pi$ =[0, 1, 2, 3, 4, 6, 5], $c$ =[1, 1, 1, 0, 1, 1, 1], $d_1$ =0, $d_2$ =1;

$x_\pi$ =[0, 1, 2, 4, 3, 5, 6], $c$ =[1, 1, 0, 1, 1, 1, 0], $d_1$ =0, $d_2$ =0;
$x_\pi$ =[0, 1, 2, 4, 3, 5, 6], $c$ =[1, 1, 0, 1, 1, 1, 1], $d_1$ =0, $d_2$ =0;
$x_\pi$ =[0, 1, 2, 4, 3, 5, 6], $c$ =[1, 1, 0, 1, 1, 1, 0], $d_1$ =0, $d_2$ =1;
$x_\pi$ =[0, 1, 2, 4, 3, 5, 6], $c$ =[1, 1, 0, 1, 1, 1, 1], $d_1$ =0, $d_2$ =1;
$x_\pi$ =[0, 1, 2, 4, 6, 3, 5], $c$ =[0, 0, 1, 1, 0, 0, 0], $d_1$ =0, $d_2$ =0;
$x_\pi$ =[0, 1, 2, 4, 6, 3, 5], $c$ =[0, 0, 1, 1, 0, 1, 0], $d_1$ =0, $d_2$ =0;
$x_\pi$ =[0, 1, 2, 4, 6, 3, 5], $c$ =[0, 0, 1, 1, 0, 0, 0], $d_1$ =0, $d_2$ =1;
$x_\pi$ =[0, 1, 2, 4, 6, 3, 5], $c$ =[0, 0, 1, 1, 0, 1, 0], $d_1$ =0, $d_2$ =1;
$x_\pi$ =[0, 1, 2, 4, 6, 3, 5], $c$ =[1, 0, 1, 1, 0, 0, 0], $d_1$ =0, $d_2$ =0;
$x_\pi$ =[0, 1, 2, 4, 6, 3, 5], $c$ =[1, 0, 1, 1, 0, 1, 0], $d_1$ =0, $d_2$ =0;
$x_\pi$ =[0, 1, 2, 4, 6, 3, 5], $c$ =[1, 0, 1, 1, 0, 0, 0], $d_1$ =0, $d_2$ =0; or
$x_\pi$ =[0, 1, 2, 4, 6, 3, 5], $c$ =[1, 0, 1, 1, 0, 1, 0], $d_1$ =0, $d_2$ =0.

2. The method according to claim 1, wherein when N is equal to 64, the parameters used to generate the GCP are any one of the following groups:

$x_\pi$ =[0, 1, 2, 3, 4, 5], $c$ =[0, 0, 0, 0, 0, 0], $d_1$ =0, $d_2$ =1;
$x_\pi$ =[0, 1, 2, 3, 4, 5], $c$ =[0, 0, 0, 0, 0, 1], $d_1$ =0, $d_2$ =1;
$x_\pi$ =[0, 2, 4, 3, 1, 5], $c$ =[1, 0, 0, 0, 0, 0], $d_1$ =0, $d_2$ =1;
$x_\pi$ =[0, 2, 4, 3, 1, 5], $c$ =[1, 0, 0, 0, 0, 1], $d_1$ =0, $d_2$ =1;
$x_\pi$ =[0, 3, 5, 2, 1, 4], $c$ =[0, 0, 1, 1, 0, 1], $d_1$ =0, $d_2$ =0;
$x_\pi$ =[0, 3, 5, 2, 1, 4], $c$ =[0, 0, 1, 1, 1, 1], $d_1$ =0, $d_2$ =0;
$x_\pi$ =[0, 1, 3, 2, 4, 5], $c$ =[1, 0, 1, 1, 1, 0], $d_1$ =0, $d_2$ =1;
$x_\pi$ =[0, 1, 3, 2, 4, 5], $c$ =[1, 0, 1, 1, 1, 1], $d_1$ =0, $d_2$ =1;
$x_\pi$ =[0, 2, 1, 3, 5, 4], $c$ =[0, 0, 1, 0, 0, 0], $d_1$ =0, $d_2$ =1;
$x_\pi$ =[0, 2, 1, 3, 5, 4], $c$ =[0, 0, 1, 0, 1, 0], $d_1$ =0, $d_2$ =1;
$x_\pi$ =[0, 3, 2, 1, 5, 4], $c$ =[0, 0, 0, 1, 0, 0], $d_1$ =0, $d_2$ =0;
$x_\pi$ =[0, 3, 2, 1, 5, 4], $c$ =[0, 0, 0, 1, 1, 0], $d_1$ =0, $d_2$ =0;
$x_\pi$ =[0, 1, 2, 3, 4, 5], $c$ =[0, 0, 0, 0, 0, 0], $d_1$ =0, $d_2$ =0;
$x_\pi$ =[0, 1, 2, 3, 4, 5], $c$ =[0, 0, 0, 0, 0, 1], $d_1$ =0, $d_2$ =0;
$x_\pi$ =[0, 1, 2, 3, 5, 4], $c$ =[1, 0, 0, 1, 0, 0], $d_1$ =0, $d_2$ =0;
$x_\pi$ =[0, 1, 2, 3, 5, 4], $c$ =[1, 0, 0, 1, 1, 0], $d_1$ =0, $d_2$ =0;
$x_\pi$ =[0, 1, 2, 3, 5, 4], $c$ =[1, 1, 0, 1, 0, 1], $d_1$ =0, $d_2$ =1;
$x_\pi$ =[0, 1, 2, 3, 5, 4], $c$ =[1, 1, 0, 1, 1, 1], $d_1$ =0, $d_2$ =1;
$x_\pi$ =[0, 1, 2, 4, 3, 5], $c$ =[0, 1, 0, 0, 1, 0], $d_1$ =0, $d_2$ =0;
$x_\pi$ =[0, 1, 2, 4, 3, 5], $c$ =[0, 1, 0, 0, 1, 1], $d_1$ =0, $d_2$ =0;
$x_\pi$ =[0, 1, 3, 2, 5, 4], $c$ =[1, 1, 0, 1, 0, 0], $d_1$ =0, $d_2$ =0;
$x_\pi$ =[0, 1, 3, 2, 5, 4], $c$ =[1, 1, 0, 1, 1, 0], $d_1$ =0, $d_2$ =0;
$x_\pi$ =[0, 1, 3, 4, 2, 5], $c$ =[0, 1, 0, 1, 0, 0], $d_1$ =0, $d_2$ =1;
$x_\pi$ =[0, 1, 3, 4, 2, 5], $c$ =[0, 1, 0, 1, 0, 1], $d_1$ =0, $d_2$ =1;
$x_\pi$ =[0, 1, 3, 5, 2, 4], $c$ =[0, 1, 1, 0, 0, 0], $d_1$ =0, $d_2$ =1;
$x_\pi$ =[0, 1, 3, 5, 2, 4], $c$ =[0, 1, 1, 0, 1, 0], $d_1$ =0, $d_2$ =1;
$x_\pi$ =[0, 2, 1, 3, 4, 5], $c$ =[0, 0, 1, 1, 0, 0], $d_1$ =0, $d_2$ =0;
$x_\pi$ =[0, 2, 1, 3, 4, 5], $c$ =[0, 0, 1, 1, 0, 1], $d_1$ =0, $d_2$ =0;
$x_\pi$ =[0, 2, 1, 4, 3, 5], $c$ =[0, 1, 0, 0, 0, 0], $d_1$ =0, $d_2$ =0;
$x_\pi$ =[0, 2, 1, 4, 3, 5], $c$ =[0, 1, 0, 0, 0, 1], $d_1$ =0, $d_2$ =0;
$x_\pi$ =[0, 2, 3, 1, 4, 5], $c$ =[0, 1, 1, 0, 1, 0], $d_1$ =0, $d_2$ =1;
$x_\pi$ =[0, 2, 3, 1, 4, 5], $c$ =[0, 1, 1, 0, 1, 1], $d_1$ =0, $d_2$ =1;
$x_\pi$ =[0, 2, 3, 1, 4, 5], $c$ =[1, 1, 0, 0, 0, 0], $d_1$ =0, $d_2$ =1;
$x_\pi$ =[0, 2, 3, 1, 4, 5], $c$ =[1, 1, 0, 0, 0, 1], $d_1$ =0, $d_2$ =1;
$x_\pi$ =[0, 2, 3, 4, 5, 1], $c$ =[1, 0, 0, 1, 1, 0], $d_1$ =0, $d_2$ =0;
$x_\pi$ =[0, 2, 3, 4, 5, 1], $c$ =[1, 1, 0, 1, 1, 0], $d_1$ =0, $d_2$ =0;
$x_\pi$ =[0, 3, 1, 4, 5, 2], $c$ =[0, 1, 0, 1, 1, 0], $d_1$ =0, $d_2$ =0;
$x_\pi$ =[0, 3, 1, 4, 5, 2], $c$ =[0, 1, 1, 1, 1, 0], $d_1$ =0, $d_2$ =0;
$x_\pi$ =[1, 0, 2, 3, 4, 5], $c$ =[0, 1, 0, 0, 0, 0], $d_1$ =0, $d_2$ =1; or
$x_\pi$ =[1, 0, 2, 3, 4, 5], $c$ =[0, 1, 0, 0, 0, 1], $d_1$ =0, $d_2$ =1.

3. The method according to claim 1 or 2, wherein when N is equal to 32, the parameters used to generate the GCP are any one of the following groups:

$x_\pi$ =[0, 1, 3, 2, 4], $c$ =[1, 0, 0, 0, 0], $d_1$ =0, $d_2$ =0;
$x_\pi$ =[0, 1, 3, 2, 4], $c$ =[1, 0, 0, 0, 1], $d_1$ =0, $d_2$ =0;
$x_\pi$ =[0, 2, 1, 3, 4], $c$ =[0, 1, 0, 1, 0], $d_1$ =0, $d_2$ =1;
$x_\pi$ =[0, 2, 1, 3, 4], $c$ =[0, 1, 0, 1, 1], $d_1$ =0, $d_2$ =1;
$x_\pi$ =[2, 1, 3, 0, 4], $c$ =[1, 1, 1, 1, 0], $d_1$ =0, $d_2$ =1;
$x_\pi$ =[2, 1, 3, 0, 4], $c$ =[1, 1, 1, 1, 1], $d_1$ =0, $d_2$ =1;
$x_\pi$ =[0, 1, 3, 2, 4], $c$ =[0, 0, 1, 0, 0], $d_1$ =0, $d_2$ =0;
$x_\pi$ =[0, 1, 3, 2, 4], $c$ =[0, 0, 1, 0, 1], $d_1$ =0, $d_2$ =0;
$x_\pi$ =[0, 1, 3, 2, 4], $c$ =[0, 0, 1, 1, 0], $d_1$ =0, $d_2$ =1;
$x_\pi$ =[0, 1, 3, 2, 4], $c$ =[0, 0, 1, 1, 1], $d_1$ =0, $d_2$ =1;
$x_\pi$ =[0, 1, 3, 2, 4], $c$ =[1, 0, 0, 1, 0], $d_1$ =0, $d_2$ =1;
$x_\pi$ =[0, 1, 3, 2, 4], $c$ =[1, 0, 0, 1, 1], $d_1$ =0, $d_2$ =1;
$x_\pi$ =[0, 2, 1, 3, 4], $c$ =[0, 0, 0, 0, 0], $d_1$ =0, $d_2$ =0;
$x_\pi$ =[0, 2, 1, 3, 4], $c$ =[0, 0, 0, 0, 1], $d_1$ =0, $d_2$ =0;
$x_\pi$ =[1, 2, 0, 3, 4], $c$ =[0, 0, 1, 1, 0], $d_1$ =0, $d_2$ =1;
$x_\pi$ =[1, 2, 0, 3, 4], $c$ =[0, 0, 1, 1, 1], $d_1$ =0, $d_2$ =1;
$x_\pi$ =[0, 3, 2, 1, 4], $c$ =[1, 1, 1, 1, 0], $d_1$ =0, $d_2$ =0;
$x_\pi$ =[0, 3, 2, 1, 4], $c$ =[1, 1, 1, 1, 1], $d_1$ =0, $d_2$ =0;
$x_\pi$ =[1, 0, 2, 3, 4], $c$ =[0, 0, 0, 0, 0], $d_1$ =0, $d_2$ =1;
$x_\pi$ =[1, 0, 2, 3, 4], $c$ =[0, 0, 0, 0, 1], $d_1$ =0, $d_2$ =1;
$x_\pi$ =[1, 3, 0, 2, 4], $c$ =[0, 1, 0, 1, 0], $d_1$ =0, $d_2$ =1;
$x_\pi$ =[1, 3, 0, 2, 4], $c$ =[0, 1, 0, 1, 1], $d_1$ =0, $d_2$ =1;
$x_\pi$ =[1, 3, 0, 2, 4], $c$ =[1, 1, 1, 1, 0], $d_1$ =0, $d_2$ =0;
$x_\pi$ =[1, 3, 0, 2, 4], $c$ =[1, 1, 1, 1, 1], $d_1$ =0, $d_2$ =0;
$x_\pi$ =[2, 0, 3, 1, 4], $c$ =[0, 0, 0, 0, 0], $d_1$ =0, $d_2$ =0;
$x_\pi$ =[2, 0, 3, 1, 4], $c$ =[0, 0, 0, 0, 1], $d_1$ =0, $d_2$ =0;
$x_\pi$ =[2, 1, 0, 3, 4], $c$ =[1, 1, 1, 1, 0], $d_1$ =0, $d_2$ =0;
$x_\pi$ =[2, 1, 0, 3, 4], $c$ =[1, 1, 1, 1, 1], $d_1$ =0, $d_2$ =0;
$x_\pi$ =[3, 0, 1, 2, 4], $c$ =[0, 1, 0, 0, 0], $d_1$ =0, $d_2$ =0;
$x_\pi$ =[3, 0, 1, 2, 4], $c$ =[0, 1, 0, 0, 1], $d_1$ =0, $d_2$ =0;
$x_\pi$ =[3, 2, 0, 1, 4], $c$ =[0, 0, 1, 0, 0], $d_1$ =0, $d_2$ =0; or
$x_\pi$ =[3, 2, 0, 1, 4], $c$ =[0, 0, 1, 0, 1], $d_1$ =0, $d_2$ =0.

4. The method according to any one of claims 1 to 3, wherein when N is equal to 256, the parameters used to generate the GCP are any one of the following groups:

$x_\pi$ =[0, 1, 2, 3, 4, 5, 6, 7], $c$ =[0, 0, 0, 0, 0, 0, 0, 0], $d_1$ =0, $d_2$ =0;
$x_\pi$ =[0, 1, 2, 3, 4, 5, 6, 7], $c$ =[0, 0, 0, 0, 0, 0, 0, 1], $d_1$ =0, $d_2$ =0;
$x_\pi$ =[0, 1, 2, 3, 5, 4, 7, 6], $c$ =[1, 1, 0, 0, 0, 0, 0, 0], $d_1$ =0, $d_2$ =0;
$x_\pi$ =[0, 1, 2, 3, 5, 4, 7, 6], $c$ =[1, 1, 0, 0, 0, 0, 1, 0], $d_1$ =0, $d_2$ =0;
$x_\pi$ =[0, 1, 2, 3, 6, 4, 5, 7], $c$ =[1, 1, 1, 0, 1, 0, 1, 0], $d_1$ =0, $d_2$ =1;
$x_\pi$ =[0, 1, 2, 3, 6, 4, 5, 7], $c$ =[1, 1, 1, 0, 1, 0, 1, 1], $d_1$ =0, $d_2$ =1;
$x_\pi$ =[0, 1, 2, 4, 6, 5, 3, 7], $c$ =[0, 0, 0, 0, 0, 1, 0, 0], $d_1$ =0, $d_2$ =1;
$x_\pi$ =[0, 1, 2, 4, 6, 5, 3, 7], $c$ =[0, 0, 0, 0, 0, 1, 0, 1], $d_1$ =0, $d_2$ =1;
$x_\pi$ =[0, 1, 2, 3, 4, 5, 6, 7], $c$ =[0, 1, 1, 0, 0, 1, 1, 0], $d_1$ =0, $d_2$ =0;
$x_\pi$ =[0, 1, 2, 3, 4, 5, 6, 7], $c$ =[0, 1, 1, 0, 0, 1, 1, 1], $d_1$ =0, $d_2$ =0;
$x_\pi$ =[0, 1, 2, 3, 4, 6, 5, 7], $c$ =[0, 1, 0, 1, 0, 0, 1, 0], $d_1$ =0, $d_2$ =1;
$x_\pi$ =[0, 1, 2, 3, 4, 6, 5, 7], $c$ =[0, 1, 0, 1, 0, 0, 1, 1], $d_1$ =0, $d_2$ =1;
$x_\pi$ =[0, 1, 2, 3, 5, 4, 7, 6], $c$ =[1, 1, 0, 0, 0, 0, 0, 0], $d_1$ =0, $d_2$ =1;
$x_\pi$ =[0, 1, 2, 3, 5, 4, 7, 6], $c$ =[1, 1, 0, 0, 0, 0, 1, 0], $d_1$ =0, $d_2$ =1;
$x_\pi$ =[0, 1, 2, 4, 6, 5, 3, 7], $c$ =[1, 0, 0, 1, 1, 1, 1, 0], $d_1$ =0, $d_2$ =0;
$x_\pi$ =[0, 1, 2, 4, 6, 5, 3, 7], $c$ =[1, 0, 0, 1, 1, 1, 1, 1], $d_1$ =0, $d_2$ =0;
$x_\pi$ =[0, 1, 2, 3, 4, 5, 6, 7], $c$ =[0, 1, 1, 0, 0, 1, 1, 0], $d_1$ =0, $d_2$ =1;
$x_\pi$ =[0, 1, 2, 3, 4, 5, 6, 7], $c$ =[0, 1, 1, 0, 0, 1, 1, 1], $d_1$ =0, $d_2$ =1;
$x_\pi$ =[0, 1, 2, 3, 4, 6, 5, 7], $c$ =[0, 1, 0, 1, 0, 0, 1, 0], $d_1$ =0, $d_2$ =0;
$x_\pi$ =[0, 1, 2, 3, 4, 6, 5, 7], $c$ =[0, 1, 0, 1, 0, 0, 1, 1], $d_1$ =0, $d_2$ =0;

$x_\pi$ =[0, 1, 2, 3, 6, 4, 5, 7], $c$ =[1, 1, 1, 0, 1, 0, 1, 0], $d_1$ =0, $d_2$ =0;
$x_\pi$ =[0, 1, 2, 3, 6, 4, 5, 7], $c$ =[1, 1, 1, 0, 1, 0, 1, 1], $d_1$ =0, $d_2$ =0;
$x_\pi$ =[0, 1, 2, 4, 6, 5, 3, 7], $c$ =[1, 0, 0, 1, 1, 1, 1, 0], $d_1$ =0, $d_2$ =1;
$x_\pi$ =[0, 1, 2, 4, 6, 5, 3, 7], $c$ =[1, 0, 0, 1, 1, 1, 1, 1], $d_1$ =0, $d_2$ =1;
$x_\pi$ =[0, 1, 2, 3, 4, 6, 5, 7], $c$ =[1, 0, 1, 1, 1, 0, 0, 0], $d_1$ =0, $d_2$ =0;
$x_\pi$ =[0, 1, 2, 3, 4, 6, 5, 7], $c$ =[1, 0, 1, 1, 1, 0, 0, 1], $d_1$ =0, $d_2$ =0;
$x_\pi$ =[0, 1, 2, 3, 4, 6, 5, 7], $c$ =[1, 0, 1, 1, 1, 0, 0, 0], $d_1$ =0, $d_2$ =1;
$x_\pi$ =[0, 1, 2, 3, 4, 6, 5, 7], $c$ =[1, 0, 1, 1, 1, 0, 0, 1], $d_1$ =0, $d_2$ =1;
$x_\pi$ =[0, 1, 2, 3, 5, 4, 6, 7], $c$ =[0, 0, 1, 1, 1, 1, 1, 0], $d_1$ =0, $d_2$ =1;
$x_\pi$ =[0, 1, 2, 3, 5, 4, 6, 7], $c$ =[0, 0, 1, 1, 1, 1, 1, 1], $d_1$ =0, $d_2$ =1;
$x_\pi$ =[0, 1, 2, 4, 6, 5, 3, 7], $c$ =[0, 0, 0, 0, 0, 1, 0, 0], $d_1$ =0, $d_2$ =0;
$x_\pi$ =[0, 1, 2, 4, 6, 5, 3, 7], $c$ =[0, 0, 0, 0, 0, 1, 0, 1], $d_1$ =0, $d_2$ =0;
$x_\pi$ =[0, 1, 2, 3, 4, 5, 6, 7], $c$ =[0, 0, 0, 0, 0, 0, 0, 0], $d_1$ =0, $d_2$ =1;
$x_\pi$ =[0, 1, 2, 3, 4, 5, 6, 7], $c$ =[0, 0, 0, 0, 0, 0, 0, 1], $d_1$ =0, $d_2$ =1;
$x_\pi$ =[0, 1, 2, 3, 4, 5, 6, 7], $c$ =[1, 0, 0, 0, 1, 0, 1, 0], $d_1$ =0, $d_2$ =0;
$x_\pi$ =[0, 1, 2, 3, 4, 5, 6, 7], $c$ =[1, 0, 0, 0, 1, 0, 1, 1], $d_1$ =0, $d_2$ =0;
$x_\pi$ =[0, 1, 2, 3, 4, 5, 6, 7], $c$ =[1, 0, 0, 0, 1, 0, 1, 0], $d_1$ =0, $d_2$ =1;
$x_\pi$ =[0, 1, 2, 3, 4, 5, 6, 7], $c$ =[1, 0, 0, 0, 1, 0, 1, 1], $d_1$ =0, $d_2$ =1;
$x_\pi$ =[0, 1, 2, 3, 5, 4, 6, 7], $c$ =[0, 0, 1, 1, 1, 1, 1, 0], $d_1$ =0, $d_2$ =0; or
$x_\pi$ =[0, 1, 2, 3, 5, 4, 6, 7], $c$ =[0, 0, 1, 1, 1, 1, 1, 1], $d_1$ =0, $d_2$ =0.

5. The method according to any one of claims 1 to 4, wherein when N is equal to 512, the parameters used to generate the GCP are any one of the following groups:

$x_\pi$ =[0, 1, 2, 3, 4, 5, 6, 7, 8], $c$ =[0, 0, 0, 0, 0, 0, 0, 0, 0], $d_1$ =0, $d_2$ =0;
$x_\pi$ =[0, 1, 2, 3, 4, 5, 6, 7, 8], $c$ =[0, 0, 0, 0, 0, 0, 0, 0, 1], $d_1$ =0, $d_2$ =0;
$x_\pi$ =[0, 1, 2, 3, 4, 5, 6, 7, 8], $c$ =[1, 0, 1, 0, 1, 0, 0, 1, 0], $d_1$ =0, $d_2$ =1;
$x_\pi$ =[0, 1, 2, 3, 4, 5, 6, 7, 8], $c$ =[1, 0, 1, 0, 1, 0, 0, 1, 1], $d_1$ =0, $d_2$ =1;
$x_\pi$ =[0, 1, 2, 3, 4, 5, 6, 7, 8], $c$ =[1, 1, 0, 1, 0, 1, 0, 1, 0], $d_1$ =0, $d_2$ =0;
$x_\pi$ =[0, 1, 2, 3, 4, 5, 6, 7, 8], $c$ =[1, 1, 0, 1, 0, 1, 0, 1, 1], $d_1$ =0, $d_2$ =0;
$x_\pi$ =[0, 1, 2, 3, 4, 5, 7, 6, 8], $c$ =[0, 0, 1, 1, 1, 0, 0, 1, 0], $d_1$ =0, $d_2$ =1;
$x_\pi$ =[0, 1, 2, 3, 4, 5, 7, 6, 8], $c$ =[0, 0, 1, 1, 1, 0, 0, 1, 1], $d_1$ =0, $d_2$ =1;
$x_\pi$ =[0, 1, 2, 3, 4, 5, 6, 7, 8], $c$ =[0, 0, 1, 0, 0, 0, 1, 1, 0], $d_1$ =0, $d_2$ =0;
$x_\pi$ =[0, 1, 2, 3, 4, 5, 6, 7, 8], $c$ =[0, 0, 1, 0, 0, 0, 1, 1, 1], $d_1$ =0, $d_2$ =0;
$x_\pi$ =[0, 1, 2, 3, 4, 5, 6, 7, 8], $c$ =[0, 0, 1, 0, 0, 0, 1, 1, 0], $d_1$ =0, $d_2$ =1;
$x_\pi$ =[0, 1, 2, 3, 4, 5, 6, 7, 8], $c$ =[0, 0, 1, 0, 0, 0, 1, 1, 1], $d_1$ =0, $d_2$ =1;
$x_\pi$ =[0, 1, 2, 3, 4, 5, 6, 8, 7], $c$ =[1, 1, 1, 1, 0, 0, 0, 0, 0], $d_1$ =0, $d_2$ =0;
$x_\pi$ =[0, 1, 2, 3, 4, 5, 6, 8, 7], $c$ =[1, 1, 1, 1, 0, 0, 0, 1, 0], $d_1$ =0, $d_2$ =0;
$x_\pi$ =[0, 1, 2, 3, 4, 5, 6, 8, 7], $c$ =[1, 1, 1, 1, 0, 0, 0, 1, 0], $d_1$ =0, $d_2$ =1;
$x_\pi$ =[0, 1, 2, 3, 4, 5, 6, 8, 7], $c$ =[1, 1, 1, 1, 0, 0, 0, 1, 0], $d_1$ =0, $d_2$ =1;
$x_\pi$ =[0, 1, 2, 3, 4, 5, 6, 7, 8], $c$ =[0, 0, 0, 0, 0, 0, 0, 0, 0], $d_1$ =0, $d_2$ =1;
$x_\pi$ =[0, 1, 2, 3, 4, 5, 6, 7, 8], $c$ =[0, 0, 0, 0, 0, 0, 0, 0, 1], $d_1$ =0, $d_2$ =1;
$x_\pi$ =[0, 1, 2, 3, 4, 5, 6, 7, 8], $c$ =[1, 0, 1, 0, 1, 0, 0, 1, 0], $d_1$ =0, $d_2$ =0;
$x_\pi$ =[0, 1, 2, 3, 4, 5, 6, 7, 8], $c$ =[1, 0, 1, 0, 1, 0, 0, 1, 1], $d_1$ =0, $d_2$ =0;
$x_\pi$ =[0, 1, 2, 3, 4, 5, 6, 7, 8], $c$ =[1, 1, 0, 1, 0, 1, 0, 1, 0], $d_1$ =0, $d_2$ =1;
$x_\pi$ =[0, 1, 2, 3, 4, 5, 6, 7, 8], $c$ =[1, 1, 0, 1, 0, 1, 0, 1, 1], $d_1$ =0, $d_2$ =1;
$x_\pi$ =[0, 1, 2, 3, 4, 5, 7, 6, 8], $c$ =[0, 0, 1, 1, 1, 0, 0, 1, 0], $d_1$ =0, $d_2$ =0;
$x_\pi$ =[0, 1, 2, 3, 4, 5, 7, 6, 8], $c$ =[0, 0, 1, 1, 1, 0, 0, 1, 1], $d_1$ =0, $d_2$ =0;
$x_\pi$ =[0, 1, 2, 3, 4, 5, 6, 7, 8], $c$ =[0, 1, 0, 0, 0, 1, 1, 0, 0], $d_1$ =0, $d_2$ =0;
$x_\pi$ =[0, 1, 2, 3, 4, 5, 6, 7, 8], $c$ =[0, 1, 0, 0, 0, 1, 1, 0, 1], $d_1$ =0, $d_2$ =0;
$x_\pi$ =[0, 1, 2, 3, 4, 5, 6, 7, 8], $c$ =[0, 1, 0, 0, 0, 1, 1, 0, 0], $d_1$ =0, $d_2$ =1;
$x_\pi$ =[0, 1, 2, 3, 4, 5, 6, 7, 8], $c$ =[0, 1, 0, 0, 0, 1, 1, 0, 1], $d_1$ =0, $d_2$ =1;
$x_\pi$ =[0, 1, 2, 3, 4, 5, 7, 6, 8], $c$ =[1, 0, 0, 1, 1, 1, 0, 0, 0], $d_1$ =0, $d_2$ =0;
$x_\pi$ =[0, 1, 2, 3, 4, 5, 7, 6, 8], $c$ =[1, 0, 0, 1, 1, 1, 0, 0, 1], $d_1$ =0, $d_2$ =0;
$x_\pi$ =[0, 1, 2, 3, 4, 5, 7, 6, 8], $c$ =[1, 0, 0, 1, 1, 1, 0, 0, 0], $d_1$ =0, $d_2$ =1;
$x_\pi$ =[0, 1, 2, 3, 4, 5, 7, 6, 8], $c$ =[1, 0, 0, 1, 1, 1, 0, 0, 1], $d_1$ =0, $d_2$ =1;
$x_\pi$ =[0, 1, 2, 3, 4, 5, 6, 7, 8], $c$ =[1, 0, 0, 0, 1, 0, 1, 0, 0], $d_1$ =0, $d_2$ =0;
$x_\pi$ =[0, 1, 2, 3, 4, 5, 6, 7, 8], $c$ =[1, 0, 0, 0, 1, 0, 1, 0, 1], $d_1$ =0, $d_2$ =0;

$x_\pi$ =[0, 1, 2, 3, 4, 5, 6, 7, 8], $c$ =[1, 0, 0, 0, 1, 0, 1, 0, 0], $d_1$ =0, $d_2$ =1;
$x_\pi$ =[0, 1, 2, 3, 4, 5, 6, 7, 8], $c$ =[1, 0, 0, 0, 1, 0, 1, 0, 1], $d_1$ =0, $d_2$ =1;
$x_\pi$ =[0, 1, 2, 3, 4, 5, 7, 8, 6], $c$ =[0, 1, 1, 0, 0, 1, 0, 1, 0], $d_1$ =0, $d_2$ =0;
$x_\pi$ =[0, 1, 2, 3, 4, 5, 7, 8, 6], $c$ =[0, 1, 1, 0, 0, 1, 1, 1, 0], $d_1$ =0, $d_2$ =0;
$x_\pi$ =[0, 1, 2, 3, 4, 5, 7, 8, 6], $c$ =[0, 1, 1, 0, 0, 1, 0, 1, 0], $d_1$ =0, $d_2$ =1; or
$x_\pi$ =[0, 1, 2, 3, 4, 5, 7, 8, 6], $c$ =[0, 1, 1, 0, 0, 1, 1, 1, 0], $d_1$ =0, $d_2$ =1.

6. The method according to any one of claims 1 to 5, wherein when N is equal to 1024, the parameters used to generate the GCP are any one of the following groups:

$x_\pi$ =[0, 1, 2, 3, 4, 5, 6, 7, 8, 9], $c$ =[0, 0, 0, 0, 0, 0, 0, 0, 0, 0], $d_1$ =0, $d_2$ =0;
$x_\pi$ =[0, 1, 2, 3, 4, 5, 6, 7, 8, 9], $c$ =[0, 0, 0, 0, 0, 0, 0, 0, 0, 1], $d_1$ =0, $d_2$ =0;
$x_\pi$ =[0, 1, 2, 3, 4, 5, 6, 7, 8, 9], $c$ =[0, 1, 0, 1, 1, 0, 0, 1, 0, 0], $d_1$ =0, $d_2$ =0;
$x_\pi$ =[0, 1, 2, 3, 4, 5, 6, 7, 8, 9], $c$ =[0, 1, 0, 1, 1, 0, 0, 1, 0, 1], $d_1$ =0, $d_2$ =0;
$x_\pi$ =[0, 1, 2, 3, 4, 5, 6, 7, 8, 9], $c$ =[0, 1, 1, 1, 0, 1, 0, 0, 1, 0], $d_1$ =0, $d_2$ =1;
$x_\pi$ =[0, 1, 2, 3, 4, 5, 6, 7, 8, 9], $c$ =[0, 1, 1, 1, 0, 1, 0, 0, 1, 1], $d_1$ =0, $d_2$ =1;
$x_\pi$ =[0, 1, 2, 3, 4, 5, 6, 7, 8, 9], $c$ =[1, 0, 0, 0, 1, 0, 1, 0, 0, 0], $d_1$ =0, $d_2$ =0;
$x_\pi$ =[0, 1, 2, 3, 4, 5, 6, 7, 8, 9], $c$ =[1, 0, 0, 0, 1, 0, 1, 0, 0, 1], $d_1$ =0, $d_2$ =0;
$x_\pi$ =[0, 1, 2, 3, 4, 5, 6, 7, 8, 9], $c$ =[0, 0, 0, 0, 0, 0, 0, 0, 0, 0], $d_1$ =0, $d_2$ =1;
$x_\pi$ =[0, 1, 2, 3, 4, 5, 6, 7, 8, 9], $c$ =[0, 0, 0, 0, 0, 0, 0, 0, 0, 1], $d_1$ =0, $d_2$ =1;
$x_\pi$ =[0, 1, 2, 3, 4, 5, 6, 7, 8, 9], $c$ =[0, 1, 0, 1, 1, 0, 0, 1, 0, 0], $d_1$ =0, $d_2$ =1;
$x_\pi$ =[0, 1, 2, 3, 4, 5, 6, 7, 8, 9], $c$ =[0, 1, 0, 1, 1, 0, 0, 1, 0, 1], $d_1$ =0, $d_2$ =1;
$x_\pi$ =[0, 1, 2, 3, 4, 5, 6, 7, 8, 9], $c$ =[0, 1, 1, 1, 0, 1, 0, 0, 1, 0], $d_1$ =0, $d_2$ =0;
$x_\pi$ =[0, 1, 2, 3, 4, 5, 6, 7, 8, 9], $c$ =[0, 1, 1, 1, 0, 1, 0, 0, 1, 1], $d_1$ =0, $d_2$ =0;
$x_\pi$ =[0, 1, 2, 3, 4, 5, 6, 7, 8, 9], $c$ =[1, 0, 0, 0, 1, 0, 1, 0, 0, 0], $d_1$ =0, $d_2$ =1;
$x_\pi$ =[0, 1, 2, 3, 4, 5, 6, 7, 8, 9], $c$ =[1, 0, 0, 0, 1, 0, 1, 0, 0, 1], $d_1$ =0, $d_2$ =1;
$x_\pi$ =[0, 1, 2, 3, 4, 5, 6, 7, 8, 9], $c$ =[0, 0, 1, 0, 0, 0, 1, 0, 1, 0], $d_1$ =0, $d_2$ =0;
$x_\pi$ =[0, 1, 2, 3, 4, 5, 6, 7, 8, 9], $c$ =[0, 0, 1, 0, 0, 0, 1, 0, 1, 1], $d_1$ =0, $d_2$ =0;
$x_\pi$ =[0, 1, 2, 3, 4, 5, 6, 7, 8, 9], $c$ =[0, 0, 1, 0, 0, 0, 1, 0, 1, 0], $d_1$ =0, $d_2$ =1;
$x_\pi$ =[0, 1, 2, 3, 4, 5, 6, 7, 8, 9], $c$ =[0, 0, 1, 0, 0, 0, 1, 0, 1, 1], $d_1$ =0, $d_2$ =1;
$x_\pi$ =[0, 1, 2, 3, 4, 5, 6, 7, 8, 9], $c$ =[1, 0, 0, 1, 0, 0, 0, 0, 1, 0], $d_1$ =0, $d_2$ =0;
$x_\pi$ =[0, 1, 2, 3, 4, 5, 6, 7, 8, 9], $c$ =[1, 0, 0, 1, 0, 0, 0, 0, 1, 1], $d_1$ =0, $d_2$ =0;
$x_\pi$ =[0, 1, 2, 3, 4, 5, 6, 7, 8, 9], $c$ =[1, 0, 0, 1, 0, 0, 0, 0, 1, 0], $d_1$ =0, $d_2$ =1;
$x_\pi$ =[0, 1, 2, 3, 4, 5, 6, 7, 8, 9], $c$ =[1, 0, 0, 1, 0, 0, 0, 0, 1, 1], $d_1$ =0, $d_2$ =1;
$x_\pi$ =[0, 1, 2, 3, 4, 5, 6, 7, 8, 9], $c$ =[0, 0, 0, 1, 0, 0, 0, 1, 1, 0], $d_1$ =0, $d_2$ =0;
$x_\pi$ =[0, 1, 2, 3, 4, 5, 6, 7, 8, 9], $c$ =[0, 0, 0, 1, 0, 0, 0, 1, 1, 1], $d_1$ =0, $d_2$ =0;
$x_\pi$ =[0, 1, 2, 3, 4, 5, 6, 7, 8, 9], $c$ =[0, 0, 0, 1, 0, 0, 0, 1, 1, 0], $d_1$ =0, $d_2$ =1;
$x_\pi$ =[0, 1, 2, 3, 4, 5, 6, 7, 8, 9], $c$ =[0, 0, 0, 1, 0, 0, 0, 1, 1, 1], $d_1$ =0, $d_2$ =1;
$x_\pi$ =[0, 1, 2, 3, 4, 5, 6, 7, 8, 9], $c$ =[0, 1, 0, 0, 0, 1, 1, 0, 0, 0], $d_1$ =0, $d_2$ =0;
$x_\pi$ =[0, 1, 2, 3, 4, 5, 6, 7, 8, 9], $c$ =[0, 1, 0, 0, 0, 1, 1, 0, 0, 1], $d_1$ =0, $d_2$ =0;
$x_\pi$ =[0, 1, 2, 3, 4, 5, 6, 7, 8, 9], $c$ =[0, 1, 0, 0, 0, 1, 1, 0, 0, 0], $d_1$ =0, $d_2$ =1;
$x_\pi$ =[0, 1, 2, 3, 4, 5, 6, 7, 8, 9], $c$ =[0, 1, 0, 0, 0, 1, 1, 0, 0, 1], $d_1$ =0, $d_2$ =1;
$x_\pi$ =[0, 1, 2, 3, 4, 5, 6, 7, 8, 9], $c$ =[0, 1, 1, 0, 0, 1, 1, 1, 0, 0], $d_1$ =0, $d_2$ =0;
$x_\pi$ =[0, 1, 2, 3, 4, 5, 6, 7, 8, 9], $c$ =[0, 1, 1, 0, 0, 1, 1, 1, 0, 1], $d_1$ =0, $d_2$ =0;
$x_\pi$ =[0, 1, 2, 3, 4, 5, 6, 7, 8, 9], $c$ =[0, 1, 1, 0, 0, 1, 1, 1, 0, 0], $d_1$ =0, $d_2$ =1;
$x_\pi$ =[0, 1, 2, 3, 4, 5, 6, 7, 8, 9], $c$ =[0, 1, 1, 0, 0, 1, 1, 1, 0, 1], $d_1$ =0, $d_2$ =1;
$x_\pi$ =[0, 1, 2, 3, 4, 5, 6, 7, 8, 9], $c$ =[1, 0, 1, 0, 0, 1, 0, 0, 0, 0], $d_1$ =0, $d_2$ =0;
$x_\pi$ =[0, 1, 2, 3, 4, 5, 6, 7, 8, 9], $c$ =[1, 0, 1, 0, 0, 1, 0, 0, 0, 1], $d_1$ =0, $d_2$ =0;
$x_\pi$ =[0, 1, 2, 3, 4, 5, 6, 7, 8, 9], $c$ =[1, 0, 1, 0, 0, 1, 0, 0, 0, 0], $d_1$ =0, $d_2$ =1; or
$x_\pi$ =[0, 1, 2, 3, 4, 5, 6, 7, 8, 9], $c$ =[1, 0, 1, 0, 0, 1, 0, 0, 0, 1], $d_1$ =0, $d_2$ =1.

7. The method according to any one of claims 1 to 6, wherein the GCP is generated through generalized Boolean function mapping.

8. The method according to claim 7, wherein one sequence in the GCP is $(-1)^{a(x)}$, and another sequence is $(-1)^{b(x)}$, wherein $a(x) = f(x) + d_1$, $b(x) = f(x) + x_\pi[0] + d_2$, and

$$f(x) = \sum_{k=0}^{m-2} x_\pi[k] x_\pi[k+1] + \sum_{k=0}^{m-1} c[k]x[k], \quad 2^m = N$$

9. The method according to any one of claims 1 to 8, wherein when N is equal to 160, 320, 640, or 832, the GCP is a direct product of a first GCP and a second GCP, a length of the first GCP is $N_1$, a length of the second GCP is $N_2$, and $N_1 \times N_2 = N$, wherein

one sequence in the first GCP is $(-1)^{a(x)}$, and another sequence is $(-1)^{b(x)}$, wherein $a(x) = f(x) + d_1$, $b(x) = f(x) + x_\pi[0] + d_2$, and $f(x) = \sum_{k=0}^{l-2} x_\pi[k] x_\pi[k+1] + \sum_{k=0}^{l-1} c[k]x[k]$, $2^l = N_1$; and the second GCP is any one of the following:

$$x_1 = 1, 1, -1, 1, -1, 1, -1, -1, 1, 1;$$

and

$$y_1 = 1, 1, -1, 1, 1, 1, 1, 1, -1, -1;$$

or

$$x_2 = 1, 1, 1, 1, 1, -1, 1, -1, -1, 1;$$

and

$$y_2 = 1, 1, -1, -1, 1, 1, 1, -1, 1, -1;$$

or

$$x_3 = 1, 1, 1, 1, -1, 1, -1, -1, -1, 1, 1, -1, -1, 1, 1, -1, 1, -1, -1, 1;$$

and

$$y_3 = 1, 1, 1, 1, -1, 1, 1, 1, 1, 1, -1, -1, -1, 1, -1, 1, -1, 1, 1, -1;$$

or

$$x_4 = 1, 1, 1, 1, -1, 1, 1, -1, -1, 1, -1, 1, -1, 1, -1, -1, 1, -1, 1, 1, 1, -1, -1, 1, 1, 1;$$

and

$$y_4 = 1, 1, 1, 1, -1, 1, 1, -1, -1, 1, -1, 1, 1, 1, 1, 1, -1, 1, -1, -1, -1, 1, 1, -1, -1, -1.$$

10. The method according to claim 9, wherein when N is equal to 160, the parameters used to generate the GCP are any one of the following groups:

$x_\pi = [0, 2, 1, 3]$, $c = [0, 0, 0, 0]$, $d_1 = 0$, $d_2 = 1$, the second GCP$=(x_1, y_1)$;
$x_\pi = [0, 2, 1, 3]$, $c = [0, 0, 0, 1]$, $d_1 = 0$, $d_2 = 1$, the second GCP$=(x_1, y_1)$;
$x_\pi = [2, 1, 0, 3]$, $c = [0, 0, 0, 0]$, $d_1 = 0$, $d_2 = 0$, the second GCP$=(x_2, y_2)$;
$x_\pi = [2, 1, 0, 3]$, $c = [0, 0, 0, 1]$, $d_1 = 0$, $d_2 = 0$, the second GCP$=(x_2, y_2)$;
$x_\pi = [0, 1, 2]$, $c = [0, 0, 0]$, $d_1 = 0$, $d_2 = 1$, the second GCP$=(x_3, y_3)$;

$x_\pi$ =[0, 1, 2], $c$ =[0, 0, 1], $d_1$ =0, $d_2$ =1, the second GCP=($x_3$, $y_3$);
$x_\pi$ =[0, 1, 2, 3], $c$ =[0, 1, 0, 0], $d_1$ =0, $d_2$ =0, the second GCP=($x_1$, $y_1$);
$x_\pi$ =[0, 1, 2, 3], $c$ =[0, 1, 0, 1], $d_1$ =0, $d_2$ =0, the second GCP=($x_1$, $y_1$);
$x_\pi$ =[0, 1, 2, 3], $c$ =[0, 1, 1, 0], $d_1$ =0, $d_2$ =0, the second GCP=($x_2$, $y_2$);
$x_\pi$ =[0, 1, 2, 3], $c$ =[0, 1, 1, 1], $d_1$ =0, $d_2$ =0, the second GCP=($x_2$, $y_2$);
$x_\pi$ =[0, 2, 1, 3], $c$ =[0, 0, 1, 0], $d_1$ =0, $d_2$ =1, the second GCP=($x_2$, $y_2$);
$x_\pi$ =[0, 2, 1, 3], $c$ =[0, 0, 1, 1], $d_1$ =0, $d_2$ =1, the second GCP=($x_2$, $y_2$);
$x_\pi$ =[1, 0, 2, 3], $c$ =[1, 1, 0, 0], $d_1$ =0, $d_2$ =1, the second GCP=($x_1$, $y_1$);
$x_\pi$ =[1, 0, 2, 3], $c$ =[1, 1, 0, 1], $d_1$ =0, $d_2$ =1, the second GCP=($x_1$, $y_1$);
$x_\pi$ =[1, 0, 2, 3], $c$ =[1, 1, 1, 0], $d_1$ =0, $d_2$ =1, the second GCP=($x_2$, $y_2$);
$x_\pi$ =[1, 0, 2, 3], $c$ =[1, 1, 1, 1], $d_1$ =0, $d_2$ =1, the second GCP=($x_2$, $y_2$);
$x_\pi$ =[1, 2, 0, 3], $c$ =[1, 1, 0, 0], $d_1$ =0, $d_2$ =0, the second GCP=($x_2$, $y_2$);
$x_\pi$ =[1, 2, 0, 3], $c$ =[1, 1, 0, 1], $d_1$ =0, $d_2$ =0, the second GCP=($x_2$, $y_2$);
$x_\pi$ =[1, 2, 0, 3], $c$ =[1, 1, 1, 0], $d_1$ =0, $d_2$ =0, the second GCP=($x_1$, $y_1$); or
$x_\pi$ =[1, 2, 0, 3], $c$ =[1, 1, 1, 1], $d_1$ =0, $d_2$ =0, the second GCP=($x_1$, $y_1$).

11. The method according to claim 9 or 10, wherein when N is equal to 320, the parameters used to generate the GCP are any one of the following groups:

$x_\pi$ =[0, 1, 2, 3, 4], $c$ =[0, 0, 0, 0, 0], $d_1$ =0, $d_2$ =0, the second GCP=($x_1$, $y_1$);
$x_\pi$ =[0, 1, 2, 3, 4], $c$ =[0, 0, 0, 0, 1], $d_1$ =0, $d_2$ =0, the second GCP=($x_1$, $y_1$);
$x_\pi$ =[0, 1, 2, 3, 4], $c$ =[0, 0, 0, 1, 0], $d_1$ =0, $d_2$ =0, the second GCP=($x_2$, $y_2$);
$x_\pi$ =[0, 1, 2, 3, 4], $c$ =[0, 0, 0, 1, 1], $d_1$ =0, $d_2$ =0, the second GCP=($x_2$, $y_2$);
$x_\pi$ =[0, 1, 2, 3, 4], $c$ =[0, 0, 1, 0, 0], $d_1$ =0, $d_2$ =1, the second GCP=($x_1$, $y_1$);
$x_\pi$ =[0, 1, 2, 3, 4], $c$ =[0, 0, 1, 0, 1], $d_1$ =0, $d_2$ =1, the second GCP=($x_1$, $y_1$);
$x_\pi$ =[0, 1, 2, 3, 4], $c$ =[0, 0, 1, 1, 0], $d_1$ =0, $d_2$ =1, the second GCP=($x_2$, $y_2$);
$x_\pi$ =[0, 1, 2, 3, 4], $c$ =[0, 0, 1, 1, 1], $d_1$ =0, $d_2$ =1, the second GCP=($x_2$, $y_2$);
$x_\pi$ =[0, 1, 3, 2, 4], $c$ =[1, 0, 0, 0, 0], $d_1$ =0, $d_2$ =0, the second GCP=($x_2$, $y_2$);
$x_\pi$ =[0, 1, 3, 2, 4], $c$ =[1, 0, 0, 0, 1], $d_1$ =0, $d_2$ =0, the second GCP=($x_2$, $y_2$);
$x_\pi$ =[0, 1, 3, 2, 4], $c$ =[1, 0, 0, 1, 0], $d_1$ =0, $d_2$ =0, the second GCP=($x_1$, $y_1$);
$x_\pi$ =[0, 1, 3, 2, 4], $c$ =[1, 0, 0, 1, 1], $d_1$ =0, $d_2$ =0, the second GCP=($x_1$, $y_1$);
$x_\pi$ =[0, 1, 3, 4, 2], $c$ =[1, 1, 0, 0, 0], $d_1$ =0, $d_2$ =1, the second GCP=($x_1$, $y_1$);
$x_\pi$ =[0, 1, 3, 4, 2], $c$ =[1, 1, 1, 0, 0], $d_1$ =0, $d_2$ =1, the second GCP=($x_1$, $y_1$);
$x_\pi$ =[0, 1, 3, 4, 2], $c$ =[1, 1, 0, 1, 1], $d_1$ =0, $d_2$ =1, the second GCP=($x_2$, $y_2$);
$x_\pi$ =[0, 1, 3, 4, 2], $c$ =[1, 1, 1, 1, 1], $d_1$ =0, $d_2$ =1, the second GCP=($x_2$, $y_2$);
$x_\pi$ =[0, 2, 4, 3, 1], $c$ =[0, 0, 0, 0, 1], $d_1$ =0, $d_2$ =1, the second GCP=($x_1$, $y_1$);
$x_\pi$ =[0, 2, 4, 3, 1], $c$ =[0, 1, 0, 0, 1], $d_1$ =0, $d_2$ =1, the second GCP=($x_1$, $y_1$);
$x_\pi$ =[0, 2, 4, 3, 1], $c$ =[0, 0, 0, 1, 0], $d_1$ =0, $d_2$ =1, the second GCP=($x_2$, $y_2$); or
$x_\pi$ =[0, 2, 4, 3, 1], $c$ =[0, 1, 0, 1, 0], $d_1$ =0, $d_2$ =1, the second GCP=($x_2$, $y_2$).

12. The method according to any one of claims 9 to 11, wherein when N is equal to 640, the parameters used to generate the GCP are any one of the following groups:

$x_\pi$ =[0, 1, 2, 3, 4, 5], $c$ =[0, 0, 0, 0, 0, 0], $d_1$ =0, $d_2$ =0, the second GCP=($x_1$, $y_1$);
$x_\pi$ =[0, 1, 2, 3, 4, 5], $c$ =[0, 0, 0, 0, 0, 1], $d_1$ =0, $d_2$ =0, the second GCP=($x_1$, $y_1$);
$x_\pi$ =[0, 1, 2, 4, 3, 5], $c$ =[1, 0, 0, 0, 0, 0], $d_1$ =0, $d_2$ =1, the second GCP=($x_2$, $y_2$);
$x_\pi$ =[0, 1, 2, 4, 3, 5], $c$ =[1, 0, 0, 0, 0, 1], $d_1$ =0, $d_2$ =1, the second GCP=($x_2$, $y_2$);
$x_\pi$ =[0, 1, 3, 4, 2, 5], $c$ =[1, 0, 1, 1, 0, 0], $d_1$ =0, $d_2$ =1, the second GCP=($x_1$, $y_1$);
$x_\pi$ =[0, 1, 3, 4, 2, 5], $c$ =[1, 0, 1, 1, 0, 1], $d_1$ =0, $d_2$ =1, the second GCP=($x_1$, $y_1$);
$x_\pi$ =[0, 2, 4, 3, 1, 5], $c$ =[0, 0, 0, 1, 1, 0], $d_1$ =0, $d_2$ =0, the second GCP=($x_2$, $y_2$);
$x_\pi$ =[0, 2, 4, 3, 1, 5], $c$ =[0, 0, 0, 1, 1, 1], $d_1$ =0, $d_2$ =0, the second GCP=($x_2$, $y_2$);
$x_\pi$ =[0, 1, 2, 3, 4, 5], $c$ =[0, 0, 0, 0, 0, 0], $d_1$ =0, $d_2$ =1, the second GCP=($x_1$, $y_1$);
$x_\pi$ =[0, 1, 2, 3, 4, 5], $c$ =[0, 0, 0, 0, 0, 1], $d_1$ =0, $d_2$ =1, the second GCP=($x_1$, $y_1$);
$x_\pi$ =[0, 1, 2, 3, 4, 5], $c$ =[0, 0, 0, 0, 1, 0], $d_1$ =0, $d_2$ =0, the second GCP=($x_2$, $y_2$);
$x_\pi$ =[0, 1, 2, 3, 4, 5], $c$ =[0, 0, 0, 0, 1, 1], $d_1$ =0, $d_2$ =0, the second GCP=($x_2$, $y_2$);
$x_\pi$ =[0, 1, 2, 3, 4, 5], $c$ =[0, 0, 0, 0, 1, 0], $d_1$ =0, $d_2$ =1, the second GCP=($x_2$, $y_2$);
$x_\pi$ =[0, 1, 2, 3, 4, 5], $c$ =[0, 0, 0, 0, 1, 1], $d_1$ =0, $d_2$ =1, the second GCP=($x_2$, $y_2$);
$x_\pi$ =[0, 1, 2, 4, 3, 5], $c$ =[1, 0, 0, 0, 0, 0], $d_1$ =0, $d_2$ =0, the second GCP=($x_2$, $y_2$);

$x_\pi$ =[0, 1, 2, 4, 3, 5], $c$ =[1, 0, 0, 0, 0, 1], $d_1$ =0, $d_2$ =0, the second GCP=$(x_2, y_2)$;
$x_\pi$ =[0, 1, 2, 4, 3, 5], $c$ =[1, 0, 0, 0, 1, 0], $d_1$ =0, $d_2$ =0, the second GCP=$(x_1, y_1)$;
$x_\pi$ =[0, 1, 2, 4, 3, 5], $c$ =[1, 0, 0, 0, 1, 1], $d_1$ =0, $d_2$ =0, the second GCP=$(x_1, y_1)$;
$x_\pi$ =[0, 1, 2, 3, 4], $c$ =[0, 0, 0, 0, 0], $d_1$ =0, $d_2$ =1, the second GCP=$(x_3, y_3)$; or
$x_\pi$ =[0, 1, 2, 3, 4], $c$ =[0, 0, 0, 0, 1], $d_1$ =0, $d_2$ =1, the second GCP=$(x_3, y_3)$.

13. The method according to any one of claims 9 to 12, wherein when N is equal to 832, the parameters used to generate the GCP are any one of the following groups:

$x_\pi$ =[0, 1, 2, 3, 4], $c$ =[0, 0, 0, 0, 0], $d_1$ =0, $d_2$ =0, the second GCP=$(x_4, y_4)$;
$x_\pi$ =[0, 1, 2, 3, 4], $c$ =[0, 0, 0, 0, 1], $d_1$ =0, $d_2$ =0, the second GCP=$(x_4, y_4)$;
$x_\pi$ =[0, 3, 1, 2, 4], $c$ =[1, 0, 1, 0, 0], $d_1$ =0, $d_2$ =1, the second GCP=$(x_4, y_4)$;
$x_\pi$ =[0, 3, 1, 2, 4], $c$ =[1, 0, 1, 0, 1], $d_1$ =0, $d_2$ =1, the second GCP=$(x_4, y_4)$;
$x_\pi$ =[0, 1, 3, 2, 4], $c$ =[1, 0, 0, 1, 0], $d_1$ =0, $d_2$ =0, the second GCP=$(x_4, y_4)$;
$x_\pi$ =[0, 1, 3, 2, 4], $c$ =[1, 0, 0, 1, 1], $d_1$ =0, $d_2$ =0, the second GCP=$(x_4, y_4)$;
$x_\pi$ =[2, 0, 1, 4, 3], $c$ =[0, 1, 0, 0, 0], $d_1$ =0, $d_2$ =0, the second GCP=$(x_4, y_4)$;
$x_\pi$ =[2, 0, 1, 4, 3], $c$ =[0, 1, 0, 1, 0], $d_1$ =0, $d_2$ =0, the second GCP=$(x_4, y_4)$;
$x_\pi$ =[1, 0, 3, 2, 4], $c$ =[0, 0, 0, 0, 0], $d_1$ =0, $d_2$ =0, the second GCP=$(x_4, y_4)$;
$x_\pi$ =[1, 0, 3, 2, 4], $c$ =[0, 0, 0, 0, 1], $d_1$ =0, $d_2$ =0, the second GCP=$(x_4, y_4)$;
$x_\pi$ =[2, 0, 1, 3, 4], $c$ =[0, 1, 0, 1, 0], $d_1$ =0, $d_2$ =1, the second GCP=$(x_4, y_4)$;
$x_\pi$ =[2, 0, 1, 3, 4], $c$ =[0, 1, 0, 1, 1], $d_1$ =0, $d_2$ =1, the second GCP=$(x_4, y_4)$;
$x_\pi$ =[0, 1, 2, 3, 4], $c$ =[0, 0, 1, 0, 0], $d_1$ =0, $d_2$ =1, the second GCP=$(x_4, y_4)$;
$x_\pi$ =[0, 1, 2, 3, 4], $c$ =[0, 0, 1, 0, 1], $d_1$ =0, $d_2$ =1, the second GCP=$(x_4, y_4)$;
$x_\pi$ =[0, 1, 3, 2, 4], $c$ =[1, 0, 0, 0, 0], $d_1$ =0, $d_2$ =1, the second GCP=$(x_4, y_4)$;
$x_\pi$ =[0, 1, 3, 2, 4], $c$ =[1, 0, 0, 0, 1], $d_1$ =0, $d_2$ =1, the second GCP=$(x_4, y_4)$;
$x_\pi$ =[1, 0, 2, 3, 4], $c$ =[0, 1, 1, 0, 0], $d_1$ =0, $d_2$ =0, the second GCP=$(x_4, y_4)$;
$x_\pi$ =[1, 0, 2, 3, 4], $c$ =[0, 1, 1, 0, 1], $d_1$ =0, $d_2$ =0, the second GCP=$(x_4, y_4)$;
$x_\pi$ =[1, 3, 2, 0, 4], $c$ =[0, 0, 1, 1, 0], $d_1$ =0, $d_2$ =1, the second GCP=$(x_4, y_4)$; or
$x_\pi$ =[1, 3, 2, 0, 4], $c$ =[0, 0, 1, 1, 1], $d_1$ =0, $d_2$ =1, the second GCP=$(x_4, y_4)$.

14. A device sensing method, wherein the method comprises:

sending a sensing signal, wherein the sensing signal is generated based on a Golay complementary pair GCP with a length of N, and N is greater than or equal to 32;
receiving an echo signal of the sensing signal; and
performing processing based on the echo signal, wherein
when N is equal to 128, the GCP is any one of the following pairs:

$x$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, -1, 1, -1, -1, 1, -1, -1, -1, -1, 1, 1, 1, -1, 1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

$y$ =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, -1, -1, 1, -1, -1, -1, -1, 1, -1, -1, 1, -1, 1, 1, 1, -1, -1, -1, 1, -1, 1, 1, 1, -1, 1, 1, 1, 1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, 1, 1, -1, 1, 1, 1, 1, -1, 1, 1, -1, 1, -1, -1, -1, 1, 1, 1, -1, 1, 1, 1, 1, -1, 1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, -1, 1, -1, -1, -1, -1, 1, -1, -1, -1, 1, 1, 1, 1, -1, 1, 1, 1, 1, -1, 1, 1, -1, 1, -1, -1, -1, 1, -1, 1, 1, -1, 1, 1, 1, 1, -1, 1, 1, -1, -1, -1, 1, 1, 1, 1, -1, 1, 1, -1, 1, 1, 1;

*y* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1, 1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, -1, 1, -1, -1, -1, 1, 1, 1, -1, 1, -1, -1, 1, -1, -1, -1, 1, -1, 1, 1, 1, -1, -1, -1, -1, 1, -1, -1, 1, -1, -1, -1;

or

*x* =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1;

*y* =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1, 1, 1, 1, -1, -1, -1, 1, 1, 1, 1, -1, -1, 1, -1, -1, -1, 1, 1, 1, -1, 1, 1, 1, -1, -1, -1, 1, -1, -1, 1, 1, 1, -1, 1, 1, 1, -1, 1, -1, -1, 1, -1, -1, -1, -1, 1, 1, 1, 1, -1, -1, 1, -1, -1, -1, 1, -1, -1, -1, 1, -1, -1, 1, -1, -1, -1, 1, -1, -1, -1, -1, 1, -1, 1, -1, -1, 1, -1, 1, 1;

or

*x* =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, -1, 1, 1, -1, 1, -1, -1, 1, -1, 1, -1, -1, 1, -1, -1, -1, -1, 1, -1, -1, -1, 1, -1, -1, -1, 1, -1, -1, 1, 1, 1, 1, -1, -1, -1, 1, 1, -1, 1, -1, -1, 1, -1, 1, -1, -1, -1, 1, -1, -1, -1, 1, 1, 1, -1, 1, 1, 1, 1, -1, 1, 1, 1, -1, -1, -1, -1, 1, 1, 1;

*y* =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, 1, -1, -1, -1, 1, -1, -1, 1, 1, 1, 1, -1, -1, -1, -1, -1, 1, -1, 1, 1, -1, 1, -1, 1, 1, 1, 1, 1, 1, -1, 1, 1, 1, 1, -1, 1, 1, 1, -1, 1, 1, 1, -1, -1, -1, -1, 1, 1, 1, -1, 1, -1, -1, -1, 1, -1, -1, 1, 1, 1, 1, -1, -1, -1;

or

*x* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1, 1, 1, 1, 1, 1, -1, -1, 1, -1, -1, -1, 1, 1, -1, -1, 1, 1, 1, -1, -1, 1, 1, 1, 1, -1, -1, -1, 1, -1, 1, -1, -1, -1, -1, -1, -1, 1, 1, -1, -1, -1, 1, 1, 1, -1, 1, 1, -1, 1, -1, -1, 1, -1, -1;

*y* =-1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, -1, -1, -1, -1, 1, 1, -1, -1, -1, 1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, 1, -1, 1, 1, -1, 1, -1, 1, -1, -1, -1, -1, -1, -1, 1, 1, -1, 1, 1, -1, -1, 1, 1, -1, 1, -1, 1, -1, -1, -1, -1, -1, -1, -1, 1, 1, 1, 1, -1, -1, 1, -1, 1;

or

*x* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, 1, -1, -1, -1, -1, -1, -1, 1, -1, 1, -1, 1, 1, -1, -1, 1, 1, 1, 1, 1, -1, 1, -1, -1, -1, 1, 1, -1, 1, 1, -1, -1, -1, -1, -1, 1, -1, 1, 1, -1, -1, -1, -1, -1, 1, -1, 1, 1, -1, -1, 1, -1, -1, 1, 1, 1, 1, 1, 1, -1, 1, -1, 1, -1, 1, 1, -1, -1, -1, 1, 1, -1, -1, -1, -1, -1;

*y* =-1, 1, -1, 1, 1, -1, -1, 1, -1, -1, 1, 1, 1, 1, 1, 1, 1, -1, 1, -1, 1, -1, -1, 1, 1, 1, -1, -1, 1, 1, 1, 1, -1, 1, -1, 1, 1, -1,

-1, 1, -1, -1, 1, 1, 1, 1, 1, 1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, -1, -1, 1, -1, 1, -1, 1, 1, -1, -1, -1, 1, 1, -1, -1, -1, -1, -1, 1, -1, 1, 1, -1, -1, 1, -1, -1, 1, 1, 1, 1, 1, 1, -1, 1, -1, 1, 1, -1, -1, -1, 1, 1, -1, -1, -1, -1;

or

*x* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1, -1, -1, -1, 1, 1, -1, -1, -1, 1, 1, -1, 1, -1, 1, -1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, -1, -1, 1, -1, -1, -1, 1, 1, -1, 1, -1, -1, 1, 1, -1, 1, -1;

*y* =-1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, -1, -1, -1, -1, 1, 1, -1, -1, -1, 1, 1, -1, 1, -1, 1, -1, -1, -1, -1, -1, -1, 1, 1, -1, 1, 1, -1, -1, 1, -1, 1, 1, 1, 1, -1, -1, 1, 1, 1, -1, -1, 1, -1, 1, -1, 1, 1, 1, 1, 1, 1, -1, -1, 1, 1, 1, -1, -1, 1, -1, 1, -1, 1, 1, 1, 1, 1, 1, 1, 1, -1, -1, 1, -1, -1, 1, 1, -1, 1, -1;

or

*x* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, -1, -1, -1, -1, 1, -1, 1, -1, 1, -1, -1, 1, 1, 1, -1, -1, 1, 1, 1, 1, -1, 1, -1, 1, 1, -1, -1, 1, -1, -1, 1, 1, 1, 1, 1, 1, 1, 1, -1, 1, -1, 1, -1, -1, 1, 1, 1, -1, -1, 1, 1, 1, 1, -1, 1, 1, -1, -1, -1, 1, 1, 1, -1, 1, -1, 1, 1, -1, -1, 1, 1, 1, 1;

*y* =-1, 1, -1, 1, 1, -1, -1, 1, -1, -1, 1, 1, 1, 1, 1, 1, 1, -1, 1, -1, 1, -1, -1, 1, 1, 1, -1, -1, 1, 1, 1, 1, 1, -1, 1, -1, 1, 1, 1, 1, 1, -1, 1, -1, 1, -1, 1, 1, 1, -1, -1, -1, 1, 1, -1, -1, -1, -1, 1, -1, 1, -1, -1, 1, 1, -1, 1, 1, -1, -1, -1, 1, 1, -1, 1, 1, 1, -1, -1, -1, -1, -1, -1, -1, 1, -1, 1, -1, -1, -1, -1, -1, -1, 1, -1, 1, -1, -1, 1, 1, 1, -1, -1, 1, 1, 1, 1;

or

*x* =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, -1, -1, -1, 1, -1, -1, 1, -1, -1, -1, -1, 1, -1, 1, -1, -1, 1, 1, 1, -1, -1, 1, -1, 1, 1, 1, 1, 1, 1, -1, -1, -1, 1, -1, -1, -1, 1, -1, -1, 1, -1, 1, 1, 1, 1, -1, -1, -1, 1, -1;

*y* = -1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, -1, -1, -1, 1, -1, -1, 1, -1, -1, -1, -1, 1, 1, 1, -1, -1, -1, -1, 1, 1, 1, -1, 1, 1, 1, -1, 1, 1, 1, -1, 1, 1, 1, -1, 1, 1, 1, 1, -1, -1, -1, 1, -1, 1, 1, 1, 1, -1, 1, 1, 1, -1, 1, 1, 1, 1, -1, -1, -1, 1, -1, -1, -1, -1, 1, -1, -1, 1, -1, 1, 1, 1, 1, -1, -1, -1, 1, -1;

or

*x* =1, -1, 1, 1, 1, -1, -1, -1, 1, -1, 1, 1, -1, 1, 1, 1, 1, -1, 1, 1, 1, 1, -1, -1, -1, -1, 1, -1, -1, 1, -1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1, -1, 1, -1, -1, -1, 1, 1, 1, -1, 1, 1, 1, -1, -1, -1, 1, -1, -1, -1, -1, 1, 1, 1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1;

*y* =-1, 1, -1, -1, -1, 1, 1, 1, -1, 1, -1, -1, 1, -1, -1, -1, -1, 1, -1, -1, -1, 1, 1, 1, 1, -1, 1, 1, -1, 1, -1, -1, -1, 1, -1, 1, 1, 1, -1, -1, -1, 1, -1, -1, 1, 1, 1, 1, -1, -1, -1, 1, -1, -1, 1, -1, -1, -1, -1, 1, -1, -1, -1, 1, 1, 1, 1, -1, 1, 1, -1, 1, 1, 1, 1, -1, -1, -1, 1, -1, 1, 1, -1, 1, 1, 1, -1, 1 ,1, -1, -1,

-1, 1, 1, 1, -1, 1, 1, -1, 1, 1, 1;

or

**x** =1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1, 1, 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1;

**y** =-1, -1, -1, 1, 1, 1, 1, -1, -1, 1, -1, -1, -1, -1, 1, -1, -1, 1, 1, 1, -1, 1, 1, 1, -1, 1, -1, 1, 1, -1, 1, -1, -1, -1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1, -1, 1, 1, 1, -1, -1, -1, -1, 1, 1, -1, 1, 1, 1, 1, -1, 1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, -1, 1, -1, 1, 1, -1, 1, -1, -1;

or

**x** =1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, 1, -1, -1, 1, -1, -1, -1, 1, -1, -1, 1, 1, 1, 1, -1, -1, -1, 1, 1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, 1, 1, -1, 1, -1, -1, 1, -1, 1, -1, -1, -1, 1, -1, -1, -1, 1, 1, 1, -1, 1, 1, 1, -1, 1, 1, 1, -1, -1, -1, -1, 1, 1, 1;

**y** =-1, -1, 1, -1, 1, 1, -1, 1, -1, 1, 1, 1, -1, 1, 1, 1, 1, 1, -1, 1, 1, 1, -1, 1, 1, -1, -1, -1, -1, 1, 1, 1, 1, 1, -1, 1, -1, -1, 1, -1, 1, -1, -1, -1, 1, -1, -1, -1, -1, 1, 1, -1, 1, 1, 1, -1, 1, 1, -1, -1, -1, -1, 1, 1, 1, -1, -1, -1, 1, -1, 1, 1, -1, 1, -1, 1, 1, 1, -1, 1, 1, 1, 1, 1, -1, 1, 1, 1, -1, 1, 1, -1, -1, -1, -1, 1, 1, 1, -1, -1, 1, -1, 1, 1, -1, 1, -1, 1, 1, 1, -1, 1, 1, 1, -1, -1, -1, 1, -1, -1, -1, 1, -1, -1, -1, 1, 1, 1, 1, -1, -1, -1;

or

**x** =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, -1, -1, -1, -1, 1, 1, -1, 1, 1, -1, -1, 1, -1, 1, -1, -1, -1, -1, 1, 1, -1, -1, -1, 1, 1, -1, 1, -1, 1, -1, -1, -1, -1, -1, -1, 1, 1, -1, 1, 1, -1, -1, 1, -1, 1;

**y** =1, 1, 1, 1, -1, -1, 1, 1, 1, -1, -1, 1, -1, 1, -1, 1, -1, -1, -1, -1, -1, -1, 1, 1, -1, 1, 1, -1,-1, 1, -1, 1, -1, 1, 1, 1, 1, 1, -1 -1, 1, 1, 1 -1, -1, 1, -1, 1, 1, 1, 1, 1, 1, -1, -1, 1, -1, 1, 1, -1, 1, -1, -1, -1, -1, -1, 1, 1, -1, -1, -1, 1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, 1, -1, 1, 1, 1, 1, 1, 1, -1, -1, 1, -1, -1, 1, 1, -1, 1, -1;

or

**x** =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, -1, -1, 1, 1, 1, 1, 1, -1, 1, -1, -1, 1, 1, -1, 1, 1, -1, -1, -1, -1, -1, -1, 1, -1, 1, -1, 1, 1, -1, -1, -1, 1, 1, -1, -1, -1, -1, 1, -1, 1, 1, -1, -1, 1, -1, -1, 1, 1, 1, 1, 1, 1, -1, 1, -1, 1, -1, 1, 1, -1, -1, -1, 1, 1, 1, -1, -1, -1, -1;

**y** =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, -1, -1, -1, -1, -1, 1, -1, 1, -1, 1, -1, -1, 1, 1, 1, -1, -1, 1, 1, 1, 1, 1, -1, 1, -1, -1, 1, 1, -1, -1, 1, 1, 1, 1, 1, 1, 1, -1, 1, -1, 1, -1, -1, 1, 1, 1, -1, -1, 1, 1, 1, 1, -1, 1, -1, -1, 1, 1, 1, -1, 1, -1, 1, 1, -1, -1, -1, -1, -1, -1, 1, -1, 1, -1, 1, -1, -1, 1, 1, 1, 1, -1, 1, 1, 1, 1;

or

*x* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1,
-1, 1, 1, 1, -1, -1, 1, -1, 1, -1, 1, 1, 1, 1, 1, 1, 1, -1, -1, 1, -1, -1, 1, 1, -1, 1, -1, -1, -1, -1, -1, 1, 1, -1, -1, -1, 1, 1,
-1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1,
1, 1, 1, 1, -1, -1, 1, -1, -1, 1, 1, -1, 1, -1;


*y* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1,
-1, 1, 1, 1, -1, -1, 1, -1, 1, -1, 1, 1, 1, 1, 1, 1, 1, -1, -1, 1, -1, -1, 1, 1, -1, 1, -1, 1, 1, 1, 1, -1, -1, 1, 1, 1, 1, -1, -1, 1,
-1, 1, -1, -1, -1, -1, -1, -1, 1, 1, -1, 1, 1, -1, -1, 1, -1, 1, -1, -1, -1, -1, 1, 1, -1, -1, -1, 1, 1, -1, 1, -1, 1, -1, -1,
-1, -1, -1, -1, -1, 1, 1, -1, 1, 1, -1, -1, 1, -1, 1;

or

*x* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1,
-1, 1, 1, -1, 1, 1, -1, -1, -1, -1, -1, -1, 1, -1, 1, -1, 1, -1, -1, 1, 1, 1, -1, -1, 1, 1, 1, 1, -1, 1, -1, 1, 1, -1, -1, 1, -1, -1,
1, 1, 1, 1, 1, 1, 1, -1, 1, -1, 1, -1, -1, 1, 1, 1, -1, -1, 1, 1, 1, 1, 1, -1, 1, 1, -1, -1, 1, 1, 1, -1, 1, 1, 1, -1, -1, -1, -1, -1, -1, 1,
-1, 1, -1, 1, -1, -1, 1, 1, 1, -1, 1, 1, 1, 1;


*y* =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1,
-1, 1, 1, -1, 1, 1, -1, -1, -1, -1, -1, -1, 1, -1, 1, -1, 1, -1, -1, 1, 1, 1, -1, -1, 1, 1, 1, 1, -1, 1, -1, -1, 1, 1, -1, 1, 1,
-1, -1, -1, -1, -1, -1, -1, 1, -1, 1, -1, 1, 1, -1, -1, -1, 1, 1, -1, -1, -1, -1, -1, 1, -1, 1, 1, -1, -1, 1, -1, -1, 1, 1, 1, 1, 1,
1, -1, 1, -1, 1, -1, 1, 1, -1, -1, -1, 1, 1, -1, -1, -1, -1;

or

*x* =1, 1, 1, -1, 1, 1, -1, 1, 1, 1, 1, -1, -1, -1, 1, -1, 1, 1, 1, -1, 1, 1, 1, -1, 1, -1, -1, -1, 1, 1, 1, -1, 1, 1, 1, 1, 1, -1, 1, 1,
-1, 1, 1, 1, 1, -1, -1, -1, 1, -1, -1, -1, -1, 1, -1, -1, 1, -1, 1, 1, 1, 1, -1, -1, -1, 1, -1, 1, 1, 1, -1, 1, 1, 1, -1, 1, 1, 1, 1, -1, 1, 1,
-1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, 1, 1,
1, -1, 1, 1, 1, -1, 1, -1, -1, -1, 1, 1, 1, -1, 1;


*y* =1, 1, 1, -1, 1, 1, -1, 1, 1, 1, 1, -1, -1, -1, 1, -1, 1, 1, 1, -1, 1, 1, 1, -1, 1, -1, -1, -1, 1, 1, 1, -1, 1, 1, 1, 1, 1, -1, 1, 1,
-1, 1, 1, 1, 1, -1, -1, -1, 1, -1, -1, -1, -1, 1, -1, -1, 1, -1, 1, 1, 1, 1, -1, -1, -1, 1, -1, -1, -1, 1, -1, 1, 1, -1, -1, 1, 1, -1, -1, -1,
-1, 1, 1, 1, 1, -1, 1, -1, -1, -1, 1, -1, -1, 1, 1, 1, 1, -1, -1, -1, 1, 1, 1, 1, 1, -1, 1, 1, 1, -1, 1, 1, 1, 1, 1, -1, -1, -1, 1, 1, -1,
-1, -1, 1, -1, -1, 1, 1, -1, 1, 1, 1, 1, -1, -1, -1, 1, -1;

or

*x* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1,
-1, -1, -1, 1, -1, 1, 1, -1, 1, 1, 1, -1, 1, -1, -1, -1, 1, 1, 1, 1, -1, 1, 1, -1, 1, 1, 1, 1, -1, 1, 1, 1, 1, -1, -1, -1, 1, -1, 1, 1,
-1, 1, 1, 1, 1, -1, 1, 1, 1, 1, -1, -1, -1, -1, 1, -1, -1, 1, -1, -1, -1, -1, 1, -1, -1, -1, 1, 1, 1, -1, 1, 1, -1, -1, 1, -1, -1, -1, 1,
-1, 1, 1, 1, -1, 1, 1, 1, -1, -1, -1, -1, 1, -1, -1, 1, -1, -1, -1;


*y* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1,
-1, -1, -1, 1, -1, 1, 1, -1, 1, 1, 1, -1, 1, -1, -1, -1, 1, 1, 1, 1, -1, 1, 1, -1, 1, 1, 1, 1, -1, 1, -1, -1, -1, 1, -1, 1, 1, 1, -1,
-1, 1, 1, -1, -1, -1, -1, 1, -1, -1, 1, -1, -1, -1, -1, 1, -1, -1, -1, 1, 1, 1, 1, -1, 1, 1, -1, -1, 1, -1, -1, 1, 1, 1, -1, 1, 1, 1, 1, -1, 1,
-1, -1, -1, 1, 1, 1, 1, -1, 1, 1, -1, 1, 1, 1;

or

**80**

*x* =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1, 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, 1, 1, 1, -1, 1, 1, -1, 1, 1, -1, 1, -1, -1, -1, 1, 1, 1, -1, 1;

*y* =-1, -1, -1, 1, -1, -1, 1, -1, -1, -1, -1, 1, 1, 1, -1, 1, -1, -1, -1, 1, -1, -1, 1, -1, 1, 1, 1, 1,-1, -1, -1, 1, -1, -1, -1, -1, 1, -1, -1, 1, -1, -1, -1, -1, 1, 1, 1, -1, 1, 1, 1, 1, -1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, 1, 1, -1, 1, 1, 1, 1, -1, 1, 1, -1, 1, 1, -1, 1, -1, -1, -1, 1, 1, 1, -1, 1;

or

*x* =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, -1, 1, 1, 1, 1, -1, 1, -1, -1, -1, 1, 1, 1, 1, -1, 1, 1, 1, 1, -1, 1, 1, 1, 1, -1, -1, -1, -1, 1, -1, -1, 1, -1, -1, -1, -1, 1, -1, -1, -1, 1, 1, 1, -1, 1, 1, -1, -1, 1, -1, -1, -1, -1, 1, -1, -1, -1, 1, 1, 1, -1, 1, 1, -1, -1, 1, -1, -1, -1, 1, -1, 1, 1, 1, -1, 1, 1, 1, -1, -1, -1, -1, 1, -1, -1, 1, -1, -1, -1;

*y* =-1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, -1, 1, -1, -1, -1, 1, 1, 1, -1, 1, -1, -1, 1, -1, -1, -1, -1, 1, -1, 1, 1, 1, -1, -1, -1, -1, 1, -1, -1, -1, -1, 1, -1, -1, -1, -1, 1, 1, 1, 1, -1, 1, 1, -1, 1, 1, 1, 1, -1, 1, 1, 1, -1, -1, -1, 1, -1, -1, 1, 1, -1, 1, 1, 1, 1, -1, 1, 1, 1, -1, -1, -1, 1, -1, -1, 1, 1, -1, 1, 1, 1, -1, 1, -1, -1, -1, 1, -1, -1, -1, 1, 1, 1, 1, -1, 1, 1, -1, 1, 1, 1;

or

*x* =1, 1, 1, -1, -1, 1, -1, -1, 1, 1, 1, -1, 1, -1, 1, 1, 1, 1, 1, -1, -1, 1, -1, -1, -1, -1, -1, 1,-1, 1, -1, -1, -1, -1, -1, 1, 1, -1, 1, 1, -1, -1, -1, 1, -1, 1, -1, -1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, 1, -1, 1, -1, 1, 1, -1, -1, -1, 1, 1, -1, 1, 1, 1, 1, 1, -1, 1, -1, 1, 1;

*y* =1, 1, 1, -1, -1, 1, -1, -1, 1, 1, 1, -1, 1, -1, 1, 1, 1, 1, 1, -1, -1, 1, -1, -1, -1, -1, 1,-1, 1, 1, -1, -1, -1, -1, 1, 1, -1, -1, -1, 1, -1, 1, -1, -1, 1, 1, 1, -1, -1, 1, -1, -1, -1, -1, -1, 1, -1, 1, -1, -1, -1, -1, -1, 1, 1, -1, 1, 1, -1, -1, -1, -1, -1, 1, 1, -1, 1, 1, 1, 1, 1, -1, 1, -1, 1, 1, -1, -1, -1, 1, 1, -1, 1, 1, -1, -1, -1, 1, -1, 1, -1, -1, 1, 1, 1, 1, -1, -1, -1, 1, -1, -1, -1, -1, -1, 1, -1, 1, 1, -1, -1;

or

*x* =1, 1, -1, 1, -1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, 1, -1, -1, 1, 1, 1, 1, -1, 1, -1, 1, 1, 1, -1, -1, 1, -1, -1, 1, 1, 1, 1, -1, 1, -1, 1, 1, 1, 1, 1, -1, 1, 1, -1, -1, -1, 1, 1, -1, 1, -1, 1, 1, 1, -1, -1, 1, -1, 1, 1, 1, -1, -1, 1, -1, -1, -1, -1, -1, 1, -1, 1, -1, -1, -1, 1, 1, -1, 1, 1, -1, -1, -1;

*y* =1, 1, -1, 1, -1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, 1, 1, 1, 1, -1, 1, -1, 1, 1, 1, -1, -1, 1, -1, -1, 1, 1, 1, -1, -1, 1, -1, 1, -1, -1, -1, -1, 1, 1, -1, 1, 1, -1, -1, -1, -1, 1, -1, 1, -1, -1, -1, -1, -1, 1, -1, -1, 1, 1, 1, 1, 1, -1, 1, -1, 1, 1, 1, 1, -1, 1, -1, -1, 1, 1, 1, -1;

or

*x* =1, 1, 1, -1, -1, 1, -1, -1, 1, 1, 1, -1, 1, -1, 1, 1, 1, 1, 1, -1, -1, 1, -1, -1, -1, -1, 1, -1, 1, 1, -1, -1, -1, -1, -1, 1, 1, -1, 1, 1, -1, -1, -1, 1, -1, 1, -1, -1, 1, -1, -1, 1, 1, 1, -1, -1, 1, -1, -1, -1, -1, -1, 1, -1, 1, -1, -1, 1, 1, 1, -1, -1, 1, -1, -1, -1, -1, 1, -1, -1, 1, -1, -1, -1, 1, -1, 1, -1, -1, -1, -1, -1, 1, 1,

1, -1, 1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1;

$y$ =-1, -1, -1, 1, 1, -1, 1, 1, -1, -1, -1, 1, -1, 1, -1, -1, -1, -1, -1, 1, 1, -1, 1, 1, 1, 1, 1, -1, 1, -1, 1, 1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1, 1, 1, 1, -1, -1, 1, -1, -1, 1, 1, 1, 1, 1, -1, -1, 1, -1, -1, -1, -1, -1, 1, -1, 1, -1, -1, 1, 1, 1, -1, -1, 1, -1, -1, 1, 1, 1, -1, 1, -1, 1, 1, -1, -1, -1, 1, 1, -1, 1, 1, 1, 1, 1, -1, 1, -1, 1, 1;

or

$x$ =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, 1, -1, -1, 1, 1, 1, 1, 1, -1, 1, -1, 1, 1, 1, -1, -1, 1, -1, -1, 1, 1, 1, 1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, 1, 1, -1, 1, 1, 1, -1, -1, -1, -1, -1, 1, -1, 1, -1, -1, -1, 1, 1, -1, 1, 1, -1, -1, -1;

$y$ =-1, -1, 1, -1, 1, -1, -1, -1, -1, -1, 1, -1, -1, 1, 1, 1, -1, -1, 1, -1, 1, -1, -1, -1, 1, 1, -1, 1, 1, -1, -1, -1, 1, 1, -1, 1, 1, -1, -1, -1, 1, 1, 1, 1, 1, 1, -1, 1, 1, -1, -1, -1, -1, -1, 1, -1, 1, -1, -1, -1, 1, 1, -1, 1, 1, -1, -1, -1, 1, 1, -1, 1, -1, 1, 1, 1, 1, -1, -1, 1, 1, -1, -1, -1, 1, 1, -1, -1, 1, -1, -1, 1, 1, 1, 1, 1, -1, 1, -1, 1, 1, 1, 1, 1, -1, 1, 1, -1, -1, -1, -1, 1, 1, -1, 1, 1, -1, -1, -1;

or

$x$ =1, -1, 1, 1, -1, -1, -1, 1, 1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, 1, -1, -1, -1, -1, -1, 1, -1, 1, -1, -1, 1, 1, 1, 1, -1, -1, 1, -1, -1, 1, 1, 1, 1, 1, 1, -1, -1, 1, -1, -1, 1, 1, 1, -1, -1, 1, -1, -1, -1, 1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1;

$y$ =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, 1, 1, -1, 1, -1, 1, 1, -1, -1, -1, 1, 1, -1, 1, 1, 1, 1, 1, -1, 1, -1, 1, 1, -1, -1, -1, 1, 1, -1, 1, 1, 1, 1, 1, -1, 1, -1, 1, 1, 1, -1, -1, -1, 1, -1, 1, -1, -1, -1, -1, -1, 1;

or

$x$ =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, 1, 1, -1, -1, 1, -1, -1, 1, 1, 1, 1, 1, -1, 1, 1, 1, -1, -1, -1, -1, -1, -1, 1, -1, -1, 1, -1, -1, 1, 1, 1, 1, -1, -1, 1, -1, -1, 1, 1, 1, 1, 1, -1, 1, -1, 1, 1, 1, 1, -1, -1, 1, -1, -1, 1, 1, 1, 1, -1, 1, 1, 1, 1, -1, 1, 1, -1, -1, -1, 1, 1, -1, 1;

$y$ =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, 1, -1, -1, 1, -1, -1, 1, 1, 1, 1, 1, -1, 1, 1, 1, -1, -1, -1, -1, -1, -1, 1, -1, -1, 1, -1, -1, 1, 1, 1, 1, -1, 1, 1, 1, -1, -1, -1, -1, -1, 1, -1, 1, -1, -1, -1, 1, 1, -1, 1, 1, 1, -1, -1, -1, -1, -1, 1, -1, -1, 1, 1, 1, -1, -1, 1, -1;

or

$x$ =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, 1, -1, -1, 1, -1, -1, -1, -1, -1, 1, -1, 1, -1, -1, 1, 1, 1, 1, 1, -1, -1, 1, -1, -1, 1, 1, 1, -1, -1, 1, -1, -1, -1, 1, -1, 1, -1, -1, 1, 1, 1, -1, -1, 1, -1, -1, 1, 1, 1, -1, -1, 1, -1, -1, -1, -1, -1, 1, -1, 1, -1, -1, 1, 1, 1, 1, 1, -1, 1, -1, 1, 1, 1, 1, 1, -1;

*y* =-1, 1, -1, -1, 1, 1, 1, -1, -1, 1, -1, -1, -1, -1, -1, 1, 1, -1, 1, 1, -1, -1, -1, 1, -1, 1, -1, -1, -1, -1, -1, 1, 1, -1, 1, 1, -1, -1, -1, 1, 1, -1, 1, 1, 1, 1, 1, -1, 1, -1, 1, 1, -1, -1, -1, 1, -1, 1, -1, -1, -1, -1, -1, 1, -1, 1, -1, -1, 1, 1, 1, -1, -1, 1, -1, -1, -1, -1, -1, -1, -1, -1, 1, 1, -1, 1, 1, -1, -1, -1, 1, -1, 1, -1, -1, -1, -1, -1, 1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, 1, -1;

or

*x* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, 1, -1, -1, 1, -1, -1, 1, 1, 1, 1, 1, -1, 1, 1, 1, -1, -1, -1, 1, 1, 1, 1, 1, -1, 1, 1, -1, 1, -1, 1, 1, 1, 1, 1, 1, -1, 1, -1, 1, 1, 1, -1, -1, 1, -1, 1, -1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, 1, 1, 1, 1, 1, -1, 1, 1, -1, -1, -1, 1, 1, -1, 1;

*y* =-1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, 1, 1, -1, -1, -1, -1, -1, 1, -1, 1, -1, -1, -1, 1, 1, 1, -1, 1, 1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, -1, -1, -1, 1, -1, -1, 1, 1, 1, -1, -1, 1, -1, -1, 1, 1, 1, 1, 1, -1, 1, -1, 1, 1, 1, -1, -1, 1, -1, -1, 1, 1, 1, 1, 1, -1, 1, 1, 1, 1, 1, -1, 1, 1, -1, -1, -1, 1, 1, -1, 1;

or

*x* =1, 1, -1, 1, -1, -1, 1, -1, -1, -1, -1, 1, -1, -1, -1, 1, 1, 1, -1, 1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, 1, -1, 1, 1, 1, -1, 1, -1, -1, -1, 1, 1, 1, 1, 1, -1, -1, -1, 1, -1, 1, 1, -1, 1, 1, 1, 1, 1, -1, 1, 1, 1, -1, -1, -1, 1, -1, -1, -1, 1, -1, 1, 1, 1, -1, -1, -1, -1, 1, -1, -1, 1, -1, 1, 1, -1, 1, 1, 1, 1, 1, -1, 1, 1, 1, 1, -1, 1, 1, 1, -1, 1, -1, -1, -1, 1, 1, 1, 1, -1;

*y* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, 1, -1, 1, 1, -1, -1, -1, 1, 1, 1, 1, -1, 1, 1, -1, 1, -1, -1, -1, 1, -1, -1, -1, -1, 1, 1, 1, 1, -1, 1, 1, 1, -1, 1, -1, -1, -1, 1, 1, 1, 1, -1, 1, 1, 1, -1, 1, -1, -1, -1, 1, -1, -1, -1, -1, 1, -1, -1, -1, 1, -1, -1, 1, -1, -1, -1, -1, 1, -1, -1, -1, 1, -1, -1, 1, -1, -1, -1, -1, 1, -1, -1, 1, 1, 1, -1, -1, -1, -1, 1;

or

*x* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, 1, -1, 1, 1, 1, 1, -1, 1, 1, -1, 1, -1, -1, -1, -1, 1, 1, 1, 1, -1, -1, -1, 1, -1, 1, 1, 1, 1, -1, 1, 1, 1, 1, -1, -1, -1, -1, 1, -1, -1, -1, -1, 1, -1, -1, 1, -1, 1, 1;

*y* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1, 1, -1, -1, -1, 1, -1, -1, 1, -1, -1, -1, 1, -1, -1, -1, -1, 1, -1, -1, 1, -1, 1, 1, 1, -1, -1, -1, -1, 1, 1, 1, 1, -1, 1, -1, -1, -1, -1, 1, -1, -1, 1, 1, 1, -1, 1, 1, 1, 1, 1, -1, 1, 1, 1, 1, -1, 1, 1, 1, -1, 1, -1, -1, -1, 1, 1, 1, 1, -1;

or

*x* =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, 1, -1, 1, 1, 1, -1, 1, 1, 1, -1, 1, -1, -1, -1, 1, 1, 1, 1, -1, -1, -1, 1, -1, 1, 1, -1, 1, 1, 1, 1, 1, -1, 1, 1, 1, 1, -1, 1, -1, -1, -1, 1, 1, 1, 1, -1, 1, 1, 1, -1, 1, -1, -1, -1, 1, -1, -1, -1, 1, -1, 1, 1, -1, 1, 1, 1, 1, -1, 1, 1, 1, 1, -1, 1, -1, -1, -1, 1, -1, 1, 1, 1, -1, 1, 1, 1, -1, 1, 1, 1, -1, 1, 1, 1, 1, 1, -1;

*y* =-1, -1, 1, -1, 1, 1, -1, 1, 1, 1, 1, -1, 1, 1, 1, -1, -1, -1, 1, -1, -1, -1, 1, -1, 1, 1, 1, -1, - 1, -1, -1, 1, 1, 1, -1, 1, -1, -1, 1, -1, -1, -1, -1, 1, -1, -1, -1, 1, -1, -1, 1, -1, -1, 1, -1, -1, -1, 1, -1, 1, 1, 1, -1, -1, -1, -1, 1, -1, -1, 1, -1, 1, 1, -1, 1, 1, 1, 1, -1, 1, 1, 1, 1, 1, -1, 1, 1, 1, -1, -1, -1, 1, -1, -1, -1, 1, -1, 1, 1, 1, -1, -1, -1, -1, 1, -1, -1, 1, -1, 1, 1, -1, 1, 1, 1, 1, -1, 1, 1, 1, 1, -1, 1, 1, -1, 1, 1, 1, -1, 1, -1, -1, -1, 1, 1, 1, 1, -1;

or

*x* =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1, -1, 1, 1, 1, 1, -1, -1, -1, 1, -1, 1, 1, 1, -1, 1, 1, -1, 1, 1, 1, -1, 1, 1, 1, 1, -1, 1, 1, -1, 1, -1, -1, -1, 1, 1, 1, 1, -1, -1, -1, 1, -1, 1, 1, 1, 1, -1, 1, 1, 1, 1, -1, -1, 1, -1, -1, -1, -1, 1, -1, -1, 1, -1, 1, 1;

*y* =-1, 1, 1, 1, 1, -1, -1, -1, 1, -1, 1, 1, 1, -1, 1, 1, -1, 1, 1, 1, -1, 1, 1, 1, 1, -1, 1, 1, -1, 1, -1, -1, 1, -1, -1, -1, -1, 1, 1, 1, -1, 1, -1, -1, -1, 1, -1, -1, -1, 1, 1, 1, -1, 1, 1, 1, 1, -1, 1, 1, -1, 1, -1, -1, -1, 1, 1, 1, 1, -1, -1, -1, 1, -1, 1, 1, 1, -1, 1, 1, 1, 1, -1, 1, 1, -1, 1, 1, 1, -1, 1, 1, 1, 1, -1, 1, 1, -1, 1, -1, -1, -1, 1, 1, 1, 1, -1, -1, -1, 1, -1, 1, 1, 1, 1, -1, 1, 1, 1, -1, -1, -1, 1, -1, -1, 1, -1, 1, 1;

or

*x* =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, 1, 1, -1, 1, -1, -1, 1, 1, -1, -1, -1, -1, 1, -1, 1, 1, -1, -1, -1, -1, 1, -1, 1, -1, 1, -1, -1, 1, -1, -1, 1, 1, -1, -1, -1, -1, -1, 1, -1, 1, 1, -1, -1, 1, 1, 1, -1, -1, -1, -1, -1, 1, -1, 1, -1, 1, -1, -1, 1, -1, -1, 1, 1;

*y* =1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, -1, -1, -1, -1, -1, -1, -1, 1, -1, 1, 1, -1, -1, 1, 1, 1, 1, -1, 1, -1, 1, -1, 1, 1, -1, 1, 1, -1, -1, 1, 1, 1, 1, 1, -1, 1, -1, -1, 1, 1, -1, -1, -1, 1, 1, 1, 1, 1, -1, 1, -1, -1, 1, 1, -1, 1, 1, -1, 1, 1, -1, -1;

or

*x* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, -1, 1, -1, 1, -1, 1, -1, 1, -1, -1, -1, 1, 1, -1, -1, -1, 1, 1, -1, -1, 1, -1, 1, 1, 1, 1, 1, 1, 1, -1, -1, 1, -1, -1, 1, -1, 1, 1, -1, 1, -1, -1, -1, -1, -1, -1, 1, 1, -1, -1, 1, 1, -1, 1, -1, -1, 1, -1, -1, 1, 1, 1, 1, -1, -1, 1, 1, 1, -1, 1, 1, -1, 1, -1, 1, -1, 1, -1, 1, -1, -1, 1, 1, 1, -1, -1, 1, 1, -1, 1, 1, -1, 1, 1, -1, -1, -1, -1, -1;

*y* =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, -1, 1, -1, 1, -1, 1, -1, -1, -1, -1, -1, 1, 1, -1, -1, -1, 1, 1, -1, -1, 1, -1, 1, 1, 1, 1, 1, 1, -1, -1, 1, 1, -1, -1, 1, -1, -1, 1, -1, 1, 1, 1, 1, 1, 1, 1, 1, 1, -1, -1, 1, -1, -1, 1, -1, 1, 1, -1, 1, -1, -1, 1, -1, 1, 1, -1, 1, -1, -1, 1, -1, -1, -1, -1, 1, 1, -1, -1, -1, 1, 1, -1, -1, 1, -1, 1, 1, 1, 1, 1;

or

*x* =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, 1, 1, -1, -1, -1, -1, 1, -1, 1, 1, -1, -1, -1, -1, 1, -1, 1, 1, -1, -1, 1, 1, 1, -1, -1, -1, -1, -1, 1, -1, 1, 1, -1, -1, 1, 1, 1, -1, -1, -1, -1, -1, 1, -1, 1, -1, 1, -1, -1, 1, -1, -1, 1, 1;

*y* =-1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, -1, -1, -1, -1,

-1, 1, -1, 1, 1, -1, -1, 1, 1, 1, -1, -1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, -1, -1, -1, -1, -1, 1, -1, 1, 1, -1, -1, 1, 1, 1, -1, -1, -1, -1, -1, -1, 1, -1, 1, -1, 1, -1, -1, 1, -1, -1, 1, 1;

or

$x$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, -1, -1, 1, 1, -1, 1, 1, -1, 1, -1, 1, -1, 1, 1, 1, 1, -1, -1, 1, 1, 1, -1, -1, 1, 1, -1, 1, -1, -1, -1, -1, -1;

$y$ =-1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, -1, -1, 1, 1, -1, 1, 1, -1, 1, -1, 1, 1, 1, 1, -1, -1, 1, 1, 1, -1, -1, 1, 1, -1, 1, -1, -1, -1, -1, -1, -1, -1, 1, 1, -1, 1, 1, -1, 1, -1, 1, -1, 1, 1, 1, 1, 1, 1, -1, -1, 1, -1, 1, 1, -1, 1, -1, 1, -1, -1, -1, -1, 1, 1, -1, -1, 1, 1, -1, 1, -1, -1, -1, -1, -1;

or

$x$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, -1, -1, -1, -1, -1, 1, -1, 1, 1, -1, -1, 1, 1, 1, 1, -1, 1, -1, 1, -1, 1, 1, -1, 1, 1, -1, -1, 1, 1, 1, 1, 1, -1, 1, 1, -1, -1, 1, 1, -1, -1, -1, 1, 1, 1, -1, -1, 1, 1, -1, 1, 1, -1, -1;

$y$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, 1, 1, -1, -1, -1, -1, 1, -1, 1, 1, -1, -1, -1, -1, 1, -1, 1, 1, -1, -1, 1, 1, -1, -1, -1, -1, 1, 1, 1, -1, -1, -1, -1, -1, 1, -1, 1, 1, -1, -1, 1, 1, 1, -1, -1, -1;

or

$x$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, 1, 1, 1, 1, 1, 1, -1, -1, 1, -1, -1, 1, -1, 1, -1, 1, -1, 1, -1, -1, -1, -1, -1, 1, 1, -1, -1, -1, 1, 1, -1, -1, 1, -1, 1, 1, 1, 1, 1;

$y$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, -1, -1, -1, -1, -1, -1, 1, 1, -1, 1, 1, -1, 1, -1, 1, -1, -1, 1, 1, -1, -1, -1, -1, -1;

or

$x$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, -1, -1, -1, -1, -1, 1, -1, 1, 1, -1, -1, -1, 1, 1, 1, -1, -1, 1, 1, 1, 1, -1, 1, 1, -1, -1, 1, 1, -1, -1, -1, 1, 1, 1, 1, 1, -1, 1, -1, -1, 1, 1, -1, 1, 1, -1, -1;

$y$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1, -1, -1, 1, 1, -1, -1, -1, -1, 1, -1, 1, -1, 1, -1, -1, 1, -1, 1, -1, 1, -1, -1, 1, 1, -1, -1, -1, -1, -1, 1, -1, 1, 1, -1, -1, 1, 1, 1, -1, -1, -1,

-1, -1, -1, 1, -1, 1, -1, 1, -1, -1, 1, -1, -1, 1, 1;

or

$x$ =1, 1, -1, -1, 1, -1, -1, 1, -1, 1, -1, 1, -1, -1, -1, -1, -1, -1, 1, 1, 1, -1, -1, 1, 1, -1, 1, -1, -1, -1, -1, -1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1, -1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1;

$y$ = 1, 1, -1, -1, 1, -1, -1, -1, 1, -1, 1, -1, 1, -1, -1, -1, -1, -1, 1, 1, 1, -1, -1, 1, 1, -1, 1, -1, -1, -1, -1, -1, 1, 1, -1, -1, 1, -1, 1, -1, 1, -1, -1, -1, -1, 1, 1, -1, -1, -1, 1, 1, -1, -1, 1, -1, 1, 1, 1, 1, 1, 1, 1, -1, -1, 1, -1, -1, 1, -1, 1, 1, -1, -1, -1, -1, -1, -1, -1, 1, 1, 1, -1, -1, 1, 1, -1, 1, -1, -1, -1, -1, -1, -1, 1, 1, -1, 1, 1, -1, 1, -1, 1, -1, 1, 1, 1, 1, 1, -1, -1, 1, 1, 1, -1, -1, 1, 1, -1, 1, -1, -1, -1, -1, -1.

15. The method according to claim 14, wherein when N is equal to 64, the GCP is any one of the following pairs:

$x$ = 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

$y$ =-1, -1, -1, 1, -1, -1, 1, -1, -1, -1, -1, 1, 1, 1, -1, 1, -1, -1, -1, 1, -1, -1, 1, -1, 1, 1, 1, -1, -1, -1, 1, -1, 1, 1, 1, -1, -1, -1, 1, -1, -1, -1, -1, 1, -1, -1, 1, -1, 1, 1, 1, -1, -1, -1, 1, -1;

or

$x$ =1, -1, 1, 1, 1, -1, -1, -1, 1, -1, 1, 1, -1, 1, 1, 1, 1, -1, 1, 1, 1, -1, -1, -1, -1, 1, -1, -1, 1, -1, -1, -1, 1, -1, 1, 1, 1, -1, -1, -1, 1, -1, 1, 1, 1, -1, 1, 1, 1, -1, 1, -1, -1, -1, 1, 1, 1, 1, -1, 1, 1, 1, -1, 1, 1, 1;

$y$ =-1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, 1, -1, 1, 1, 1, -1, -1, -1, 1, -1, 1, 1, 1, -1, 1, 1, 1, -1, 1, -1, -1, -1, 1, 1, 1, 1, -1, 1, 1, -1, 1, 1, 1;

or

$x$ =1, 1, 1, 1, 1, 1, -1, -1, 1, 1, -1, -1, 1, 1, 1, 1, 1, -1, 1, -1, -1, 1, 1, -1, 1, -1, -1, 1, -1, 1, -1, 1, -1, -1, -1, -1, -1, -1, 1, 1, 1, 1, -1, -1, 1, 1, 1, 1, -1, 1, -1, 1, 1, -1, -1, 1, 1, -1, -1, 1, -1, 1, 1, -1, 1;

$y$ =-1, -1, -1, -1, -1, -1, 1, 1, -1, -1, 1, 1, -1, -1, -1, -1, -1, 1, -1, 1, 1, -1, -1, 1, -1, 1, 1, -1, 1, -1, 1, -1, -1, -1, -1, -1, -1, -1, 1, 1, 1, 1, -1, 1, 1, 1, 1, -1, 1, -1, 1, 1, -1, -1, 1, 1, -1, -1, 1, -1, 1, 1, -1, 1;

or

$x$ =1, -1, 1, -1, 1, -1, -1, 1, 1, -1, -1, 1, 1, -1, 1, -1, 1, 1, 1, 1, -1, -1, 1, 1, 1, 1, -1, -1, -1, -1, -1, -1, -1, 1, -1, 1, -1, 1, 1, -1, 1, -1, -1, 1, 1, -1, 1, -1, -1, -1, -1, -1, -1, 1, 1, -1, -1, 1, 1, -1, -1, -1, -1, -1, -1;

$y$ = -1, 1, -1, 1, -1, 1, 1, -1, -1, 1, 1, -1, -1, 1, -1, 1, -1, -1, -1, -1, 1, 1, -1, -1, -1, -1, 1, 1, 1, 1, 1, -1, 1, -1, 1, -1, 1, 1, 1, 1, 1, -1, 1, -1, 1, -1, 1, 1, -1, 1, -1, -1, -1, -1, -1, 1, 1, -1, -1, 1, 1, -1, -1, -1, -1, -1, -1;

or

**x** = 1, -1, 1, -1, -1, -1, -1, -1, -1, -1, -1, -1, 1, -1, 1, -1, 1, -1, -1, 1, -1, -1, 1, 1, 1, 1, -1, -1, -1, 1, 1, -1, 1, -1, 1, -1, 1, 1, 1, 1, -1, -1, -1, -1, -1, 1, -1, 1, 1, -1, -1, 1, 1, -1, -1, 1, 1, -1, -1, 1, -1, -1, 1; **y** =1, -1, 1, -1, -1, -1, -1, -1, -1, -1, -1, -1, 1, -1, 1, -1, 1, -1, -1, 1, -1, -1, 1, 1, 1, 1, -1, -1, -1, 1, 1, -1, -1, 1, -1, 1, -1, -1, -1, -1, 1, 1, 1, 1, 1, -1, 1, -1, -1, 1, 1, -1, -1, -1, 1, 1, -1, -1, 1, 1, -1, 1, 1, -1;

or

**x** =1, -1, -1, 1, -1, -1, 1, 1, -1, -1, 1, 1, 1, -1, -1, 1, 1, -1, 1, -1, -1, -1, -1, -1, 1, 1, 1, 1, -1, 1, -1, 1, 1, -1, -1, 1, 1, 1, -1, -1, -1, 1, 1, -1, 1, 1, -1, 1, -1, 1, -1, 1, 1, 1, 1, 1, 1, 1, 1, 1, -1, 1, -1;

**y** = 1, -1, -1, 1, -1, -1, 1, 1, -1, -1, 1, 1, 1, -1, -1, 1, 1, -1, 1, -1, -1, -1, -1, -1, 1, 1, 1, 1, -1, 1, -1, 1, -1, 1, 1, -1, -1, -1, 1, 1, 1, 1, -1, -1, 1, -1, -1, 1, 1, 1, -1, -1, -1 ,-1 -1 ,-1 ,-1, -1, -1, -1, 1, -1, 1;

or

**x** =1, 1, -1, 1, -1, -1, 1, -1, -1, -1, -1, 1, -1, -1, -1, 1, 1, 1, -1, 1, 1, 1, -1, 1, -1, -1, -1, 1, 1, 1, 1, -1, -1, -1, 1, -1, 1, 1, -1, 1, 1, 1, 1, -1, 1, 1, 1, -1, 1, 1, -1, 1, 1, 1, -1, 1, -1, -1, -1, 1, 1, 1, 1, -1;

or

**y** =-1, -1, 1, -1, 1, 1, -1, 1, 1, 1, 1, -1, 1, 1, 1, -1, -1, -1, 1, -1, -1, -1, 1, -1, 1, 1, 1, -1, -1, -1, -1, 1, -1, -1, 1, -1, 1, 1, -1, 1, 1, 1, 1, -1, 1, 1, 1, -1, 1, 1, 1, -1, 1, 1, 1, -1, 1, -1, -1, -1, 1, 1, 1, 1, -1;

or

**x** =1, -1, -1, -1, -1, 1, 1, 1, -1, 1, -1, -1, -1, 1, -1, -1, 1, -1, -1, -1, 1, -1, -1, -1, -1, 1, -1, -1, 1, -1, 1, 1, -1, 1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1;

or

**y** =-1, 1, 1, 1, 1, -1, -1, -1, 1, -1, 1, 1, 1, -1, 1, 1, -1, 1, 1, 1, -1, 1, 1, 1, 1, -1, 1, 1, -1, 1, -1, -1, -1, 1, 1, 1, 1, -1, -1, -1, 1, -1, 1, 1, 1, -1, 1, 1, 1, -1, -1, -1, 1, -1, -1, -1, -1, 1, -1, -1, 1, -1, 1, 1;

or

**x** =1, 1, 1, -1, 1, -1, 1, 1, -1, -1, -1, 1, -1, 1, -1, -1, 1, 1, 1, -1, -1, 1, -1, -1, 1, 1, 1, -1, -1, 1, -1, -1, 1, 1, 1, 1, -1, 1, -1, 1, 1, 1, 1, 1, -1, 1, -1, 1, 1, 1, 1, 1, -1, -1, 1, -1, -1, -1, -1, -1, 1, 1, -1, 1, 1; **y** =1, -1, 1, 1, 1, -1, -1, 1, 1, -1, 1, -1, 1, 1;

or

**y** =-1, -1, -1, 1, -1, 1, -1, -1, 1, 1, 1, -1, 1, -1, 1, 1, -1, -1, -1, 1, 1, -1, 1, 1, -1, -1, -1, 1, 1, -1, 1, 1, 1, 1, 1, -1, 1, -1, 1, 1, 1, 1, -1, 1, -1 1, -1, 1, 1, 1, 1, 1, 1, -1, -1, 1, -1, -1, -1, -1, -1, 1, 1, -1, 1, 1;

or

**x** = 1, 1, -1, 1, 1, -1, -1, -1, -1, -1, 1, -1, -1, 1, 1, 1, 1, 1, -1, 1, -1, 1, 1, 1, 1, 1, -1, 1, -1, 1, 1, 1, 1, 1, -1, 1, 1, -1, -1, -1, 1, 1, -1, 1, 1, -1, -1, -1, 1, 1, -1, 1, -1, 1, 1, 1, 1, -1, -1, 1, -1, 1, -1, -1, -1;

or

**y** =-1, -1, 1, -1, -1, 1, 1, 1, 1, 1, -1, 1, 1, -1, -1, -1, -1, -1, 1, -1, 1, -1, -1, -1, -1, -1, 1, -1, 1, -1, -1, -1, -1, 1, 1, -1, 1, 1, -1, -1, -1, 1, 1, -1, 1, -1, 1, 1, 1, -1, -1, 1, -1, 1, -1, -1, -1, -1, -1;

or

*x* =1, 1, 1, -1, -1, -1, -1, 1, 1, 1, 1, -1, 1, 1, 1, -1, 1, -1, 1, 1, -1, 1, -1, -1, -1, 1, -1, -1,-1, 1, -1, -1, 1, 1, 1, -1, 1, 1, 1, -1, 1, 1, 1, -1, -1, -1, -1, 1, 1, -1, 1, 1, 1, -1, 1, 1, -1, 1, -1, -1, 1, -1, 1, 1;

*y* =1, 1, 1, -1, -1, -1, -1, 1, 1, 1, 1, -1, 1, 1, 1, -1, 1, -1, 1, 1, -1, 1, -1, -1, -1, 1, -1, -1,-1, 1, -1, -1, -1, -1, -1, 1, -1, -1, -1, 1, -1, -1, -1, 1, 1, 1, 1, -1, -1, 1, -1, -1, -1, 1, -1, -1, 1, -1, 1, 1, -1, 1, -1, -1;

or

*x* = 1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, 1, 1, -1, 1, 1, 1, -1, 1, 1, 1, -1, 1, -1, -1, 1, -1, 1, -1, -1, -1, 1, -1, -1, -1, -1, 1, 1, 1, 1, -1, -1, -1;

*y* =1, 1, -1, 1, -1, -1, 1, -1, 1, 1, -1, 1, 1, 1, -1, 1, 1, -1, -1, -1, -1, 1, 1, 1, -1, 1, 1, 1, -1, 1, 1, 1, -1, -1, 1, -1, -1, -1, 1, -1, -1, -1, 1, -1, 1, 1, -1, 1, -1, 1, 1, 1, -1, 1, 1, 1, 1, -1, -1, -1, -1, 1, 1, 1;

or

*x* = 1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, 1, 1, 1, 1, -1, 1, 1, -1, 1, 1, 1, 1, -1, -1, -1, 1, -1, -1, -1, -1, 1, -1, -1, 1, -1, 1, 1, 1, -1, -1, -1, 1, -1;

*y* =1, 1, 1, -1, 1, 1, -1, 1, 1, 1, 1, -1, -1, -1, 1, -1, 1, 1, 1, -1, 1, 1, -1, 1, -1, -1, -1, 1, 1, 1, -1, 1, -1, -1, -1, 1, -1, -1, 1, -1, -1, -1, -1, 1, -1, -1, 1, 1, 1, -1, 1, 1, 1, 1, -1, 1, 1, 1, -1, 1, -1, -1, -1, 1, 1, 1, -1, 1;

or

*x* =1, -1, 1, 1, 1, -1, -1, -1, 1, -1, 1, 1, -1, 1, 1, 1, 1, -1, 1, 1, 1, 1, -1, -1, -1, -1, 1, -1, -1, 1, 1, -1, -1, -1, 1, -1, 1, 1, 1, -1, -1, -1, 1, -1, 1, 1, -1, 1, 1, 1, -1, 1, -1, -1, -1, 1, 1, 1, 1, -1, 1, 1, -1, 1, 1, 1;

*y* =1, -1, 1, 1, 1, -1, -1, -1, 1, -1, 1, 1, -1, 1, 1, 1, 1, -1, 1, 1, 1, 1, -1, -1, -1, -1, 1, -1, -1, 1, -1, -1, -1, -1, 1, -1, -1, -1, 1, 1, 1, -1, 1, -1, -1, 1, -1, -1, -1, 1, -1, -1, 1, -1, -1, -1;

or

*x* =1, 1, 1, -1, -1, 1, -1, -1, 1, 1, 1, -1, 1, -1, 1, 1, 1, 1, 1, -1, -1, 1, -1, -1, -1, -1, -1, 1,-1, 1, 1, -1, -1, -1, -1, -1, 1, 1, -1, 1, 1, -1, -1, -1, 1, -1, 1, 1, -1, -1, -1, 1, 1, 1, -1, -1, 1, -1, -1, -1, -1, -1, 1, -1, 1, -1, -1;*y* = 1, 1, 1, -1, -1, 1, -1, -1, 1, 1, 1, -1, 1, -1, 1, 1, 1, 1, 1, -1, -1, 1, -1, -1, -1, -1, -1, 1, -1, 1, -1, -1, -1, 1, -1, 1, -1, -1, 1, 1, 1, -1, -1, 1, -1, -1, 1, 1, 1, -1, 1, 1, -1, 1, 1, -1, -1, -1, 1, 1, -1, 1, 1, 1, 1, 1, -1, 1, 1, -1, 1, 1;

or

*x* =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, -1, -1, 1, -1, 1, -1, -1, -1, -1, -1, 1, -1, -1, 1, 1, 1, 1, 1, -1, 1, -1, 1, 1, 1, -1, -1, 1, -1, -1, 1, 1, 1;

*y* =1, 1, -1, 1, -1, 1, 1, 1, 1, 1, -1, 1, 1, -1, -1, -1, 1, 1, -1, 1, -1, 1, 1, 1, -1, -1, 1, -1, -1, 1, 1, 1, 1, 1, -1, 1, -1, 1, 1, 1, 1, -1, 1, -1, 1, 1, 1, -1, -1, 1, -1, -1, 1, 1, 1;

or

*x* =1, -1, 1, 1, -1, -1, -1, 1, 1, -1, 1, 1, 1, 1, 1, -1, -1, 1, -1, -1, 1, 1, 1, -1, 1, -1, 1, 1, 1, 1, 1, -1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1;

*y* =-1, 1, -1, -1, 1, 1, 1, -1, -1, 1, -1, -1, -1, -1, -1, 1, 1, -1, 1, 1, -1, -1, -1, 1, -1, 1, -1, -1, -1, -1, 1, -1, 1, -1, -1, 1, 1, 1, -1, -1, 1, -1, -1, -1, -1, -1, 1, -1, 1, -1, -1, 1, 1, 1, -1, 1, -1, 1, 1, 1, 1, 1, -1;

or

*x* =1, -1, -1, -1, -1, -1, 1, -1, 1, -1, -1, -1, 1, 1, -1, 1, -1, 1, 1, 1, 1, 1, -1, 1, 1, -1, -1, -1, 1, 1, -1, 1, -1, 1, 1, 1, 1, 1, -1, 1, -1, 1, 1, 1, -1, -1, 1, -1, -1, 1, 1, 1, 1, 1, -1, 1, 1, 1, -1, -1, -1, 1, 1, -1, 1;

or

*y* =-1, 1, 1, 1, 1, 1, -1, 1, -1, 1, 1, 1, -1, -1, 1, -1, 1, -1, -1, -1, -1, -1, 1, -1, -1, 1, 1, 1, -1, -1, 1, -1, 1, -1, -1, 1, 1, 1, 1, 1, -1, 1, -1, 1, 1, 1, -1, -1, 1, 1, -1, -1, 1, -1, -1, -1, 1, 1, -1, 1;

or

*x* =1, 1, -1, -1, 1, -1, 1, -1, 1, 1, 1, 1, 1, -1, -1, 1, -1, -1, 1, 1, -1, 1, -1, 1, 1, 1, 1, 1, 1, -1, -1, 1, 1, 1, -1, -1, 1, -1, 1, -1, 1, 1, 1, 1, 1, -1, -1, 1, 1, 1, -1, -1, 1, -1, 1, -1, -1, -1, -1, -1, -1, 1, 1, -1;

or

*y* =1, 1, -1, -1, 1, -1, 1, -1, 1, 1, 1, 1, 1, -1, -1, 1, -1, -1, 1, 1, -1, 1, -1, 1, 1, 1, 1, 1, 1, -1, -1, 1, -1, -1, 1, 1, -1, 1, -1, 1, -1, 1, -1, -1, -1, -1, -1, 1, 1, -1, -1, -1, 1, 1, -1, 1, -1, 1, 1, 1, 1, 1, 1, -1, -1, 1;

or

*x* =1, -1, -1, 1, 1, 1, 1, 1, 1, -1, 1, -1, 1, 1, -1, -1, -1, 1, 1, -1, -1, -1, -1, -1, 1, -1, 1, -1, 1, 1, -1, -1, 1, -1, -1, 1, 1, 1, 1, 1, 1, -1, 1, -1, 1, 1, -1, -1, 1, -1, -1, 1, 1, 1, 1, 1, -1, 1, -1, 1, -1, -1, 1, 1;

or

*y* =1, -1, -1, 1, 1, 1, 1, 1, 1, -1, 1, -1, 1, 1, -1, -1, -1, 1, 1, -1, -1, -1, -1, -1, 1, -1, 1, -1, 1, 1, -1, -1, -1, 1, 1, -1, -1, -1, 1, -1, 1, -1, -1, 1, 1, 1, -1, -1, -1, -1, -1, 1, -1, 1, -1, 1, 1, 1, -1, -1;

or

*x* = 1, 1, 1, -1, -1, -1, -1, 1, 1, -1, 1, 1, 1, -1, 1, 1, -1, -1, -1, 1, -1, -1, -1, 1, -1, 1, -1, -1, 1, -1, 1, 1, -1, -1, -1, 1, 1, 1, 1, -1, -1, 1, -1, -1, -1, 1, -1, -1, -1, -1, -1, 1, -1, -1, -1, 1, -1, 1, -1, -1, 1, -1, 1, 1; *y* =1, 1, 1, -1, -1, -1, -1, 1, 1, -1, 1, 1, 1, -1, 1, 1, -1, -1, -1, 1, -1, -1, -1, 1, -1, -1, -1, 1, -1, 1, -1, -1, 1, -1, 1, 1, 1, 1, 1, -1, -1, -1, -1, 1, 1, -1, 1, 1, 1, -1, 1, 1, 1, 1, 1, -1, 1, 1, 1, -1, 1, -1, 1, 1, -1, 1, -1, -1;

or

*x* = 1, 1, -1, 1, -1, -1, 1, -1, 1, -1, -1, -1, 1, -1, -1, -1, -1, -1, 1, -1, -1, -1, 1, -1, -1, 1, 1, 1, 1, -1, -1, -1, -1, -1, 1, -1, 1, 1, -1, 1, -1, 1, 1, 1, -1, 1, 1, 1, -1, -1, 1, -1, -1, -1, 1, -1, -1, 1, 1, 1, 1, -1, -1, -1; *y* =1, 1, -1, 1, 1, -1, 1, -1, 1, -1, -1, -1, 1, -1, -1, -1, -1, -1, -1, 1, -1, -1, 1, 1, 1, 1, -1, -1, -1, 1, 1, -1, 1, -1, -1, 1, -1, 1, -1, -1, -1, 1, -1, -1, -1, 1, -1, -1, -1, -1, 1, -1, -1, -1, 1, 1, -1, 1, 1, 1, -1, 1, 1, -1, -1, -1, -1, 1, 1, 1;

or

*x* =1, 1, 1, 1, -1, -1, 1, 1, 1, -1, -1, 1, -1, 1, -1, 1, -1, -1, -1, -1, -1, -1, 1, 1, -1, 1, 1, -1, -1, 1, -1, 1, 1, 1, 1, 1, -1, -1, 1, 1, 1, -1, -1, 1, -1, 1, -1, 1, 1, 1, 1, 1, 1, -1, -1, 1, -1, -1, 1, -1, -1, 1, 1, -1, 1, -1;

$y$ =-1, -1, -1, -1, 1, 1, -1, -1, -1, 1, 1, -1, 1, -1, 1, -1, 1, 1, 1, 1, 1, 1, -1, -1, 1, -1, -1, 1, 1, -1, 1, -1, 1, 1, 1, 1, -1, -1, 1, 1, 1, -1, -1, 1, -1, 1, -1, 1, 1, 1, 1, 1, 1, 1, -1, -1, 1, -1, -1, 1, 1, -1, 1, -1;

or

$x$ =1, -1, 1, -1, -1, 1, 1, -1, 1, 1, -1, -1, -1, -1, -1, -1, -1, 1, -1, 1, -1, 1, 1, -1, -1, -1, 1, 1, -1, -1, -1, -1, 1, -1, 1, -1, -1, 1, 1, -1, 1, 1, -1, -1, -1, -1, -1, -1, 1, -1, 1, -1, 1, -1, -1, 1, 1, 1, -1, -1, 1, 1, 1, 1;$y$ = -1, 1, -1, 1, 1, 1, -1, -1, 1, -1, -1, 1, 1, 1, 1, 1, 1, 1, -1, 1, -1, 1, -1, -1, 1, 1, 1, -1, -1, 1, 1, 1, 1, 1, -1, 1, -1, -1, 1, 1, -1, 1, 1, 1, -1, -1, -1, -1, -1, -1, 1, -1, 1, -1, 1, 1, 1, -1, -1, 1, 1, 1, 1;

or

$x$ =1, 1, 1, 1, 1, -1, 1, -1, -1, 1, 1, -1, -1, -1, 1, 1, -1, -1, -1, -1, 1, -1, 1, -1, 1, -1, -1, 1, -1, -1, 1, 1, 1, 1, 1, 1, 1, -1, 1, -1, -1, 1, 1, -1, -1, -1, 1, 1, 1, 1, 1, 1, -1, 1, -1, 1, -1, 1, 1, -1, 1, 1, -1, -1;

$y$ =-1, -1, -1, -1, -1, 1, -1, 1, 1, -1, -1, 1, 1, 1, -1, -1, 1, 1, 1, 1, -1, 1, -1, 1, -1, 1, 1, -1, 1, 1, -1, -1, 1, 1, 1, 1, 1, -1, 1, -1, -1, 1, 1, 1, 1, 1, 1 ,1, -1, 1, 1, -1, 1, -1, 1, 1, -1, 1, 1, -1, -1;

or

$x$ =1, 1, -1, -1, 1, -1, -1, 1, -1, 1, -1, 1, -1, -1, -1, -1, -1, -1, 1, 1, 1, -1, -1, 1, 1, -1, 1,-1, -1, -1, -1, -1, 1, 1, -1, -1, 1, -1, -1, 1, -1, 1, -1, -1, -1, -1, 1, 1, -1, -1, -1, 1, 1, -1, -1, 1, -1, 1, 1, 1, 1, 1;$y$ = -1, -1, 1, 1, -1, 1, 1, -1, 1, -1, 1, -1, 1, 1, 1, 1, 1, 1, -1, -1, -1, 1, 1, -1, -1, 1, -1, 1, 1, 1, 1, 1, -1, -1, 1, -1, -1, 1, -1, 1, -1, 1, -1, -1, -1, -1, 1, 1, -1, -1, -1, 1, 1, -1, -1, 1, -1, 1, 1, 1, 1, 1;

or

$x$ =1, 1, 1, -1, -1, -1, 1, -1, -1, -1, -1, 1, 1, 1, -1, 1, 1, 1, 1, -1, 1, 1, -1, 1, 1, 1, 1, -1, 1, 1, -1, 1, 1, 1, 1, -1, -1, -1, 1, -1, 1, 1, -1, -1, -1, 1, -1, 1, 1, 1, -1, 1, 1, -1, 1, -1, -1, -1, 1, -1, -1, 1, -1;

$y$ =1, 1, 1, -1, -1, -1, 1, -1, -1, -1, -1, 1, 1, 1, -1, 1, 1, 1, 1, -1, 1, 1, -1, 1, 1, 1, 1, -1, 1, 1, -1, 1, -1, -1, -1, 1, 1, 1, -1, 1, -1, -1, -1, 1, 1, 1, -1, 1, -1, -1, 1, -1, -1, 1, -1, 1, 1, 1, 1, -1, 1, 1, -1, 1;

or

$x$ =1, -1, 1, 1, -1, 1, 1, 1, -1, 1, -1, -1, 1, -1, -1, -1, 1, -1, 1, 1, 1, -1, -1, -1, 1, -1, 1, 1, 1, -1, -1, -1, 1, -1, 1, 1, -1, 1, 1, 1, 1, -1, 1, 1, 1, -1, 1, 1, 1, 1, -1, 1, 1, 1, -1, -1, -1, -1, 1, -1, -1, -1, 1, 1, 1;

or

$y$ =1, -1, 1, 1, -1, 1, 1, 1, -1, 1, -1, -1, 1, -1, -1, -1, 1, -1, 1, 1, 1, -1, -1, -1, 1, -1, 1, 1, 1, -1, -1, -1, -1, 1, -1, -1, 1, 1, -1, -1, -1, -1, 1, -1, -1, -1, 1, 1, 1, 1, -1, 1, 1, 1, 1, -1, -1, -1;

or

$x$ =1, 1, 1, 1, -1, -1, 1, 1, 1, 1, 1, 1, -1, -1, 1, -1, -1, 1, 1, -1, 1, -1, 1, 1, 1, -1, -1, 1, -1, 1, -1, 1, 1, 1, 1, -1, -1, 1, -1, -1, -1, -1, -1, 1, 1, -1, -1, -1, 1, 1, -1, 1, -1, 1, -1, -1, 1, 1, -1, 1, -1, 1;

$y$ =1, 1, 1, 1, 1, -1, -1, 1, 1, 1, 1, 1, -1, -1, 1, -1, -1, 1, 1, -1, 1, -1, 1, 1, 1, -1, -1, 1, -1, 1, -1, -1, -1, -1, -1, 1, 1, -1, 1, 1, 1, 1, 1, -1, -1, 1, 1, 1, -1, -1, 1, -1, 1, -1, 1, 1, -1, -1, 1, -1, 1, -1;

or

$x$ =1, -1, 1, -1, 1, 1, -1, -1, 1, -1, 1, -1, 1, 1, -1, -1, -1, 1, 1, -1, -1, -1, -1, -1, 1, -1, -1, 1, 1, 1, 1, 1, 1, -1, 1, -1, 1, 1, -1, -1, -1, 1, -1, 1, -1, -1, 1, 1, -1, 1, 1, -1, -1, -1, -1, -1, -1, 1, 1, -1, -1, -1, -1, -1;$y$ =1, -1, 1, -1, 1, 1, -1, -1, 1, -1, 1, -1, 1, 1, -1, -1, -1, 1, 1, -1, -1, -1, -1, -1, 1, -1, -1, 1, 1, 1, 1, 1, -1, 1, -1, 1, -1, -1, 1, 1, -1, 1, -1, 1, 1, -1, -1, 1, -1, -1, 1, 1, 1, 1, 1, 1, -1, -1, 1, 1, 1, 1, 1;

or

$x$ =1, 1, -1, 1, 1, 1, -1, 1, -1, -1, 1, -1, 1, 1, -1, 1, -1, -1, -1, 1, 1, 1, 1, -1, 1, 1, 1, -1, 1, 1, 1, -1, 1, 1, -1, 1, 1, 1, -1, 1, 1, 1, -1, 1, 1, -1, 1, -1, -1, 1, -1, -1, -1, -1, 1, 1, 1, 1, -1, -1, -1, -1, 1, -1, -1, -1, 1;

$y$ =-1, -1, 1, -1, -1, -1, 1, -1, 1, 1, -1, 1, -1, -1, 1, -1, 1, 1, 1, -1, -1, -1, -1, 1, -1, -1, -1, 1, -1, -1, -1, 1, 1, 1, -1, 1, 1, 1, -1, 1, 1, 1, -1, 1, 1, -1, 1, -1, -1, 1, -1, -1, -1, -1, 1, 1, 1, 1, -1, -1, -1, -1, 1, -1, -1, -1, 1;

or

$x$ =1, -1, -1, -1, 1, -1, -1, -1, -1, 1, 1, 1, 1, -1, -1, -1, -1, 1, -1, -1, 1, -1, 1, 1, 1, -1, 1, 1, 1, -1, 1, 1, 1, -1, -1, -1, 1, -1, -1, -1, 1, -1, -1, -1, -1, 1, 1, 1, -1, 1, -1, -1, 1, -1, 1, 1, -1, 1, -1, -1, -1, 1, -1, -1;$y$ = -1, 1, 1, 1, -1, 1, 1, 1, 1, -1, -1, -1, -1, 1, 1, 1, 1, -1, 1, 1, -1, 1, -1, -1, -1, 1, -1, -1, -1, 1, -1, -1, -1, 1, -1, -1, 1, -1, -1, -1, 1, -1, -1, -1, -1, 1, 1, 1, -1, 1, -1, -1, -1, 1, 1, 1, 1, -1, 1, -1;

or

$x$ =1, 1, 1, -1, 1, 1, 1, -1, 1, 1, 1, -1, -1, -1, -1, 1, -1, -1, -1, 1, -1, 1, 1, -1, 1, -1, -1, 1, -1, -1, -1, 1, -1, -1, -1, -1, 1, -1, -1, -1, 1, 1, 1, 1, 1, -1, -1, -1, -1, 1, 1, 1, -1, 1, -1, -1, 1, -1, -1, -1, 1, -1, -1, -1, 1, -1;$y$ = -1, -1, -1, 1, -1, -1, -1, 1, -1, -1, -1, 1, 1, 1, 1, -1, 1, 1, 1, -1, 1, -1, -1, 1, -1, 1, 1, -1, 1, -1, -1, 1, -1, 1, 1, -1, 1, 1, 1, -1, 1, -1, -1, -1, 1, -1, -1, -1, 1, 1, 1, 1, -1, -1, -1, -1, 1, 1, 1, 1, -1, 1, -1, -1, 1, -1, -1, -1, 1, -1, -1, -1, 1, -1;

or

$x$ =1, -1, 1, 1, 1, -1, 1, 1, 1, -1, 1, 1, -1, 1, -1, -1, -1, 1, 1, 1, 1, -1, -1, -1, -1, 1, 1, 1, -1, 1, 1, 1, -1, 1, -1, -1, -1, 1, -1, -1, 1, -1, 1, 1, -1, 1, -1, -1, 1, -1, -1, -1, -1, 1, 1, 1, -1, 1, 1, 1, -1, 1, 1, 1;

$y$ =-1, 1, -1, -1, -1, 1, -1, -1, -1, 1, -1, -1, 1, -1, 1, 1, 1, -1, -1, -1, -1, 1, 1, 1, 1, -1, -1, -1, 1, -1, -1, -1, 1, -1, -1, -1, 1, -1, 1, 1, -1, 1, -1, -1, 1, -1, 1, 1, 1, -1, 1, 1, 1, -1, 1, 1, 1;

or

$x$ =1, 1, -1, 1, -1, -1, -1, 1, 1, 1, -1, 1, 1, 1, 1, -1, 1, -1, -1, -1, -1, 1, -1, -1, 1, -1, -1, -1, 1, -1, 1, 1, -1, -1, 1, -1, 1, 1, 1, 1, -1, 1, 1, 1, 1, -1, -1, 1, 1, 1, 1, -1, -1, -1, 1, -1, 1, 1;

$y$ =1, 1, -1, 1, -1, -1, -1, 1, 1, 1, -1, 1, 1, 1, 1, -1, 1, -1, -1, -1, -1, 1, -1, -1, 1, -1, -1, -1, 1, -1, 1, 1, 1, 1, -1, 1, -1, -1, -1, -1, 1, 1, -1, -1, -1, -1, 1, -1, -1, -1, 1, 1, 1, -1, 1, -1, -1;

or

$x$ =1, 1, -1, 1, -1, -1, -1, 1, 1, 1, -1, 1, 1, 1, 1, -1, -1, 1, 1, 1, 1, -1, 1, 1, -1, 1, 1, 1, -1, 1, -1, -1, -1, -1, 1, -1, 1, 1, 1, 1, -1, 1, 1, 1, 1, -1, 1, 1, 1, -1, 1, -1, -1, -1, -1, 1, -1, -1, -1, 1, 1, 1, -1, 1, -1, -1;

*y* =1, 1, -1, 1, -1, -1, -1, 1, 1, 1, -1, 1, 1, 1, 1, -1, -1, 1, 1, 1, 1, -1, 1, 1, -1, 1, 1, 1, -1, 1, -1, -1, 1, 1, -1, 1, -1, -1, -1, 1, -1, -1, 1, -1, -1, -1, -1, 1, -1, 1, 1, 1, 1, -1, 1, 1, 1, -1, -1, -1, 1, -1, 1, 1;

or

*x* =1, 1, -1, 1, -1, -1, -1, 1, -1, 1, -1, -1, -1, -1, 1, 1, 1, -1, -1, -1, 1, -1, -1, -1, 1, -1, 1, -1, -1, -1, 1, -1, -1, 1, 1, -1, 1, 1, 1, -1, 1, 1, -1, -1, -1, 1, -1, -1, -1, -1, -1, -1, 1, 1, 1, 1, -1, -1, 1, -1, -1, 1, -1, 1, 1;*y* =1, 1, -1, 1, -1, -1, 1, -1, 1, -1, -1, -1, -1, 1, 1, 1, -1, -1, -1, 1, -1, -1, -1, 1, -1, 1, -1, -1, -1, 1, -1, -1, -1, -1, 1, -1, -1, -1, 1, -1, -1, 1, 1, 1, -1, 1, 1, 1, 1, 1, 1, -1, -1, -1, -1, 1, 1, -1, 1, 1, -1, 1, -1, -1;

or

*x* =1, 1, -1, 1, -1, -1, 1, -1, -1, 1, 1, 1, 1, -1, -1, -1, -1, -1, -1, 1, -1, -1, -1, 1, 1, -1, 1, 1, 1, -1, 1, 1, 1, 1, -1, 1, 1, 1, -1, 1, -1, 1, 1, 1, -1, 1, 1, 1, -1, -1, -1, 1, 1, 1, 1, -1, 1, -1, 1, 1, -1, 1, -1, -1;

*y* =1, 1, -1, 1, -1, -1, 1, -1, -1, 1, 1, 1, 1, -1, -1, -1, -1, -1, -1, 1, -1, -1, -1, 1, 1, -1, 1, 1, 1, -1, 1, 1, -1, -1, 1, -1, -1, -1, -1, 1, -1, 1, -1, -1, -1, 1, 1, 1, -1, -1, -1, -1, 1, -1, 1, -1, -1, 1, -1, 1, 1;

or

*x* =1, 1, 1, -1, 1, 1, -1, 1, 1, 1, 1, -1, -1, -1, 1, -1, -1, -1, -1, 1, -1, -1, 1, -1, -1, -1, -1, 1, 1, 1, -1, 1, 1, 1, 1, -1, 1, 1, -1, 1, -1, -1, -1, 1, 1, 1, -1, 1, 1, 1, 1, -1, 1, 1, -1, 1, -1, -1, -1, 1, 1, 1, -1, 1;

*y* =-1, -1, -1, 1, -1, -1, 1, -1, -1, -1, -1, 1, 1, 1, -1, 1, -1, -1, -1, 1, -1, -1, 1, -1, -1, -1, -1, 1, 1, 1, -1, 1, -1, -1, -1, 1, -1, -1, 1, -1, 1, 1, 1, -1, 1, 1, -1, 1, -1, -1, -1, 1, 1, 1, -1, 1;

or

*x* =1, -1, 1, 1, 1, -1, -1, -1, 1, -1, 1, 1, -1, 1, 1, 1, -1, 1, -1, -1, -1, 1, 1, 1, -1, 1, -1, -1, 1, -1, -1, -1, 1, -1, 1, 1, 1, -1, -1, -1, -1, 1, -1, -1, 1, -1, -1, -1, 1, -1, 1, 1, 1, -1, -1, -1, -1, 1, -1, -1, 1, -1, -1, -1; *y* =-1, 1, -1, -1, -1, 1, 1, 1, -1, 1, -1, -1, 1, -1, -1, -1, -1, 1, -1, -1, -1, 1, 1, 1, -1, 1, -1, -1, 1, -1, -1, -1, -1, 1, -1, -1, -1, 1, 1, 1, 1, -1, 1, 1, -1, 1, 1, 1, 1, -1, 1, 1, 1, -1, -1, -1, -1, 1, -1, -1, 1, -1, -1, -1.

**16.** The method according to claim 14 or 15, wherein when N is equal to 32, the GCP is any one of the following pairs:

*x* =1, 1, 1, 1, 1, -1, -1, 1, 1, 1, -1, -1, 1, -1, 1, -1, -1, -1, -1, -1, 1, 1, -1, 1, 1, -1, -1, 1, -1, 1, -1;

*y* =1, 1, 1, 1, 1, -1, -1, 1, 1, 1, -1, -1, 1, -1, 1, -1, 1, 1, 1, 1, 1, -1, -1, 1, -1, -1, 1, 1, -1, 1, -1, 1;

or

*x* =1, -1, 1, -1, 1, 1, -1, -1, 1, -1, -1, 1, 1, 1, 1, 1, -1, 1, -1, 1, -1, -1, 1, 1, 1, -1, -1, 1, 1, 1, 1; *y =1,* -1, 1, -1, 1, 1, -1, -1, 1, -1, -1, 1, 1, 1, 1, 1, 1, -1, 1, -1, 1, 1, -1, -1, -1, 1, 1, -1, -1, -1, -1, -1;

or

*x* =1, 1, -1, 1, 1, 1, -1, 1, -1, -1, -1, 1, 1, 1, 1, -1, 1, 1, -1, 1, -1, -1, 1, -1, -1, -1, -1, 1, -1, -1, -1, 1;

**y** = -1, -1, 1, -1, -1, -1, 1, -1, 1, 1, 1, -1, -1, -1, -1, 1, 1, 1, -1, 1, -1, -1, 1, -1, -1, -1, -1, 1, -1, -1, -1, 1;

   or

**x** =1, -1, -1, -1, 1, -1, -1, -1, -1, 1, -1, -1, 1, -1, 1, 1, 1, -1, -1, -1, -1, 1, 1, 1, -1, 1, -1, -1, -1, 1, -1, -1;

**y** = -1, 1, 1, 1, -1, 1, 1, 1, 1, -1, 1, 1, -1, 1, -1, -1, 1, -1, -1, -1, -1, 1, 1, 1, -1, 1, -1, -1, -1, 1, -1, -1;

   or

**x** =1, 1, -1, -1, -1, -1, 1, 1, -1, -1, -1, -1, -1, -1, -1, -1, -1, 1, -1, 1, 1, -1, 1, -1, 1, -1, -1, 1, 1, -1, -1, 1;

**y** = -1, -1, 1, 1, -1, -1, 1, 1, 1, 1, 1, 1, -1, -1, -1, -1, 1, -1, 1, -1, 1, -1, 1, -1, -1, 1, 1, -1, 1, -1, -1, 1;

   or

**x** =1, -1, -1, 1, -1, 1, 1, -1, -1, 1, -1, 1, -1, 1, -1, 1, -1, -1, -1, -1, 1, 1, 1, 1, 1, 1, -1, -1, 1, 1, -1, -1;

**y** = -1, 1, 1, -1, -1, 1, 1, -1, 1, -1, 1, -1, -1, 1, -1, 1, 1, 1, 1, 1, 1, 1, 1, 1, -1, -1, 1, 1, 1, 1, -1, -1;

   or

**x** =1, 1, 1, 1, -1, 1, 1, -1, 1, 1, -1, -1, -1, 1, -1, 1, 1, 1, 1, 1, -1, 1, 1, -1, -1, -1, 1, 1, 1, -1, 1, -1; **y** =**1, 1, 1**, 1, -1, 1, 1, -1, 1, 1, -1, -1, -1, 1, -1, 1, -1, -1, -1, -1, 1, -1, -1, 1, 1, 1, -1, -1, -1, 1, -1, 1;

   or

**x** =1, -1, 1, -1, -1, -1, 1, 1, 1, -1, -1, 1, -1, -1, -1, -1, 1, -1, 1, -1, -1, -1, 1, 1, -1, 1, 1, -1, 1, 1, 1, 1;

**y** =1, -1, 1, -1, -1, -1, 1, 1, 1, -1, -1, 1, -1, -1, -1, -1, -1, 1, -1, 1, 1, 1, -1, -1, 1, -1, -1, 1, -1, -1, -1, -1;

   or

**x** =1, 1, -1, -1, -1, 1, -1, 1, 1, 1, 1, 1, -1, 1, 1, -1, 1, 1, -1, -1, -1, 1, -1, 1, -1, -1, -1, -1, 1, -1, -1, 1;

**y** = -1, -1, 1, 1, 1, -1, 1, -1, -1, -1, -1, -1, 1, -1, -1, 1, 1, 1, -1, -1, -1, 1, -1, 1, -1, -1, -1, -1, 1, -1, -1, 1;

   or

**x** =1, -1, -1, 1, -1, -1, -1, -1, 1, -1, 1, -1, -1, -1, 1, 1, 1, -1, -1, 1, -1, -1, -1, -1, -1, 1, -1, 1, 1, 1, -1, -1;

**y** = -1, 1, 1, -1, 1, 1, 1, 1, -1, 1, -1, 1, 1, 1, -1, -1, 1, -1, -1, 1, -1, -1, -1, -1, -1, 1, -1, 1, 1, 1, -1, -1;

   or

**x** =1, 1, -1, -1, 1, -1, 1, -1, 1, 1, 1, 1, 1, -1, -1, 1, -1, -1, 1, 1, -1, 1, -1, 1, 1, 1, 1, 1, 1, -1, -1, 1; **y** =-1, -1, 1, 1, -1, 1,

-1, 1, -1, -1, -1, -1, -1, 1, 1, -1, -1, -1, 1, 1, -1, 1, -1, 1, 1, 1, 1, 1, 1, -1, -1, 1;

or

*x* =1, -1, -1, 1, 1, 1, 1, 1, 1, -1, 1, -1, 1, 1, -1, -1, -1, 1, 1, -1, -1, -1, -1, -1, 1, -1, 1, -1, 1, 1, -1, -1;

*y* =-1, 1, 1, -1, -1, -1, -1, -1, -1, 1, -1, 1, -1, -1, 1, 1, -1, 1, 1, -1, -1, -1, -1, -1, 1, -1, 1, -1, 1, 1, -1, -1;

or

*x* =1, 1, 1, -1, 1, 1, 1, -1, 1, 1, -1, 1, -1, -1, 1, -1, 1, 1, 1, -1, -1, -1, -1, 1, 1, 1, -1, 1, 1, 1, -1, 1; *y* =1, 1, 1, -1, 1, 1, 1, -1, 1, 1, -1, 1, -1, -1, 1, -1, -1, -1, -1, 1, 1, 1, 1, -1, -1, -1, 1, -1, -1, -1, 1, -1;

or

*x* =1, -1, 1, 1, 1, -1, 1, 1, 1, -1, -1, -1, -1, 1, 1, 1, 1, -1, 1, 1, -1, 1, -1, -1, 1, -1, -1, -1, 1, -1, -1, -1;

*y* =1, -1, 1, 1, 1, -1, 1, 1, 1, -1, -1, -1, -1, 1, 1, 1, -1, 1, -1, -1, 1, -1, 1, 1, -1, 1, 1, 1, -1, 1, 1, 1;

or

*x* =1, 1, -1, 1, -1, -1, 1, -1, 1, 1, -1, 1, 1, 1, -1, 1, 1, 1, 1, -1, 1, 1, 1, -1, 1, 1, 1, -1, -1, -1, -1, 1; *y* = -1, -1, 1, -1, 1, 1, -1, 1, 1, 1, -1, 1, 1, 1, -1, 1, 1, 1, -1, 1, -1, -1, -1, 1, 1, 1, 1, -1, -1, -1, -1, 1;

or

*x* =1, -1, -1, -1, -1, 1, 1, 1, 1, -1, -1, -1, 1, -1, -1, -1, 1, -1, 1, 1, 1, -1, 1, 1, 1, -1, 1, 1, -1, 1, -1, -1;

or

*y* =-1, 1, 1, 1, 1, -1, -1, -1, 1, -1, -1, -1, 1, -1, -1, -1, -1, 1, -1, -1, -1, 1, -1, -1, 1, -1, 1, 1, -1, 1, -1, -1;

or

*x* =1, 1, -1, -1, -1, -1, -1, -1, -1, 1, 1, -1, -1, 1, -1, 1, -1, -1, -1, 1, 1, -1, -1, 1, -1, 1, -1, 1, -1, 1, -1, 1;

*y* =1, 1, -1, -1, -1, -1, -1, -1, -1, 1, 1, -1, -1, 1, -1, 1, 1, 1, 1, -1, -1, 1, 1, -1, 1, -1, 1, -1, 1, 1, 1, -1;

or

*x* =1, -1, -1, 1, -1, 1, -1, 1, -1, -1, 1, 1, -1, -1, -1, -1, -1, 1, -1, 1, 1, -1, -1, 1, 1, 1, 1, 1, 1, 1, -1, -1;

*y* =1, -1, -1, 1, -1, 1, -1, 1, -1, -1, 1, 1, -1, -1, -1, -1, 1, -1, 1, -1, -1, 1, 1, -1, -1, -1, -1, -1, -1, 1, 1;

or

*x* =1, 1, 1, -1, 1, 1, -1, 1, 1, 1, 1, -1, 1, 1, -1, 1, 1, 1, 1, -1, -1, -1, 1, -1, -1, -1, -1, 1, 1, 1, -1, 1; *y* = -1, -1, -1, 1, -1, -1, 1, -1, 1, 1, 1, 1, -1, 1, 1, -1, 1, -1, 1, -1, -1, -1, 1, 1, 1, -1, 1, -1, -1, -1, 1, 1, 1, -1, 1;

or

*x* =1, -1, 1, 1, 1, -1, -1, -1, 1, -1, 1, 1, 1, -1, -1, -1, 1, -1, 1, 1, -1, 1, 1, 1, -1, 1, -1, -1, 1, -1, -1, -1;

*y* =-1, 1, -1, -1, -1, 1, 1, 1, 1, -1, 1, 1, 1, -1, -1, -1, -1, 1, -1, -1, 1, -1, -1, -1, -1, 1, -1, -1, 1, -1, -1, -1;

or

*x* =1, 1, -1, -1, 1, -1, -1, 1, -1, -1, -1, -1, -1, 1, -1, 1, 1, 1, 1, 1, -1, 1, -1, 1, -1, -1, 1, 1, 1, -1, -1, 1;

*y* =-1, -1, 1, 1, -1, 1, 1, -1, -1, -1, -1, -1, -1, 1, -1, 1, -1, -1, -1, -1, 1, -1, 1, -1, -1, -1, 1, 1, 1, -1, -1, 1;

or

*x* =1, -1, -1, 1, 1, 1, -1, -1, -1, 1, -1, 1, -1, -1, -1, 1, -1, 1, -1, -1, -1, -1, -1, -1, 1, 1, -1, 1, 1, -1, -1;

*y* =-1, 1, 1, -1, -1, -1, 1, 1, -1, 1, -1, 1, -1, -1, -1, -1, 1, -1, 1, 1, 1, 1, 1, -1, 1, 1, -1, 1, 1, -1, -1;

or

*x* =1, 1, -1, -1, -1, 1, 1, -1, -1, -1, -1, -1, 1, -1, 1, -1, -1, -1, -1, -1, -1, 1, -1, 1, 1, 1, -1, -1, 1, -1, -1, 1;

*y* =1, 1, -1, -1, -1, 1, 1, -1, 1, 1, 1, 1, -1, 1, -1, 1, -1, -1, -1, -1, -1, 1, -1, 1, -1, -1, 1, 1, -1, 1, 1, -1;

or

*x* =1, -1, -1, 1, -1, -1, 1, 1, -1, 1, -1, 1, 1, 1, 1, 1, -1, 1, -1, 1, -1, -1, -1, -1, 1, -1, -1, 1, 1, 1, -1, -1;

*y* =1, -1, -1, 1, -1, -1, 1, 1, 1, -1, 1, -1, -1, -1, -1, -1, -1, 1, -1, 1, -1, -1, -1, -1, -1, 1, 1, -1, -1, -1, 1, 1;

or

*x* =1, 1, 1, 1, 1, 1, 1, 1, 1, -1, -1, 1, 1, -1, -1, 1, 1, 1, -1, -1, -1, -1, 1, 1, 1, -1, 1, -1, -1, 1, -1, 1; *y* =1, 1, 1, 1, -1, -1, -1, -1, 1, -1, -1, 1, -1, 1, 1, -1, 1, 1, -1, -1, 1, 1, 1, -1, -1, 1, -1, 1, -1, 1, -1, 1, -1;

or

*x* =1, -1, 1, -1, 1, -1, 1, -1, 1, 1, -1, -1, 1, 1, -1, -1, 1, -1, -1, 1, -1, 1, 1, -1, 1, 1, 1, 1, -1, -1, -1, -1;

*y* =1, -1, 1, -1, -1, 1, -1, 1, 1, 1, -1, -1, -1, -1, 1, 1, 1, -1, -1, 1, 1, -1, -1, 1, 1, 1, 1, 1, 1, 1, 1, 1;

or

*x* =1, 1, -1, 1, -1, -1, 1, -1, -1, -1, 1, -1, -1, -1, 1, -1, -1, -1, -1, 1, 1, 1, 1, -1, -1, -1, -1, 1, -1, -1, -1, 1;

*y* =1, 1, -1, 1, 1, 1, -1, 1, -1, -1, 1, -1, 1, 1, -1, 1, -1, -1, -1, 1, -1, -1, -1, 1, -1, -1, -1, 1, 1, 1, 1, -1;

or

*x* =1, -1, -1, -1, -1, 1, 1, 1, -1, 1, 1, 1, -1, 1, 1, 1, -1, 1, -1, -1, 1, -1, 1, 1, -1, 1, -1, -1, -1, 1, -1, -1;

*y* =1, -1, -1, -1, 1, -1, -1, -1, -1, 1, 1, 1, 1, -1, -1, -1, -1, 1, -1, -1, -1, 1, -1, -1, -1, 1, - 1, -1, 1, -1, 1, 1;

or

*x* =1, 1, 1, 1, 1, -1, 1, -1, -1, -1, -1, -1, 1, -1, 1, -1, 1, 1, -1, -1, 1, -1, -1, 1, 1, 1, -1, -1, -1, 1, 1, -1;

*y* =1, 1, -1, -1, 1, -1, -1, 1, -1, -1, 1, 1, 1, -1, -1, 1, 1, 1, 1, 1, 1, -1, 1, -1, 1, 1, 1, 1, -1, 1, -1, 1;

or

*x* =1, -1, 1, -1, 1, 1, 1, 1, -1, 1, -1, 1, 1, 1, 1, 1, 1, -1, -1, 1, 1, 1, -1, -1, 1, -1, -1, 1, -1, -1, 1, 1; *y* =1, -1, -1, 1, 1, 1, -1, -1, -1, 1, 1, -1, 1, 1, -1, -1, 1, -1, 1, -1, 1, 1, 1, 1, -1, 1, -1, -1, -1, -1, -1;

or

*x* =1, 1, 1, 1, -1, -1, 1, 1, 1, -1, 1, -1, -1, 1, 1, -1, 1, 1, 1, 1, 1, -1, -1, -1, 1, -1, 1, -1, 1, 1, -1; *y* =1, 1, -1, -1, -1, -1, -1, -1, 1, -1, -1, 1, -1, 1, -1, 1, 1, 1, -1, -1, 1, 1, 1, 1, -1, 1, 1, -1, -1, 1, -1, 1;

or

*x* =1, -1, 1, -1, -1, 1, 1, -1, 1, 1, 1, 1, -1, -1, 1, 1, 1, -1, 1, -1, 1, -1, -1, 1, -1, -1, -1, -1, -1, -1, 1, 1;

*y* =1, -1, -1, 1, -1, 1, -1, 1, 1, 1, -1, -1, -1, -1, -1, -1, 1, -1, -1, 1, 1, -1, 1, -1, -1, -1, 1, 1, -1, -1, -1, -1.

17. The method according to any one of claims 1 to 16, wherein the sensing signal is a single-carrier signal or a multi-carrier signal.

18. The method according to claim 17, wherein when the sensing signal is a multi-carrier signal, a difference between the length of N of the GCP and a target value is less than a threshold, and the target value is determined based on a subcarrier spacing, sensing bandwidth, and a resource element RE mapping manner.

19. The method according to claim 18, wherein the RE mapping manner is that one element of the GCP is mapped to an interval of M REs, the target value, the subcarrier spacing, the sensing bandwidth, and M satisfy the following formula:

$$\text{Target value} = \left\lfloor \frac{W}{SCS} \right\rfloor /,$$

where
*SCS* is the subcarrier spacing, W is the sensing bandwidth, and ⌊ ⌋ represents rounding down.

20. The method according to any one of claims 1 to 19, wherein the performing processing based on the echo signal comprises:

sensing a distance of a target object based on the echo signal, wherein the target object is an object that reflects the sensing signal, to form the echo signal.

21. The method according to claim 20, wherein the sensing a distance of a target object based on the echo signal comprises:

performing an aperiodic autocorrelation operation on the GCP and a GCP corresponding to the echo signal;
determining a signal propagation delay between the sensing device and the target object based on a result of the aperiodic autocorrelation operation; and
determining the distance of the target object based on the signal propagation delay.

22. A communication apparatus, wherein the communication apparatus comprises a module configured to perform the method according to any one of claims 1 to 21.

23. A communication apparatus, wherein the communication apparatus comprises a processor, and
the processor is configured to execute a computer program or instructions, to implement the method according to any one of claims 1 to 21.

24. A computer-readable storage medium, wherein the computer-readable storage medium stores a computer program or instructions; and when the computer program or the instructions are executed by a communication apparatus, the method according to any one of claims 1 to 21 is implemented.

25. A computer program product, wherein when the computer program product runs on a communication apparatus, the method according to any one of claims 1 to 21 is performed.

FIG. 1

FIG. 2

FIG. 3a

FIG. 3b

400

401

403

Processor

CPU 0

CPU 1

Memory

Communication line 402

404

405

406

Communication interface

Output device

Input device

FIG. 4

A sensing device sends a sensing signal
S501

The sensing device receives an echo signal of the sensing signal
S502

The sensing device performs processing based on the echo signal
S503

FIG. 5

FIG. 6

FIG. 7

Time domain

Sensing resource    Communication resource

FIG. 8

First device

Second device

S901: Generate a sensing signal

S902: Sensing signal

S903: Perform processing based on a received
signal of the sensing signal

FIG. 9

Sensing device 100

Processing module 1001

Transceiver module 1002

FIG. 10

# INTERNATIONAL SEARCH REPORT

| | International application No. |
|---|---|
| | **PCT/CN2022/139983** |

**A.    CLASSIFICATION OF SUBJECT MATTER**

H04W24/02(2009.01)i

According to International Patent Classification (IPC) or to both national classification and IPC

**B.    FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS, CNTXT, ENTXT, CNKI, IEEE, web of science: 感知, 格雷互补对, 回波, 通感一体化, 通信感知一体化, 广义布尔函数, 载波; sensing, Golay Complementary Pair, GCP, echo, Joint Communication and Sensing, JCS, generalized boolean function, carrier wave

**C.    DOCUMENTS CONSIDERED TO BE RELEVANT**

| Category* | Citation of document, with indication, where appropriate, of the relevant passages | Relevant to claim No. |
|---|---|---|
| Y | CN 112748425 A (HUAWEI TECHNOLOGIES CO., LTD.) 04 May 2021 (2021-05-04) description, paragraphs 2-50 and 83-150, and figures 1-15 | 15 |
| Y | CN 101527571 A (JIN RUJIANG) 09 September 2009 (2009-09-09) description, page 4, paragraphs 4-6 | 15 |
| A | CN 112748425 A (HUAWEI TECHNOLOGIES CO., LTD.) 04 May 2021 (2021-05-04) description, paragraphs 2-50 and 83-150, and figures 1-15 | 1-25 |
| A | CN 101527571 A (JIN RUJIANG) 09 September 2009 (2009-09-09) description, page 4, paragraphs 4-6 | 1-25 |
| A | CN 110703222 A (HUNAN WEAPON OPTOELECTRONICS TECHNOLOGY CO., LTD.) 17 January 2020 (2020-01-17) entire document | 1-25 |
| A | CN 113866736 A (GUILIN UNIVERSITY OF TECHNOLOGY) 31 December 2021 (2021-12-31) entire document | 1-25 |

☑ Further documents are listed in the continuation of Box C.    ☑ See patent family annex.

| | | |
|---|---|---|
| * | Special categories of cited documents: | "T"  later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"  document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search | Date of mailing of the international search report |
|---|---|
| **17 February 2023** | **23 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

International application No.

**PCT/CN2022/139983**

**C.    DOCUMENTS CONSIDERED TO BE RELEVANT**

| Category* | Citation of document, with indication, where appropriate, of the relevant passages | Relevant to claim No. |
|---|---|---|
| A | US 2017324461 A1 (INTEL IP CORP.) 09 November 2017 (2017-11-09)<br>       entire document | 1-25 |
| A | LOMAYEV Artyom et al. "20.11 Golay Sequences"<br>*IEEE P802.11-17/1811r0*, 20 November 2017 (2017-11-20),<br>       entire document | 1-25 |

Form PCT/ISA/210 (second sheet) (July 2022)

INTERNATIONAL SEARCH REPORT
Information on patent family members

International application No.

**PCT/CN2022/139983**

| Patent document cited in search report | | | Publication date (day/month/year) | Patent family member(s) | | | Publication date (day/month/year) |
|---|---|---|---|---|---|---|---|
| CN | 112748425 | A | 04 May 2021 | WO | 2021083368 | A1 | 06 May 2021 |
| | | | | EP | 4043917 | A1 | 17 August 2022 |
| CN | 101527571 | A | 09 September 2009 | CN | 101527571 | B | 27 July 2011 |
| CN | 110703222 | A | 17 January 2020 | CN | 110703222 | B | 29 October 2021 |
| CN | 113866736 | A | 31 December 2021 | | None | | |
| US | 2017324461 | A1 | 09 November 2017 | US | 10075224 | B2 | 11 September 2018 |

Form PCT/ISA/210 (patent family annex) (July 2022)

**EP 4 451 726 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210043577